# EUROPÄISCHE PATENTSCHRIFT

(11) **EP 0 890 241 B1**
(45) Veröffentlichungstag und Bekanntmachung des Hinweises auf die Patenterteilung: **30.05.2001**
(21) Anmeldenummer: 96939841.1
(22) Anmeldetag: 19.11.1996
(51) Int. Cl.: H04L 12/40, H04L 12/26, B60R 16/02

(54) **HALBLEITERSCHALTKREIS FÜR EIN ELEKTRONISCHES GERÄT**
SEMICONDUCTOR SWITCHING CIRCUIT FOR AN ELECTRONIC DEVICE
CIRCUIT DE COMMUTATION A SEMI-CONDUCTEUR POUR APPAREIL ELECTRONIQUE

(30) Priorität: 26.03.1996 DE 19611942
(43) Veröffentlichungstag der Anmeldung: 13.01.1999
(73) Patentinhaber: DaimlerChrysler AG, 70567 Stuttgart (DE)
(72) Erfinder: HANF, Peter, D-73035 Göppingen (DE); MINUTH, Jürgen, D-73054 Eislingen (DE); SETZER, Jürgen, D-75428 Illingen (DE); REEB, Max, D-73066 Uhingen (DE)
(86) Internationale Anmeldenummer: EP9605087
(87) Internationale Veröffentlichungsnummer: WO9736398

(56) Entgegenhaltungen:
- WO-A-90/09713
- DE-C- 3 801 478
- GB-A- 2 288 522

## Beschreibung

Die Erfindung bezieht sich auf einen Halbleiterschaltkreis für ein elektronisches Gerät nach der Gattung des Anspruchs 1.

Sowohl im industriellen Bereich als auch bei Verkehrsmitteln gewinnen zunehmend Steuerungstechniken an Bedeutung, die sich auf einen Zweidraht-Bus als Kommunikationsmedium stützen. Ein Beispiel hierfür sind Busnetze nach dem CAN-Standard (CAN = Controller Area Network). Dabei kommunizieren eine Vielzahl von elektronischen Geräten über nur zwei Leiteradern miteinander.

Solche Geräte erfüllen ihre Steuerungsaufgabe durchweg mittels eines Microcontrollers. Für die Kommunikation über den Bus sind besondere Busprotokoll-Chips bzw. Protokoll-Funktionalitäten vorgesehen, die bei für derlei Anwendungen bereits spezialisierten Microcontrollern bereits monolithisch mitintegriert sein können und als kommunikatives Sende-/Empfangs-Bindeglied zwischen Bus und Controller fungieren. Sie entlasten den Microcontroller des betreffenden Gerätes von kommunikationsprotokollarisch festgelegten Aufgaben und erhöhen auf diese Weise dessen Verfügbarkeit und Durchsatz für die eigentliche Steuerungsapplikation beträchtlich.

Sowohl der Microcontroller als auch die Busprotokoll-funktion benötigen eine innerhalb enger Grenzen zu haltende Betriebsspannung, die in der Regel mittels eines vom Steuergerät mitumfaßten Spannungsreglers aus einem übergeordneten Potential abgeleitet wird. Werden entsprechende Steuergeräte beispielsweise in Verkehrsmitteln eingesetzt, müssen solche Spannungsregler innerhalb weiter Temperaturbereiche besonders betriebssicher und vor allem widerstandsfähig gegen Überspannungen und hochfrequente Störeinstrahlung sein. Nicht alle Realisierungstechnologien für Halbleiterschaltkreise eignen sich gleichermaßen für demgemäß zu optimierende Widerstandsfähigkeit im praktischen Betrieb. Es wurden besondere sog. Hochvolt-Technologien entwickelt, die gerade den extremen Belastungssituationen bei Spannungsreglern Rechnung tragen, was den Überlastungsschutz des Halbleiterchips gegen statische und dynamische Strom-, Spannungs- und Wärmebeanspruchung anlangt. Entsprechend gefertigte Produkte weisen eine hohe MTBF und dementsprechend geringe Ausfallrate auf.

Des weiteren ist bekannt, Microcontrollern sog. Watchdog-Schaltkreise zuzuordnen oder aus Kosten- und Bauraumersparnisgründen entsprechende Schaltkreisfunktionen als Subfunktion eines Microcontrollers zusammen mit diesem in der Herstellungstechnologie des jeweiligen Microcontrollers mitzuintegrieren. Diese Schaltkreise sind in der Regel mit Mitteln zur Erzeugung und Aussendung eines zeitlich definierten Reset-Signals an den Microcontroller nach dem Aufbau seiner Betriebsspannung vorgesehen. Bezüglich dieser Lösungen treten jedoch Probleme auf, wenn auf dem Chip des Microcontrollers mit unterschiedlich hoher Spannung stromversorgte Bereiche vorliegen und einer davon einer hohen Störsignalbeaufschlagung von der Versorgungsseite her unterliegen kann. Entsprechende Lösungen verlangen deshalb nach sehr wirksamen externen Schutzmaßnahmen für einen entsprechenden Halbleiter-Chip.

Darüberhinaus sind diskrete Hilfsbausteine für Mikroprozessoren bekannt, die Mittel zur Überwachung wenigstens einer Betriebsspannung aufweisen, um bei deren Verlassen eines vorbestimmten Toleranzfensters einen Reset für den Microcontroller zwecks sicheren Programmstops erzeugen. Sie werden in Niederspannungstechnologie vorwiegend im Systemmaßbereich 0,8...1,5 *µ* gefertigt.

In der mit der Prioritätsanmeldung DE 196 11 942.1 zeitgleich eingereichten Anmeldung DE 196 11 945.6 - auf den gesamten Offenbarungsinhalt dieser letztgenannten Anmeldung wird nachfolgend mit #) Bezug genommen - ist eine Einrichtung für den busvernetzten Betrieb eines elektronischen Geräts mit Microcontroller offenbart, welche u.a. dem Bedürfnis Rechnung trägt, den Gesamtstromverbrauch eines CANs während Zeiten seiner relativen Betriebsruhe zu minimieren.

Die Einrichtung besteht aus einer speziellen Halbleiterschaltung mit der Bus-Funktion eines Kommunikations-Transceivers sowie einem elektrisch einbzw. abschaltbaren Spannungsregler. Beide Teile wirken dahingehend miteinander zusammen, daß die Halbleiterschaltung in einem bestimmten Betriebszustand an den Spannungsregler ein Signal abgibt, welches dessen Abschaltung und damit auch die des ausgangsseitig an die Geräteelektronik abgegebenen Versorgungsstromes bewirkt. In diesem Zustand beziehen dann nur noch die Halbleiterschaltung sowie der Regler von einem übergeordneten Versorgungspotential sehr geringe Ruheströme; der Microcontroller ist dann spannungslos. Die die Transceiverfunktion realisierende Halbleiterschaltung umfaßt dort noch weitere Funktionen in Zusammenhang mit der Erkennung von Busfehlern und Weckanforderungen zur Reinitialisierung des Microcontrollers sowie zu deren Verwirklichung analoge und digitale Funktionskomponenten gemixt. Wegen Einzelheiten wird auf #) verwiesen.

Im Rahmen jener Erfindung wird u.a. vorgeschlagen, diese Funktionskomponenten, den Microcontroller und die Busprotokoll-Funktion auf einem einzigen Chip monolithisch zu integrieren. Im Ergebnis läge damit für ein elektronisches Steuergerät eine Lösung vor, die im wesentlichen aus z.B. drei Halbleiterbausteinen bestünde, nämlich aus dem (1) Spannungsregler, dem (2) einkörperlichen Verbund aus Microcontroller und Busprotokollfunktion, erweitert um den Funktionsumfang besagter Halbleiterschaltung - begrifflich zu verstehen als "Bus-Application(BA)-Controller" -, sowie (3) einem dem Microcontroller applikationswärts nachgeschalteten Input/Output-Interface zur Aufnahme von applikationsspezifischen Sensorsignalen und zur Ansteuerung erforderlicher Aktuatoren etc.. Die Implementatierung und Integration eines solchen Halbleiterschaltkreises ist möglich, erweist sich jedoch als kostenintensiv in Relation zur abdeckbaren Anwendungsbreite eines solchen Spezialbausteins.

Eine Alternative dazu bestünde darin, die Elemente (1) bis (3) zu einem einzigen "Hyperchip" zu integrieren. Ein solcher vollintegrierter "Hyperchip" auf der Basis eines Microcontrollers unterliegt aber keinen geringeren Einschränkungen hinsichtlich einer breiten Anwendbarkeit.

So werden - für unterschiedliche Geräteanforderungen - unterschiedliche Hyperchip-Varianten benötigt. Durch Typen-Spreading wird jedoch der Stückzahlvorteil für den erwünschten Kostenreduktionsfaktor beschränkt. Ferner ist ein solcher Hyperchip ein kundenspezifischer Baustein mit Bindungsfolge an den betreffenden Hersteller. Dies kann u.U. ein Nachteil sein, wenn Second- und Trisource-Imperativen bestehen. Darüberhinaus erschweren entsprechende kundenspezifische Lösungen jedwede Standardisierung, mit sekundärem, ebenfalls negativem Durchschlag auf den Kostenvorteil. Sowohl im Falle des Hyperchips als auch des BA-Controllers sind EMV-Probleme zu erwarten, da Störungen vom Bus ohne weiteres bis an den Microcontroller gelangen können. Von Hyperchip zu Hyperchip bzw. BA-Controller zu BA-Controller für unterschiedliche Anwendungen können erforderliche EMV-Schutzmaßnahmen sehr unterschiedlich aussehen. Abgesehen von deren Kosten bedingen sie in verschiedenen Applikationen verschiedene Verwirklichungsweisen, d.h. immer wieder neu zu beachtende Designregeln, woraus sich zwangsläufig auch Fehlermöglichkeiten eröffnen. Des weiteren ist nicht jede Technologie zur Herstellung von aktuell und künftig interessanten Microcontrollern gleich gut geeignet, Schaltkreiskomponenten mitaufzunehmen, die in der Praxis entweder einer Reststörspannungsbeaufschlagung standhalten müssen, die in der Größenordnung der Betriebsspannung des Microcontrollers liegen kann oder das Chipmaterial mit Spot-Leistungsdichten beanspruchen, die im Fehlerfalle bis nahe an den thermischen Zusammenbruch heranreichen können. Umfeldbedingungen, die solche Beanspruchungen zur Folge haben, treten z.B. in der industriellen Steuerungstechnik und in Verkehrsmitteln ohne weiteres auf.

Die vorgenannten Probleme verschärfen sich exponentiell mit über *µ*C-Technologiefortschritt wachsendem System-Shrinkmaß. Auch werden die on-chip beherrschbaren Spot-Verlustleistungen von z.B. Treibern zunehmend kleiner. Es kann davon ausgegangen werden, daß das System-Shrinkmaß monolithischer LS-Technologien schon bald bei 0.25/*µ*m angelangt ist. Interfacefunktionen in 0.25*µ*m-Technologie sind jedoch zu empfindlich, als daB sie mit einer z.B. der Jump-Start-, Load-Dump- und statischen Überspannungsgefahr ausgesetzten Industrie- oder Fahrzeugumgebung direkt verbunden und mit hinreichender Verfügbarkeit darin betrieben werden könnten. Folglich erzwingt ein auf der einen Seite erzielter Bauraum- und Kostenvorteil bauraumbeanspruchende und Kosten verursachende Zusatzmittel zur Realisierung von Schutzfunktionen.

Die WO 90/09713 beschreibt eine Schnittstelle eines Computer-Netzwerks, insbesondere für ein Kraftfahrzeug, mit mindestens zwei Busleitungen, wobei eine den Busleitungen und einer Bezugsspannung zugeordnete Schaltung, welche bei einer Unterbrechung oder bei einem Kurzschluß einer der Busleitungen nach Masse oder gegen eine Versorgungsspannung des Computer-Netzwerks ein auf der anderen, intakten Busleitung eintreffendes Signal auswertet und zur Aktivierung der Netzwerkschnittstelle ein Wake-Up-Signal abgibt.

Es ist Aufgabe der Erfindung, einen Halbleiterschaltkreis für ein elektronisches Gerät vorzuschlagen, der an den vorgenannten Nachteilen und Problemen vorbei führt und insbesondere eine bauraum- und kostenoptimale Realisierung moderner zweidrahtbusgesteuerter elektronischer Geräte ermöglicht.

Diese Aufgabe wird bei einem gattungsgemäßen Halbleiterschaltkreis mit den kennzeichnenden Merkmalen des Anspruchs 1 gelöst.

Die Erfindung verwirft die vorgenannten Lösungsansätze zugunsten eines anderen, der nicht nur das Bauraum-, Spreading- und Kostenproblem, sondern darüber hinaus auch noch das Problem eines Schutzes des Microcontrollers vor schadvollen Umfeldeinwirkungen sowie das Problem vielzähliger Board-Verbindungen am Microcontroller in einem einzigen Zug auszuräumen vermag.

Erfindungsgemäß werden nicht der Spannungsregler und die den Spannungsregler ansteuernde Halbleiterschaltung mit Interface-Funktion zwischen Zweidrahtbus und Bus-Protokoll-Modul des Microcontrollers auf dessen Chip in der Niedervolt-Technologie des Microcontrollers mitintegriert, sondern es werden nur die besagte Halbleiterschaltung samt Hilfs- und Erweiterungsfunktionen auf dem Chip des Spannungsreglers in der Technologie des Spannungsreglers mitintegriert.

Dadurch entfallen nicht nur alle Schutzfunktionen, die allein der Spannungsregler on-chip mit dem Microcontroller benötigte, um letzteren vor betrieblichen Störeinwirkungen auf den Spannungsregler zu schützen (Beispiel: Überhitzung, Jump-Start- oder Load-Dump-Durchgriff durch den Regler auf das Substrat).

Im Interesse einer Kostenoptimierung lassen sich auf diese Weise nicht nur anwendungsspezifisch unterschiedliche busprotokollfähige Microcontroller frei wählen, um mit dieser in der überwiegenden Mehrzahl von Anwendungsfällen gleichermaßen benötigten Funktionalität zu kooperieren. Weil die für Spannungsregler in Frage kommenden Technologien aus physikalischen Gründen wesentlich größere Systemmaße als die Niedervolttechnologien für Analog- und Digitalanwendung in A/D-Microcontrollern aufweisen, wird die im Spannungsregler problemlos reproduzierbare Robustheit bezüglich Überspannungen, Transienten, Hochfrequenzeinstrahlung etc. in die Transceive-Funktion zwischen Bus (fungierend als "Antenne" für Störeinwirkungen) und Microcontroller erfüllende Schaltkreisfunktion importiert, die somit im Hinblick auf die Störsicherheit zugleich wie ein Schutzbauteil gegen alle erdenklichen Störungen vom Bus und vonseiten der Stromversorgung eines entsprechenden Gerätes wirkt. Im Effekt bedeutet dies, daß die hohen Isolationsanforderungen zwischen dem gleichspannungsgekoppelten Zweidraht-Bus und hochsensibler Niederspannungslogik so ideal erfüllbar sind, und zwar unter weitestgehendem Verzicht auf kostenintensive und Bauraum beanspruchende Schutzmittel. Der hohe Bedarf dieser Funktion in einer Vielzahl von Steuergeräten unterschiedlichst auslegbarer Leistungsfähigkeit beseitigt das Spreading-Problem und erschließt den Kostenvorteil aus der Größtmassenproduktion. Im Endergebnis wird so durch eine physikalisch an der Einsatzpraxis orientierte, wohlgezügelte Integrationsweite gegenüber modernen LSI-Realisierungsbestrebungen eine technische, konstruktive, aufwands- und kostenmäßige Optimierung für das Steuergerät als Ganzes erreicht.

Weitere Vorteile erschließt der erfindungsgemäße Halbleiterschaltkreis bei Fortbildung bzw. Verwendung gemäß den abhängigen Ansprüchen 2 bis 133.
- Gemäß Anspruch 2 ist der Schaltkreis programmierbar.
- Gemäß Anspruch 3 enthält der Schaltkreis Programmiermittel, welche eine Programmierung wenigstens einer Funktion des Schaltkreises einmalig zulassen bzw. zuließen.
- Gemäß Anspruch 4 umfaßt der Schaltkreis einen nichtflüchtigen Speicherbereich, z.B. als EEPROM-Struktur ausgeführt.
- Gemäß Anspruch 5 umfaßt der Schaltkreis einen nichtflüchtigen Speicherbereich und ist programmierbar, indem Daten, die wenigstens eine. (charakteristische) Funktion des Schaltkreises bestimmen, in diesem Speicherbereich ablegbar sind.
- Gemäß Anspruch 6 umfaßt der Schaltkreis ein Interface zum seriellen Austausch von Daten und/oder Steuersignalen zwischen dem Schaltkreis und wenigstens dem mit dessen Transceiver-Funktion kooperierenden Microcontroller.
- Gemäß Anspruch 7 ist über dieses Interface die Ansteuerung und/oder Programmierung wenigstens einer (charakteristischen) Schaltkreisfunktionen möglich.
- Gemäß Anspruch 8 bilden die Schaltkreismittel zur Bereitstellung wenigstens einer zweiten Versorgungsspannung einen linear arbeitenden Spannungsregler.
- Gemäß Anspruch 9 bilden die Schaltkreismittel zur Bereitstellung wenigstens einer zweiten Versorgungsspannung einen schaltenden Spannungsregler.
- Gemäß Anspruch 10 bilden die Schaltkreismittel zur Bereitstellung wenigstens einer zweiten Versorgungsspannung einen mehrerer Betriebsarten fähigen Spannungsregler.
- Gemäß Anspruch 11 ist der mehrerer Betriebsarten fähige Spannungsregler sowohl als Linearregler als auch als Schaltregler betreibbar.
- Gemäß Anspruch 12 umfaßt der Schaltkreis Mittel, welche es erlauben, in Abhängigkeit von einer entsprechenden Ansteuerung des Spannungsreglers dessen Betriebsart zu wählen bzw. zu wechseln.
- Gemäß Anspruch 13 handelt es sich bei dem als Schaltregler betreibbaren Spannungsregler um einen solchen mit induktivem Energiespeicher, mit wenigstens letztwelchem und einer Speicherkapazität der Schaltkreis kooperationsfähig ist.
- Gemäß Anspruch 14 ist der schaltenden Spannungsregler ein Tiefsetzsteller des Buck-Typs.
- Gemäß Anspruch 15 umfaßt der Spannungsregler ein Freilauf-Ventil, welches während der Abschaltphasen des Stromflusses zur Magnetisierung/Aufladung des induktiven Energiespeichers zwischen einem der beiden Anschlüsse desselben und dem Bezugspotential der Spannungsregelung/Massepotential stromleitfähig ist.
- Gemäß Anspruch 16 ist das Freilauf-Ventil eine Diodenstrecke.
- Gemäß Anspruch 17 ist Freilauf-Ventil ein gesteuerter elektronischer Schalter, insbesondere MOSFET-Transistor.
- Gemäß Anspruch 18 ist wenigstens eine der Elektroden des Freilauf-Ventils an wenigstens einen besonderen Anschluß des Schaltkreises geführt und besagte Stromleitfähigkeit ist durch externe Beschaltung dieses wenigstens einen besonderen Anschlusses verwirklichbar.
- Gemäß Anspruch 19 ist die erste Strompfadelektrode des Freilauf-Ventils an einen Anschluß des Schaltkreises unmittelbar benachbart zum Reglerausgang des Schaltkreises und/oder die zweite Strompfadelektrode an einen Anschluß unmittelbar benachbart zu wenigstens einem Masseanschluß des Schaltkreises geführt.
- Gemäß Anspruch 20 sind die Mittel zur Bereitstellung wenigstens einer zweiten Versorgungsspannung im Sinne einer Einschaltung bzw. Abschaltung dieser Versorgungsspannung durch ein Steuersignal aktivierbar bzw. deaktivierbar.
- Gemäß Anspruch 21 konfigurieren die Mittel zur Bereitstellung wenigstens einer zweiten Versorgungsspannung zwei Spannungsregler, nämlich einen ersten Spannungsregler zur Bereitstellung einer zweiten Versorgungsspannung für den wenigstens einen Microcontroller und einen zweiten Spannungsregler zur Bereitstellung einer dritten Versorgungsspannung für die mit diesem/diesen kooperativen Schaltkreise des Steuergerätes, wobei diese Spannungsregler so beschaffen sind, daß sie vermittels eines Steuersignals aktivierbar bzw. deaktivierbar sind.
- Gemäß Anspruch 22 umfassen besagte Mittel ferner Steuermittel, welche in Abhängigkeit von einem Steuersignal einen definiert ungleichzeitigen Aufbau und/oder Abbau der zweiten und dritten Versorgungsspannung bewirken.
- Gemäß Anspruch 23 sind besagte Steuermittel so beschaffen bzw. bewirken, daß im Falle der Aktivierung die zweite Versorgungsspannung für den wenigstens einen Microcontroller vor der dritten Versorgungsspannung für die mit diesem/diesen kooperativen Schaltkreise aufbaubar ist.
- Gemäß Anspruch 24 sind besagte Steuermittel so beschaffen bzw. bewirken, daß im Falle der Deaktivierung die zweite Versorgungsspannung für den wenigstens einen Microcontroller nach der dritten Versorgungsspannung für die mit diesem/diesen kooperativen Schaltkreise abbaubar ist.
- Gemäß Anspruch 25 sind die beiden Spannungsregler voneinander unabhängig und insoweit nur thermisch miteinander verkoppelt, und der Schaltkreis umfaßt Mittel welche bewirken, daß bei einer überlastungsbedingten Erhitzung des Substrates bis zu einer kritischen Temperatur T_{LIM} der zweite Spannungsregler jedenfalls vor dem Erreichen dieser Temperatur und der erste Spannungsregler erst nach dem Erreichen dieser Temperatur deaktiviert wird.
- Gemäß Anspruch 26 ist der wenigstens eine Spannungsregler zur Einstellung auf eine bestimmte Ausgangsspannung aus einer Mehrzahl von wählbaren Ausgangsspannungen ansteuerbar und/oder programmierbar.
- Gemäß Anspruch 27 ist die Betriebsart des mehrerer Betriebsarten fähigen Spannungsreglers durch Ansteuerung und/oder Programmierung wähl- bzw. einstellbar.
- Gemäß Anspruch 28 sind die Mittel zur Bereitstellung wenigstens einer zweiten, festen Versorgungsspannung sowohl mit einem von ihnen mitumfaßten, d.h. schaltkreisinternen, Regeltransistor als auch in Verbindung mit einem schaltkreisexternen Regeltransistor betreibbar und der Schaltkreis weist zu diesem Zweck einen Anschluß zur Ansteuerung der Steuerelektrode eines externen, mit dem Schaltkreis kooperativen Regeltransistors auf.
- Gemäß Anspruch 29 ist die Betreibbarkeit der Mittel zur Bereitstellung wenigstens einer zweiten, festen Versorgungsspannung mit einem schaltkreisinternen Regeltransistor oder mit einem schaltkreisexternen Regeltransistor durch Ansteuerung und/oder Programmierung wähl- bzw. einstellbar.
- Gemäß Anspruch 30 weist der Schaltkreis für besagte Ansteuerung oder Programmierung wenigstens einen äußeren Anschluß auf.
- Gemäß Anspruch 31 ist die Programmierung der Mittel zur Bereitstellung wenigstens einer zweiten Versorgungsspannung durch Beschalten des wenigstens einen äußeren Anschlusses mit einem Bezugspotential, insbesondere mit Masse- oder einem massenahen Potential bzw. einem vom Bezugspotential signifikant sich unterscheidenden Potential oder einem Versorgungspotential möglich.
- Gemäß Anspruch 32 ist die Ansteuerbarkeit wenigstens einer Funktion gemäß dem Anspruch 12 oder 26 oder 27 oder 29 durch das Interface gemäß Anspruch 6 gegeben.
- Gemäß Anspruch 33 ist die Transceiver-Funktion sowohl bezüglich ihrer Sende- und Empfangsmittel als auch bezüglich von ihr umfaßter Steuermittel so beschaffen, daß sie entweder zweidrähtig differentiell oder eindrähtig auf wenigstens einer Busader gegen ein festes Bezugspotential senden und empfangen kann.
- Gemäß Anspruch 34 ist die Transceiver-Funktion bezüglich ihrer Sende- und Empfangsmittel so beschaffen, daß deren Slewrate beeinflußbar, insbesondere an die Bus-Bitzeit bzw. Baudrate der Kommunikation anpaßbar ist.
- Gemäß Anspruch 35 weist der Schaltkreis einen Steuerpfad auf, über welchen die Beeinflussung der Slew-Rate durch den mit der Transceiver-Funktion kooperativen Microcontroller möglich ist.
- Gemäß Anspruch 36 umfassen die Empfangsmittel ein Steuerungsinterface, durch welches der vorgenannte Steuerpfad zur Beeinflussung der Slew-Rate verläuft.
- Gemäß Anspruch 37 umfassen die Empfangsmittel Mittel zur Erkennung von Fehlern der Signalübertragung im Busnetz und zur Erzeugung eines indikativen Fehlersignales.
- Gemäß Anspruch 38 umfassen die Empfangsmittel Mittel zur Erkennung von Fehlern im Busnetz, welche so beschaffen sind, daß sie busaderspezifisch Fehler erkennen und im Fehlerfalle ein Fehlersignal abgeben können.
- Gemäß Anspruch 39 umfassen die Mittel zur Erkennung von Fehlern im Busnetz einstellbare Selektionsmittel, die wenigstens ein indikatives Fehlersignal abzugeben vermögen; dabei sind diese Mittel auf eine vorwählbare Zahl von aufeinanderfolgenden Bitsignalfehlern als Kriterium für die Abgabe des Fehlersignals einstellbar.
- Gemäß Anspruch 40 umfassen die Empfangsmittel für an der ersten Busader erkennbare Fehler erste Selektionsmittel und für an der zweiten Busader erkennbare Fehler zweite Selektionsmittel, wobei die ersten und zweiten Selektionsmittel unabhängig voneinander auf erste und zweite Zahlen von aufeinanderfolgenden Bitsignalfehlern als Kriterien zur Erzeugung von der ersten bzw. zweiten Busader jeweils zugeordneten Fehlersignalen einstellbar sind.
- Gemäß Anspruch 41 weist der Schaltkreis einen Steuerpfad auf, über welchen die Einstellung der vorgenannten Selektionsmittel durch den mit der Transceiver-Funktion kooperativen Microcontroller möglich ist.
- Gemäß Anspruch 42 umfassen die Empfangsmittel ein Steuerungsinterface, durch welches der vorgenannte Steuerpfad zur Einstellung der Selektionsmittel verläuft.
- Gemäß Anspruch 43 sind das für die Beeinflussung der Slew-Rate vorgesehene Steuerungsinterface und das für die Einstellung der Selektionsmittel vorgesehene Steuerungsinterface in einer Schaltkreisstruktur zusammengefaßt
- Gemäß Anspruch 44 umfassen die Empfangsmittel wenigstens einen Fehlerspeicher, welcher durch ein vorgenanntes Fehlersignal setzbar ist.
- Gemäß Anspruch 45 ist der wenigstens eine Fehlerspeicher des nichtflüchtigen Speicherbereichs gemäß Anspruch 4.
- Gemäß Anspruch 46 umfaßt der Schaltkreis mit der Transceiver-Funktion in Verbindung stehende Potentialbeeinflussungsmittel zur Einflußnahme auf wenigstens einen im Sendefall dominanten und/oder im Empfangsfall diskriminanten Signalpegel.
- Gemäß Anspruch 47 umfaß der Schaltkreis Mittel zur Bereitstellung einer weiteren, schaltkreisinternen Versorgungsspannung oder eines schaltkreisinternen Versorgungsstromes zur Speisung der Potentialbeeinflussungsmittel.
- Gemäß Anspruch 48 weist der Schaltkreis einen Anschluß zur externen Überwachung und/oder kapazitven Siebung der schaltkreisinternen Versorgungsspannung bzw. des schaltkreisinternen Versorgungsstromes auf.
- Gemäß Anspruch 49 weist der Schaltkreis einen Steuerpfad auf, über welchen der wenigstens eine Microcontroller mit der Transceiver-Funktion kommunikationsfähig ist und über welchen die Potentialbeeinflussungsmittel ansteuerbar sind.
- Gemäß Anspruch 50 umfaßt der Schaltkreis ein Steuerungsinterface, durch welches der vorgenannte Steuerpfad zu den Potentialbeeinflussungsmitteln verläuft.
- Gemäß Anspruch 51 ist das Steuerungsinterface Teil von oder identisch mit dem Interface gemäß Anspruch 6.
- Gemäß Anspruch 52 sind die Potentialbeeinflussungsmittel so beschaffen sind, daß beim Senden wenigstens einer der beiden Signalpegel, welche das dominante Buspegelfenster bestimmen, monoton wenigstens in- und/oder dekrementell verschiebbar ist.
- Gemäß Anspruch 53 sind bei Beeinflußbarkeit beider im Sendefalle dominanter Signalpegel beide voneinander unabhängig einstellbar bzw. veränderbar.
- Gemäß Anspruch 54 sind beide im Sendefalle dominanten Signalpegel so einstellbar bzw. verschiebbar, daß dabei der Abstand beider Pegel im wesentlichen beibehalten wird.
- Gemäß Anspruch 55 weist der Schaltkreis einen signaldedizierten Anschluß als Bezugspotentialschiene wenigstens der Empfangsmittel der Transceiver-Funktion auf.
- Gemäß Anspruch 56 weist der Schaltkreis einen stromdedizierten Anschluß als Bezugspotentialschiene wenigstens der Mittel zur Bereitstellung wenigstens einer zweiten, festen Versorgungsspannung auf.
- Gemäß Anspruch 57 umfaßt der Schaltkreis einen besonderen Anschluß als Bezugspotentialschiene wenigstens der Mittel zur Einstellung bzw. Veränderung beim Senden wenigstens einer der beiden dominanten Signalpegel, welche das Buspegelfenster bestimmen.
- Gemäß Anspruch 58 weist der Schaltkreis einen besonderen Anschluß auf, über welchen die Potentialbeeinflussungsmittel mit einem Bezugspotential im externen Umfeld des den Schaltkreis tragenden Gerätes wirkverbindbar sind.
- Gemäß Anspruch 59 weist der Schaltkreis in dem Pfad besagter Wirkverbindung Schutzmittel gegen Überspannung und/oder Falschpolung und/oder hochfrequente Signaleinspeisung auf.
- Gemäß Anspruch 60 verfügt der Schaltkreis über einen Betriebszustand, in welchem die Mittel zur Bereitstellung der wenigstens zweiten Versorgungsspannung eingeschaltet, die Empfangsmittel aktiviert und die Sendemittel deaktiviert und insoweit ohne Einfluß auf den Bus sind.
- Gemäß Anspruch 61 verfügt der Schaltkreis über wenigstens einen Betriebszustand, in welchem die Sendemittel der Transceiver-Funktion ohne Einfluß auf den Bus sind und in welchem die Mitteln zur Bereitstellung der wenigstens zweiten Versorgungsspannung deaktiviert bzw. abgeschaltet sind.
- Gemäß Anspruch 62 umfaßt der Schaltkreis mit dem Bus in Verbindung stehende Weck-Erkennungsmittel und Steuermittel, mittels derer er zwecks Verlassen des vorgenannt wenigstens einen Betriebszustandes die Mittel zur Bereitstellung der wenigstens zweiten Versorgungsspannung aktivieren kann.
- Gemäß Anspruch 63 umfaßt der Schaltkreis Steuermittel, durch welche der mit der Transceiver-Funktion kooperierende Microcontroller den Schaltkreis in den vorgenannten Betriebszustand (zurück-)versetzen kann.
- Gemäß Anspruch 64 ist die Transceiver-Funktion bezüglich ihrer Sende- und Empfangsmittel so beschaffen, daß diese tolerant gegenüber allen möglichen Fehlerzuständen im und am Busleitungsnetz sind, sofern alle Busteilnehmer sich bezüglich des Busleitungsnetzes kompatibel verhalten.
- Gemäß Anspruch 65 umfaßt der Schaltkreis Mittel zur Realisierung einer Watchdog-Funktion wenigstens zur Rücksetzung des mit der Transceiver-Funktion kooperierenden Microcontrollers zur Überwachung einer für dessen ordnungsgemäßer Funktion bzw. dessen ordnungsgemäßer Programmabwicklung signifikanten Größe.
- Gemäß Anspruch 66 umfassen die Mittel zur Realisierung einer Watchdog-Funktion wenigstens einen Zeitgeber und der Schaltkreis weist wenigstens einen Anschluß zur Beschaltung der Watchdog-Funktion mit wenigstens einem zeitbestimmenden Element auf.
- Gemäß Anspruch 67 stehen die Mittel zur Realisierung einer Watchdog-Funktion mit den Mitteln zur Bereitstellung wenigstens einer zweiten, festen Versorgungsspannung direkt in Verbindung.
- Gemäß Anspruch 68 stehen die Mittel zur Realisierung einer Watchdog-Funktion mit den Mitteln zur Bereitstellung wenigstens einer zweiten Versorgungsspannung über einen vom Interface gemäß Anspruch 6 ausgehenden Steuerpfad miteinander in Verbindung.
- Gemäß Anspruch 69 sind die Mittel zur Realisierung einer Watchdog-Funktion so beschaffen, daß sie noch wenigstens einen weiteren Microcontroller des Steuergerätes hinsichtlich seiner ordnungsgemäßen Funktion und Programmabwicklung überwachen und diesen zurücksetzen können.
- Gemäß Anspruch 70 umfaßt der Schaltkreis Mittel zur Erzeugung und Übermittlung - nachdem wenigstens die den wenigstens einen Microcontroller speisende Versorgungsspannung aufgebaut ist - eines Rücksetzsignales an den wenigstens einen Microcontroller.
- Gemäß Anspruch 71 umfaßt der Schaltkreis Mittel zur Abgabe wenigstens eines Sperrsignals in Zusammenhang mit der Erzeugung und Übertragung wenigstens eines Rücksetzsignals an den wenigstens einen Microcontroller.
- Gemäß Anspruch 72 umfaßt der Schaltkreis Mittel zur Überwachung wenigstens einer Spannung aus der ersten Versorgungsspannung (Speisespannung des Schaltkreises) und der wenigstens einen zweiten Versorgungsspannung bezüglich wenigstens eines Grenzwertes sowie Mittel zur Abgabe eines Unterbrechungs- oder RücksetzSignals an wenigstens den mit der Transceiver-Funktion kooperierenden Microcontroller, wenn dieser Grenzwert unter- oder überschritten wird.
- Gemäß Anspruch 73 weist der Schaltkreis wenigstens einen besonderen Eingang auf, über den die mit dem Bus in Verbindung stehenden Weck-Erkennungsmittel in der Betriebsart gemäß Anspruch 62 mit einem Wecksignal beaufschlagbar sind; ferner ist der Schaltkreis so beschaffen, daß sein Verhalten auf ein Wecksignal an diesem wenigstens einen besonderen Eingang und sein Verhalten bei Empfang eines Wecksignales über den Bus identisch sind.
- Gemäß Anspruch 74 umfaßt der Schaltkreis von der Transceiver-Funktion unabhängige, autonome Mittel zur Erfassung wenigstens eines Wecksignales in Zeiträumen wenigstens reduzierter oder aber aufgehobener Aktivität des wenigstens einen Microcontrollers.
- Gemäß Anspruch 75 weisen diese autonomen Mittel mehrere Eingänge zum Empfang von Wecksignalen auf.
- Gemäß Anspruch 76 sind die autonomen Mittel aus der ersten Versorgungsspannung speisbar und unabhängig von den Mitteln zur Bereitstellung wenigstens einer zweiten, festen Versorgungsspannung betriebsfähig.
- Gemäß Anspruch 77 umfassen die autonomen Mittel wenigstens einen Zeitgeber zur Zeitsteuerung ihrer Funktion.
- Gemäß Anspruch 78 sind die autonomen Mittel im Sinne einer Zeitsteuerung ihrer Funktion von dem wenigstens einen Zeitgeber der Watchdog-Funktion aus ansteuerbar.
- Gemäß Anspruch 79 weisen die autonomen Mittel wenigstens eine Speicherzelle zur Speicherung eines erfaßten Weckereignisses auf.
- Gemäß Anspruch 80 sind die autonomen Mittel mit wenigstens einem Microcontroller kommunikationsfähig und mit einem solchen unmittelbar verbindbar ausgebildet.
- Gemäß Anspruch 81 sind die autonomen Mittel über das Interface gemäß Anspruch 6 mit dem wenigstens einen Microcontroller kommunikationsfähig.
- Gemäß Anspruch 82 weisen die autonomen Mittel wenigstens einen Highside- und/oder Lowside-Schalter zur wenigstens zeitabschnittsweisen Spannungsversorgung wenigstens eines Weck-Sensors auf.
- Gemäß Anspruch 83 weisen die autonomen Mittel wenigstens eine Highside- und/oder Lowside-Stromquelle zur wenigstens zeitabschnittsweisen Stromversorgung wenigstens eines Weck-Sensors auf.
- Gemäß Anspruch 84 ist bei einem Schaltkreis nach Anspruch 77 oder 78 einerseits und nach Anspruch 82 oder 83 andererseits der bzw. die wenigstens eine Highside- und/oder Lowside-Schalter oder -Stromquelle von dem wenigstens einen Zeitgeber wenigstens mittelbar so steuerbar, daß seine bzw. ihre Einschaltdauer t_{w} kürzer als die Wiederholzeit tₛ seines bzw. ihres Einschaltens ist.
- Gemäß Anspruch 85 ist bei einem Schaltkreis nach Anspruch 78 und einem der Ansprüche 82 und 83 die Watchdog-Funktion und die autonomen Mittel in Bezug aufeinander so beschaffen, daß der bzw. die wenigstens eine Highside- und/oder Lowside-Schalter bzw. -Stromquelle während einer vorbestimmten Einschaltdauer t_{w} mit einer Wiederholfrequenz fₛ=1/tₛ einschaltbar sind, welche mit der Folgefrequenz eines von der Watchdog-Funktion an den wenigstens einen Microcontroller abgebbaren Steuersignals zeitlich verkettet ist.
- Gemäß Anspruch 86 ist die Einschaltdauer t_{W} und/ oder die Wiederholzeit bzw.- Wiederholfrequenz tₛ bzw. fₛ = 1/tₛ und/oder ein Verkettungsfaktor programmierbar.
- Gemäß Anspruch 87 umfaßt der Schaltkreis Diskriminationsmittel, die die Speicherung eines Weckereignisses dann auslösen, wenn das Weckereignis zum N-ten Male erfaßt worden ist, wobei N = INTEGER {(t_{d}/tₛ)+1}.
- Gemäß Anspruch 88 ist die Zahl N programmierbar und/oder aus einer Menge vordefinierter Werte auswählbar.
- Gemäß Anspruch 89 sind die autonomen Mittel bezüglich der Wahrheitsbedingung wenigstens eines der mehreren Weck-Eingänge gemäß Anspruch 75 aus einer festen Menge möglicher Wahrheitsbedingungen programmierbar und insoweit bezüglich ihrer Schaltkreisfunktion flexibel.
- Gemäß Anspruch 90 läßt sich ein Schaltkreis nach einem der Ansprüche 26 und 27 und 29 und 86 und 88 und 89 vorteilhaft weiterbilden nach einem der Ansprüche 3 und 5.
- Gemäß Anspruch 91 läßt sich ein Schaltkreis nach einem der Ansprüche 26 und 27 und 29 und 86 und 88 und 89 vorteilhaft weiterbilden nach Anspruch 7.
- Gemäß Anspruch 92 läßt sich ein Schaltkreis nach einem der Ansprüche 26 und 27 und 29 und 86 und 88 und 89 vorteilhaft weiterbilden nach Anspruch 3 und 6, indem die einmalige Programmierung über das serielle Interface initiierbar war oder ist.
- Gemäß Anspruch 93 ist der Schaltkreis bezüglich wenigstens einer der außer den Mitteln zur Bereitstellung der wenigstens zweiten Versorgungsspannung mitumfaßten Funktionen und/oder/bzw. deren Grenzwert/e und/ oder/bzw. deren Zeitverhalten und/oder/bzw. deren Wahrheitsbedingung/en programmierbar (Konfigurationsprogrammierung) bzw. auf vordefinierte Werte einstellbar.
- Gemäß Anspruch 94 ist in einem nichtflüchtigen Speicherbereich des Schaltkreises die Programmierung der Konfiguration des Schaltkreises als geschlossener Datensatz ablegbar.
- Gemäß Anspruch 95 umfaßt der Schaltkreis Mittel, die es erlauben, daß der vorgenannte Datensatz in den Schaltkreis - nach dessen Einbau in das Steuergerät - aus einem anderen Steuergerät mit bereits programmiertem Schaltkreis einlesbar und die charakteristische Funktion des Schaltkreises insoweit clonbar ist.
- Gemäß Anspruch 96 ist der nichtflüchtige Speicherbereich des Schaltkreises von dem mit dem Schaltkreis kooperierenden Microcontroller über ein Interface gemäß Anspruch 6 auslesbar und/oder überschreibbar.
- Gemäß Anspruch 97 weist der Schaltkreis zwei Anschlüsse zum Anschluß zweier externer Abschlußelemente für die beiden Busadern sowie interne Busfehler-Erkennungsmittel und interne Ersatzabschluß- und Umschaltmitteln auf, um im Fehlerfalle den Busabschluß zu verändern.
- Gemäß Anspruch 98 umfaßt die Transceiver-Funktion des Schaltkreises einstellbare Bitzeit-Filter zur Optimierung der Störungsunterdrückung auf die Kommunikations-Baudrate.
- Gemäß Anspruch 99 sind diese Bitzeit-Filter digital einstellbar.
- Gemäß Anspruch 100 realisieren Potentialbeeinflussungsmittel eine in den bezugspotentialnahen Versorgungsanschluß der Sendemittel eingeschleifte, einstellbare Offset-Spannungsquelle.
- Gemäß Anspruch 101 sind konstantspannungsversorgten Sendemitteln wenigstens analog wirkende Teile der Empfangsmittel stromversorgungsmäßig parallel geschaltet, so daß besagte Offset-Spannungsquelle auch empfangsseitig wirksam ist.
- Gemäß Anspruch 102 realisieren die Potentialbeeinflussungsmittel eine in den bezugspotentialnahen Versorgungsanschluß einer die Busader BUS_L ansteuernden Schaltendstufe der Sendemittel eingeschleifte erste einstellbare Offset-Spannungsquelle und eine in einen potentialmäßig entgegengesetzten Versorgungsanschluß einer die Busader BUS_H ansteuernden Schaltendstufe eingeschleifte zweite einstellbare Offset-Spannungsquelle.
- Gemäß Anspruch 103 realisieren die Potentialbeeinflussungsmittel noch eine dritte einstellbare Offset-Spannungsquelle, wobei letztere und die vorgenannt zweite Offset-Spannungsquelle auf/an unterschiedlich hohe Versorgungspotentiale bezogen bzw. angeschlossen sind.
- Gemäß Anspruch 104 sind die zweite und dritte Offset-Spannungsquelle alternativ aktivierbar.
- Gemäß Anspruch 105 sind die bezugspotentialbezogene (Q_{SL}) und die wirksame, bezugspotentialferne Offset-Spannungsquelle nur in zeitlicher Aufeinanderfolge abwechselnd aktivierbar.
- Gemäß Anspruch 106 umfaßt der Schaltkreis Mittel, welche eine Wirksamschaltung der zweiten und dritten Offset-Spannungsquelle in Abhängigkeit vom Sendesignal erlauben.
- Gemäß Anspruch 107 umfassen die Potentialbeeinflussungsmittel Mittel zur autonomen Veränderung der Einstellung wenigstens einer Offset-Spannungsquelle über der Zeit.
- Gemäß Anspruch 108 ist eine solche Veränderung in Abhängigkeit vom sendeseitigen Datensignal möglich.
- Gemäß Anspruch 109 ist den Mitteln zur autonomen Veränderung der Einstellung wenigstens einer Offset-Spannungsquelle ein von dem wenigstens einen Microcontroller beziehbares Taktsignal zuführbar.
- Gemäß Anspruch 110 umfassen die Potentialbeeinflussungsmittel Regelungsmittel, welche es erlauben, die Beeinflussung nach Maßgabe durch eine von dem wenigstens einen Microcontroller empfangbare Wertvorgabe in Abhängigkeit von einem an einer Busader abnehmbaren Potential vorzunehmen.
- Gemäß Anspruch 111 umfassen die Potentialbeeinflussungsmittel - unabhängig von den Sendemitteln - mit wenigstens einer Busader verbundene bzw. verbindbare Ersatzmittel, die eine durch das Sendesignal getastete Aufschaltung auf die Busader eines geregelten Potentials erlauben.
- Gemäß Anspruch 112 umfassen die Potentialbeeinflussungsmittel ferner Meßmittel, die die Erfassung einer durch die Ersatzmittel verursachten Fehlergröße zwecks Kompensation durch Regelaufschaltung oder rechnerische Berücksichtigung bei der Sollwertvorgabe für die Regelung durch den wenigstens einen Microcontroller leisten.
- Gemäß Anspruch 113 umfassen die Potentialbeeinflussungsmittel - unabhängig von den Sendemitteln - mit wenigstens einer Busader verbundene bzw. verbindbare Ersatzmittel, über die eine durch das Sendesignal getastete Aufschaltung auf die Busader eines nicht geregelten Potentials nach Maßgabe durch einen von dem wenigstens einen Microcontroller vorgeb Digitalwert möglich ist.
- Gemäß Anspruch 114 ist zwecks Leitendsteuerung eines der Ersatzmittel diesem das Sendesignal von der betreffenden Aderendstufe über einen Umschalter zuführbar, der ggfs. die Aderendstufe von der Busader trennt.
- Gemäß Anspruch 115 umfassen die Regelungsmittel einen mit einer Busader wirkverbundenen Sampler und ein Halteglied bzw. einen haltenden Regler.
- Gemäß Anspruch 116 handelt es sich bei dem Sampler um einen solchen mit zwei Diodenstrecken, wobei die zweite Diodenstrecke zur Kompensation von Temperatureinflüssen und/oder einer abtaststromflußbedingten Fehlerspannung längs der ersten Diodenstrecke vorgesehen ist.
- Gemäß Anspruch 117 sind die Potentialbeeinflussungsmittel so beschaffen, daß sie die Beeinflussung wenigstens eines rezessiv diskriminanten Signalpegels durch Beeinflussung wenigstens einer Schwellenspannung im Empfänger erlauben.
- Gemäß Anspruch 118 weisen die Empfangsmittel auf eine Bezugspotentialschiene bezogene Mittel zur Vorgabe zweier Schwellwerte auf. Dabei ist diese Bezugspotentialschiene wirkverbunden oder wahlweise wirkverbindbar mit einem von wenigstens zwei alternativen Bezugspotentialanschlüssen des Schaltkreises.
- Gemäß Anspruch 119 ist die Beeinflussung durch eine in dem bezugspotentialnahen Versorgungsstrompfad wenigstens analog wirkender Teile der Empfangsmittel liegende einstellbare Offset-Spannungsquelle möglich.
- Gemäß Anspruch 120 ist die Bezugspotentialschiene der Schwellwertvorgabemittel mit dem bezugspotentialnahen Versorgungsfußpunkt wenigstens der analog wirkenden Teile der Empfangsmittel verbindbar.
- Gemäß Anspruch 121 weisen die Empfangsmittel des Schaltkreises auf einen Versorgungsfußpunkt bezogene Pegeldiskriminationsmittel auf. Dabei ist dieser Versorgungsfußpunkt wirkverbunden mit einem Bezugspotentialanschluß oder wahlweise wirkverbindbar mit wenigstens zwei alternativen Bezugspotentialanschlüssen des Schaltkreises.
- Gemäß Anspruch 122 umfassen die Potentialbeeinflussungsmittel Digital/Analog-Wandlungsmittel und/ oder Analog/Digital-Wandlungsmittel.
- Gemäß Anspruch 123 umfassen die Potentialbeeinflussungsmittel Digital/Analog-Wandlungsmittel, die wenigstens sämtliche Bezugswerte, Steuer- und Schaltsignale für allfällig im Sende- und/oder Empfangsbetrieb der Transceiver-Funktion vorzunehmenden Potentialbeeinflussungen zu erzeugen vermögen.
- Gemäß Anspruch 124 ist im Schaltkreis eine auf ein höheres Versorgungspotential bezogene Offset-Spannungsquelle durch eine auf ein niedrigeres Versorgungspotential bezogene, entsprechend offsetfähig variable Versorgungsspannungsquelle ersetzt.
- Gemäß Anspruch 125 ist der Schaltkreis integraler Bestandteil eines elektronischen Steuergerätes, in welchem er für nur eindrähtigen Empfang und nur eindrähtige Sendeweise (mit nur einem sendeseiteigen Leitungstreiber) beschaltet oder ansteuerbar ist.
- Gemäß Anspruch 126 ist der Schaltkreis Bestandteil eines zum Einsatz in einem Verkehrsmittel vorgesehenen elektronischen Steuergerätes.
- Gemäß Anspruch 127 ist der Schaltkreis Bestandteil eines zum Einsatz in Baumaschinen und Hebezeugen vorgesehenen elektronischen Steuergerätes.
- Gemäß Anspruch 128 ist der Schaltkreis Bestandteil eines zum Einsatz in der Automatisierungstechnik vorgesehenen elektronischen Steuergerätes.
- Gemäß Anspruch 129 ist der Schaltkreis Bestandteil eines zum Einsatz in der Elektroinstallationsoder Gebäudetechnik vorgesehenen elektronischen Steuergerätes.
- Gemäß Anspruch 130 ist der Schaltkreis Bestandteil eines zum Einsatz in der Heizungs- oder Klimatechnik vorgesehenen elektronischen Steuergerätes.
- Gemäß Anspruch 131 ist der Schaltkreis Bestandteil eines zum Einsatz in der Alarm-, Sicherheitsoder Zugangskontrolltechnik vorgesehenen elektronischen Steuergerätes.
- Gemäß Anspruch 132 ist die Transceiver-Funktion des Schaltkreises für eine Kommunikation nach CAN-Standard und zum Anschluß an ein CAN-Busleitungsnetz ausgelegt.
- Gemäß Anspruch 133 ist der Schaltkreis in einer homogenen Hochvolt-Technologie hergestellt.

Alles in allem kann der Schaltkreis also außer wenigstens einem Spannungsregler zur Stromversorgung eines Steuergerätes und einem Signal-Transceiver zur Kommunikation über einen Zweidrahtbus auch Watchdog-Funktionen, verschiedene Weck-Funktionen und ein Interface zur Serie len Datenübertragung zwischen dem Schaltkreis und wenigstens dem mit dem Schaltkreis buskommunikativ kooperierenden Microcontroller umfassen, über das der Austauch der kooperativen Steuersignale und/oder Daten möglich ist. Des weiteren ist eine Programmierbarkeit aller wesentlicher Funktionen bzw. deren Grenzwerte und/oder Zeitverhalten vorgesehen sowie die Speicherbarkeit entsprechender Programmierungsdaten in einem optional mitumfaßten nichtflüchtigen Speicher beispielsweise vom EEPROM-Typ.

Der Schaltkreis kann kostengünstig in einer homogenen Hochvolttechnologie sehr robust und widerstandsfähig gegen allfällige Stör- und Überlasteinwirkungen im industriellen und Fahrzeugumfeld hergestellt werden und eignet sich insoweit ganz besonders zur Verwendung in Verkehrsmitteln oder Industrieumgebungen.

Ausführungsbeispiele der Erfindung sind in der Zeichnung dargestellt und in der nachfolgenden Beschreibung näher erläutert. Da der vorliegende Gegenstand von dem in #) beschriebenen ausgeht, sind einerseits - zum Zwecke der Erleichterung der Übersicht - zwei Figuren aus #) hier importiert; bezüglich deren Detailbeschreibung wird an dieser Stelle ausdrücklich auf #) vollumfänglich verwiesen.

Zum anderen wird an dieser Stelle darauf hingewiesen, daß die folgende Figurenbeschreibung - beispielhaft - eine Implementation für einen CAN-Bus zugrundelegt und deshalb auch auf diesem Gebiet eingeführte Bezeichnungen verwendet. Gleichwohl überspannt die Erfindung auch andere zweidrähtige Busse. Sie ist deshalb in entsprechend ausgestatteten Steuergeräten - beispielsweise nach dem J1850-Standard - genau so vorteilhaft einsetzbar. Dieser Allgemeingültigkeit ist in der Zeichnung Rechnung getragen durch eine sowohl neutrale Bezeichnung der Busleitungen mit BUS_H und BUS_L als auch eine spezielle für den CAN-Anwendungsfall CAN_H und CAN_L. Die Beschreibung der komplexen Funktionalität ist bewußt so gehalten, daß sie dem Fachmanne den Weg nachzeichnet, auf dem vom Gegenstand von #) ausgehend die hier gegenständliche Lösung gefunden worden ist. Es zeigen:
- **Fig. 1**: eine erste Veranschaulichung der Funktionsbelegung eines Halbleitersubstrats, welches zusammen mit einer Spannungsregelungsfunktion weitere Funktionsumfänge integriert;
- **Fig. 2**: die Figur 13 aus #) zum Vergleich mit Schaltkreiselementen wie dort beschriebenermaßen von einem einfacheren Steuergerät umfaßt;
- **Fig. 3**: die Figur 2 aus #) zur Vergegenwärtigung der Funktionen, welche der Halbleiterschaltkreis 100 in Fig. 2 bei geringerem Integrationsgrad umfassen kann;
- **Fig. 4**: eine schematische Veranschaulichung der zu Blöcken zusammengefaßten Funktionen eines gegenüber Fig. 3 noch universeller und mit zusätzlichen Funktionen ausgebildeten Halbleiterschaltkreises 100';
- **Fig. 5**: ein schematisches Funktionsblockschaltbild eines leistungsfähigeren Steuergeräts mit einer Schaltkreisfunktion 100 gemäß Fig. 3 bzw. 100' gemäß Fig. 4 und einem optionalen nichtflüchtigen Speicher, beispielhaft als EEPROM ausgeführt;
- **Fig. 6**: eine vereinfachte Funktionsblockdarstellung eines Halbleiterschaltkreises 200, welcher die Stromversorgung eines Steuergerätes leistet und - über den Funktionsumfang der Einrichtung gemäß der DE 196 11 945.6 hinausgehend - noch weitere Funktionen umfaßt;
- **Fig. 7**: ein vereinfachtes Funktionsblockschaltbild eines Steuergerätes, das durch Implementierung des erfindungsgemäßen Halbleiterschaltkreises gemäß Fig. 6 in das Steuergerät gemäß Fig. 5 resultiert, demgemäß beispielhaft mit einem optionalen nichtflüchtigen Speicherbereich - beispielhaft als EEPROM - ausgeführt;
- **Fig. 8**: eine schematische Illustration einer universellen Systemarchitektur für busfähige Steuergeräte, welche der erfindungsgemäße Schaltkreis ermöglicht und die zu einer Erhöhung der Systemsicherheit unter Minimierung der Kosten führt;
- **Fig. 9**: ein schematisches Funktionsblockschaltbild eines Steuergeräts gemäß Fig. 5 mit stromsparender Weckfunktion;
- **Fig. 10**: ein schematisches Funktionsblockschaltbild eines Steuergeräts, welches eine noch größere Stromersparnis in Weckbereitschaft ermöglicht;
- **Fig. 11**: ein Diagramm zur Veranschaulichung des Stromverbrauchs eines Steuergerätes gemäß Fig. 9 in Weckbereitschaft;
- **Fig. 12**: ein Diagramm des Stromverbrauchs eines Steuergerätes mit einem Weck-Expander, der für eine autonome Weckerfassung ohne Unterstützung durch den Microcontroller ausgebildet ist;
- **Fig. 13**: ein Zeitdiagramm zur Veranschaulichung eines beispielhaften Weckvorganges mit erhöhtem Störabstand;
- **Fig. 14**: ein Funktionsblockdarstellung eines Spannungsreglers, der zwecks weiterer Stromersparnis und erhöhter Datensicherheit vorliegend zwei ausgangsseitig voneinander unabhängige Regel zweige umfaßt;
- **Fig. 15**: ein Diagramm zur Veranschaulichung des temperaturabhängigen Abschaltverhaltens der beiden über das Chipsubstrat thermisch miteinander verkoppelten Spannungsregler gemäß Fig. 14;
- **Fig. 16**: eine vereinfachte Funktionsblockdarstellung eines Schaltkreises 200, welcher die fortgebildete Weckfunktion gemäß Figen. 10, 12 und 13 implementiert und durch Splitting seines Versorgungsausgangs gemäß Figen. 14 und 15 eine erhöhte Stromeinsparung und Datensicherheit ermöglicht;
- **Fig. 17**: eine entsprechende Darstellung der Funktionsbelegung eines Halbleitersubstrats, welches zusammen mit wenigstens zwei Spannungsreglern für externe Verbraucher die Funktionsumfänge gemäß Fig. 16 integriert;
- **Fig. 18**: stromführende Bestandteile einer Leistungszelle von einheitlicher Bipolarstruktur als Bestandteil des Schaltkreises 200 in Fig. 16;
- **Fig. 19**: stromführende Bestandteile einer Leistungszelle als Bestandteil des Schaltkreises 200 in Fig. 16, welche bipolare und feldeffektive aktive Elemente umfaßt;
- **Fig. 20**: stromführende Bestandteile einer Leistungszelle, realisierbar im Rahmen einer Hochvolt-Smart-Power-Technologie;
- **Fig. 21**: das Wirkschaltbild einer stromsparenden, störarmen, und universellen Spannungsregelungsfunktion für einen besonders weiten Eingangsspannungsbereich;
- **Fig. 22**: ein Wirkschaltbildauszug für eine alternative von insgesamt vier möglichen Betriebsweisen der Spannungsregelungsfunktion gemäß Fig. 21;
- **Fig. 23**: ein vereinfachtes Funktionsblockschaltbild eines Steuergerätes, das bei Implementierung des Halbleiterschaltkreises gemäß Fig. 16 in das Steuergerät gemäß Fig. 9 resultiert;
- **Fig. 24**: eine schematische Illustration einer entsprechend fortgebildeten, universellen Systemarchitektur für busfähige Steuergeräte;
- **Fig. 25**: eine schematische Veranschaulichung einer
Unterbrechung des Sendepfades zwecks Freihaltung des Busses von Responsezugriffen anderer Busteilnehmer z.B. zwecks Behandlung eines Massefehlers eines Busteilnehmers;
- **Fig. 26**: einen Auszug aus einer Blockdarstellung einer
Halbleiterschaltung 100, 100' zur Veranschaulichung der softwaregestützten Aktivierung einer solchen Unterbrechung;
- **Fig. 27**: eine Funktionsblockdarstellung eines Spannungsreglers gemäß Fig. 16, der zur Unterstützung von Mitteln zur Ortung, Erfassung und Behandlung von Bezugspotentialfehlern und für Potentialtests bezüglich Sende- und Empfangspegelfenstern von Busteilnehmern einen weiteren Versorgungszweig zur chipinternen Bereitstellung einer Hilfsspannung oder eines Hilfstromes umfaßt;
- **Fig. 28**: eine vereinfachte Funktionsblockdarstellung eines weiter fortgebildeten Schaltkreises, welcher zusätzliche Mittel 199 zur netzweiten Ortung, Erfassung und Behandlung von Bezugspotentialfehlern und für Potentialtests bezüglich Sende- und Empfangspegelfenstern von Busteilnehmern umfaßt;
- **Fig. 29**: eine erste vereinfachte Wirkblockdarstellung von zustätzlichen Mitteln gemäß Fig. 28, welche die Sendeseite der Transceiver-Funktion betreffend;
- **Fig. 30**: eine zweite entsprechende Wirkblockdarstellung, die Sendeseite der Transceiver-Funktion betreffend;
- **Fig. 31**: eine dritte vereinfachte Wirkblockdarstellung, die Sendeseite der Transceiver-Funktion betreffend;
- **Fig. 32**: eine vierte vereinfacte Wirkblockdarstellung, die Sendeseite der Transceiver-Funktion betreffend;
- **Fig. 33**: eine schematische Illustration von im Rahmen der Erfindung einander entsprechenden oder ineinander überführbaren und insoweit äquivalenten Offset- bzw. Versorgungsquellen;
- **Fig. 34**: ein schematisches Zeitdiagramm der Quellenpotentiale, von denen Signalströme auf die Busadern dominant einspeisbar sind;
- **Fig. 35**: zwei einander überlagerte Zeitdiagramme beispielhafter Signalverläufe, wie sie mittels der Fortbildung gemäß Fig. 31 oder 32 an Aderkoppelpunkten sendeseitig erzeugbar sind;
- **Fig. 36**: ein vereinfachtes Wirkschema zur Veranschaulichung verschiedener Funktionalitäten beispielhafter Mittel ähnlich wie in Fig. 31;
- **Fig. 37**: ein Logikschema einer möglichen Ansteuerfunktionalität L₃ in Fig. 36;
- **Fig. 38**: ein vereinfachtes Wirkschema zur Veranschaulichung weiterer Funktionalitäten über jene des Beispiels Fig. 36 hinaus;
- **Fig. 39**: ein Verteilungsschema von zusätzlichen Mitteln im Sinne von Fig. 28, wobei diese hier beispielhaft auf die Sendeseite der Transceiver-Funktion beschränkt sind;
- **Fig. 40**: ein Funktionsschaltbild einer Fortbildung, welche in einfacher Weise die unmittelbare Regelung an der Busader BUS_L eines darauf dominant einzuprägenden Tastpotentials erlaubt;
- **Fig. 41**: ein entsprechendes Funktionsschaltbild für die Busader BUS_H;
- **Fig. 42**: ein Funktionsschaltbild eines bei den Fortbildungen gemäß Figen. 40 & 41 einsetzbaren
Samplers, welcher keiner Fehlerkompensation bedarf und sehr leicht integrierbar ist, mit angeschlossenem Hold-Regler;
- **Fig. 43**: ein Funktionsschaltbild einer alternativen
Fortbildung, welche die unmittelbare Regelung an der Busader BUS_L eines darauf dominant einzuprägenden Tastpotentials erlaubt und sich dabei des externen Microcontrollers zur Fehlerkompensation bedient;
- **Fig. 44**: eine Abwandlung der Fortbildung gemäß Fig. 43, die vermittels einer Sample-&-Hold-Einrichtung einen Microcontroller zwecks Kompensation verzichtbar macht, gültig für die Bus-Ader BUS_L;
- **Fig. 45**: ein Funktionsschaltbild von alternativen Mitteln zwecks Einspeisung auf die Busader BUS_L eines gegenüber dem normalen dominanten Potential mit varaiablem Offset behafteten Quellpotentials;
- **Fig. 46**: eine Funktionsblockdarstellung eines Empfangsblockes innerhalb eines Bus-Transceivers, der mit zusätzlichen Mitteln zur Erfassung und Analyse von Busfehlern ausgestattet ist;
- **Fig. 47**: eine Funktionsblockdarstellung eines fortgebildeten Empfangsblockes innerhalb eines Bus-Transceivers, der mit weiter fortgebildeten Mitteln zur Analyse von Fehlern und zum Austesten anderer Busteilnehmer in Kooperation mit Sendemitteln des Schaltkreises ausgestattet ist;
- **Fig. 48**: ein graphisches Schema eines Teils der Funktionalität eines Funktionsblockes im Beispiel gemäß Fig. 47;
- **Fig. 49**: eine erste, für eine besondere Anwendung reduzierte Wirkblockdarstellung von zustätzlichen Mitteln gemäß Fig. 28 und Fig. 47, die Empfangsseite eines Bus-Transceivers betreffend;
- **Fig. 50**: eine zweite, für besondere Anwendungszwecke reduzierte Wirkblockdarstellung von zustätzlichen Mitteln gemäß Fig. 28 und Fig. 47, die Empfangsseite eines Bus-Transceivers betreffend;
- **Fig. 51**: eine dritte, für besondere Anwendungszwecke reduzierte Wirkblockdarstellung von zustätzlichen Mitteln gemäß Fig. 28 und Fig. 47, die Empfangsseite eines Bus-Transceivers betreffend;
- **Fig. 52**: eine vierte, für besondere Anwendungszwecke reduzierte Wirkblockdarstellung von zustätzlichen Mitteln gemäß Fig. 28 und Fig. 47, die Empfangsseite und die Sendeseite eines Bus-Transceivers betreffend;
- **Fig. 53**: ein schematisches Wirkschaltbild eines Fortbildungsdetails zur Erfassung und übertragung einer Bezugspotentialdifferenz an einen externen Microcontroller;
- **Fig. 54**: eine schematische Veranschaulichung eines zentralen Elements innerhalb der Blockfunktion 199 in Fig. 28 bzw. 199' in Fig. 47, welche sämtliche Steuersignale und Wertvorgaben zur potentialbezogenen Beeinflussung der Sende- und Empfangsmittel des Transceivers erzeugt;
- **Fig. 55**: eine Darstellung der Funktionsbelegung eines Halbleitersubstrats, welches sämtliche beschriebenen Funktionalitäten integriert.

Ausgangspunkt der Erfindung ist die Erkenntnis, daß es kaum mehr ein busfähiges elektronisches Steuergerät gibt, in dem nicht ein Spannungsregler zur Versorgung wenigstens der die Fähigkeit zur Buskommunikation bewirkenden Schaltkreiskomponenten benötigt wird bzw. vorhanden ist.

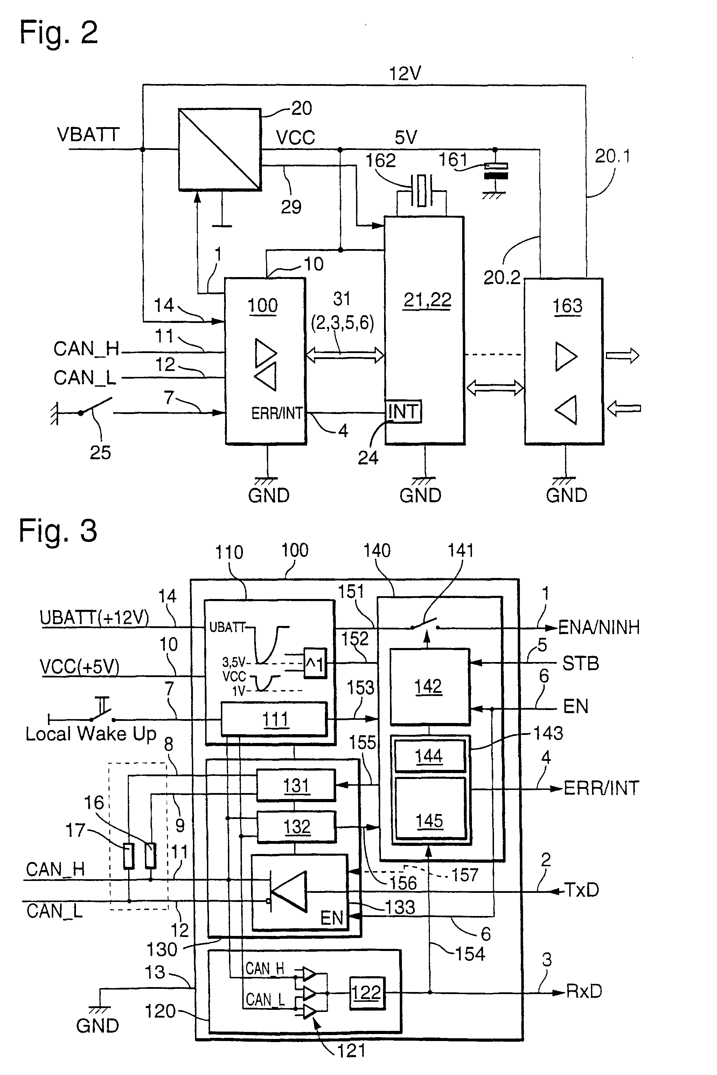

Es ist hier beispielhaft ein elektronisches Steuergerät mit Microcontroller 21 gemäß **Fig. 2** zugrundegelegt, welches die in #) beschriebene Einrichtung verwendet. Darin ist von einem Microcontroller 21 mit bereits integriertem Bus-Kommunikationsmodul 22 ausgegangen, welches das Steuergerät buskommunikationsfähig macht.

Die vorliegende **Fig. 2** entspricht der Zeichnungsfigur 13 und die **Fig. 3** entspricht der Zeichnungsfigur 2 in #). Der Funktionsumfang jener Einrichtung - umfassend eine Halbleiterschaltung 100 und den damit kooperierenden Spannungsregler 20 - sowie die Funktion eines diese Einrichtung benutzenden Steuergerätes als Ganzes sind dort im Detail offenbart, weshalb daß hier nur eine Kurzbeschreibung der **Figen. 2 & 3** erfolgt.

Der Bus wird hier von den beiden Adern CAN_H und CAN_L gebildet, der an Anschlüssen 11 und 12 der Halbleiterschaltung 100 liegt. Bei 20 handelt es sich um einen besonderen Spannungsregler, der über den Pfad 1 ein Einschalt- bzw. Abschaltsignal (ENA/NINH bzw. NENA/ INH) empfangen kann und über den Pfad 29 ein RESET-Signal PWROR an den Microcontroller 21 mit Busprotokollfunktion 22 abzugeben vermag. Der Spannungsregler 20 liegt eingangsseitig an einer Schiene 20.1 mit der höheren Versorgungsspannung VBATT (12 Volt) und gibt in eingeschaltetem Zustand ausgangsseitig an eine Versorgungsschiene 20.2 im Steuergerät die niedrigere Spannung VCC (5 Volt) ab, die mittels einer großen Kapazität 161 gepuffert wird und außer den Microcontroller 21 auch noch ein mit letzterem kommunizierendes Input/Output (I/O)-Interface 163 sowie die Halbleiterschaltung 100 mit Betriebsenergie versorgt. Letztere bezieht - wie auch z.B. Relaistreiber oder pulsweitenmodulierte Endstufen 163.1 und/oder Signalaquisitionsund digitalisierende Eingangsmittel 163.2 im I/O-Interface 163 - vom Speiseeingang am Regler 20 vorbei auch noch die höhere Versorgungsspannung VBATT.

Die Halbleiterschaltung 100 steht über Pfade 2 bis 6 mit dem Microcontroller 21 in Verbindung, ist mehrerer Betriebsarten - jedenfalls wenigstens der Betriebsart NORMAL und SLEEP - fähig (Selektion durch EN und STB, Einstellung durch 142) und kann alle analogen und digitalen Schaltkreismittel für die Sende-/Empfangs-Kommunikation (133 + 120 = Transceiverkern), für die Busfehler-Erkennung im Block 132, für die Umterminierung des Busses durch Umschalten von Abschlußelementen und /oder deren Bezugspotential im Block 131 in der Betriebsart SLEEP, für die automatische Busfehler-Behandlung im Block 131 sowohl hinsichtlich einer fehlerresponsiven (durch 132) Umterminierung des Busses als auch hinsichtlich einer fehlerresponsiven Einstellung und/oder Umkonfiguration oder Adaption der Sendeund Empfangsmittel in den Blöcken 133 mit 132 und 120, für eine Notkommunikation (z.B. Eindrahtbetrieb über Bezugsmasse GND) bei Vorliegen eines Busfehlers vermöge des Blocks 132, des Steuerungsblocks 140, der optionalen Verbindung 157, und der Blöcke 133 und 120, für die Weck-Erkennung 111 lokal über den Pfad 7 von einem Schalter 25 oder vom Bus CAN_H/CAN_L, für eine Versorgungsfehlererkennung bezüglich VBATT und/oder VCC im Block 110, sowie für die Generation 141 und Bereitstellung durch den Steuerungsblock 140 des Einschalt- bzw. Abschaltsignals ENA/NINH an den Spannungsregler 20 sowie für das Setzen in den Blöcken 143, 144, 145 von WAKEUP-, POWERFAIL- und BUS ERROR-Flags (zur Darstellung von INTERRUPT-Signalen für den Microcontroller) 21 beinhalten.

Die Halbleiterschaltung 100 steuert den Spannungsregler 20 an um ihn in nach Erreichen der Betriebsart "SLEEP" der Halbleiterschaltung 100 abzuschalten, und im Falle eines Weckens der Halbleiterschaltung 100 einzuschalten. Das in **Fig. 2** dargestellte Steuergerät nimmt bei abgeschaltetem Spannungsregler vom Potential VBATT nur noch den sehr geringen Ruhe-Eingangsstrom des Reglers und den Ruhestrom der Halbleiterschaltung 100 im SLEEP-Mode auf. Wegen Details wird auch diesbezüglich auf #) verwiesen.

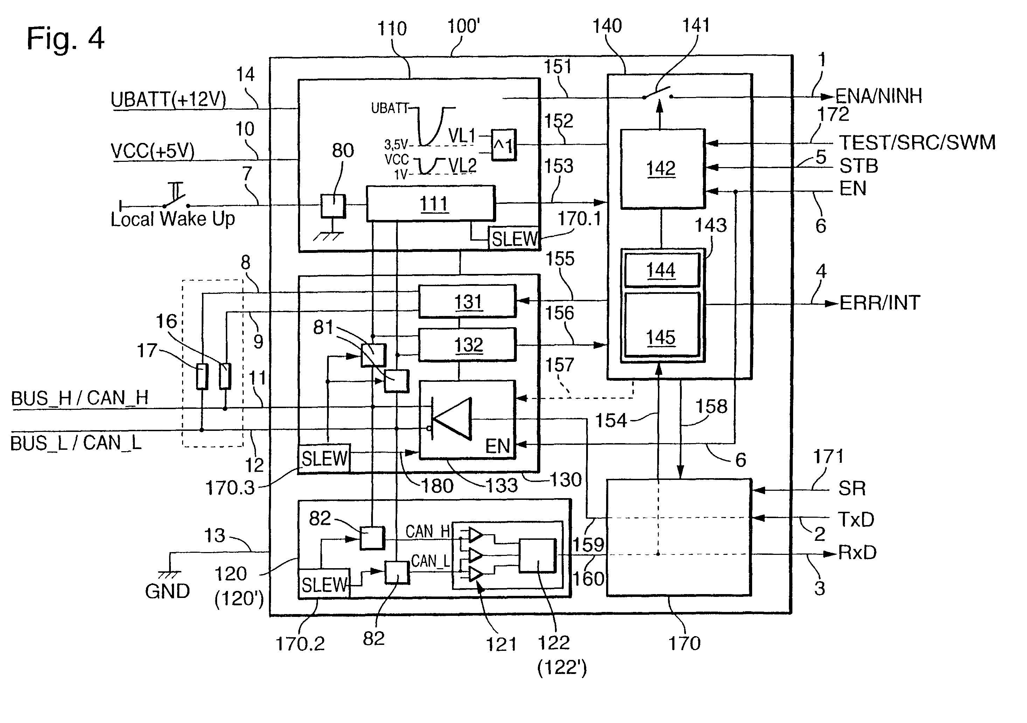

**Fig. 4** veranschaulicht eine Fortbildung der Halbleiterschaltung 100 in einen Halbleiterschaltkreis 100', letzt welcher für eine Höherintegration zum nachfolgend beschriebenen "Super-Chip" vorteilhaft zugrunde gelegt werden kann.

Seine Funktionsblöcke 110, 120 und 130 weisen noch zusätzliche Mittel 170.1 bzw. 170.2 bzw. 170.3 zur Beeinflussung bzw. Steuerung bzw. Einstellung wenigstens der Empfangsmittel 120 und der Sendemittel 130, u.U. auch der Weckerkennungsmittel 111 im Block 110 auf. Ferner können die Anschlußpfade 159 und 160 für die Signale TxD und RxD und - unter gewissen Bedingungen - auch der Pfad 154 durch einen Block 170 mit der Funktion eines Slewrate Controllers geführt sein. Des weiteren ist bezüglich des Lokal-Anschlusses 7 den Weckerkennungsmitteln 111 ein Schutzfilter 80 vorgeschaltet.

Entsprechende Filterelemente 81 und 82 sind den beiden CAN_H/CAN_L-Eingängen des Weck-Erkennungs-Blocks 111 und dem Busfehler-Erkennungsblock 132 bzw. den beiden Eingängen des Empfänger-Frontends 121 im Empfangsblock 120 vorgelagert, letztwelchem Fehlerbehandlungs- und Logikmittel 122 nachgeschaltet sind. Die vorgenannten Filterelemente unterscheiden sich von dem Schutzfilter 80 dadurch, daß sie von blockzugeordneten Slewrate-Einstellmitteln 170.2 bzw. 170.3 steuerbar sind. Die Slewrate-Einstellmittel 170.3 können über einen optionalen Pfad 180 auch unmittelbar auf die Endstufe 133 wirken. Auf diesem Wege ist dann ein aktiver Einfluß auf die Slewrate des Senders in 130 möglich. Ein Slewrate Controller 170 kann über den optionalen Pfad 158 vom Steuerungsblock 140 angesteuert werden. Außerdem kann er optional über wenigstens einen weiteren Anschluß 171 angesteuert werden. Des weiteren kann der Funktionsblock 142, welcher die Betriebsarten des Halbleiterschaltkreises 100' gemäß der Vorgabe vom Microcontroller einstellt, um einen weiteren Eingang 172 für ein Testsignal (TEST) bzw. Slewrate-Einstell-Signal (SRC) erweitert sein.

Die Detailfunktion dieser Erweiterung ist folgende.

Der Slewrate-Steuerungsblock 170 wirkt beispielsweise in Abhängigkeit von einem an seinem Eingang 171 anliegenden SR-Signal oder - wie weiter unten erläutert - in Abhängigkeit von bzw. in Abhängigkeitsverbund mit dem Signal TEST/SRC - optional auch im Verbund mit Signalen EN und STB - über nicht figürlich dargestellte Verbindungen auf die blockzugeordneten Slewrate-Einstellmittel 170.1, 170.2 und 170.3 und letztere hier beispielhaft auf die Sendeendstufe 133. Dadurch wird einerseits die Slewrate der Endstufe entsprechend verändert bzw. eingestellt bzw. umgeschaltet, und andererseits wird das Slewfollow-Verhalten der Blöcke 110, 120 und 130 verändert bzw. eingestellt bzw. umgeschaltet. Im einfachsten Falle werden entsprechende Frequenzbandbeschneidungen der Eingangssignale vom Bus CAN_H/CAN_L an den Bus-Eingängen der Blöcke 110, 120 und 130 wirksam geschaltet.

Diese steuerbare Slewrate-Beeinflussung macht den Transceiver-Kern des Schaltkreises 100' tauglich für verschiedene Übertragsungsgeschwindigkeiten und Bus-Bitzeiten. Dadurch kann ein solcher Schaltkreis 100' - und folglich auch ein "Super-Chip", der ihn enthält - in verschiedenen Systemen mit weit voneinander abweichenden Bus-Grenzfrequenzen eingesetzt werden. Beispielsweise kann ein solcher Schaltkreis sowohl FAST-CANs z.B. in Verbindung mit dem Motormanagement von Brennkraftmaschinen in Verkehrsmitteln genau so bedienen wie SLOW-CANs beispielsweise in Innenräumen solcher Verkehrsmittel. Diese integrierte Universalität erschließt den Kostenvorteil über den Stückzahlast.

Des weiteren ist durch die Steuerung der Slewrate die hochfrequente Störsignalunterdrückung unmittelbar beeinflußbar, und zwar sowohl sende- als auch empfangsmäßig. Je kleiner die Bit-Slewrate auf dem Bus CAN_H/ CAN_L, desto stärker ist die durch Sendebetrieb verursachte elektromagnetische Störausstrahlung des Busnetzes und seiner Abzweigungen. Je kürzer die erkennbzw. diskriminierbare Slew-Rate des Empfänger-Frontends 121 oder des Weck-Erkennungs-Blocks 111, desto größer ist die Gefahr eines unerwünschten Lese- oder Weckfehlers verursacht durch elektromagnetisch einwirkende hochfrequente Störspektren.

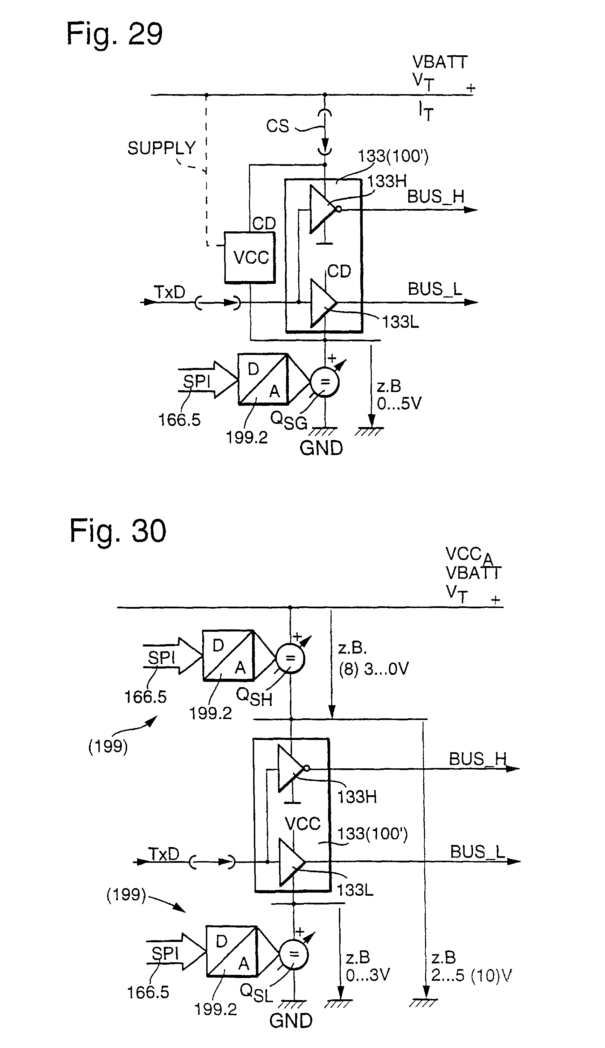

Daraus folgt für die Charakterisierung der Filter 81 und 82, daß es sich hierbei nicht nur um steuerbare Tiefpässe, sondern gleichwohl auch um echte, vorzugsweise DC-gekoppelte, analog oder digital wirkende Slewrate-Filter handeln kann, die die Signal-Slewrate oder Bit-Zeiten auf dem Bus bis an die jeweilige Grenzslewrate bzw. an Grenzbitzeiten heranreichend auszunutzen erlauben. Gleichwohl kann es sich dabei auch um Bitzeit-Filter handeln, die - zur Optimierung der Störungsunterdrückung - auf die Kommunikations-Baudrate des Busses einstellbar sind. Wie weiter unten in Verbindung mit **Fig. 29** verständlich können solche Bitzeitfilter von einem Steuerungsinterface 124 der Transceiver-Funktion digital einstellbar sein.

Auf diese Weise ist auch noch ein hoher Störabstand im Busumfeld beispielsweise in Kraftfahrzeugen oder elektrischen Schienenfahrzeugen erzielbar, in welchen in zunehmendem Maße die Speisung von Motoren und Verbrauchern mittels starker, getakteter Ströme geschieht. Durch Resonanzüberhöhungen in der induktivitäts- und kapazitätsbehafteten Verkabelung der Versorgungsleitungen solcher Verbraucher können sich hochfrequente elektromagnetische Störfelder je nach räumlicher Konfiguration des jeweiligen Feldes und Verlauf einer Busleitung in Bezug auf letztere mehr oder weniger stark auswirken. Die vorgenannten Merkmale bieten eine Möglichkeit um die Auswirkung derlei Störungen auf die Kommunikation zu verringern (aktiver Störungsschutz).

Bei einer bevorzugten Programmierung bzw. Einstellung des Schaltkreises kann die Slewrate für Wecksignale und die Slewrate für Kommunikationssignale ungleich bemessen sein.

Des weiteren kann z.B. in der Betriebsart SLEEP die Slewrate auch auf einen Wert eingestellt werden, der niedriger als in allen anderen Betriebsarten ist. In diesem Zusammenhang soll die Verbindung 158 bedeuten, daß optional auch der Steuerungsblock 140 Einfluß auf die Slewrate-Steuerung nehmen kann. Durch diese Maßnahme wird eine entsprechende Unempfindlichkeit eines entsprechenden Busnetzes, dessen Teilnehmer jeweils mit einem solchen "SLEEP-SLEW"-Halbleiterschaltkreis 100' ausgerüstet sind, gegenüber unerwünschten Weck-Störungen in der Betriebsart SLEEP erreicht. Da der Schaltkreis 100' so konzipiert ist, daß er in der Betriebsart SLEEP einen geringstmöglichen Strom I_{IC2} verbraucht, können die Filterelemente 81 und 82 so ausgebildet sein, daß sie bei Abschaltung der internen Stromversorgung der Sende- und/oder Empfangsmittel 130 bzw. 120 automatisch die kleinste Slewrate bewirken, die in diesem Sinne dann in der Betriebsart SLEEP immer wirksam ist (Hochsteuern der Slewrate bzw. automatischer Rückfall auf die SLEEP-Slewrate mit besonders hohem Störabstand).

Die steuerbare Slewrate-Beinflussung macht den Transceiver-Kern des Schaltkreises 100' darüber hinaus tauglich als Test-Sender und Test-Empfänger für softwarebasierte Tests eines Bus-Netzwerks, einschließ-lich solcher mit Test-Baudraten und Test-Bitzeiten.
Auch in diesem Zusammenhang soll die Verbindung 158 bedeuten, daß optional auch der Steuerungsblock 140 Einfluß auf die Slewrate-Beeinflussung nehmen kann.

Auf das Zusammenwirken für Bus-Diagnosezwecke dieser Slewrate-Beeinflussung mit weiteren Funktionen innerhalb einer weiter unten beschriebenen SPI-Struktur eines Halbleiterschaltkreises 200 gemäß **Figen. 6, 16 & 28** wird weiter unten in Verbindung mit **Figen. 28 & 29** noch eingegangen.

Der Schaltkreis 100' kann bezüglich der Sende- und Empfangsmittel 130, 133 bzw. 120 seines Transceiverkernes bevorzugt so ausgebildet werden, daß diese Mittel tolerant gegenüber allen möglichen Fehlerzuständen im und am Busleitungsnetz sind, sofern alle Busteilnehmer bezüglich des Busleitungsnetzes sich kompatibel verhalten, was beispielsweise erfüllt sein kann, wenn alle denselben Schaltkreis 100' verwenden. Dies gilt insbesondere für Einfachfehler. In #) sind bereits mehr Betriebsarten einer entsprechenden, einfacheren Halbleiterschaltung 100 als nur die Betriebsarten SLEEP, STANDBY, RECEIVE ONLY und NORMAL angedacht. Realisiert ist der Erweiterungsfall vorliegend. Über den Eingang 172 kann dem Block 142 ein weiteres Signal - hier mit SRC/SWM bezeichnet - zugeführt werden, das die Bedeutung der Signale EN und STB bedarfsweise umdefiniert.

Dabei steht SRC für Slewrate Control, und SWM für Single Wire Mode.

Durch das dritte SRC-Signal können mittels der Bits EN und STB beispielsweise Test-Flags in 142 gesetzt bzw. gelöscht werden, die innerhalb 100' Test-Slewrates addressieren können. Im Zusammenhang mit Fortbildungen für Testfähigkeit kann der Slewrate-Controller 170 auch zwischenspeichernde und/oder digitale Verzögerungsmittel für wenigstens einen von Sende-/und Empfangspfad an 2 bzw. 3 beinhalten. Im Rahmen der Erfindung können solche zusätzlichen digitalen Mittel auch mit einem repetitiven Signal SR am Eingang 171 zusammenwirken, um so unter einer auf Gleichverteilung der Busintelligenz abgestellten Busmanagements das automatische Austesten des Busses unter Beteiligung aller Teilnehmer auf Vorliegen bzw. Einhaltung definierter Übertragungs- und Störabstandsgüten zu ermöglichen, wie auch weiter unten in Zusammenhang mit **Figen. 28 & 29** ausgeführt.

Ein wesentlicher Aspekt der Erfindung ist, auch solche busnahen Testmittel in einer Halbleitertechnologie auszuführen, die eine hohe Widerstandsfähigkeit gegen Beschädigung durch grobe Störeinflüsse bietet, um genau dann, wenn ein Bus-Fehler bzw. Bus-Gütefehler infolge irgendwelcher Störeinflüsse tatsächlich aufgetreten ist, den fehlerhaften Bus noch vollautomatisch austestbar zu erhalten.

Dieses erfinderische Detail stellt einen wichtigen Schritt dar auf dem Wege zu einer vollautomatischen Selbst- und Ferndiagnose etwa über Telekommunikationsstrecken von global beweglichen CANs, beispielsweise in Verkehrsmitteln.

Durch das dritte SWM-Signal kann ggfs. auch noch eine fünfte implementierte Betriebsart "SINGLE WIRE MODE" aufgerufen werden, in der die Sende- und Empfangsmittel 130 und 120 vorübergehend auf Eindrahtbetrieb über CAN_H oder CAN_L gegen Bezugsmasse GND umgeschaltet werden.

Dabei wird dann jeweils nur einer der beiden Ader-treiber in der Endstufe 133 aktiviert. In einer solchen Betriebsart können mittels des Schaltkreises 100' bei bedarfsweise reduzierter Baudrate und/oder Bandbreite bzw. Slewrate (s.o.) über kurze Entfernungen beispielsweise zeitunkritische Steuersignale übertragen werden, d.h. eine Art Sub-Bus für Steuerzwecke implementiert werden, während er unabhängig davon nach entsprechender Umschaltung von SWM und/oder z.B. bei höherer Baudrate eine andere zweidrähtige Kommunikation abwickeln kann.

Die Massenanwendbarkeit dieser Funktionalität wird maximiert, wenn die Transceiver-Funktion 100, 100' sowohl bezüglich ihrer Sende- und Empfangsmittel 130, 133; 120 als auch bezüglich ihrer Steuermittel 142; 157; 172/ SWM so ausgeführt wird, daß sie wahlweise zweidrähtig differentiell oder eindrähtig auf wenigstens einer Bus-ader CAN_H, CAN_L) gegen ein Bezugspotential, beispielsweise gegen Bezugsmasse GND, senden und empfangen kann (d.h. mit nur einem Ader-Treiber von 133).

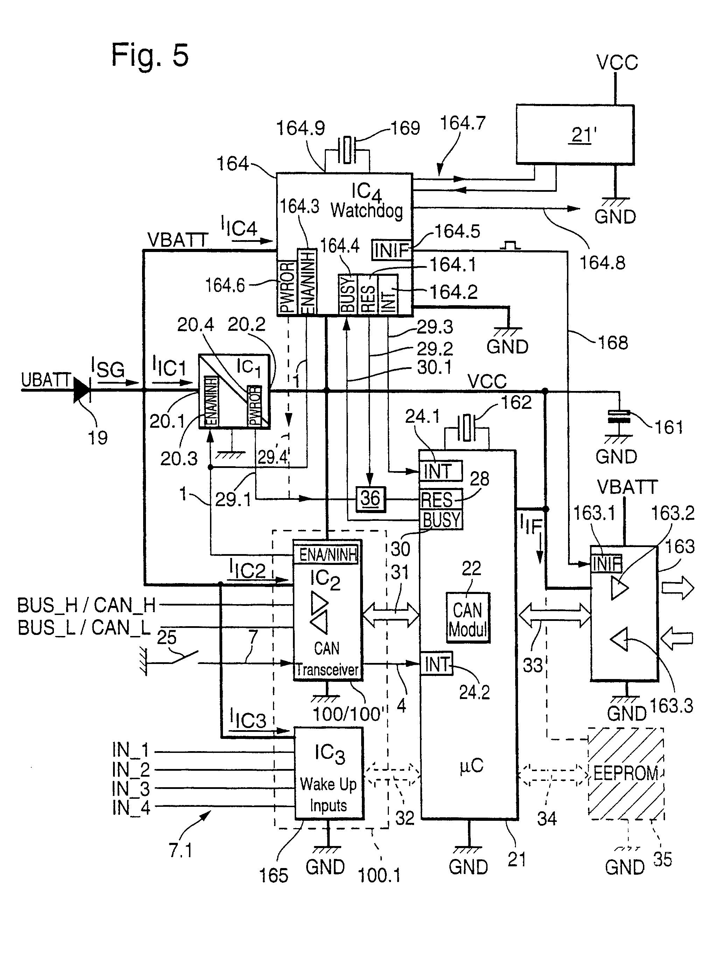

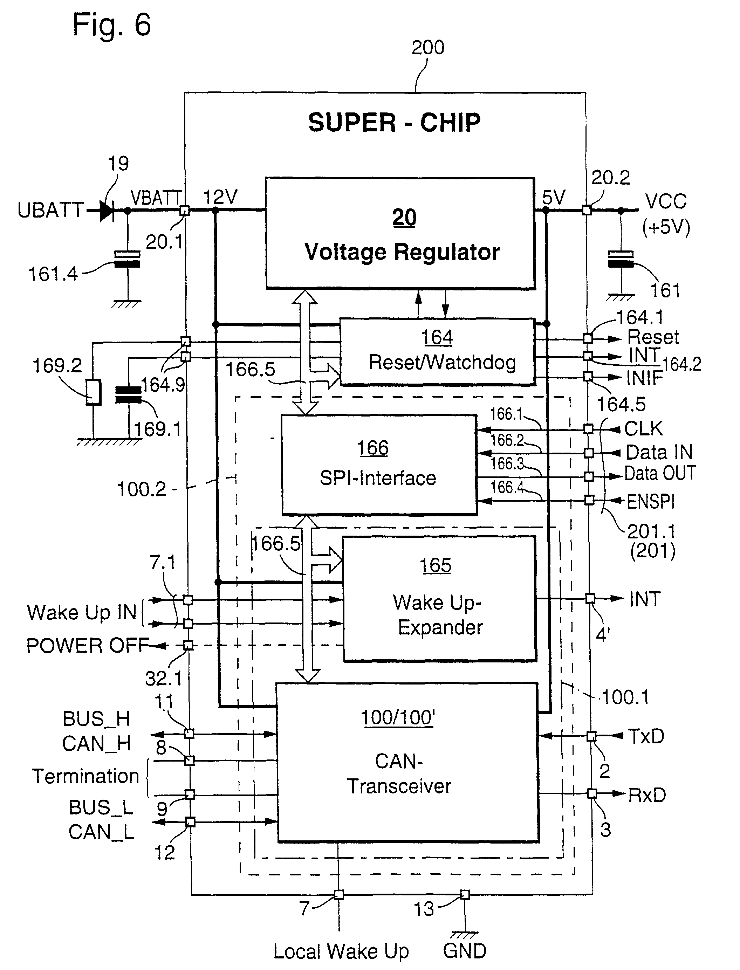

**Fig. 5** zeigt eine abgewandelte Steuergerätekonfiguration, deren diskret realisierte Funktionen - bis auf die des Microcontrollers 21 und des Input/Output-Interface 163 - durch das einfachere Ausführungsbeispiel des erfindungsgemäßen Halbleiterschaltkreises gemäß **Fig. 6** komplett ersetzt werden, weshalb auf diese Funktionen nachfolgend ausführlich eingegangen wird. Die vorliegende Steuergerätekonfiguration unterscheidet sich von der in **Fig. 2** u.a. dadurch, daß noch ein sowohl vom Eingangspotential VBATT des Reglers 20 gegen Masse GND dauerstromversorgter und von dessen Ausgangspotential VCC versorgter Watchdog-Schaltkreis 164 (IC4) mit wenigstens einem Zeitbasismittel 169 (z.B. Widerstand, Kapazität, Keramik- oder Quarz-Schwinger, Laufzeitelement, Resonanzkreis o.ä) sowie ein vom Potential VBATT dauerstromversorgter zusätzlicher Wake-Up-Eingangsexpander 165 (IC3) für hier beispielsweise vier zusätzlich weckfähige Eingänge 7.1 (IN_1 bis IN_4) vorgesehen sind.

Dieser Expander kann für die wahlweise Verarbeitung von Wecksignalen aus unterschiedlichen Quellen ausgelegt sein, d.h. beispielsweise von Schaltsignalen gegen Masse GND oder UBATT gemixt wie weiter unten detailliert. Ausgangsseitig wirkt dieser Expander nicht auf den Schaltkreis 100/100', sondern an diesem vorbei direkt auf den Microcontroller 21. Dies bedeutet, daß dieser Expander für Wecksignale in Frage kommt, die auszuwerten sind, wenn der Regler 20 von dem Schaltkreis 100/100' mit einem Einschaltsignal beaufschlagt ist, also beispielsweise in dessen Betriebsart STANDBY.

In diesem Zustand kann der Microcontroller in einem Lowpower-Mode verharren, beispielsweise um zyklisch Weck-Ereignisse an den Eingängen IN_1 bis IN_4 abzufragen. In diesem Zusammenhang kann der Expander 165 auch Speichermittel (z.B. Latches) zur Festhaltung nur kurzzeitiger Wecksignale umfassen, bis diese der aus dem Lowpower-Mode aktivierte Microcontroller 21 eingelesen hat.

Im Hinblick auf die Weckfunktion können der Schaltkreis 100/100' und der Wake-Up-Eingangsexpander 165 insoweit als ein fiktiver Schaltkreis 100.1 mit abermals erweiterter Funktion verstanden werden.

Der Halbleiterschaltkreis 100/100' weist den Steuerausgang 1 ENA/NINH und der Spannungsregler 20 den Ansteuereingang 20.3. auf, die beide über den Pfad 1 miteinander verbunden sind.

Der Watchdog-Schaltkreis 164 hat außer den genannten Versorgungseingängen noch zwei weitere, nämlich ebenfalls einen ENA/NINH-Eingang 164.3 und einen BUSY-Eingang 164.4, sowie hier beispielhaft drei Ausgänge, nämlich einen RESET-Ausgang 164.1 (RES), einen INTERRUPT-Ausgang 164.2 (INT) und einen INHIBIT INTERFACE-Ausgang 164.5 (INIF). Ein vierter Ausgang 164.6 für ein POWER ON RESET-Signal (PWROR) kann optional als Alternative zum entsprechenden Ausgang 20.4 des Spannungsreglers 20 vorgesehen sein.

Der ENA/NINH-Eingang 164.3 ist mit dem ENA/NINH-Ausgang des Schaltkreises 100/100' verbunden; das ENA/NINH-Signal des Schaltkreises 100/100' wirkt hier also zeitgleich auf Regler 20 und Watchdog 164. Der BUSY-Eingang 164.4 ist über den Pfad 30.1 mit einem korrespondierenden BUSY-Ausgang 30 des Microcontrollers 21, der RESET-Ausgang 164.1 über den Pfad 29.2 mit einem ersten Eingang eines logischen Verknüpfungsgliedes 36, der INTERRUPT-Ausgang 164.2 über den Pfad 29.3 mit dem INTERRUPT-Eingang 24.1 des Microcontrollers, und der INIF-Ausgang 164.5 über den Pfad 168 mit einem korrespondierenden INIF Eingang 163.1 des Input/Output-Interface 163 verbunden. Der Spannungsregler 20 hat einen Ausgang 20.3 der über den Pfad 29.1 den zweiten Eingang des Verknüpfungsgliedes 36 beaufschlagt, dessen Ausgang an den RESET-Eingang 24.1 des Microcontrollers 31 geführt ist. Der Ausgang 4 des Schaltkreises 100/100' ist hier mit einem INTER-RUPT-Eingang 24.2 verbunden.

Vorliegend ist noch ein über einen multiplen Pfad 34 an den Microcontroller 21 optional angeschlossenes EEPROM 35 vorgesehen, in welchem z.B. bei Abschaltung der Stromversorgung Daten nichtflüchtig aber überschreibbar ablegbar sind. Der Microcontroller 21 und das EEPROM 35 werden mit VCC gespeist.

Der multiple Kommunikations- und Steuerungspfad 31 repräsentiert wenigstens die Anschlußverbindungen 2, 3, 5, 6, ggfs. auch 171 und/oder 172 des Halbleiterschaltkreises 100/100' mit dem Microcontroller 21. Der Wake-Up-Steuerpfad 32 kann ebenfalls ein multipler sein, insbesondere wenn der Wake-Up-Expander 165 Speichermittel (z.B. ein Flag-Register) umfaßt, die der Microcontroller nach jedem Einlesen zurücksetzt. Der Kommunikationspfad 33 zwischen Microcontroller 21 und Input/ Output-Interface 163 kann je nach Anzahl angeschlossener Sensoren und Aktuatoren ein multipler bis hochmultipler sein. In der Praxis handelt es sich dabei meistens um einen multigeplexten, da auch sehr leistungsfähige Microcontroller nur eine begrenzte Zahl von I/O-Ports aufweisen, die für viele Anwendungen nicht ausreichen.

Das Zusammenspiel zwischen Schaltkreis 100/100', Regler 20 und Microcontroller 21 ist im Detail in #) beschrieben.

Der Microcontroller 21 kann demnach über den Pfad 29.1 und das Verknüpfungsglied 36 vom PWROR-Ausgang 20.4 des Reglers 20 - bzw. bei entsprechender Auslegung des Watchdog Schaltkreises 164 alternativ dazu über den Pfad 29.4 von dessen optionalem PWROR-Ausgang 164.6 - zurückgesetzt werden, sobald das Potential VCC aufgebaut und danach noch eine gewisse kurze Zeit vergangen ist, die der Microcontroller für eine ordnungsgemäße Bestromung und Inbetriebsetzung seiner Kreise benötigt. Alternativ kann er auch über den Pfad 29.2 vom RESET-Ausgang 164.1 des Watchdog-Schaltkreises 164 zurückgesetzt werden.

Durch die ENA/NINH-Kopplung von Regler 20, Watchdog 164 und Schaltkreis 100/100' wird der mit I_{IC4} ruhebestromte Watchdog-Schaltkreis 164 schneller initialisiert, d.h. schon mit der aktiven ENA/NINH-Flanke, durch die der Regler 20 erst eingeschaltet wird, so daß er mit der hernach gegen die Stützkapazität 161 erst langsam ansteigenden Flanke von VCC diese Spannung sofort (z.B. auch auf zeitlich richtigen Anstieg) überwachen kann.

Die Initialsierung des Watchdog-Schaltkreises bewirkt, daß mittels des Zeitbasismittels 169 - in praxi z.B. ein Quarz oder keramischer Resonator - eine oder mehrere interne Zeitbasen für das Timing der Watchdog-Funktionen angeworfen werden, welche den Watchdog-Schaltkreis einerseits zur Generation und Abgabe von zeitlich genau definierten Signalen befähigen und ihm des weiteren ermöglichen, periodische Signale auf Präsenz und richtiges Timing (Wiederholfrequenz, Tastdauer- oder -verhältnis, Burst-Häufigkeit etc.) zu prüfen.

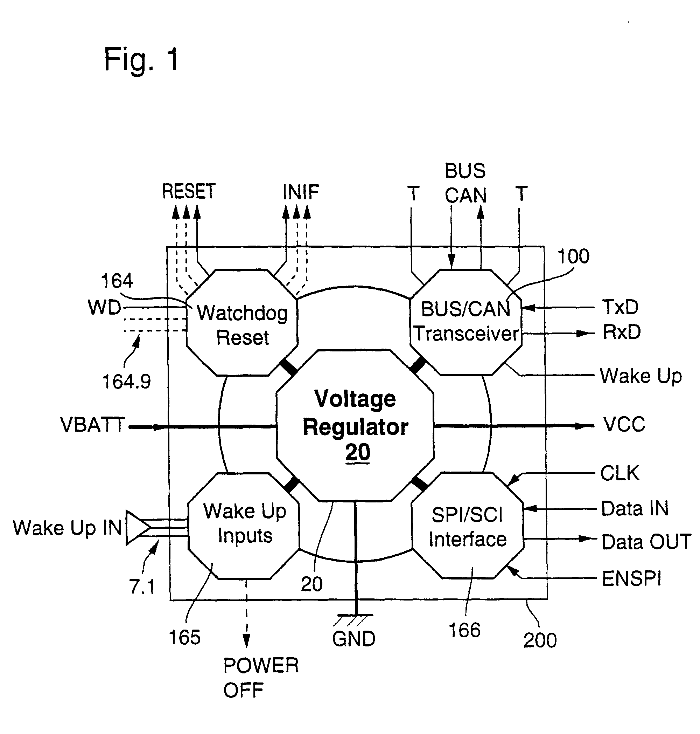

So beschaffen kann dieser Schaltkreis beispielhaft wenigstens die folgenden Funktionen erfüllen:
1. Überwachung wenigstens eines der Potentiale VBATT und VCC auf Nichtunterschreitung eines vorgegebenen Wertes bzw. auf Nichtverlassen eines vorgegebenen Wertebereichs absolut oder zu einer bestimmten Zeit, d.h. auch Funktionen, welche aus dem Block 110 des Schaltkreises 100/100' auslagerbar sind.
2. Überwachung sowohl des Microcontrollers 21 als auch seines Softwareablaufes auf eine annehmbar ordnungsgemäße Funktion.
   Diese Überwachung kann auf folgende Weise geschehen: Bei ordnungsgemäßer Funktion gibt der Microcontroller 21 an seinem BUSY-Ausgang 30 ein charakteristisches BUSY-Signal, beispielsweise einen Puls von z.B. 1 kHz Wiederholfrequenz aus. Die Präsenz dieses Signals unterdrückt im Watchdog 164 eine RESET-Ausgabe an 164.1. Bleiben die entsprechenden BUSY-Impulse jedoch für z.B. 3 ms aus oder wiederholen sie sich mit einer anderen Frequenz oder in anderen Burst-Mustern (beispielsweise bei Überwachung mehrerer Microcontroller durch die Watchdogfunktion 164 in dem in **Fig. 1** verallgemeinerten Sinne), wird ein RESET-Impuls aus- und über das Glied 36 an den Microcontroller abgegeben, so daß letzterer zurückgesetzt wird. Der Microcontroller 21 wird dann aus der Sicht des Watchdogs genau so reinitialisiert wie durch das PWROR-Signal vom Spannungsregler nach dessen Einschaltung.
3. Zyklisches Wecken eines Steuergerätes aus einem stromsparenden Lowpower- oder Shutdown-Mode und jeweilige Rückversetzung in diesen Mode.
   Ein solches zyklisches Wecken kann folgendermaßen durchgeführt werden: Die Applikationssoftware des Microcontrollers kann so ausgelegt sein, daß sie letzteren in einem Lowpower- oder Shutdown-Mode hält, der z.B. die Ausgabe von STB = "H" zur Aufrechterhaltung der Stromversorgung über den Schaltkreis 100/100' und den somit eingeschalteten Regler bewirkt. In festliegenden Zeitabständen, beispielsweise im Abstand von 20 - 500 ms, gibt der Watchdog-Schaltkreis INT-Impulse an den INT-Eingang 24.1 des Microcontrollers ab. Dadurch wird der Lowpower-/Shutdown-Mode beendet und der Microcontroller fragt die am (ggfs. multiplen) Pfad 32 aktuell anstehenden Signale ab, die der Wake-Up-Expander 165 aus einem oder mehreren an seinen Eingängen IN_1 bis IN_4 eventuell anliegenden Wecksignalen bereithält. Liegt eine solche Weckanforderung vor, kann er die applikationsgemäß für dieses oder diese Signale zugedachte Software abarbeiten und - falls der Expander 165 zur Bereithaltung der Weckanforderung Speicherzellen umfaßt - diese zurücksetzen.
   Diese Funktion kommt also in Frage, wenn bestimmte Wecksignale nur eine Applikation, nicht aber gleich das ganze CAN wecken sollen. Gleichwohl kann der Microcontroller - sofern dies in einer übergeordneten Busmanagementsoftware so vorgesehen ist - über EN und STB den Schaltkreis 100/100' und damit das gesamte CAN aktivieren. Dies wäre z.B. im Failsafe-Falle denkbar, wenn die applikationsspezifische Funktion aus irgend einem Grund versagt oder beispielsweise die Eingänge IN_1 bis IN_4 zu einer Alarmanlage gehören und es erwünscht wäre, daß im Alarmfalle im Microcontroller zuerst der Alarm plausibilitätsgeprüft wird um dann erst - in Abhängigkeit vom Prüfungsergebnis - über den Schaltkreis 100/100' und das Busnetz sämtliche Scheinwerfer oder Sirenen an entsprechenden Steuergeräten im Bus-System alarmhalber einzuschalten.
   Kann der Microcontroller im letzen Beispiel kein Alarmsignal von IN_1 bis IN_4 feststellen, kommt es nicht zur Aktivierung des Transceivers 100/100', sondern zum Programmstop durch den Microcontroller. Dadurch gelangt der Watchdog-Schaltkreis 164 wieder in die Betriebsart zur Speicherung eventueller Weckanforderungen und der Microcontroller 21 in seine spezifische Betriebsart des initialen Lowpower-/Shutdown-Modes, in der er erneut bereit ist, auf einen INTERRUPT-Impuls vom Watchdog-Schaltkreis erneut zu reagieren. Auf diese Weise ist der durchschnittliche Betriebsstrom des Microcontrollers 21 je nach Interrupt-Frequenz und Dauer des Abfragezyklus auf 1/50 bis 1/1000 des normalen reduzierbar.

Der Vollständigkeit halber sei erwähnt, daß der ENA/ NINH-Eingang 164.3 des Watchdog-Schaltkreises 164 unter gewissen Voraussetzungen auch als Ausgang für ein ENA/ NINH-Signal an den Regler 20 wirkend vergleichbar dem des Halbleiterschaltkreises 100/100' ausgebildet sein kann, mit der Wirkung, daß die Stromversorgung VCC des Microcontrollers zwischen einzelnen Abfragen des Expanders 165 auch vollständig abgeschaltet werden kann.

Zu diesem Zweck kann der ENA/NINH-Ausgang des Schaltkreises 100/100' beispielsweise als Tristate-Ausgang und der Eingang 164.3 des Watchdog als Tristate-Transceive-Port ausgebildet sein. Es können so einerseits der Regler 20 und der Watchdog 164 so lange dauernd eingeschaltet werden, wie das ENA/NINH-Einschaltsignal vom Schaltkreis 100/100' andauert, und es kann andererseits der Regler nur eine kurze Zeit lang zyklisch eingeschaltet werden, die beispielsweise durch die Dauer eines entsprechenden Impulses aus einem entsprechenden Transceive-Port 164.3 des Watchdogs 164 vorgegeben ist.

In **Fig. 5** ist des weiteren ein weiterer Microcontroller 21' angedeutet, der andere Funktionen als die der Bus-Kommunikation im Steuergerät erfüllen kann. Im Rahmen der Erfindung kann die beschriebene Watchdogund Reset-Funktion 164 gleichwohl so ausgebildet sein, daß sie wenigstens eine, vorzugsweise aber alle dem Microcontroller 21 gebotenen Überwachungsfunktion/en auch für wenigstens einen solchen weiteren Microcontroller 21' bietet. Der wenigstens eine weitere Microcontroller 21' kann ebenfalls aus der Versorgungsschiene VCC gespeist werden.

Dieses Beispiel verdeutlicht, daß der Schaltkreis 100/100' einerseits ermöglicht, daß im Bus-Netz Teilnehmer in der Betriebsart SLEEP stromsparend verharren können, während andere Geräte durchaus in einem Lowpower-/Shutdown-Mode latent betriebsfähig gehalten werden, und daß er nicht ausschließt, daß ein damit ausgerüstetes Steuergerät ein applikationsspezifisch eigenes Stromsparmanagement für seine(n) Microcontroller abwickelt bzw. dem über den Schaltkreis 100/100' busorientierten sogar überlagern kann, je nach Applikationssoftware.

Der INIF-Ausgang 164.5 des Watchdog-Schaltkreises 164 gibt einen über den Pfad 168 vom INIF-Eingang 163.1 des Interface 163 empfangbaren Inhibit-Impuls aus, der zeitlich mit der Abgabe des Reset-Impulses am Ausgang 164.1 verkettet ist. Während der Dauer des Inhibits ist das Interface 163 gesperrt, damit undefinierte Ausgangsportzustände des Microcontrollers 21 im Augenblick seines Zurücksetzens über den Pfad 33 nicht einzelne Endstufen 163.2 aktivieren und für kurze Zeit Fehlbestromen verursachen können.

Ersichtlich beträgt die Gesamtstromaufnahme I_{SG} eines solchen Steuergerätes die Summe der Ströme I_{IC1} - I_{IC4}, wobei es sich hierbei im SLEEP-Mode um sehr kleine Ströme handelt. Der übrige Gestamtstrom des aktiven Steuergerätes fließt über den Regler 20.

Mit einer solchen Steuergerätekonfiguration können im industriellen Steuerungsbereich oder bei Verkehrsmitteln sehr viele Applikationen abgedeckt werden, wobei allerdings die benötigte Leistungskapazität von Microcontroller 21 und Input/Output-Interface 163 applikationsabhängig zu bemessen sind.

Wie eingangs erwähnt führte die Totalintegration der Konfiguration gemäß **Fig. 5** zu einem Hyperchip. Eine solche Lösung scheint zunächst vorteilhaft insoweit, als sie das Problem einer großen Zahl von Hardware-Verbindungen zwischen dem Microcontroller 21 und seinen kooperativen Funktionen in den Schaltkreisen 100/ 100', 163, 165, und 35 beseitigte, indem die große Gesamtzahl entsprechender Leitungsverbindungen nur noch auf kleinstem Raum unzugänglich in einem solchen Hyperchip existierte. Die Zahl störungsanfälliger Lötstellen reduzierte sich hierbei ebenso wie die EMV-Problematik.

Dieser Vorteil wird jedoch zunichte gemacht durch die eingangs erwähnten vielfältigen Nachteile und Probleme eines solchen Hyperchips. Eine alternative Teilintegration der Funktionen des Halbleiterschaltkreises 100/ 100' und des Expanders 165 mit der des Microcontrollers 21 beseitigte demgegenüber das Problem multipler Verbindungen bzw. Anschlüsse nur bezüglich 31 und 32, d.h. nur zu einem unbefriedigend geringen Teil, bei Weiterbestehen der eingangs erwähnten Nachteile. Hinzu tritt ein ganz neues, im Wake-Up-Expander 165 ruhendes Problem, indem an dessen Eingängen IN_1 bis IN_4 in der Praxis u.U. noch höhere Fehler- bzw. Störspannungen anliegen können als am Bus CAN_H/CAN_L:
Da analog zu den Bus-Eingängen des Halbleiterschaltkreises 100/100' auch die Weckeingänge 7.1 eindrähtig gegen Bezugsmasse GND hochfrequente Einkopplungen empfangen können, ist auch die Schaltkreisfunktion 165 in hohem Maße elektromagnetischen Einstrahlungsfolgen in Funkwellenbereichen ausgesetzt. Eine Integration des Expanders zusammen mit dem Microcontroller erhöhte insoweit ein schon bestehendes Gefährdungspotential für letzteren dramatisch.

Ausgehend von diesen Erkenntnissen geht die Erfindung einen anderen Weg, auf dem nicht nur das Bauraum-, Typen-Spreading- und Kostenproblem, sondern darüber hinaus auch noch die Probleme des Schutzes des Microcontrollers vor schadvollen Umfeldeinwirkungen und der vielzähligen Verbindungen am Microcontroller in einem Zug mittels eines einzigen Halbleiterschaltkreises 200 gemäß **Fig. 6** ausgeräumt werden.

In diesem Halbleiterschaltkreis 200 ist nicht der den Spannungsregler 20 ansteuernde Halbleiterschalkreis 100/ 100' mit seiner Interface-Funktion zwischen Zweidrahtbus und Bus-Protokoll-Modul 22 des Microcontrollers 21 in dessen Technologie mitintegriert, sondern es ist der Halbleiterschaltkreis 100/100' samt Expander 165 (und Glied 36) auf dem Chip und in der robusteren Technologie des Spannungsreglers 20 mitintegriert.

Gleichfalls mitintegriert in dieser robusten Technologie ist der Watchdog-Schaltkreis 164 mit all seinen Funktionen, vorzugsweise wenigstens den drei oben erwähnten. Im Rahmen der Erfindung wird es durch diesen Schritt des weiteren möglich, die Generation des PWROR-Signals vom Regler 20 in die noch um diese vierte Funktion erweiterte Watchdog-Reset-Funktion auszulagern, wie dies durch die zwei Wechselpfeile zwischen Spannungsregler 20 und Watchdog-Funktion 164 in in **Fig. 6** versinnbildlicht ist.

Dieser Schritt bringt mehrere Vorteile in idealer Kombination, wie folgt.
a. In Verkörperung der Schaltkreise 20 (Regler IC1), 100/100' (Transceiver IC2), 165 (Wake-Up-Expander IC3) und 164 (Watchdog IC4) sind damit in homogener Technologie alle Schaltkreisfunktionen, die miteinander zusammenhängend gemeinsam mit Ruhestrom von VBATT zu versorgen und deshalb erhöhter Beschädigungsgefahr durch Jump-Start-, Load-Dump- oder sonstige Störbeaufschlagung des Potentials VBATT ausgesetzt sind, in der überlastungstragfähigen Technologie des Spannungsreglers auf einem Halbleiterchip zusammengefaßt.
   Mit den Schaltkreisen 100/100' (IC2) und 165 (IC3) sind damit aber auch diejenigen Schaltkreise erfaßt, deren Eingänge CAN_H/CAN_L bzw. IN_1 bis IN_4 vom Bus bzw. aus dem Applikationsfeld hoher Störbeaufschlagungsgefahr ausgesetzt sind. Daraus folgen für den resultierenden Gesamtschaltkreis 200 für hohe Widerstandsfähigkeit optimale Realisierungsbedingungen in der bewährten und dazu noch kostenkünstigen Prozeßtechnologie wie für Spannungsregler bewährt und üblich.
b. Das Problem vielzähliger Verbindungen innerhalb eines Steuergerätes wird im Rahmen des erfindungsgemäßen Schaltkreises durch Mitintegration - auf dem Substrat des Spannungsreglers - einer nur wenige Anschlüsse aufweisenden seriellen Schnittstelle gelöst.

Vorzugsweise kann hierfür eine maximal vier Anschlüsse aufweisende Schnittstellenfunktion vorgesehen werden. Im Rahmen der Erfindung kann dies beispielsweise eine UART-Schnittstelle, eine RS 232-Schnittstelle, oder beispielsweise ein standardisiertes Seriell/Parallel-Interface (SPI) oder ein Serielles Communication-Interface (SCI) 166 sein, das dann als Teilnehmerschaltkreis an einem SPI/SCI-Bus innerhalb eines Steuergerätes verstanden werden kann, wie aus den nachfolgenden **Figen. 7 & 8** ersichtlich. Durch diese Maßnahme wird das Problem vielzähliger Verbindungen und der darin ruhenden Möglichkeit von EMV-Störungen für das Steuergerät als Gesamtheit ausgeräumt.

Bei der in **Fig. 6** beispielhaft illustrierten seriell/ parallelen Schnittstelle 166 handelt es sich um ein wie oben erwähnt standardisiertes SPI 166, welches hier beispielhaft mit voller Anschlußbelegung vorgesehen ist, nämlich 166.1 für (SPI-)Takt (CLK), 166.2 für Dateneingang (Data IN), 166.3 für Datenausgang (Data OUT), sowie 166.4 für Aktivierung (ENSPI) des SPI. Im Rahmen des Schaltkreises 200 wird der ENSPI-Eingang allerdings nicht unbedingt benötigt. Die vorgenannten drei bis vier entsprechenden Pfade bilden den multiplen SPI-Pfad 201.1 zwischen dem Halbleiterschaltkreis 200 und dem Microcontroller 21 in den **Figen. 7 & 8.**

Die Erweiterung um eine serielle Schnittstelle wie z.B. ein SPI oder SCI 166 eröffnet den frei konfigurierbaren Einsatz des Halbleiterschaltkreises 200 bei einer minimalen Anschlußzahl in verschiedensten Applikationen.

Die bereits in Verbindung mit **Fig. 4** aufgezeigte Universalität wird weiter erhöht, indem vermöge des SPI/SCI 166 wichtige Charakteristika des Schaltkreises 200 über nur drei bzw. vier Anschlüsse frei oder optionsprogrammierbar ausgelegt werden können, wie z.B.:
- Das sog. Reset-Verhalten, etwa bezüglich des POWER ON-, POWER DOWN, VCC-Überwachungs- und BUSY-RESETs;
- die verschiedenen Watchdog-Zeiten und Karenz-Fenster für die BUSY-Überwachung (Software-Watchdog) und System-Überwachung des Microcontrollers, ggfs. auch für den ENA/NINH-Impuls, und alle sonst noch denkbaren Schaltkreisfunktionen unter Zeitkontrolle durch die Watchdog-Funktion;
- die Definition der Wake-Up-Eingänge 7.1: Ansprechpolarität, Ansprechart (Pegelsensitiv/ Flankensensitiv), Hysterese und Triggerschwelle, digitale Filterung der Wahrheitsakzeptanz, sofern angewandt (wie z.B. weiter unten i.V. mit **Figen. 10 und 13** beschrieben);
- die Kommunikation mit dem CAN-Transceiver: Betriebsartensteuerung STB/EN vonseiten des Microcontrollers, interne Fehlerflagzuweisung für Fehlermeldungen an den Microcontroller, Slewrate-Einstellung über SR/SRC/SWM/STB/EN für FAST-CAN und SLOW-CAN-Betrieb sowie für Bus-Testroutinen;

- die Grenzwerte für die Überwachung der anliegenden Potentiale VBATT und VCC sowie die Art der Auswertung auch im Hinblick auf die Erkennung einer stattgefundenen Unterbrechung der Stromzufuhr vom Potential VBATT (Powerfail-Erkennung);
- und andere.

Zu diesem Zweck kommuniziert das SPI 166 innerhalb des Schaltkreises 200 über interne Pfade 166.5 mit dem Regler 20, der Watchdog-Funktion 164, dem Weck-Expander 165 und dem im Schaltkreisbereich 100/100' verkörperten Bus-Transceiver und dessen diversen Funktionsblöcken gemäß **Fig. 4.** Der Wake-Up-Expander 165 ist hier der Übersicht halber nur mit zwei Eingängen 7.1 (Wake Up IN) dargestellt. Er benötigt dank der SPI-Erweiterung keine eigene multiple Verbindung 32 mit dem Microcontroller 21 mehr, da die Einlesung der Weck-Signale vom Wake-Up-Expander 165 in den Microcontroller hier über den Datenpfad des SPI-Busses 201 geschieht, ebenso die Zurücksetzung von Speichermitteln im Expander 165, die z.B. zur Zwischenspeicherung von Weckanforderungen darin enthalten sind.

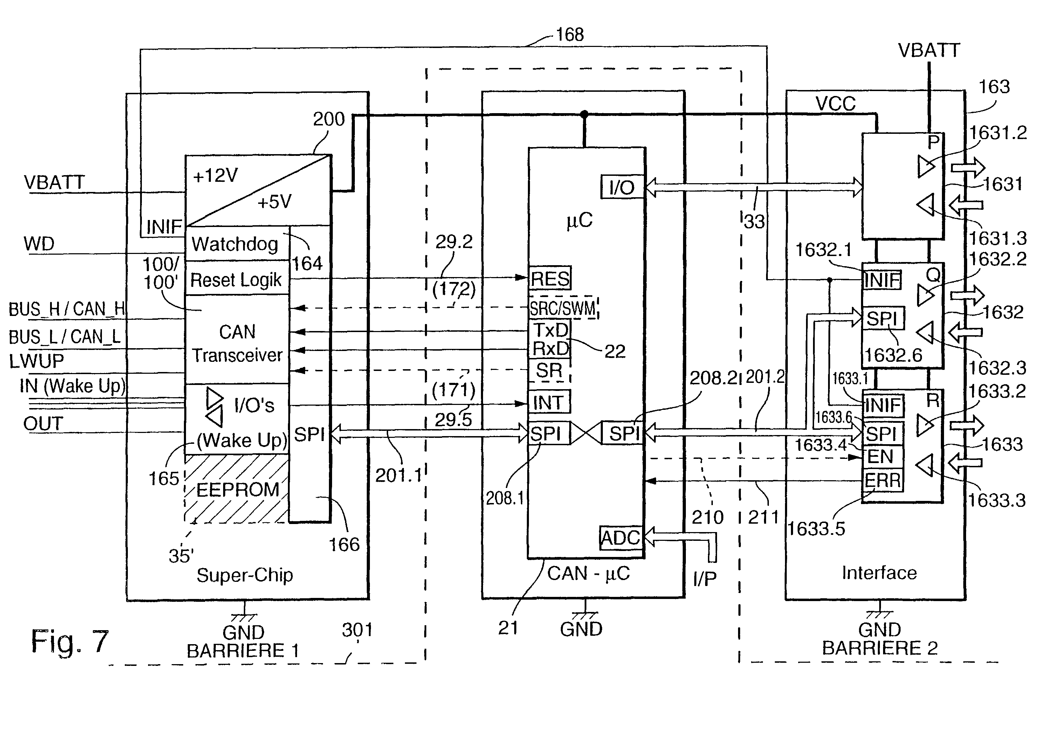

Um die Einlesung eines Weck-Signales zu initiieren, kann der Expander 165 noch einen INTERRUPT-Ausgang 4' aufweisen, von dem aus über einen Pfad 29.5 der SPI-fähige Microcontroller 21 zur Einlesung veranlaßt werden kann, vgl. **Fig. 7.** Ein zyklisches Wecken zu diesem Zweck des Microcontrollers 21 wird auch hier gesteuert durch die Watchdog-Schaltkreisfunktion 164 wie oben bezüglich **Fig. 5** bereits beschrieben. Ein entsprechendes INT-Signal am Ausgang 4' kann insoweit als statisch anliegender (da im Expander gespeicherter) Interrupt im Zuge einer stromsparend verkürzten Initialisierung des Microcontrollers verarbeitet werden.

Der Wake-Up-Expander 165 kann ferner optional noch einen Power OFF-Ausgang 32.1 aufweisen, über den in Anhängigkeit von spezifischen Weck-Signalen auf spezifischen Eingangsleitungen ein Abschaltsignal POWER OFF zur beliebigen Verwendung unter Umgehung sowohl des Microcontrollers als solchen als auch z.B. dessen Weckzyklus abgegeben werden kann. Ein solcher Ausgang kann vorteilhaft genutzt werden in Fällen, in denen Weckzyklen zum Einlesen von Weckanforderungen sehr lange dauern.

Als externe zeitbestimmende Elemente an Anschlüssen 164.9 der Watchdog-Funktion 164 sind hier beispielhaft ein Kondensator 169.1 und ein Widerstand 169.2 vorgesehen. Dies soll keine Einschränkung bedeuten; selbstverständlich können auch frequenz- oder zeitselektive Bauelemente wie Schwinquarze, Keramikresonatoren, Laufzeit- oder SAW-Filter als Zeitbasismittel vorgesehen sein.

Bis auf die neuen Anschlüsse 201 (SPI-Bus), 32.1 (Wake Up/POWR OFF) und 4' (INT/Wake Up Expd) entsprechen die Anschlüsse dieser Schaltkreisfunktion den zuvor bereits erläuterten. Wesentlich ist, daß die Anschlüsse für
STBN, EN, ERR/INT, SR, TEST/SRC/SWM von **Fig. 4** hier nicht mehr auftauchen, da sie über das SPI-Interface 166 durch den SPI-Bus 201 bedient bzw. ersetzt werden.

Nachfolgend wird der Schaltkreis 100, 100' im Ausstattungsumfang gemäß **Figen. 3 & 4** dann, wenn er als Integrationskomponente innerhalb der größeren Gesamtschaltkreisfunktion 200 bezogen wird, auch als Transceiver-Funktion bzw. als Bus-Transceiver bezeichnet.

Ersichtlich kann der SPI-kommunikationsfähige Transceiver 100' und der SPI-kommunikationsfähige Wake-Up-Expander analog zu **Fig. 5** auch hier als durch Kombination erweiterte Schaltkreisfunktion 100.1 verstanden werden, die zusammen mit dem SPI-Interface 166 eine globalere Transceiver-Funktion 100.2 bildet.

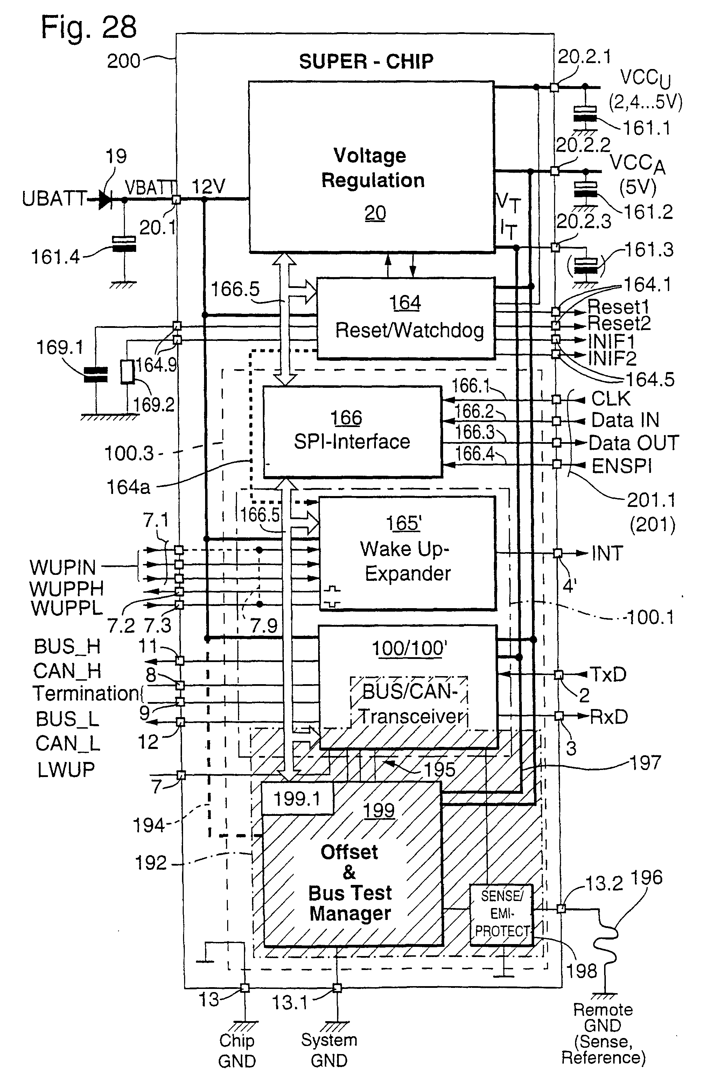

Zur Vollständigkeit wird darauf hingewiesen, daß ein entsprechender Halbleiterschaltkreis 200 für Multi-Microcontroller-Bedienung selbstverständlich mehrere Reset- und INIF-Ausgänge aufweisen kann, wie sinngemäß schon in Verbindung mit **Fig. 5** erwähnt und wie in **Fig. 28** gezeigt.

Das Verpolschutzelement 19 vor dem Reglereingang 20.1 ist zweckmäßig nicht mitintegriert. Die angedeuteten Siebkapazitäten 161 und 161.4 an VCC bzw. VBATT stützen diese Potentiale gegen Einbrüche ab bzw. bewirken eine kontrollierte Spannungshaltung, wenn über das Element 19 kein Strom mehr fließt, damit ein geregelter Programmabbruch im Microcontroller und/oder eine Datensicherung in (s)ein EEPROM noch möglich ist.

Da SPI-fähige Microcontroller beispielsweise im CAN-Bereich weite Verbreitung finden werden und deshalb kostengünstige Massenbauelemente sind, repräsentiert dieser komplett in einer Hochvolt-Technologie herstellbare "Super-Chip" etwas, das - im Gegensatz zu einem komplett neuen, nur in Niederspannungstechnologie herstellbaren Hyperchip einschließlich dessen Schutzmittel und -maßnahmen - mit herkömmlichen, kostengünstigen Massenbauelementen nur noch verbunden zu werden braucht, um ein in jeder Hinsicht ausgezeichnetes Gesamtergebnis zu erreichen.

Die SPI-Schnittstelle eines solchen "Super-Chip" erlaubt darüber hinaus aber auch eine sehr einfache Kooperation mit Micronontrollern die gar keine SPI-Schnittstelle im eigentlichen Sinne aufweisen, indem controllerintern mittels Port-Software an herkömmlichen digitalen I/O-Ports eine SPI-Schnittstelle nachgebildet wird. In einem solchen Falle repräsentiert die SPI-Schnittstelle des "Super-Chip" also das stets feste Zielprotokoll der Port-Programmierung des Microcontrollers, wodurch eine entsprechende Programmierung standardisiert einfach möglich ist.

Die **Fig. 7** zeigt die Funktionsblockstruktur eines Steuergerätes, das durch Implementierung der Gesamtfunktionalität 200 gemäß **Fig. 6** in einem Steuergerät gemäß **Fig. 5** entsteht, wenn zugleich auch der Microcontroller 21 und das Input/Output-Interface 163 oder Teile 1632, 1633 davon mit SPI-Schnittstellen versehen werden.

Aus dieser Darstellung ist die Funktion des Schaltkreises 200 als **Barriere 1** bezüglich von links einfließender Störungen aus dem CAN-Busfeld ersichtlich. Durch den Schaltkreis 200 wird erreicht, daß Überspannungen, Transienten, Hochfrequenzstörungen etc. die gestrichelte Linie 301 zwischen Microcontroller 21 und Schaltkreis 200 nicht mehr erreichen bzw.überschreiten können.

Eine analoge **Barriere 2** gegen Störeinströmungen aus dem Applikationsfeld kann auch das Interface 163 bei analoger Ausführung in einer robusten Technologie seiner Schaltkreise 1631, 1632, 1633 bilden. Dadurch wird dann erreicht, daß auch von rechts aus dem Applikationsfeld einfließende Störungen wie Überspannungen, Transienten, Hochfrequenzeinstreuungen etc. die gestrichelte Linie 301 zwischen Microcontroller 21 und Interface 163 nicht mehr erreichen bzw. überschreiten können.

Auf diese Weise ist der empfindliche Microcontroller 21 hinsichtlich seiner Verbindungen zum Bus- und Applikationsfeld bezüglich Störeinströmungen wirksam abgeschirmt. Dieser Vorteil erschließt die Verwendbarkeit von Microcontrollern mit auch künftig noch weiter schrumpfenden Schaltkreisstrukturgeometrien.

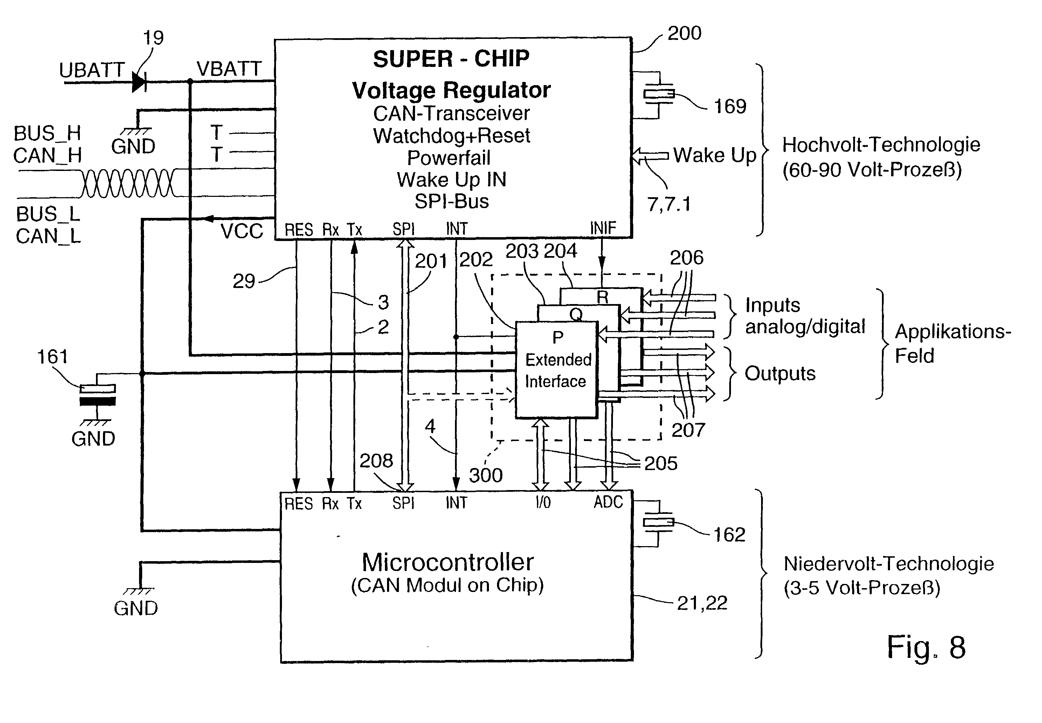

Diese Abschirmfunktion 301 wird ergänzt und unterstützt durch eine hohe EMV-Freundlichkeit eines entsprechend aufgebauten Steuergerätes, weil es selbst bei höchster Komplexität der Applikation nur noch wenige kritische, als Störein- und -abstrahl-Antennenschlaufen wirkende Verbindungsleitungen am hoch getakteten Microcontroller gibt. Im Beispiel der **Fig. 7** ist bereits ein komplexer Fall, nämlich ein Microcontroller mit zwei unabhängigen SPI-Schnittstellen 208.1 und 208.2 und je einem separaten SPI-Bus 201.1 und 201.2 für Bus- und Wake-Up-Bedienung bzw. das Interface 163 vorgesehen. In den meisten Fällen wird jedoch ein Microcontroller mit nur einer SPI-Schnittstelle 208 ausreichen, so daß dann die beiden SPI-Schnittstellen 208.1 und 208.2 angedeutetermaßen verschmelzen und auch die beiden Busse 201.1 und 201.2 in einem Bus 201 aufgehen, wie dies auch in der **Fig. 8** veranschaulicht ist. Da folglich Platz für eine EMV-gerechte Gestaltung der Leiterbahnführung zwischen Microcontroller und Umfeld auf einer entsprechenden Leiterplatte eines Steuergerätes gewonnen wird, bringt der Schaltkreis 200 auch noch in dieser Hinsicht ein Potential für Kosteneinsparungen, die bis hin zur Minimierung des Abschirmaufwandes für ein entsprechendes Gerät reichen.

In **Fig. 7** sind des weiteren optionale Verbindungspfade 29.2 und 172 zwischen dem CAN-Transceiver 100/100' und dem Microcontroller 21 sowie entsprechende Ports des letzteren für SR- und TEST/SRC/SWM-Signale (wie in Verbindung mit **Fig. 4** erläutert) parallel zum SPI-Pfad 201.1 gestrichelt dargestellt. Obschon diese Pfade im SPI-Pfad 201.1 implementiert sein können, kann eine derartige Verbindung für besondere Zwecke - beispielsweise bei Betriebsweisen des Schaltkreises zur Busfehleranalyse wie weiter unten ausgeführt - vorteilhaft sein. Eine zwingende Notwendigkeit für ihre Realisierung besteht im Rahmen der hier angewandten SPI-Architektur für ein Steuergerät jedoch nicht.

Auch bezüglich der Verbindung zwischen Microcontroller 21 und Interface 163 ist hier ein allgemeiner Fall dargestellt. Das Interface-Submodul 1631 mit Endstufe 1631.2 und Signalaquisition 1631.3 kommuniziert mit dem Microcontroller 21 analog zu **Fig. 5** herkömmlich über den I/O-Port des Controllers vermöge des multiplen Pfades 33. Das Interface-Submodul 1632 mit Endstufe 1632.2 und Signalaquisition 1632.3 ist SPI-fähig und kommuniziert mit dem Microcontroller 21 über den SPI-Pfad 201.2 zwischen dem SPI-Port 208.2 des Microcontrollers und dem SPI-Port 1632.6 des Interface-Submoduls. Das Interface-Submodul 1633 mit Endstufe 1632.2 und Signalaquisition 1632.3 ist SPI-fähig und kommuniziert mit dem Microcontroller 21 ebenfalls über den SPI-Pfad 201.2 zwischen dem SPI-Port 208.2 des Microcontrollers und seinem SPI-Port 1633.6. Zusätzlich weist es auch noch einen vom Microcontroller über einen Pfad 210 ansteuerbaren ENABLE-Eingang 1633.4 und einen mit dem Microcontroller 21 über den Pfad 211 verbundenen ERROR-Ausgang 1633.5 auf, von dem aus eine Fehlermeldung am SPI-Pfad vorbei an den Microcontroller übermittelbar ist. Über seinen EN-Eingang kann dieses Modul somit selektiv gesperrt werden. Die Module 1632 und 1633 weisen des weiteren noch dem Eingang 163.1 in **Fig. 5** entsprechende Eingänge 1632.1 bzw. 1633.1 auf, denen über den Pfad 168 von der Watchdog-Funktion 166 im Schaltkreis 200 das oben erläuterte INIF-Signal zugeführt werden kann, um die Ausgänge dieser Module im Falle eines Reset des Microcontrollers 21 für eine gewisse kurze Zeitdauer zu blokkieren.

In **Fig. 7** ist des weiteren angedeutet, daß im Rahmen der Erfindung auch noch ein nichtflüchtiger Speicher 35' - entsprechend dem nichtflüchtigen Speicher 35 in **Fig. 5** - im Schaltkreis 200 mitintegriert sein kann.
Er kann beispielsweise als EEPROM aufgeführt sein.

Dieser Speicher kann einerseits dazu dienen, die Konfiguration des Schaltkreises 200 abzuspeichern, wobei eine solche Abspeicherung sowohl innerhalb der Funktionalität des Schaltkreises 200 autonom oder vom Microcontroller 21 über den Pfad 201.1 aus erfolgen kann. Andererseits können in diesem nichtflüchtigen Speicher auch Initialisierungsdaten für den Microcontroller bzw. das Gesamtsteuergerät abgelegt werden, beispielsweise betreffend die relevante Konfiguration des Interface 163. Eine weitere Verwendungsmöglichkeit eines solchen Speichers 35' besteht darin, Fehlerzustände auf CAN_H und/oder CAN_L im SLEEP-Mode abzulegen. Des weiteren können in einen solchen Speicher auch die Zustände der Speicherzellen 127L und 127H einer für Busgüte- und/oder Busfehleranalysezwecke erweiterten Empfangsfunktion 120' gemäß **Fig. 29** geschrieben werden. Für die vorgenannten Zwecke sind in praxi 64 bis 512 Byte ausreichend.

Die Mitintegration dieses EEPROMs kann nicht nur unter Wirtschaftlichkeitsgesichtspunkten sinnvoll sein. Vielmehr erlaubt sie die Bauteile- und Verbindungszahl auf der Leiterplatte eines entsprechenden Steuergerätes auf ein absolutes Mindestmaß zu beschränken und den Microcontroller 21 mit allen in jedem Steuergerät benötigten Elementen auf kleinstem Raum unterzubringen. Daraus resultieren wiederum EMV- und Kostenvorteile.

In der **Fig. 8** ist schließlich dargestellt, wie der Halbleiterschaltkreis 200 als Basis für eine neuartige Steuergeräte-Technologie genutzt werden kann. Im Rahmen dieser Technologie können solche Geräte gewissermaßen als einheitliche "Mainframes" ausgeführt werden, welche den Schaltkreis 200 und den Microcontroller 21 mit CAN-Modul 22 oder universell ausgelegte SMD-Auflötflächen für verschiedene, für unterschiedliche Applikationen in Frage kommende Microcontroller umfassen. Es wird darin ein Ergänzungsfeld 300 vorgesehen, in dem nur noch applikationsspezifisch zu entwickelnde "Extended Interfaces" 202, 203, 204 einzufügen und anzuschließen sind. Diese entsprechen dann den Interface-Submodulen 1631 bis 1633 in **Fig. 7**.

Diese Extended Interfaces können ebenfalls, müssen aber nicht SPI-fähig sein, wie durch Strichelung angedeutet. Bezüglich ihrer Eingänge 206 und Ausgänge 207 können sie applikationsabhängig ganz individuell geschützt ausgebildet werden, so daß ein Schutzpfad über das "Mainframe" mit Microcontroller entweder nicht mehr benötigt wird oder zusätzlich wirksam ist. Auf diese Weise ist eine hohe Isolation des Microcontrollers 21 gegenüber dem Applikationsfeld erreichbar.

Augenfällig ist, daß das zwei unterschiedliche Halbleitertechnologien (z.B. 60-90 Volt-Prozess für den "Super-Chip", 3-5 Volt-Prozess für den Microcontroller) verbindende Mainframe an einem Ort vorgefertigt und als solches dann an einem anderen Ort mit Extended Interfaces - erforderlichenfalls auch mit dem passenden Microcontroller - applikationsspezifisch bestückt und programmiert werden kann. Daraus ergeben sich nicht nur logistische Vorteile. Vielmehr wird durch eine solche Architektur auch die Möglichkeit für ein Recycling auf Reparaturebene geboten.

Die **Fig. 1** veranschaulicht schematisch die Funktionsbelegung eines Halbleitersubstrates durch einen so weit beschriebenen Halbleiterschaltkreis 200 sowie seine wichtigsten Verbindungen mit der Peripherie.

Dabei ist ein Halbleiterschaltkreis 200 zugrundegelegt, dessen Watchdog-Funktion 164 optional über mehrere RESET-Ausgänge und mehrere INIF-Ausgänge für die Bedienung mehrerer Microcontroller bzw. -computer verfügt. Des weiteren ist veranschaulicht, daß die in der Beschreibung und der Zeichnung implementierte SPI-Schnittstellenfunktion 166 nur als Beispiel ohne Beschränkung zu verstehen ist. Die Schnittstellenfunktion 166 kann im Rahmen der Erfindung also auch durch eine SCI-(Serial Communication Interface)-Schnittstellenfunktion ersetzt sein, unter der in weitestem Sinne z.B. auch eine UART- oder RS 232-Schnittstelle zu verstehen sind. Des weiteren ist in **Fig. 1** symbolisiert, daß unter dem zweidrähtigen Bus im Rahmen der Erfindung der erläuterungshalber zugrundegelegte CAN-Bus keinerlei Einschränkung bezüglich eines zweidrähtigen Busses darstellen soll.

In Applikationsfeldern, die besonders hohen Belastungen durch Temperaturwechsel und/oder korrosiven Angriff unterliegen, müssen Schaltkontakte als Sensoren mit einem gewissen Mindeststrom bestromt werden. Untersuchungen haben ergeben, daß hierfür zwar Ströme von 10-50 mA hinreichen. Nur solche sichern eine sichere Kontaktfähigkeit der Schaltstrecke auch über lange Zeit. Dieser Strombedarf limitiert in Systemen mit nur begrenztem Energievorrat bislang die Zahl solcher Schalter empfindlich.

Weiterführende Untersuchungen haben ergeben, daß die Aufrechterhaltung der sicheren Schaltfähigkeit bereits durch derlei Stromflüsse von nur kurzer Dauer gewährleistet ist.

Bei der Beschreibung der Steuergeräte gemäß **Fig. 5** und **Fig. 7** wurde davon ausgegangen, daß im Falle eines Bedarfs solcher vom Weck-Expander 165 an Eingängen 7.1 abgefragter Schalter deren entsprechende Stromversorgung im Applikationsfeld erfolgt. Zum einen bedingt dies einen entsprechenden Aufwand außerhalb des Steuergerätes. Zum anderen erscheint dadurch - zugunsten eines geringen Stromverbrauchs des Steuergerätes - ein keineswegs vernachlässigbarer Strombedarf der betreffenden Steuerungsfunktion lediglich in das Applikationsfeld verschoben. Wird ein solcher Schalter vom Weckexpander 165 aus stromversorgt, änderte dies an der Systemstrombilanz nichts, weil der entsprechende Stromberdarf dann aus I_{IC3} gedeckt werden muß.

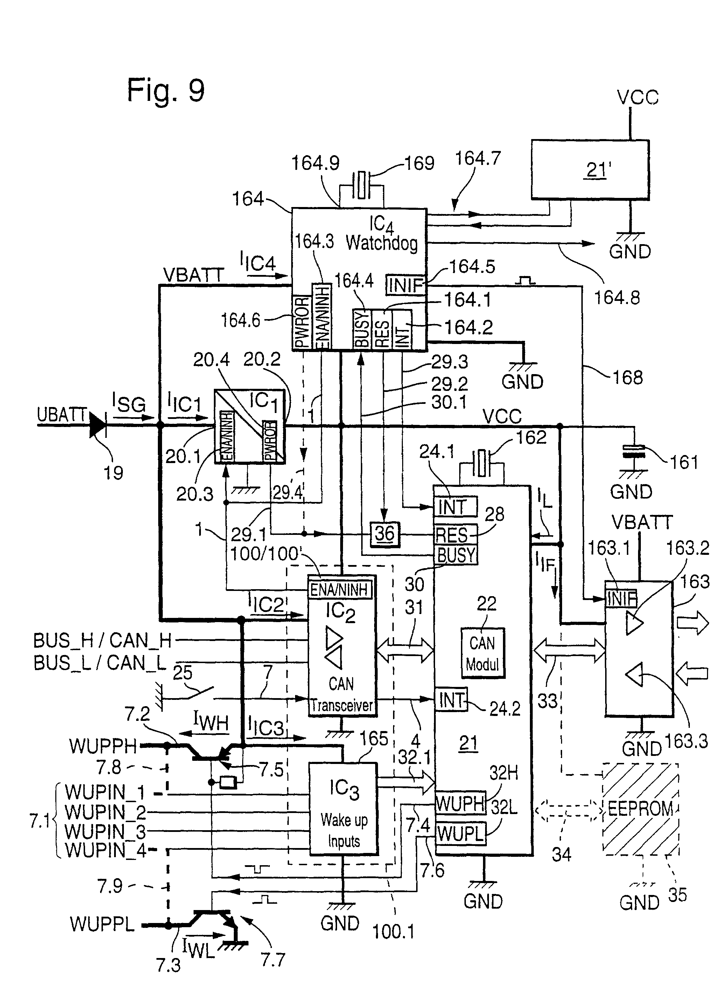

Der insgesamt anfallende Aufwand und Stromverbrauch für entsprechende Schalterabfragen lassen sich jedoch erheblich reduzieren, wenn das Steuergerät gemäß **Fig. 5** (bzw. sinngemäß gemäß **Fig. 7**) fortgebildet wird wie in **Fig. 9** veranschaulicht. Der Microcontroller 21 weist einen Ausgang 32H für die Ausgabe eines Wake-Up-Power-H-Signals (WUPPH) und hier beispielhaft noch einen weiteren, entsprechenden Ausgang 32L für die Ausgabe eines Wake-Up- Power-L-Signals (WUPPL) auf.

Der Ausgang 32H ist über eine Leitung 7.4 mit dem Steuereingang eines elektronischen Schalters oder einer steuerbaren Stromquelle 7.5 - hier beispielhaft ausgebildet als bipolarer PNP-Transistor - verbunden, dessen Emitter vom Potential VBATT des Reglereinganges 20.1 versorgt wird. Der Ausgang (Kollektor) des steuerbaren Schalters oder der Stromquelle (des PNP-Transistors) 7.5 stellt die Versorgungsschiene für alle im Applikationsfeld gegen Masse GND zu bestromenden Weckschalter dar.

Der Ausgang 32L ist über eine Leitung 7.6 mit dem Steuereingang eines entsprechenden elektronischen Schalters oder einer steuerbaren Stromquelle 7.7 - hier beispielhaft ausgebildet als bipolarer NPN-Transistor - verbunden, dessen Emitter von Masse GND aus versorgt wird. Der Ausgang (Kollektor) des steuerbaren Schalters oder der steuerbaren Stromquelle (des PNP-Transistors) 7.7 stellt die Versorgungsschiene für alle im Applikationsfeld gegen die Speisespannung UBATT zu bestromenden Weckschalter dar.

Die Eingänge 7.1 WUPIN_1 bis WUPIN_4 entsprechen den Weckeingängen in Fig. 5. Über sie erfolgt die Rückführung der Wecksignale von den aus der Schiene 7.2 bzw. 7.3 spannungsversorgten Wecksensoren im Applikationsfeld. Die gestrichelte Verbindungen 7.8 bzw. 7.9 zwischen dem Ausgang WUPPH und dem Weckeingang WUPIN_1 bzw. dem Ausgang WUPPL und dem Weckeingang WUPIN_4 soll versinnbildlichen, daß im oben genannten Falle einer Stromquelle 7.5 bzw. 7.7 gleichwohl auch die Schiene 7.2 mit dem Eingang WUPIN_1 aus 7.1 bzw. die Schiene 7.3 mit dem Eingang WUPIN_4 aus 7.1 galvanisch verbunden, d.h. identisch sein kann. Es wird dann jeweils nur die (eine einzige) elektrische Verbindungsleitung WUPIN_1 bzw. WUPIN_4 zum betreffenden, im Applikationsfeld an Masse GND oder UBATT liegenden Sensor benötigt, indem der Weckstrom I_{WH} bzw. I_{WL} dann je nach Sensorstatus entweder vom betreffenden Sensor oder der internen Eingangsbeschaltung des Weck-Expanders 165 für die Eingänge WUPIN_1 bzw. WUPIN_4 aufgenommen und letzterenfalls dort zur Auswertung herangezogen wird.

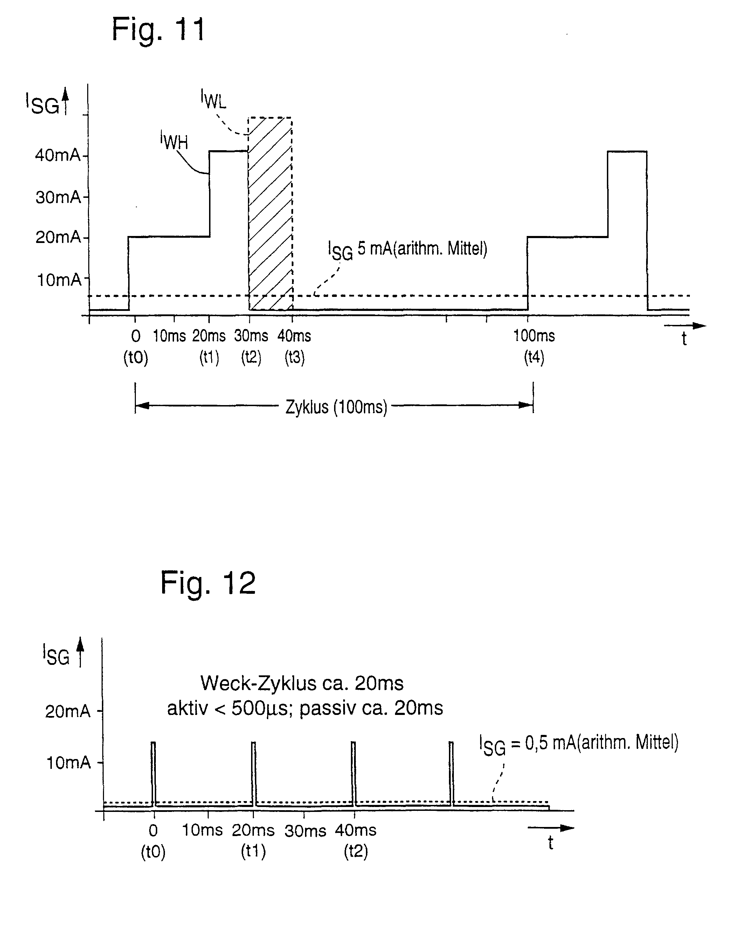

Die stromsparende Funktion dieses Steuergeräts wird aus **Fig. 11** ersichtlich, in der - beispielhaft nur für den Ausgang 32H (WUPPH) und den High-Side-Schalter 7.5 für extern gegen Masse GND zu bestromende Weck-Schalter - der Stromverbrauch über der Zeit in Weckbereitschaft aufgetragen ist. Dabei sind die eingetragenen Stromund Zeitwerte beispielhaft zu verstehen.

Entsprechend der Beschreibung zu **Fig. 5,** dort Ziffer 3., hält die Applikationssoftware des Microcontrollers diesen in einem Lowpower- oder Shutdown-Mode, welcher die Ausgabe von STB = "H" zur Aufrechterhaltung der Stromversorgung über den Schaltkreis 100/100' und den somit eingeschalteten Regler 20 bewirkt. In diesem Zustand nimmt das Steuergerät nur ca. 2mA auf. Nach jeweils 100 ms (t₀ bis t₄) bewirkt der Watchdog-Schaltkreis 164 eine Initialisierung des Microcontrollers 21, die nach ca. 20ms abgeschlossen ist (t₀ bis t₁). Während dieser 20ms beträgt die Stromaufnahme ca. 20 mA.

Anders als im Fall gemäß **Fig. 5** gibt hier der Microcontroller nach seiner Initialisierung durch den Watchdog 164 an seinem Ausgang 32H einen 10 ms dauernden Impuls an den steuerbaren Schalter - Transistor - 7.5 ab, dessen Ausgang - Kollektor - währen der Zeitspanne t₂-t₁ zu bestomende Sensoren im Applikationsfeld mit dem Strom I_{WH} aus der Versorgungsschiene VBATT gegen Masse GND versorgt. Nur während dieser kurzen Zeitspanne ergibt sich so ein (relativ hoher) Gesamtstromverbrauch von hier beispielhaft 40 mA. Der Microcontroller liest kurz vor dem Zeitpunkt t₂ vom Weck-Expander 165 alle erfaßten und in vorbestimmter Weise vorverarbeiteten (z.B. flankengeprüft, etc.) Weckergebnisse ein und fällt im Zeitpunkt t₂ wieder in seinen Lowpower- bzw. Shutdown-Mode zurück, in welchem die Gesamtstromaufnahme des Steuergerätes folglich wieder auf ca. 2mA absinkt. Nach weiteren 70 ms im Zeitpunkt t₄ wiederholt sich der Zyklus erneut.

Unter Außerachtlassung einer entsprechend getakteten Sensorversorgung gegen UBATT über einen entsprechenden Ausgang 32L und elektronischen Schalter 7.7 ergibt sich so ein durchschnittlicher Über-alles-Stromverbrauch von nur ca. 5 mA, worin also die o.e. Minimalbestromung eines oder zweier externer Weck-Schalter mit höheren Strömen eingeschlossen ist.

Die Taktung eines entsprechenden elektronischen Schalters 7.7 für die Bestromung gegen Masse GND von Weck-Sensoren an der Versorgungsschiene UBATT kann zeitverschoben erfolgen. Wegen der relativ langen Initialisierungszeit (t₁-t₀) von 20 ms wird eine entsprechende Komplementärbestromung dann zweckmäßigerweise unmittelbar an t₂ angeschlossen. Eine solche Bestromung I_{WL} ist im Zeitintervall t₃-t₂ gestrichelt angedeutet. Auf diese Weise entstehen dann minimale Initialisierungsenergieverluste.

Unabhängig davon kann aber auch die Taktrate der an den Ausgängen 32H und 32L des Microcontrollers ausgegebenen Taktsteuersignale für die Bestromung von Highside-und Lowside-Wecksensoren unterschiedlich sein. Eine entsprechend niedrigere Wiederholrate z.B. der Weckstromimpulse I_{WL} für entsprechende Highside-Wecksensoren kann den auf letztere entfallenden Stromverbrauch senken.

Diese Art der Stromeinsparung ist im Prinzip auch mit einem Steuergerät gemäß **Fig. 7**, welches einen Halbleiterschaltkreis 200 mit Funktionsumfang und Architektur gemäß **Fig. 6** enthält, ohne Einschränkung möglich. Es sind dazu nur am Microcontroller 21 entsprechende Steuerausgänge 32H und/oder 32L (WUPPH bzw. WUPPL) zu belegen und softwaremäßig zu bedienen.

Der Vollständigkeit halber erfolgt Hinweis, daß die Schaltelemente 7.5 und 7.7 nicht zwingend Schalter im eigentlichen Sinne sein müssen, die das Potential VBATT bzw. das Potential GND an Ihre Ausgänge 7.2 bzw. 7.3 durchschalten. Bei diesen Elementen kann es sich vielmehr genau so gut um Ausgangstreiber von Stromquellen handeln, welche bei Ansteuerung seitens des Microcontrollers die Ströme I_{WH} und I_{WL} als eingeprägte (Maximal-) Ströme bereitstellen.

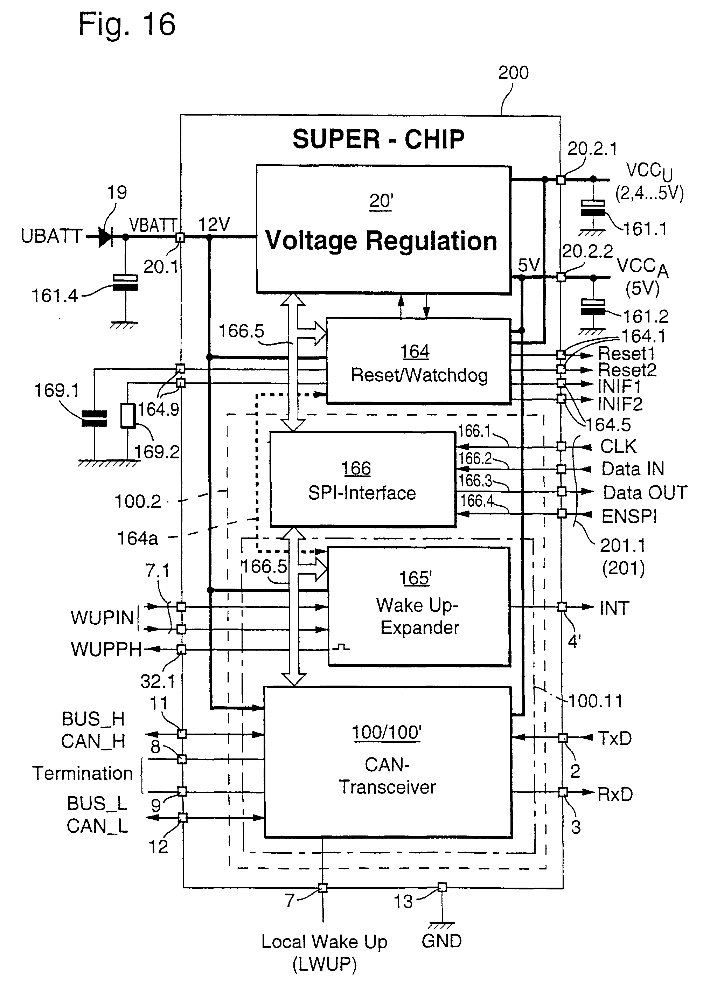

Demgegenüber eröffnen die nachfolgend beschriebenen Fortbildungen des Halbleiterschaltkreises 200 nicht nur eine noch weitere Stromersparnis bei applikationsindividueller Weckbereitschaft eines Steuergerätes, sondern auch noch eine Erhöhung des Weck-Störabstandes sowie der Datensicherheit im Falle einer steuergeräteinternen (d.h. nicht über den Bus auswirksamen) Störung. Sie betreffen zum einen den Wake-Up-Expander 165 aus **Figen. 5 & 6** und zum anderen den Spannungsregler 20 aus **Fig. 6** und sind in der Funktionsblockdarstellung in **Fig. 16** mitumfaßt.

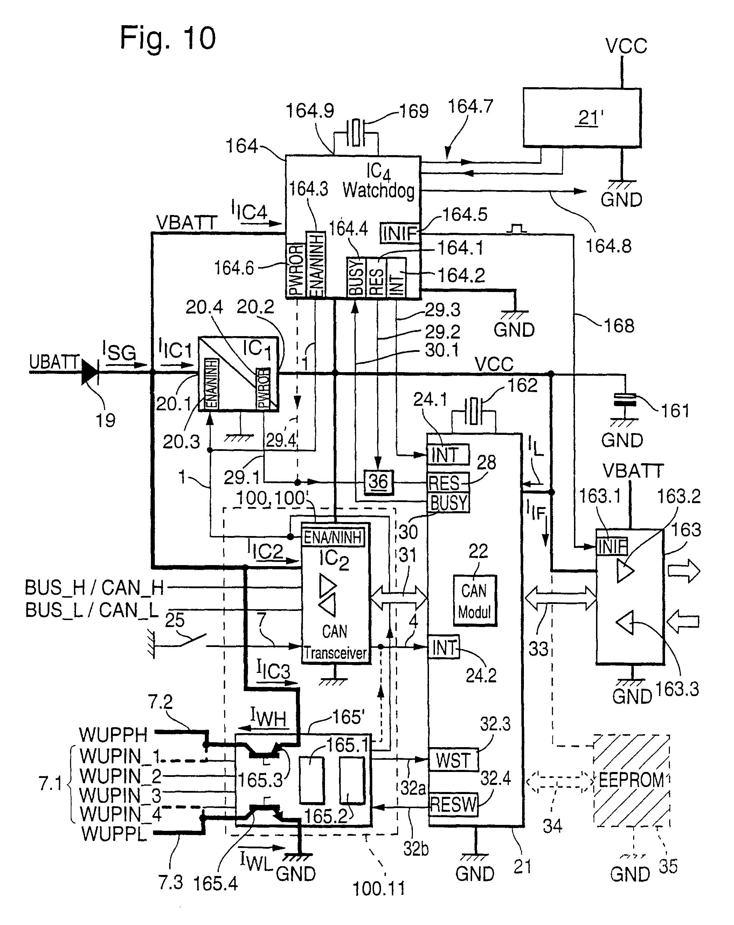

Ausgehend von den **Figen. 5 & 9** ist die erste Fortbildung des Schaltkreises 200 aus dem Funktionsblockschaltbild des ebenfalls diskreten Analogons eines entsprechenden Steuergerätes gemäß **Fig. 10** verständlich.

Demnach ist ein Weck-Expander 165' vorgesehen, der einen steuerbaren elektronischen Schalter bzw. eine steuerbare Stromquelle 165.3 und/oder 165.4 integral umfaßt. Erstere/r bzw. zweitere/r ersetzen also den/die entsprechende/n externe/n 7.5 bzw. 7.7 in **Fig. 9.** Die Elemente 165.3 und 165.4 können also beispielsweise das Potential VBATT bzw. das Potential GND an Ihre Ausgänge 7.2 bzw. 7.3 durchschalten. Genau so gut können diese Elemente bei entsprechender Ansteuerung im Weck-Expander die Ströme I_{WH} und I_{WL} als eingeprägte (Maximal-)Ströme bereitstellen.

Auch hier entsprechen die Eingänge 7.1 WUPIN_1 bis WUPIN_4 den Weckeingängen in Fig. 5. über sie erfolgt die Rückführung der Wecksignale von den aus der Schiene 7.2 bzw. 7.3 spannungsversorgten Wecksensoren im Applikationsfeld. Die gestrichelte Verbindungen 7.8 bzw. 7.9 zwischen dem Ausgang WUPPH und dem Weckeingang WUPIN_1 bzw. dem Ausgang WUPPL und dem Weckeingang WUPIN_4 soll auch hier versinnbildlichen, daß im oben genannten Falle einer Stromquelle 165.3 bzw. 165.4 gleichwohl auch die Schiene 7.2 mit dem Eingang WUPIN_1 aus 7.1 bzw. die Schiene 7.3 mit dem Eingang WUPIN_4 aus 7.1 galvanisch verbunden, d.h. identisch sein kann. Es wird dann jeweils nur die (eine einzige) elektrische Verbindungsleitung WUPIN_1 bzw. WUPIN_4 zum betreffenden, im Applikationsfeld an Masse GND oder UBATT liegenden Sensor benötigt, indem der Weckstrom I_{WH} bzw. I_{WL} dann je nach Sensorstatus entweder vom betreffenden Sensor oder der internen Eingangsbeschaltung des Weck-Expanders 165' für die Eingänge WUPIN_1 bzw. WUPIN_4 aufgenommen und letzterenfalls dort zur Auswertung herangezogen wird. In einem solchen Falle kann die gestrichelte Verbindung dann gleichwohl auch im Innern des Expanders 165' vorgesehen sein, falls auf die in Verbindung mit **Fig. 9** beschriebene Rückmeldefunktion aus dem Applikationsfeld verzichtet wird und ein erfindungsgemäßer Schaltkreis 200 klein ausgeführt werden soll und hierfür eine kleinstmögliche Zahl von äußeren Anschlüssen aufweisen muß.

Der Expander 165' umfaßt wenigstens einen Zeitgeber 165.1 und wenigstens ein/e rücksetzbare/s Speicherzelle bzw. -register 165.2. Besagter Zeitgeber kann ein autonomer oder ein vom Watchdog-Schaltkreis 164 gesteuerter sein (eine entsprechende Wirkverbindung 164a zwischen 164 und 165' ist hier weggelassen, jedoch in **Fig. 16** angedeutet). Der Expander 165' (IC3) und der Transceiver 100/100' (IC2) sind zu einer komplexeren Schaltkreisfunktion 100.11 zusammengefaßt.

Der Zustand der Speicherzelle bzw. dieses Speicherregisters 165.2 ist über einen Pfad 32a an einen Weck-Status-Eingang 32.3 (WST) des Microcontrollers 21 übertragbar. Von einem Rücksetzausgang 32.4 des Microcontrollers 21 kann über eine Verbindung 32b die Rücksetzung dieser Speicherzelle bzw. dieses Registers erfolgen. Der Expander 165' kann ausgangsseitig mit den ENA/NINH-Eingängen 20.3 bzw. 164.3 des Reglers 20 bzw. Watchdogs 164 in Verbindung stehen. Des weiteren kann er ausgangsseitig noch mit dem Ausgang 4 des Transceivers 100/100' zusammengefaßt sein. Durch diese Merkmale wird ein Betrieb in applikationsspezifischer Weckbereitschaft gemäß **Figen. 12 & 13** möglich.

Gesteuert von seinem Zeitgeber 165.1 schaltet der Expander 165' durch entsprechende Ansteuerung wenigstens eines seiner steuerbaren Schalter 165.3 und 165.4 wenigstens einen der Ausgänge 7.2 und 7.3 an VBATT bzw. Masse GND, so daß die Abtastströme I_{WH} bzw. I_{WL} fließen können. Im vorliegenden Beispiel ist von Strömen in der Größenordnung von 10-20 mA ausgegangen. Dabei geschieht diese Anschaltung im Zeitabstand von 20 ms. Die Schaltzeit beträgt beispielsweise nur 500 *µ*s. Der von einem entsprechenden Steuergerät in applikations-spezifischer Weckbereitschaft über den Expander 165' aufgenommene Betriebsstrom kann somit im arithmetischen Mittel nur 0,5 mA betragen.

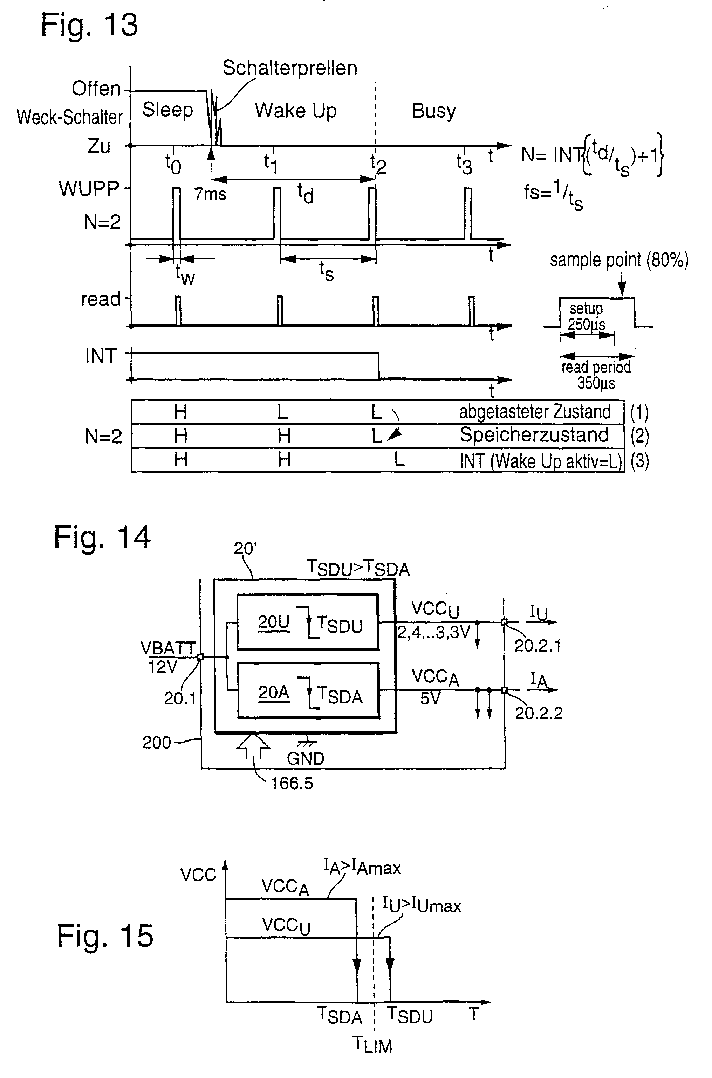

Gemäß **Fig. 13** kann die Auswertung wie folgt geschehen. Im Abstand von 20 ms werde ein z.B. am Eingang WUPIN_1 von 7.1 angeschlossener und gegen Masse GND schaltender Schalter durch das Signal WUPPH abgefragt, beispielsweise über einen hier nicht gezeigten Widerstand, der im Verlaufe des Strompfades zwischen 165.3 und besagtem Schalter angeordnet ist. Das Signal WUPPH besteht hier aus sehr kurzen Impulsen der Dauer t_{w}. Über dem Signal WUPPH ist die Spannung an besagtem Schalter in zunächst offenem und dann (gegen Masse GND) geschlossenem Zustand dargestellt. Ca. 7 ms nach dem Zeitpunkt t₀ wechsle der Schalter vom offenen in den geschlossenen Zustand und damit das Potential am Weck-Eingang WUPIN_1 von "H" nach "L". Die Logik des Expanders 165'erkennt den Zustand "L" am Eingang WUPIN_1 als aktives Wecksignal. Unter dem Signa: WUPPH ist der die Speicherzelle bzw. das Speicherregister 165.2 ladende Lesetakt angedeutet, und darunter beispielhaft das vom Expander 165' über die Leitung 4 an den Microcontroller 21 abgegebene Interrupt-Signal INT. Es werden hier beispielsweise Leseimpulse mit einer Länge von 350 *µ*s zugrundegelegt, wobei die eigentliche Zustandsaquisition nach Ablauf einer Setup-Zeit von ca. 250 *µ*s jeweils erfolgt.

In Zeile (1) der Tabelle darunter ist der in Zeitpunkten t₀, t₁, t₂, etc. jeweils eingelesene Zustand, in Zeile (2) ein zu diesen Zeiten angenommener Zustand der Speicherzelle bzw. im Speicherregister 165.2 und in Zeile (3) der daraus abgeleitete logische Pegel des INT-Signales dargestellt, wobei der Übergang "H->L" hier beispielhaft die weckauslösende Interrupt-Signalflanke darstellt.

Ersichtlich wird zum Zeitpunkt t₀ der Zustand "H" gelesen, zum Zeitpunkt t₁ der neue Zustand "L" (erstmals) gelesen und in eine erste von N Speicherzellen eingelesen. Erst nach dem hier beispielhaft zweiten Einlesen des Zustandes "L" im Zeitpunkt t₂ wird dieser Zustand in die N-te (letzte) Speicherzelle im Speicherregister 165.2 geschrieben und infolgedessen dann der INT-Zustand "H" durch den Zustand "L" ersetzt.

Die zwischen der Zustandsänderung am Weckeingang WUPIN_1 und der Auswertung in den Speicher verstreichende Zeit t_{d} kann also größer gewählt werden als die Abtastperiodendauer tₛ. Dadurch erhöht sich der Störabstand gegen Fehlsignale infolge Schalterprellens oder durch elektromagnetische Eintreuungen gegenüber einer Einfachabtastung. Zu diesem Zweck kann die Speicherung des Zustandes "L" auch erst nach mehr als zweimal aufeinanderfolgender Einlesung erfolgen, sofern die damit verbundene Verzögerung tolerabel ist. Der Grad dieser "digitalen Filterung" ist durch die Zahl N festgelegt, welche angibt, wie oft aufeinanderfolgend ein Weckereignis erfaßt werden muß, bis der Wahrheitszustand der Erfassung zur Auswertung in den Speicher geschrieben wird, wobei gilt N = INTEGER {(t_{d}/tₛ)+1}. In diese Zahl geht dann also die Abtastperiodendauer tₛ ein. Diese kann entweder von einem Zeitgeber 165.1 des Expanders 165' abgeleitet sein oder - falls letzterer via 164a von der Watchdog-Funktion 164 mit einem Zeitoder Frequenzbezugssignal versorgt wird - mit einer Periodendauer eines internen Referenzsignales der Watchdog-Funktion 164 zeitlich verkettet sein. Die Erfindung umfaßt, daß die vorgenannte Zahl N individuellen Applikationserfordernissen gemäß wenigstens für einen der WUPIN-Eingänge 7.1 programmierbar ist.

Die Praxis zeigt allerdings, daß auch bei N = 1 (Direktabtastung) schon eine geeignete Wahl des Acquisitionszeitpunktes innerhalb der Lesezeit von hier beispielsweise 350 *µ*s den Störabstand zu optimieren vermag, so daß die Filterung durch Verifikation eines mehrmals gleichen, neuen Leseergebnisses bei vielen Anwendungen nicht erforderlich ist.

Ersichtlich ist durch dieses Fortbildung eine Stromersparnis Hand in Hand mit einer hohen Störfestigkeit erreichar.

Denn während der Wake-Up-Expander 165 gemäß **Fig. 5** nur für für Wecksignale in Frage kommt, die anfallen, so lange die Spannungsregelung vom Transceiver 100/100' mit einem Einschaltsignal beaufschlagt ist, also beispielsweise in der Betriebsart STANDBY des Transceivers 100/ 100', geschieht in diesem Falle die Abtastung von Weck-signalen jedenfalls ohne Beteiligung des Microcontrollers 21, der folglich während der Abtastung und des Erkennens solcher Signale gänzlich stromlos sein kann.

Gleichwohl kann der Microcontroller natürlich auch wie in **Fig. 5** bestromt in einem Lowpower- bzw. Shutdown-Mode verharren, aus dem er zwecks Einlesung an seinem Eingang 32.3 eines wie vorbeschrieben ggfs. schon digital vorgefilterten Wecksignales durch die Watchdog-Funktion 164 in hierfür ausreichende Betriebsbereitschaft übergeführt werden muß.

Die Zahl N sowie übrige Funktionscharakteristika des Wake-Up-Expanders 165' wie z.B. Ansprechpolarität, Ansprechart (pegelsensitiv/flankensensitiv), Hysteresis und Triggerschwelle bezüglich eines der oder aller Eingänge 7.1 können auch hier wählbar und insoweit auch programmierbar vorgesehen sein. Dabei können besondere Programmiermittel des Halbleiterschaltkreises 200 eine nur einmal durchführbare Programmierung ermöglichen - letztere ggfs. auch initiierbar über das Interface 166 und den seriellen Kommunikationspfad 201, 201'1 zu dem wenigstens einen Microcontroller 21, 21'.

**Fig. 14** zeigt funktionsblockschematisch die Fortbildung des Reglers 20 zu einer komplexeren Reglereinheit 20'. Sie ist insoweit erweitert, als sie zwei separate Regler 20U und 20A umfaßt. Der Regler 20U erzeugt aus dem Potential VBATT an der Chip-Eingangsklemme 20.1 an einer ersten Chip-Ausgangsklemme 20.2.1 eine erste Betriebsspannung VCC_{U} für den Microcontroller 21. Er kann vorzugsweise für einen geringeren maximalen Ausgangsstrom I_{Umax} von z.B. 20...50mA ausgelegt sein.

Der Regler 20A erzeugt aus VBATT an einer zweiten Chip-Ausgangsklemme 20.2.2 eine zweite Betriebsspannung VCC_{A} für wenigstens alle übrigen logischen Schaltkreise des betreffenden Steuergerätes. Er ist vorzugsweise für einen größeren maximalen Ausgangsstrom I_{Amax} von z.B. 100...300mA ausgelegt.

Die Regler 20U und 20A sind sowohl schaltkreismäßig als auch funktionsmäßig voneinander unabhängig. Jedoch sind sie gemeinsam oder in funktionaler Wirkverbindung elektronisch gesteuert ab- und einschaltbar. Dabei kann vorgesehen sein, daß der Regler 20U als erster einschaltet und als letzter abschaltet. Dieser Regler ist vorzugsweise als Linearregler ausgeführt. Der Regler 20A kann als Linear- oder als Schaltregler ausgeführt sein, wie weiter unten ausgeführt. Ein solcher Schaltregler 20A kann die von der Applikation benötigte Speiseleistung (VCC_{A} x I_{A}) von einem höheren Versorgungspotential VBATT ableiten, ohne daß der Halbleiterschaltkreis 200 als Ganzes dadurch thermisch überlastet und der energetische Wirkungsgrad eines entsprechenden Steuergerätes merklich verschlechtert wird.

Für den Fall einer defektbedingten Überlastung sieht die Erfindung des weiteren eine kontrollierte, thermisch gesteuerte Abschaltung beider Regler gemäß **Fig. 15** vor. In dieser Darstellung ist bereits der Technologieentwicklung gemäß angenommen, daß die logische Versorgungsspannung VCC_{U} für den Microcontroller niedriger ist als die logische Versorgungsspannung VCC_{A} der übrigen Elektronik des betreffenden Steuergerätes. Ersichtlich ist die Abschalttemperatur T_{SDU} für die Versorgungsspannung VCC_{U} höher ausgelegt als die Abschalttemperatur T_{SDA} für die Versorgungsspannung VCC_{A}. Erfindungsgemäß ist angesichts der thermischen Kopplung beider Regler über das Chip-Substrat dafür gesorgt, daß die Abschaltung des Reglers 20U unter allen möglichen Überlastungszuständen des Reglers 20A jedenfalls nicht unter einer definierten Grenztemperatur T_{LIM} erfolgen kann.

Durch diese Maßnahme ist sichergestellt, daß der Microcontroller 21 auch im Falle des Auftretens einer Störung im Applikationsfeld, welche die die Stromversorgung überlastet, von der Klemme 20.2.1 aus noch kurze Zeit mit Spannung VCC_{U} versorgbar ist, damit der Microcontroller aktuelle Daten noch in sein EEPROM abspeichern kann. Dieses Schutzkonzept geht also davon aus, daß ein defektbedingt zu hoher Stromfluß jeweils durch vom Spannungsregler 20A versorgte Komponenten verursacht ist. Dies ist zulässig deshalb, weil ein zu hoher Stromfluß I_{U} des/der Microcontroller/s aus einer Fehlfunktion des/derselben resultiert, die in der Regel immer ein Nichtmehrabspeichernkönnen von Daten involviert.

Die Funktionsblockdarstellung gemäß **Fig. 16** veranschaulicht einen um die vorgenannten Fortbildungen erweiterten Halbleiterschaltkreis 200. Ohne Beschränkung der Allgemeinheit weist dessen Weck-Expander 165' hier beispielhaft nur einen Ausgang 7.2 zur Ausgabe von WUPPH-Stromimpulsen auf. Beispielhaft ist die Reset- und Watchdog-funktion 164 dahingehend erweitert, daß sie wenigstens zwei Microcontroller unabhängig voneinander zurückzusetzen und in diesem Zusammenhang auch zwei unterschiedliche Sperrsignale INIF1 und INIF2 abzugeben vermag. Die Verbindung 164a symbolisiert eine Wirkverbindung zwischen der Reset/Watchdog-Funktion 164 und dem Weck-Expander 165' beispielsweise hinsichtlich eines zeitbestimmenden Signals wie bereits oben erwähnt. Auch hier sind der Weck-Expander 165' und der Bus-Transceiver 100/100' zu einer komplexeren Schaltkreisfunktion 100.11 zusammengefaßt.

Die in Verbindung mit **Fig. 3** oben erwähnte und in #) näher beschriebenen Spannungsüberwachungsfunktion des Blockes 110 des Transceivers 100/100' wird hier beispielhaft vollumfänglich von der Reset/Watchdog-Funktion 164 realisiert. Nicht zuletzt aufgrund der SPI-Architektur ist dies jedoch nicht zwingend; je nach Auflösungsgrad der einzelnen Funktionen in einem Chip-Layout können die Ausgangsspannungen VCC_{U} und VCC_{A} gleichwohl auch von einem entsprechend erweiterten Block 110, der dem Transceiver 100/100' zugeordent ist, überwacht werden, d.h. je nach Erfordernis auch zusätzlich.

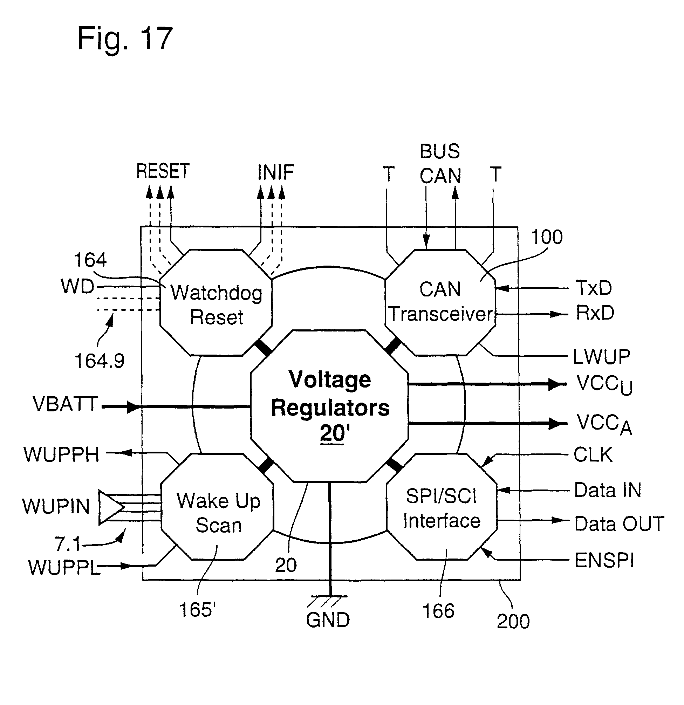

**Fig. 17** veranschaulicht die entsprechende Funktionsbelegung eines Halbleitersubstrats. Selbstverständlich können im Zuge der Integration einzelne Funktionen auch in Teilen blockübergreifend verwirklicht werden. Die **Figen.** **18 - 20** machen dies beispielhaft deutlich.

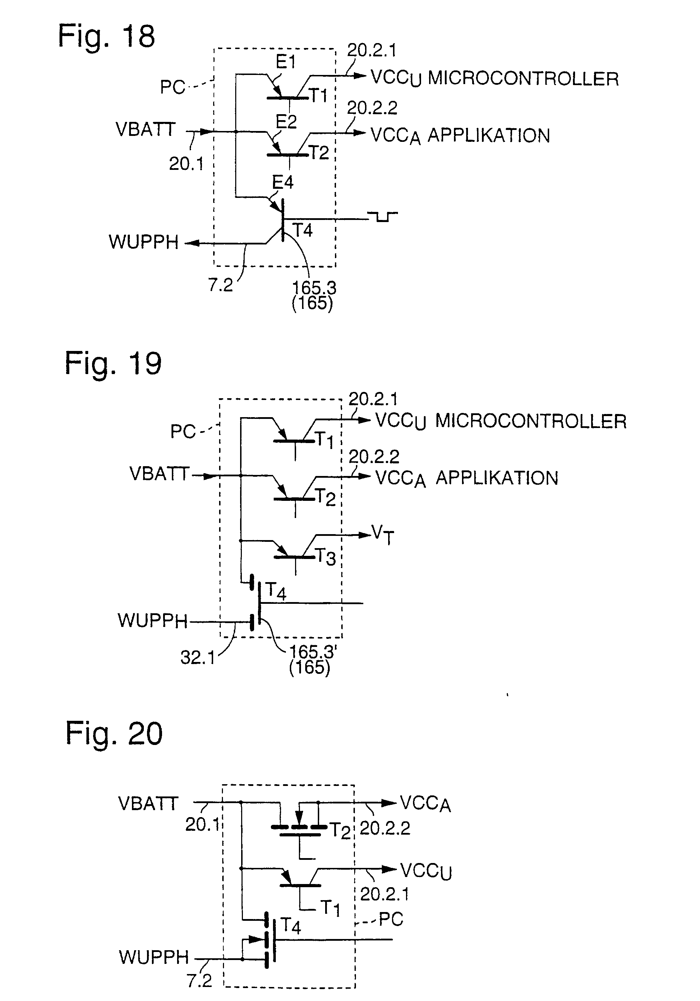

Gemäß **Fig. 18** können demnach z.B. Längstransistoren T₁ und T₂ als Stellelemente der Regler 20U und 20A sowie wenigstens ein steuerbarer Schalter 165.3 des Weck-Expanders 165' zur Abgabe eines WUPPH-Signals zur getakteten Bestromung externer Weck-Sensoren innerhalb einer einzigen Leistungszelle PC verwirklicht sein, die unter Robustheitsgesichtspunkten thermisch optimiert und ggfs. auch überwacht ist.

Entsprechendes gilt für Reset-, Watchdog- und Zeitgeberfunktionen im Hinblick auf eine topologische Optimierung eines entsprechenden Schaltkreises.

Des weiteren sind gemäß **Fig. 19** und **Fig. 20** die aktiven Elemente der vorgenannten Leistungszelle PC nicht auf Elemente gleich beschaffener Struktur bzw. gleichen Leitungstyps beschränkt. Vielmehr können Elemente unterschiedlicher Struktur und unterschiedlichen Leitungstyps Anwendung finden, also z.B. eine FET-Struktur für den Taktschalter 165.3' und bipolare Strukturen für Linearregler, oder bipolare und FET-Strukturen für Linearregler und/oder Schaltregler gemixt, etc..

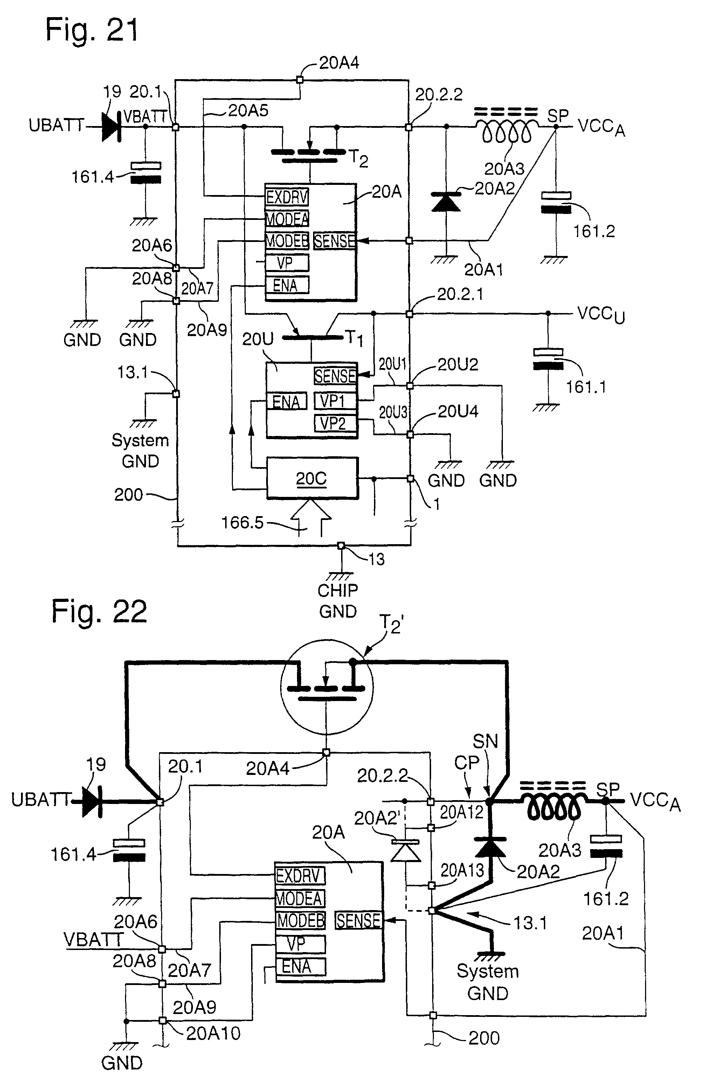

**Fig. 21** zeigt in diesem Zusammenhang als weiteres Fortbildungsdetail das Wirkschaltbild einer Spannungsregelfunktion 20' für eine besonders universelle Anwendbarkeit des Schaltkreises 200. Über schon bekannte Chip-Anschlüsse hinaus weist der Halbleiterschaltkreis 200 zu diesem Zweck noch weitere Chip-Anschlüsse 20A4, 20A6, 20A8, 20A10, 20A11, 20U2 und 20U4 auf. Des weiteren kann ein besonderer (SPI-aufgelöster) Anschluß 1 vorgesehen sein.

Dabei ist hier beispielhaft der einen vorzugsweise bipolaren Längstransistor T₁ mitumfassende Regler 20U für die Versorgungsspannung VCC_{U} als Linearregler ausgeführt, und der einen Feldeffekttransistor T₂ umfassende Regler 20A für die Versorgungsspannung VCC_{A} als programmierbarer Multi-Mode-Regler ausgeführt. Ohne Beschränkung der Allgemeinheit kann der Regler 20U gleichwohl als Schaltregler realisiert sein. Dieser Fall ist hier nicht figürlich ausgeführt und beschrieben, da alles, was nachfolgend bezüglich des Reglers 20A als Schaltregler erläutert wird, selbstverständlich auch auf einen entsprechenden als Schaltregler ausgeführten Regler 20U anwendbar ist. Eine Ausführung als Schaltregler kann vorteilhaft sein für Steuergeräte mit mehr als zwei Microcontrollern oder zusätzlichen controllerexternen Logikfunktionen mit erheblichem Strombedarf, oder wenn - ggfs. so beschaffene - Steuergeräte innerhalb eines besonders weiten Eingangsspannungsbereichs betrieben werden können sollen. Zur Versorgung eines oder nur zweier Microcontroller kommt ein Linearregler jedoch in Frage, zumal sein Vorteil fehlender Störinduktion besonders kostengünstige Gerätekonzepte ermöglicht. Die Regler 20A und 20U umfassen auch die bekannten Bias-Elemente zur potentialgerechten Ansteuerung der Transistoren T₁ und T₂, also z.B. Spannungsteiler, Offsetquelle(n) oder Ladungspumpe(n) etc..

Für die Regler 20U und 20A ist des weiteren eine Einbzw. Abschaltsteuerung 20C vorgesehen, welche jeweils separat auf ENA-Eingänge beider Regler wirkt und beispielhaft über den SPI-Bus 166.5 ansprechbar ist. Vorliegend stellt diese Abschaltsteuerung beispielhaft ein Pin-Signal ENA/NINH an einem zusätzlichen Anschluß 1 des Schaltkreises 200 bereit.

Gezeigt ist beispielhaft eine Programmierung und eine Außenbeschaltung des Regler 20A für seinen Betrieb als tiefsetzender Schaltregler (Buck Switch Mode). Zu diesem Zweck ist der Schaltkreis an seinem Anschluß 20.2.2 extern mit einer gegen Masse GND geschalteten Freilauf-Diode 20A2 und einer Speicherdrossel 20A3 beschaltet, welche ausgangsseitig auf die Speicherkapzität 161.2 wirkt, an der die Spannung VCC_{A} abnehmbar ist. Diese Konfiguration eines tiefsetzenden Reglers erweist sich als überlegen, wenn ein entsprechendes Steuergerät sehr großen Temperaturschwankungen ausgesetzt ist, da ein solcher Regler die geringstmögliche Beanspruchung der Speicherkapazität 161.2 bewirkt. Diese geringe Beanspruchung gewährleistet eine größtmögliche Lebensdauer eines entsprechenden Kondensators. Da hier geeignete (Elektrolyt-) Kondensatoren - je nach Beanspruchung - eine erheblich geringere MTBF als der erfindungsgemäße Schaltkreis oder der Microcontroller erreichen können, maximiert ein solcher Regler letztlich die Verfügbarkeit eines Steuergerätes mit dem erfindungsgemäßen Schaltkreis.

Zwischen die Anschlüsse 24.2.2 und 20.1 des Schaltkreises 200 ist chipintern die steuerbare Strecke des Regeltransistors, hier beispielhaft eines MOSFET-Transistors, geschaltet, welcher gateseitig vom Regler 20A angesteuert wird, der einen Eingang SENSE zur Erfassung von VCC_{A} als Istgröße aufweist.

Diese Ein- und Abschaltsteuerung kann die schon oben erwähnte zeitunterschiedliche Ein- und Abschaltung der Regler 20U und 20A und ggfs. auch die verzögerte thermische Abschaltung des Reglers 20U integral leisten. Das am Anschluß 1 SPI-aufgelöst abgreifbare ENA/NINH-Signal kann im Falle der vorgenannten Steuerung der Regler 20U und 20A extren (im Applikationsfeld) für weitere Stromspar-Steuerzwecke von Interesse sein.

Der Regler 20A weist vorliegend einen Ausgang EXDRV zur alternativen Ansteuerung eines externen Regeltransistors T₂', einen Eingang MODEA zur Programmierung seines Betriebes mit internem oder externem Regeltransistor, eine Eingang MODEB zur Programmierung seines Betriebes als Linear- oder Schaltregler und einen schon bekannten Eingang ENA zur Abschaltung bzw. Einschaltung des Reglers auf.

Der Regler 20U weist ebenfalls einen Eingang SENSE zur Erfassung von VCC_{U} als Istgröße und darüber hinaus zwei Eingänge VP1 und VP2 zur Programmierung seiner Ausgangsspannung VCC_{U} auf.

Der Ausgang EXTRV des Reglers 20A ist über eine Pfad 20A5 mit dem Schaltkreisanschluß 20A4, sein Eingang MODEA über einen Pfad 20A7 mit dem Programmieranschluß 20A6, sein Eingang MODEB über einen Pfad 20A9 mit dem Programmieranschluß 20A8, sein Eingang VP mit dem Programmieranschluß 20A10 verbunden.

Der Eingang VP1 des Reglers 20U ist über einen Pfad 20A11 mit dem Programmieranschluß 20U2, sein Eingang VP2 über einen Pfad 20U3 mit dem Programmieranschluß 20U4, und sein SENSE-Eingang mit einem Anschluß 20A11 des Schaltkreises 200 verbunden. Letzterer ist extern vom Schaltkreis 200 mit dem Verbindungspunkt der Speicherdrossel 20A3 und der Speicherkapazität 161.2 verbunden.

Beispielhaft stellt vorliegend die externe Verbindung des Anschlusses 20A6 mit Masse GND den Betrieb des Reglers 20A mit internem Regeltransistor T₂ ein, und die externe Verbindung des Anschlusses 20A8 mit Masse GND stellt dessen Betriebsweise als Schaltregler ein.

Im Gegensatz dazu stellt beim Regler 20U beispielsweise eine externe Verbindung beider Anschlüsse 20U2 und 20U4 mit Masse GND dessen Ausgangsspannung auf
VCC_{U} = 5 Volt, des Anschlusses 20U2 mit VBATT und des Anschlusses 20U4 mit Masse GND auf 3,3 Volt, des Anschlusses 20U2 mit Masse GND und des Anschlusses 20U4 mit VBATT auf 3,0 Volt und beider Anschlüsse 20U2 und 20U4 mit VBATT auf 2,8 oder 2,4 Volt ein (diese Spannungswerte sind beispielhaft zu verstehen).

In **Fig. 22** ist eine entsprechende Programmierbarkeit der Ausgangsspannung VCC_{A} auch für den Regler 20A angedeutet.

Diese Fortbildung erlaubt eine einfache Anpassung des Halbleiterschaltkreises 200 an unterschiedliche Versorgungsanforderungen unterschiedlicher Microcontroller 21 unterschiedlichster Technologien. Der Rahmen der Erfindung umfaßt gleichwohl außer einer solchen externen Pin-Programmierung des Schaltkreises auch eine entsprechend nichtflüchtige, einmalige Fix-Programmierung des Schaltkreises beispielsweise durch Fuse- oder Antifuse-Programming, welches ggfs. sogar durch besondere interne Mittel vermittels eines entsprechenden Programmiergerätes über den SPI-Pfad ermöglicht werden kann (Hidden One Time Pin Programming HOTPP).

In diesem Sinne sind auch die Programmieranschlüsse zu verstehen: Es kann sich hierbei um normale, extern beschaltbare Schaltkreisanschlüsse, oder um extern unzugängliche Programmieranschlüsse am Halbleiter-Wafer für z.B. eine Bond-Programmierung, oder um Fuse- oder Antifuse-Terminals handeln.

**Fig. 22** veranschaulicht weitere Fortbildungsdetails und die alternative Externbeschaltung des Schaltkreises 200 für Schaltbetrieb mit erhöhtem Ausgangsstrom I_{A} des Reglers 20A.

Hierfür ist eine alternative Betriebsweise des Reglers 20A dargestellt, nämlich mit einem externen Regeltransistor T₂'. Für diese Betriebsweise liegt hier beispielhaft der Anschluß 20A6 am Potential VBATT und der Anschluß 20A8 an Masse GND; die Beschaltung von 20A8 ebenfalls mit VBATT würde hingegen die Betriebsweise des Reglers 20A in Verbindung mit T2' als Linearregler einstellen.

Des weiteren ist hier am Schaltkreis 200 ein Programmiereingang 20A10 für die Ausgangsspannung VCC_{A} angedeutet, der hier beispielhaft an Masse GND liegt, um z.B. VCC_{A} auf 3,3 Volt fest einzustellen, während eine Verbindung mit dem Potential VBATT oder z.B. dem Anschluß 20.2.1 mit der - beispielsweise zeitlich voreilenden - Ausgangsspannung VCC_{U} die Ausgangsspannung VCC_{A} z.B. auf 5 Volt einstellen kann.

Ferner ist angedeutet, daß auf dem Halbleitersubstrat des Schaltkreises 200 für tiefsetzende Schaltregelung eine Freilauf-Diode 20A2' ebenfalls ausgebildet sein kann, wobei diese an zwei weitere Anschlüsse 20A12 und 20A13 des Schaltkreises 200 geführt sein kann. Sie kann aber auch - ggfs. zusätzlich - mit wenigstens einer ihrer zwei Elektroden schaltkreis- bzw. chipintern mit dem Chip-Anschluß 20.2.2 und/oder einem speziellen stromtragfähigen Chip-Anschluß 13.1 System GND verbunden sein, welcher im betreffenden Steuergerät mit dessen Zentralmasse (Applikationsmasse) verbunden wird wie unten in Verbindung mit **Fig. 28** und **Fig. 30** erläutert.

Ob und welche von solcherart schaltkreis- bzw. chipinternen (Mehrfach-)Verbindungen im Einzelfall ausgebildet wird, hängt von der Realisierungstechnologie des Halbleiterschaltkreises ab. In jedem Falle dienen entsprechende Verbindungen in Zusammenspiel mit dem topologischen und thermischen Chip-Design sowie der Anordnung der einzelnen Anschlüsse am Halbleiterschaltkreis 200 einer möglichst hohen Unterdrückung von Schaltspikes im Empfangsblock 120 bzw. 120' des Transceivers 100, 100' unter Betriebsbedingungen außerhalb seines SLEEP-Modes.

Vorzugsweise kann eine interne Freilauf-Diode 20A2' zur Verwendung für niedrigere Ausgangsströme bis beispielsweise 100 mA vorgesehen sein. Des weiteren kann wenigstens ein Anschlußpin, welcher mit einer der beiden Elektroden der internen Freilauf-Diode 20A2' in Verbindung steht, unmittelbar neben dem Anschlußpin 20.2.2 bzw. 13.1 des Schaltkreises angeordnet sein, so daß ein Anschluß der internen Freilauf-Diode vermittel eines geeigneten Designs der Leiterplatte eines entsprechenden Steuergerätes im Zuge der Bestückung des Schaltkreises mit geringstmöglicher Streuinduktivität möglich ist. Beispielsweise kann so auch eine interne, isolierte Freilauf-Diode 20A2' angeschlossen werden, indem sowohl für die Anschlußpins 20.2.2 und 20A12 als auch für die Anschlußpins 13.1 und 20A6 leiterplattenseitig jeweils ein gemeinsames, durchgehendes Anschlußpad vorgesehen wird, während für den Betrieb mit einer externen Freilauf-Diode 20A2 lediglich wenigstens ein solches Anschlußpad in zwei einzelne aufzulösen ist.

In den Rahmen der Erfindung fällt weiter, eine interne Freilauf-Diode z.B. für geringere Ausgangsströme durch einen gesteuerten elektronischen Freilauf-Schalter, etwa einen Power-MOS-Transistor zu ersetzen, welcher für Leitung während der Stromschubphasen vom Regler 20A entsprechend angesteuert wird (gesteuertes Synchronventil), was hier figürlich jedoch nicht weiter ausgeführt ist. Bei einer solchen Fortbildung kann die im Halbleiterchip anfallende und von diesem abzuführende thermische Verlustleitung minimiert werden.

Anhand der Betriebskonfiguration mit einem externen Schalttransistor veranschaulicht **Fig. 22** des weiteren, wie ein ausreichend hoher Störabstand im Empfangsblock 120 bzw. 120' des Transceivers 100/100' auch bei höheren Ausgangsströmen erreicht werden kann. Die eingangsseitige Speicherkapazität 161.4 liegt hier direkt am Anschlußpin des Chip-Anschlusses 20.1 des Schaltkreises 200. Ein gateseitig mit dem Chip-Anschluß 20A4 und mit seinem ersten Schaltstreckenanschluß mit der Speicherkapazität 161.4 an 20.1 wirkverbundener POWER-FET speist mit seinem zweiten Schaltstreckenanschluß einen Versorgungsknoten SN.

Der Versorgungsknoten SN ist einerseits mit einer Elektrode der externen Freilauf-Diode 20A2 und dem ersten Anschluß der Speicherdrossel 20A3 und über einen besonderen Pfad CP auf der Leiterplatte des betreffenden Steuergerätes mit dem Anschluß 20.2.2 des Halbleiterschaltkreises 200 verbunden. Am zweiten Anschluß der Speicherdrossel 20A3 ist die Speicherkapazität 161.2 und - hier nicht gezeigt - der Eingang SENSE des Reglers 20A angeschlossen. Die jeweils anderen Anschlüsse sowohl der Freilauf-Diode 10A2 als auch der Speicherkapazität 161.2 sind unmittelbar mit dem Anschlusses 13.1 am Halbleiterschaltkreis 200 und eben-dort auch mit der Zentralmasse des Steuergerätes (Applikations-Masse) System GND verbunden.

Erkennbar werden hierbei Schaltspikes mit hohem Strom nicht über das Chip-Substrat des Schaltkreises 200, sondern an diesem vorbei geführt, da die wirksame Freilauf-Diode 20A2 hier außerhalb des Halbleitersubstrates den Speicherstrom der Drossel 20A3 vom Knoten SN ableitet. Dies ist die Voraussetzung dafür, daß auch die elektromagnetische Störbeaufschlagung des Halbleitersubstrates gering gehalten werden kann, was durch ein geeignetes Design der Leiterplatte eines entsprechenden Steuergerätes, welche den Halbleiterschaltkreis 200 trägt, unterstützt werden kann. Vorteilhafterweise wird z.B. der Pfad CP und der Knoten SN topologisch so dimensioniert bzw. auf der Leiterplatte platziert, daß der Knoten SN (a) vom Halbleiterschaltkreis durch eine magnetische Sperrfläche beabstandet ist und (b) auf der Leiterplatte im Bereich der magnetischen Auslöschungslinie des den Schaltkreis 200 umfließenden störfrequenten Ampereflusses liegt.

Durch Einsatz des Schaltkreises in einer solchermaßen EMV-optimierten Anschlußumgebung kann aber nicht nur eine ausreichende Isolation des Empfangsblockes 120 bzw. 120' des Transceivers 100, 100' gegenüber Störeinstreuungen des Schaltreglers realisiert werden.

Auf diese Weise kann auch die - durch Linearregelung - sehr störarm gewonnene Versorgungsspannung VCC_{U} für einen hohen Funktionsstörabstand des Microcontrollers 21 ohne größeren Siebaufwand genutzt werden auch noch dann, wenn sie z.B. nur 2,8 oder 2,4 Volt beträgt.

Im Rahmen der Erfindung umfaßt ein solcher Multi-Mode-Regler alle für die alternative Betriebsweisen mit internem und externem Regeltransistor sowie für deren alternative Betriebsweisen als Linear- oder Schaltregler erforderlichen Schalt- und Bias-Mittel, also beispielsweise um den internen Transistor T₂ bei Betrieb mit externem Transistor T_{2'} wirkungslos zu schalten (Idle-Float), etc..

Als weitere Fortbildung kann ein solcher Multi-Mode-Regler auch noch einen steuerbaren Schalter umfassen, welcher zwischen dem Schaltkreisanschluß 20A11 und dem Schaltkreisanschluß 20.2.2 beim Betrieb des Transistors T₂ als Linearregler einen Kurzschluß herstellen kann. Dies ist dann von Interesse, wenn der Anschluß 20A8 nicht als Programmieranschluß, sondern zum beliebigen Umsteuern des Reglers 20A zwischen Linear- und Schaltbetrieb für nur vorübergehend erhöhte Stromabgabe im Schaltbetrieb bei ggfs. entsprechend reduziertem Störabstand der Versorgungsspannung VCC_{A} genutzt werden soll. Dieses Detail ist vorteilhaft nutzbar in Steuergeräten mit elektrischen Aktuatoren oder sonstigen Verbrauchern, die nur gelegentlich mit hohem Gleichzeitigkeitsgrad in einem Burst-Mode betrieben werden müssen.

Die Erfindung ist keinesfalls auf den in den **Figen. 21 & 22** dargestellten Kanaltyp eines MOSFET-Schalttransistors T₂ bzw. T₂' beschränkt. Vielmehr wird auch ein jeweils komplementärer Kanaltyp erfaßt. Im Rahmen der Erfindung schließt wenigstens der Regler 20A ggfs. erforderliche Ladungspumpmittel mit ein.

Die vorbeschriebene Architektur der Spannungsregelung 20' ermöglicht nicht nur einen besonders weiten Eingangsspannungsbereich VBATT von beispielsweise 12 bis 48 Volt in Bordnetzen von Verkehrsmitteln. Sie ist auch geeignet, innerhalb eines weiten Eingangsspannungsbereichs den Ruhestrombedarf eines entsprechenden Steuergerätes auf ein Minimum zu drücken.

Dies ist möglich, weil ein geeigneter Schaltregler für z.B. 250mA Ausgangsstrom inzwischen für einen Ruhestrom von nur maximal 20 bis 40 *µ*A ausgelegt werden kann, bei einer Gesamtverlustleistung von nur maximal 300 mW bei maximalem Ausgangsstrom.

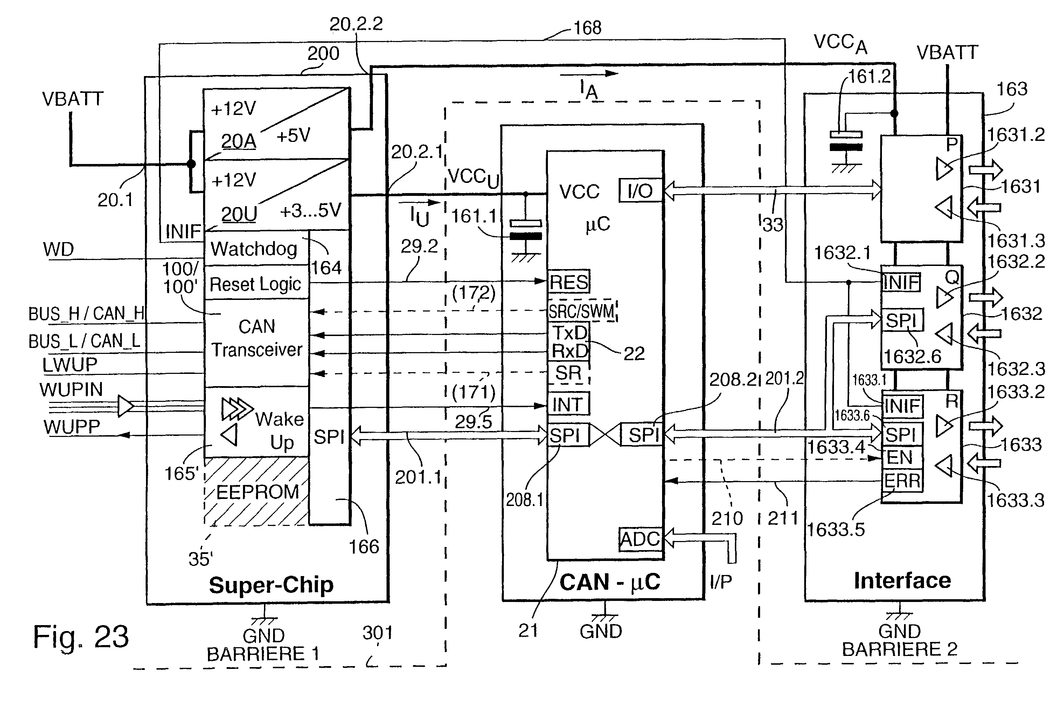

Aus **Fig. 23** wird unmittelbar ersichtlich, daß die Stromversorgung des Microcontrollers 21 aus einem besonderen Regler 20U auch die Rückwärtsisolation des Microcontrollers gegen Störeinströmungen aus dem Applikationsfeld zwangsläufig wesentlich erhöht.

Eine maßgebliche Rolle spielt im Zusammenhang auch die Splittung der Speicherkapazität 161 in **Figen. 2 & 5** in die beiden Kapazitäten 161.1 und 161.2. Aus dieser Darstellung wird ferner plausibel, daß eine wohlproportionierte Aufteilung der Speicherkapazität 161 in einen nur vom Interface 163 nutzbaren Teil 161.2 und einen nur vom Microcontroller 21 nutzbaren Teil 161.1 in Verbindung mit dem oben beschriebenen Konzept einer höheren Abschalttemperaturen T_{SDU} des Reglers 20U auch noch der Sicherung von Daten im Falle einer Störung dient.

Insoweit trägt die Fortbildung im Stromversorgungszweig nicht nur der absehbaren Weiterentwicklung der Technologien von kooperativen Microcontrollern Rechnung, nämlich hin zu immer kleineren Versorgungsspannungen. Da mit abnehmenden Versorgungsspannungen auch die logischen Pegel der Signalspannungen entsprechender Controller abnehmen, kommt die Fortbildung im Stromversorgungszweig auch wachsenden Anforderungen hinsichtlich der Sicherstellung ausreichender Signalstörabstände in Steuergeräten künftiger Technologien entgegen.

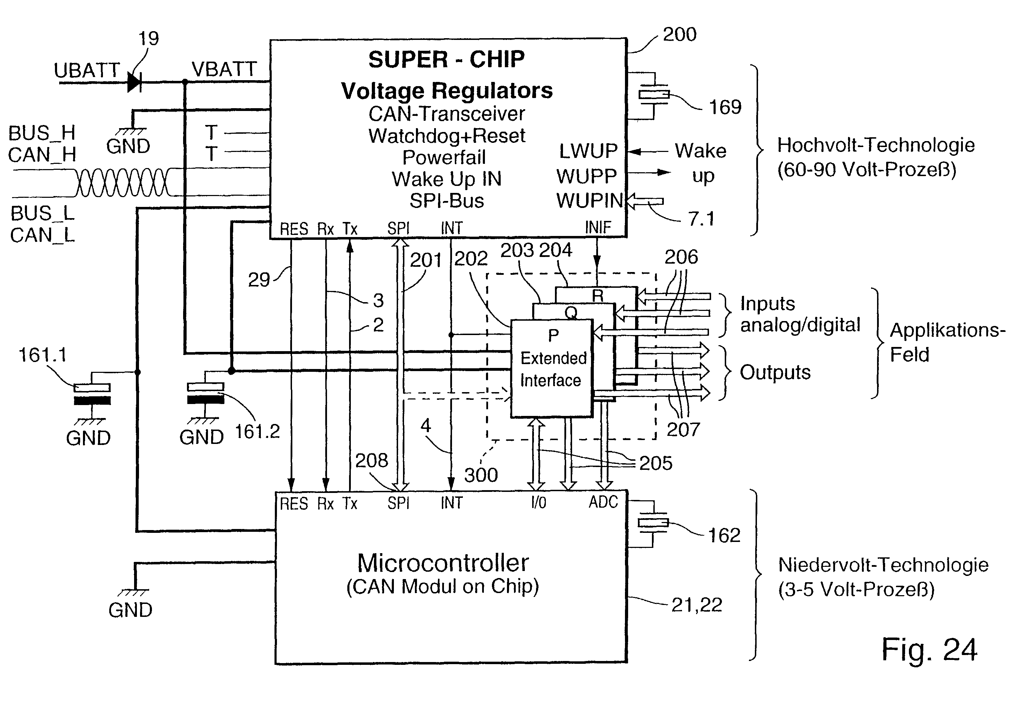

**Fig. 24** veranschaulicht, daß sich dieser Vorteil insbesondere im Rahmen der fortschrittlichen Steuergerätearchitektur gemäß **Fig. 8** ohne Einschränkung vollumfänglich nutzen läßt.

Die nachfolgend beschriebenen Fortbildungen erhöhen die Funktionalität des Schaltkreises bei Vorliegen von Busfehlern, welche die Kommunikationsfähigkeit einzelner Teilnehmer beeinträchtigen. Hierunter fallen insbesondere auch Massefehler, welche parasitäre Fehlspannungsabfälle zwischen Steuergeräten und einem busweit als Referenzpotential genutzen Potential verursachen und zu Buspegelverschiebungen und folglichen Kommunikationsstörungen führen können.

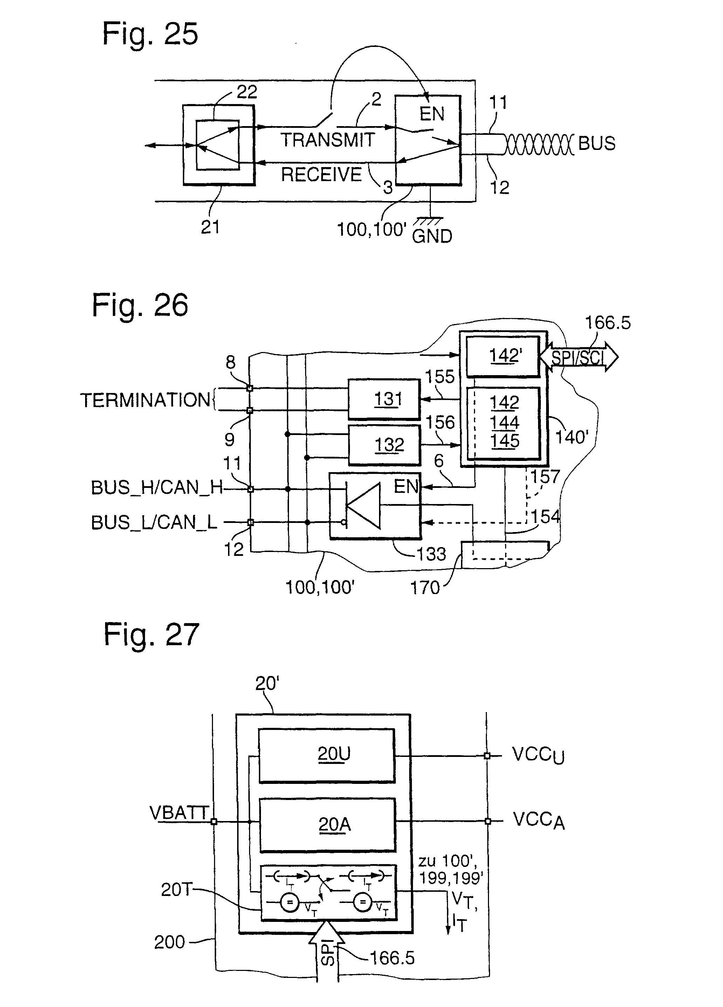

Bezüglich der analytischen Behandlung von Busfehlern kann es erforderlich sein, gemäß **Fig. 25** den Sendepfad zwischen Microcontroller 21 bzw. dessen Protokoll-Modul 22 und den beiden Busaderanschlüssen 11 und 12 aufzutrennen, um den Bus von unerwünschten bzw. störenden Sendezugriffen freizuschalten. Hierzu kann die schon oben erwähnte und in #) erläuterte Betriebsart RECEIVE ONLY herangezogen werden. Dabei wird eine solche Freischaltung vom Microcontroller aus z.B. über ein Steuerbit EN bewirkt, welches über den Pfad 6 an die Sendeendstufe 133 übertragen wird. Nur wenn das Steuerbit EN den vorgeschriebenen logischen Pegel aufweist, befindet sich der Bus auch im Sendezugriff des Transceivers, andernfalls nicht. **Fig. 25** veranschaulicht dieses Detail symbolisch.

**Fig. 26** zeigt, wie dieses Detail im Falle einer SPI-Implementation quasi versteckt wird, weil hierbei der Microcontroller 21 mit dem Bus-Transceiver 100' über ein Busmedium, hier speziell z.B. den SPI-Bus, kommuniziert und infolgedessen das EN-Bit protokolliert an den Bus-Transceiver 100' übertragen wird. Letztlich wird dabei also ein die Sendeendstufe 133 freigebendes oder sperrendes EN-Bit in einem SPI-kommunikationsfähigen Steuerungsblock 140' eines entsprechenden Bus-Transceivers 100' bzw. 100.11 durch Dekodierung generiert, gespeichert bzw. überschrieben.

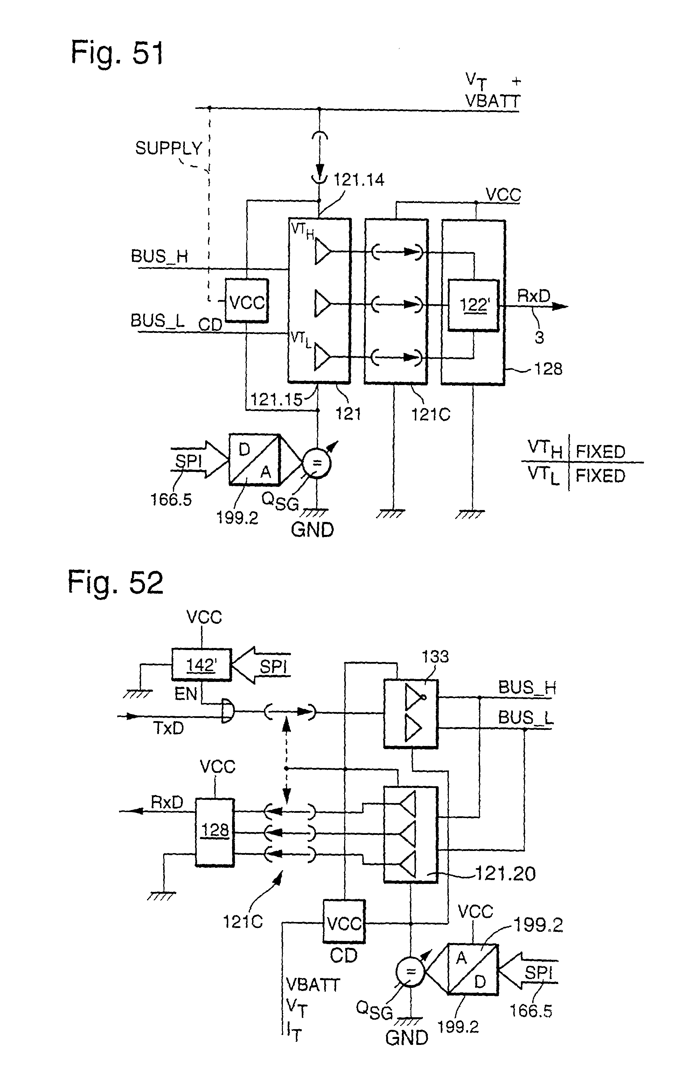

In **Fig. 26** ist deshalb - als Bestandteil einer solchen SPI-Implementation - dem Block 142 - welcher die Betriebsarten des Transceivers 100, 100' gemäß Instruktion vom Microcontroller einstellt und der dort mit Blöcken 144 und 145 zusammengefaßt dargestellt ist - wenigstens ein Speicherregister 142' zugeordnet, der die jeweils empfangene Betriebszustandsinformation so lange hält, bis sie durch den Empfang einer aktuelleren überschrieben wird. Dieser Speicher umfaßt jedenfalls auch eine Zelle für das oben erwähnte SPI-dekodierte EN-Signal für die Endstufe 133. Innerhalb des Blockes 140' ist der Pfad 6 von diesem Speicher zur Sendeendstufe 133 gestrichelt angedeutet. In **Fig. 52** ist der wenigstens eine Speicher für das EN-Bit auch dargestellt. Dieses den RECEIVE ONLY-Mode des Bus-Transceivers 100, 100' einschaltende Bit ist wichtig für die Nutzung der nachfolgend beschriebenen Fortbildungen durch eine Diagnose-Software zur Erfassung und Überwachung der Buspegel.

**Fig. 28** veranschaulicht in Funktionsblockdarstellung eine weitere Fortbildung des Schaltkreises 200 gestützt auf das vorgenannte infrastrukturelle Detail. Diese Fortbildung dient speziell der netzweiten Ortung, Erfassung und Behandlung von Bezugspotentialfehlern in bzw. bei Busteilnehmern. Was darunter zu verstehen ist wird am Beispiel eines Kraftfahrzeugs verdeutlicht wie folgt:

Alle Steuergeräte eines Kraftfahrzeugs sind mit der Fahrzeugkarosserie - als Bezugspotentialfläche, genannt Fahrzeugmasse - galvanisch verbunden. Die Fahrzeugmasse dient einerseits als Verteilungsleiter zur Schließung der Betriebsstromkreise von Verbrauchern und Steuergeräten, andererseits aber auch als Bezugspotentialfläche für Steuer- oder Drahtbussignale wie vorliegend.

Durch den Betriebsstromfluß zwischen Steuergerät und Fahrzeugmasse entsteht unvermeidbar ein gewisser, kleiner Spannungsabfall, um den das geräteinterne Massepotential - System GND - über der Fahrzeugmasse angehoben wird. Je nach Ausführung dieser Masseverbindung und Stromfluß darin sind somit sich geringfügig unterscheidende geräteinterne Massepotentiale System GND die Folge. Als unmittelbare Folge können geräteintern auf einen festen Wert geregelte Versorgungsspannung in allen Steuergeräten zwar genau gleich sein, nicht jedoch die Potentiale der entsprechenden geräteinternen Versorgungsschienen gegenüber der Fahrzeugmasse. Dies gilt analog beispielsweise auch für Schwellwerte oder dominante Einspeispotentiale von Empfangsdiskriminatoren in im Empfangsteil 120, 120' bzw. von Leitungstreibern 133L und 133H in einem Sendeteil 133 wie als Bestandteile des Transceivers 100, 100' vorliegend.

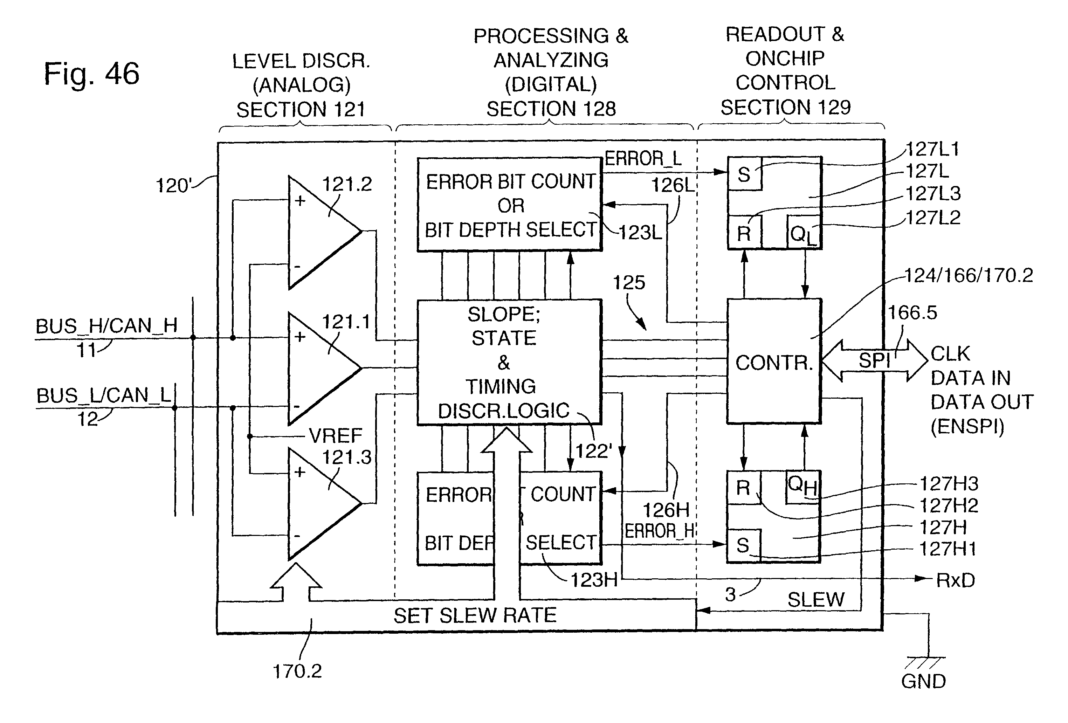

Bei schlechtem oder sich verschlechterndem Kontakt des betriebsstromdurchflossenen Massekabels eines Steuergerätes mit der Karosserie kann der "Offsetfehler" des geräteinternernen Massepotentials System GND gegenüber den entsprechenden geräteinternen Massepotentialen anderer Steuergeräte unzulässig groß werden. Infolgedessen verschiebt sich dann z.B. der Schwellwert VREF der Empfangsdiskriminatoren 121.2 und 121.3 in **Fig. 46** aus einem busspezifisch zulässigen Toleranzbereich hinaus, mit der Folge, daß sich für diesen Empfänger das rezessive Buspegelfenster so weit verschiebt, daß ein Empfang nicht mehr möglich ist.

Um eine maximale Verfügbarkeit großer Zweidraht-Busnetze mit vielen Teilnehmern unter rauhen Betriebsbedingungen zu ermöglichen, sieht die Erfindung für den Schaltkreis 200 neben Funktionalitäten, welche die Kommunikationsfähigkeit unterstützen und die Weckfähigkeit realisieren, insbesondere auch noch solche vor, die einem entsprechenden Bussystem (Leitungsnetz und Teilnehmer) sowohl die Fähigkeit zur Ortung bzw. Verifikation solcherart fehlerhafter Busteilnehmer als auch die Fähigkeit zur latenten Prüfung und Überwachung der Betriebspegelfenster aller Teilnehmer verleihen, d.h. zur Gewinnung und zur laufenden Aktualisierung eines Maßes, welches den jeweils aktuell vorliegenden Abstand zum pegelfehlerbedingten Ausfall eines oder mehrerer Busteilnehmer beschreibt (Neben anderen Aspekten ist dieses Maß das wichtigste hinsichtlich einer Definition der Busgüte).

Im Falle eines Kraftfahrzeugs kann eine Service-Station so bei jedem Service sofort einen Eindruck vom Gesamtzustand der physikalisch-kommunikativen Passung der Transceiver im Busnetzwerk in Bezug aufeinander erhalten und erforderlichenfalls sehr gezielt Vorsorge- oder Wartungsarbeiten mit minimalem Aufwand ausführen. Ersichtlich wird bei einem Fahrzeug mit sehr vielen solcher Schaltkreise in sehr vielen mit der Fahrzeugmasse verbundenen Steuergeräten durch so gestützte Eingriffsmöglichkeiten vor dem tatsächlich auftretenden Fehlerfall unnötiger Serviceaufwand vermieden und die Verfügbarkeit des Kraftfahrzeugs erhöht.

Die diesbezügliche Fortbildung betrifft zum einen eine Erweiterung um einen ebenfalls SPI-steuerbaren Funktionsblock 199, und zum anderen ganz spezifische Erweiterungen im Bus-Transceiver 100, 100', und zwar dort wenigstens im Sendeblock 133. Für maximale Testflexibilität sind entsprechende Erweiterungen auch im Empfangsblock 120 vorgesehen. Diese Erweiterungen, und wie diese beispielhaft realisierbar sind, wird nachfolgend beschrieben.

Der Funktionsblock 199 (OFFSET & BUS TEST MANAGER) ist hier beipielhaft über einen besonderen Chip-Anschluß 13.1 mit einem Bezugsmassepunkt SYSTEM GND in dem den Schaltkreis 200 tragenden Gerät verbindbar. Des weiteren kann dem Funktionsblock 199 - vorzugsweise Über einen weiteren Funktionsblock 198 (SENSE/EMI-PROTECTION)- noch über einen anderen, besonderen Chip-Anschluß 13.2 ein externes Bezugspotential REMOTE GND aus dem Einsatzumfeld des betreffenden Gerätes zuführbar sein. Die Leitung 196 symbolisiert eine Verbindung, welche - beim o.g. Beispiel eines Fahrzeugs - aus dem betreffenden Gerät heraus zu einem im wesentlichen strombelastungsfreien Massepunkt an der Fahrzeugkarosserie geführt ist.

Der Funktionsblock 199 steht mit dem Transceiver 100/ 100' mehr oder weniger komplex in Wirkverbindung, was der multiple Pfad 195 symbolisiert. Schon an dieser Stelle wird darauf hingewiesen, daß sich diese Komplexität daraus ergeben kann, daß dieser Funktionsblock in einem realen Chip-Design mehr oder weniger stark mit Steuerstrukturen des Transceivers 100, 100' - Empfänger und/oder Sender umfassend - und/oder des Interface 166 verbunden oder sogar in solchen Strukturen regelrecht eingebettet sein kann. Zur Charakterisierung und Verständlichmachung der durch diesen Funktionsblock ermöglichten Chipfunktionalität werden nachfolgend spezifische Sender- und Empfängerfortbildungen erläutert, die mit diesem Funktionsblock zusammenwirken, um zusammen mit dem Interface 166 und dem Microcontroller des elektronischen Gerätes die oben beschriebene "Intelligenz" zur automatischen Potentialfehlerortung und -bestimmung und zur Fehlerabstandsüberwachung in Verbindung mit einer geeigneten Management-Software zu ermöglichen.

(Die verfahrensgemäße Nutzbarkeit dieser Fortbildungen ist in einer mit dieser Anmeldung zeitgleich eingereichten Anmeldung mit dem Aktenzeichen N. N. beschrieben, auf deren Inhalt hier Bezug genommen wird.)

Zwecks Stromversorgung digitaler Schaltkreisfunktionen im Funktionsblock 199 kann letzterer vom Ausgang 20.2.2 des Reglers 20A aus mit dem Potential VCC_{A} stromversorgt sein.

Gleichwohl kann die Spannungsregelung 20 optional noch wenigstens einen dritten Regler 20T für ein weiteres Versorgungspotential V_{T} oder aber einen festen Versorgungsstrom I_{T} umfassen, wie in **Fig. 27** illustriert, von dem aus der Block 199 - und erforderlichenfalls auch der Bus-Transceiver 100, 100' - über einen chipinternen Speisepfad 197 versorgbar ist, d.h. mit hoher Entkopplung gegenüber dem Ausgang 20.2.2 des Reglers 20A mit dem Potential VCC_{A}.

In der Regel wird die Spannung V_{T} höher sein als die Spannung VCC_{A}, je nach Realisierung des Funktionsblockes 199 und dem Grad der Ausbildung verschiedener Merkmale (z.B. Eindraht- oder Zweidraht-Testfähigkeit, gering- oder großhubige Pegeltestfähigkeit, etc.) und Herstellungstechnologie des Schaltkreises 200. Der in **Fig. 28** gezeigte Chip-Anschluß 20.2.3 kann insoweit (nur) zum Anschluß einer Sieb-Kapazität 161.3 vorgesehen sein, d.h. nicht zur Versorgung anderer externer Schaltkreise oder Gerätekomponenten, oder zu externen Überwachungszwecken, insbesondere wenn es sich dabei z.B. um einen Stromquellenausgang handelt. In **Fig. 27** ist weiter dargestellt, daß der Block 20T auch so ausgebildet sein kann, daß seine Ausgangsgröße zwischen einer Spannung V_{T} und einem eingeprägten Strom I_{T} umschaltbar ist, unter Steuerzugriff über den SPI-Pfad 166.5. Eine solche Ausbildung in Zusammenwirken mit Schaltkreisstrukturen im Block 199 und Bus-Transceiver 100, 100' kann u.a. die selbsttätige Umschaltung oder Ein- und Ausschaltung von Funktionen solcher Strukturen bewirken.

Im allereinfachsten Falle umfaßt der Block 199 Mittel, die es erlauben, das sog. Buspegelfenster wenigstens der Endstufe 133 des Transceivers 100/100' zu beeinflussen, insbesondere anzuheben. Dies ist in **Fig. 29** veranschaulicht. Dabei ist ein von 199 mitumfaßter und über den Digitalpfad 166.5 angesteuerter D/A-Wandler zur Vorgabe eines Spannungswertes vorgesehen, der auf eine steuerbare Offset-Spannungsquelle Q_{SG} wirkt. Diese erscheint wirkungsmäßig in den Strompfad der "normalen" Masseverbindung der Endstufe 133 mit dem Potential GND eingeschleift, was durch geeignete monolithische Isolation diverser Komponenten der Endstufe 133 möglich ist.

Zur Konstanthaltung der Versorgungsspannung VCC der Endstufe 133 ist dieser eine Spannungsklammer oder ein Spannungsregler CD parallelgeschaltet. Im ersten Falle ist die Endstufe vorzugsweise über eine Stromquelle CS von einer Versorgungsschine mit entsprechend hohem Potential VBATT oder V_{T} und im zweiten Falle vom Regler CD aus stromversorgbar, wobei dann der Regler CD über den gestrichelt angedeuteten Versorgungspfad SUPPLY von besagter Versorgungsschiene speisbar ist. Die Stromquelle CS kann auch ganz entfallen, wenn eine Versorgung der Endstufe 133 durch einen eingeprägten Strom I_{T} aus dem Regler 20T gemäß **Fig. 27** möglich ist.

Die gesteuerte Spannungsquelle Q_{SG} kann im einfachsten Falle z.B. durch einen Impedanzwandler realisiert sein, der den Ausgangsspannungshub des D/A-Wandlers 199.2 im wesentlichen 1:1 auf eine dem Speisestrom der Endstufe 133 angemessene Quellenimpedanz übersetzt.

Bei dieser Ausbildung ist es also möglich, nach Maßgabe durch eine digitale Vorgabe an den D/A-Wandler 199.2 das durch die Spannungsklammer bzw. den Spannungsregler CD konstant gehaltene dominante Einspeispegelfenster (Differenz der Quellenpegel der beiden Ader-Endstufen 133L und 133H) in Richtung zu höheren Spannungswerten zu verschieben, wobei dieser variable Spannungshub beispielsweise 0 bis 5 Volt betragen kann, so daß sich in Bezug auf das Busnetz ein einspeisender H-Quellenpegel von bis zu 10 Volt ergibt. Um den folglich variablen Ansteuerspannungshub der Endstufeneingänge zu überbrücken, ist hier beispielhaft eine logische Ansteuerung der Endstufen mit dem Sendesignal TxD durch einen eingeprägten Strompfad vorgesehen.

Ein so beschaffener Block 199 in Verbindung mit einer entsprechend ausgestatten Sendeendstufe 133 erlaubt also, vermittels über den Pfad 166.5 bezogener digitaler Einstelldaten sendeseitig eine Fehlerspannung zu simulieren, die bei einem Bus-Transceiver in einem massefehlerhaften Busteilnehmer eine normale Kommunikation, insbesondere einen normalen Empfang, nicht mehr erlaubt.

Bei angemessener Größe der Klemmenspannung der Quelle Q_{SG} kann so über den gesamten Busabschluß hinweg die Fehlerspannung beim empfangsgestörten Empfänger wenigstens zum Teil oder gar vollständig kompensiert werden. Zweckmäßigerweise ist die Klemmenspannung der Quelle Q_{SG} definiert einstellbar, insbesondere wenigstens in Stufen veränderbar, bei entsprechender Stufigkeit also z.B. mehr oder weniger treppen- bzw. rampenförmig über der Zeit entsprechend jeweiligen Vorgaben über den digitalen Pfad 166.5.

Gemäß **Fig. 30** kann die Fortbildung bezüglich der Sendeseite gleichwohl zwei separate, steuerbare Offset-Spannungsquellen Q_{SL} und Q_{SH} umfassen, wobei die Quelle Q_{SL} der vorbeschriebenen entspricht und zur Anhebung des negativen Versorgungspotentials der Ader-Endstufe 133L die Quelle Q_{SH} so geschaltet ist, daß sie eine entsprechend digital steuerbare Veränderung des positiven Versorgungspotentials VCC oder VBATT bzw. V_{T} der Ader-Endstufe 133H erlaubt. Es ist hier also der auf den Bus einspeisende L-Quellenpegel unabhängig von dem auf den Bus einspeisenden H-Quellenpegel und vice versa veränderbar.

Beispielsweise kann die steuerbare Offset-Quelle Q_{SL} einen Spannungshub von 0 bis 3 Volt und die steuerbare Offset-Quelle Q_{SH} einen solchen von 8 oder 3 bis 0 Volt überstreichen. Je nachdem, wie hoch das Versorgungspotential der Offset-Quelle Q_{SH} ist, kann bei dieser Fortbildung also der dominante L-Quellenpegel von 0 bis 3 Volt und der dominante H-Quellenpegel von 3 oder 8 bis 0 Volt einstellbar sein.

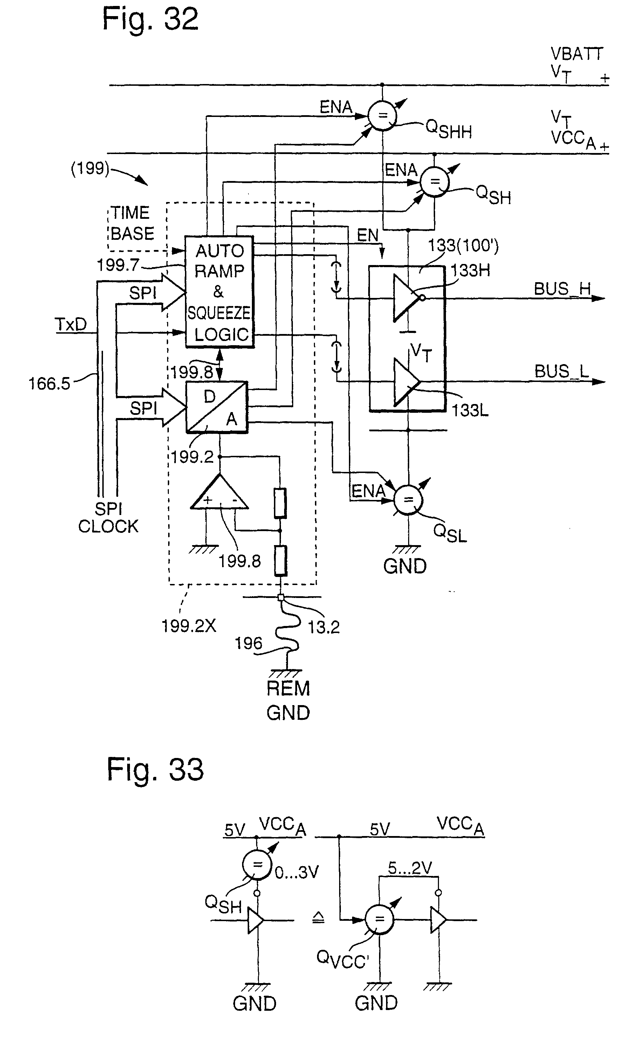

Im Zusammenhang wird auf die erläuternde Darstellung in **Fig. 33** verwiesen, der zufolge es im Rahmen der Erfindung unerheblich ist, auf welches von zwei Versorgungspotentialen eine Offset-Spannungsquelle bezogen wird, indem beispielsweise eine zwischen 0 und 3 Volt einstellbare Offset-Spannungsquelle Q_{SH} unterhalb einer Versorgungschiene VCC mit 5 Volt mit einer einstellbaren Offset-Spannungsquelle Q_{vcc'} über GND mit einem Einstellbereich von 5 bis 2 Volt äquivalent ist.

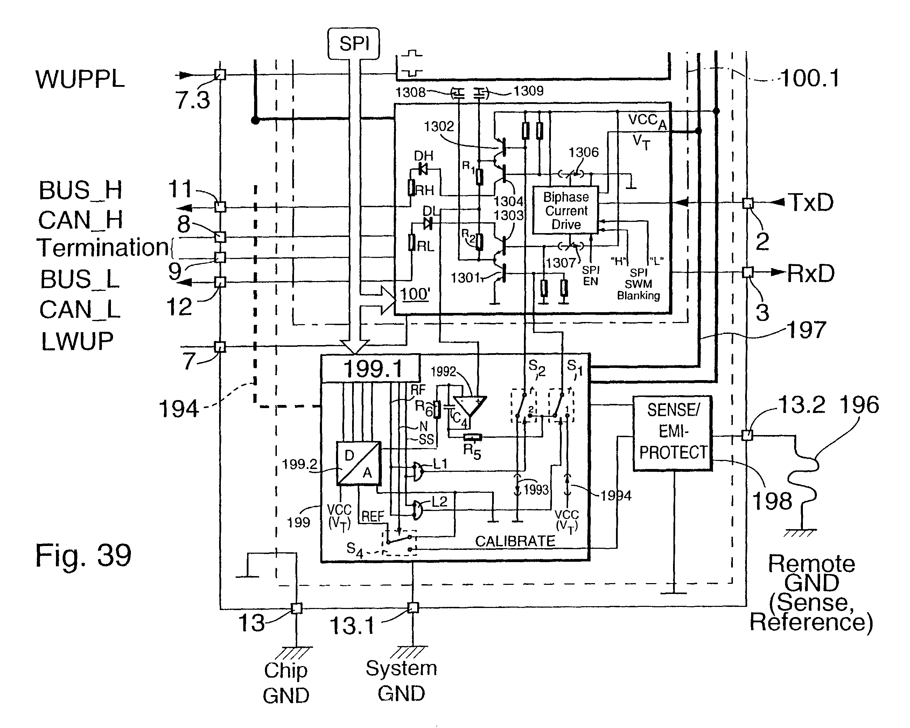

Die Erfindung deckt die Fortbildung gemäß der **Fig. 30** zum einen dahingehend ab, daß die beiden Offset-Quellen Q_{SL} und Q_{SH} alternativ nutzbar sind, wie etwas detaillierter beispielsweise in **Figen. 36 & 37** und **Fig. 39** ohne Beschränkung der Allgemeinheit veranschaulicht.

Es ist dann im Grunde jeweils immer nur eine Spannungsvorgabe und insoweit nur ein D/A-Wandler erforderlich, der bei der Auswahl aus beiden Alternativen der jeweils aktuell benötigten Vorgabe entsprechend zu laden / umzuladen ist.

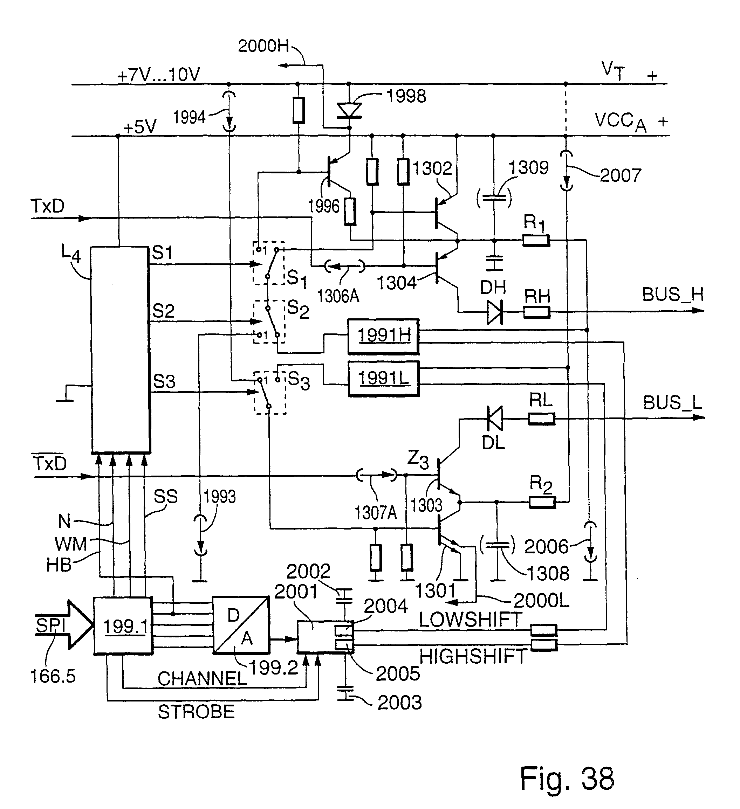

Gleichwohl deckt die Erfindung die Fortbildung gemäß der **Fig. 30** auch dahingehend ab, daß die beiden Offset-Quellen Q_{SL} und Q_{SH} simultan und unabhängig voneinander nutzbar sind, wie etwas detaillierter beispielsweise in **Fig. 38** ohne Beschränkung der Allgemeinheit veranschaulicht. Auf die drei genannten Figuren wird noch weiter unten Bezug genommen.

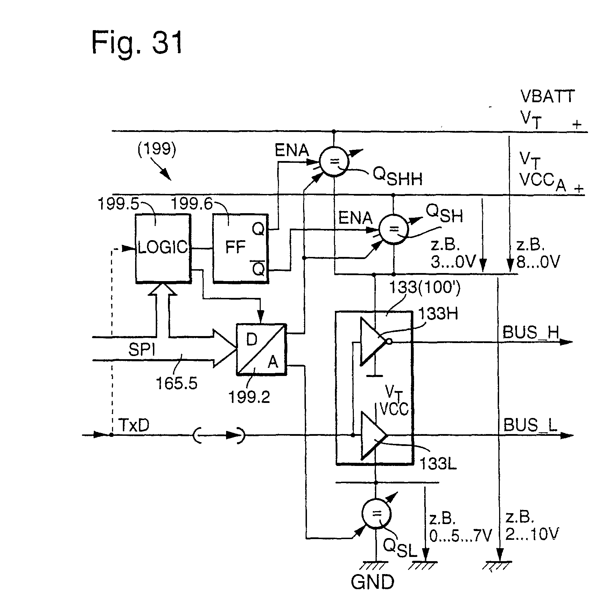

Die Anlage wenigstens zweier gleichzeitig nutzbarer Offset-Quellen Q_{SL} und Q_{SH} erlaubt auch das Ausführungsbeispiel gemäß der **Fig. 31,** indem dort ein D/A-Wandler 199.2 mit zwei dementsprechenden Ausgängen zur Vorgabe zweier Offset-Werte vorgesehen ist. Dabei ist beispielhaft ein Ausgang der Quelle Q_{SL} fest zugeordnet und der andere Ausgang ausschließlich zur wahlweisen Steuerung einer ersten Quelle Q_{SH} (an der Versorgungsschiene V_{T} oder VCC) und einer zweiten Quelle Q_{SHH} (an der potentialmäßig höheren Versorgungsschiene VBATT oder V_{T}) vorgesehen. Wie bei den vorherigen Beispielen ist auch hier eine logische Ansteuerung beider Endstufen durch wenigstens einen eingeprägten Strompfad vorgesehen.

Der den D/A-Wandler 199.2 ansteuernde Digitalpfad 166.5 steuert des weiteren eine Logik 199.5 an, welche ihrerseits sowohl mit dem D/A-Wandler 199.2 verbunden ist als auch ein Flipflop 199.6 ansteuert. Die beiden zueinander invertierten Ausgänge des Flipflops 199.6 steuern die Offset-Quellen Q_{SH} und Q_{SHH} im Sinne einer Auswahl an. Nach Maßgabe durch den Zustand des Flipflops 199.6 liegt ein aktives ENAable-Signal an der einen oder anderen Offset-Quelle an, d.h., es ist entweder die Offset-Quelle Q_{SH} an der Versorgungsschiene V_{T} oder VCC oder die Offset-Quelle Q_{SHH} an der (noch positiveren) Versorgungsschiene VBATT oder V_{T} aktiv, d.h. nie beide gleichzeitig. Im inaktiven Zustand kann jede der Offset-Quellen Q_{SH} und Q_{SHH} als Kurzschluß gedacht werden (oder in Praxis als Quelle mit unbedeutendem Restspannungsabfall).

Die Logik 199.5 kann so so beschaffen sein, daß sie beim Ansteuern des Flipflops 199.6 zwecks Zustandswechsel auch den D/A-Wandler 199.2 zwecks Umladung wenigstens einer Sollwertvorgabe, insbesondere im Sinne einer Auswahl für die Quelle Q_{SH} oder Q_{SHH}, ansteuern kann. Aus den obigen Erläuterungen sind die in **Fig. 31** eingetragenen Spannungsbereiche selbsterklärend. Diese Fortbildung läßt also ein dominantes H-Quellpotential zu, das wahlweise unterhalb oder oberhalb des busspezifisch normalen H-Quellpotentials liegen bzw. gleichwohl bedarfsweise zwischen beiden umgetastet werden kann. In den Rahmen der Erfindung fällt weiter, durch entsprechende Ausbildung der Logik 199.5 eine solche Umschaltung auch verkettet mit dem Datensignal TxD zu ermöglichen, was durch den gestrichelten Signalpfad zur Logik 199.5 versinnbildlicht ist.

Mit den bis hierher beschriebenen Fortbildungen ist also eine Verschiebung eines oder beider einspeisenden dominanten Quellenpegel/s zum einen in eine Richtung möglich, in die auch das Empfangspegelfenster eines Busteilnehmers zwangsläufig verschoben wird, wenn er über eine fehlerhafte, stromführende und insoweit einen eigenen Fehlspannungsabfall verursachende Verbindung mit einem Bezugspotential verfügt, wie z.B. bei einer fehlerhaften Masseverbindung eines Steuergerätes als Busteilnehmer mit der Karosserie eines Kraftfahrzeugs der Fall.

Zum anderen ist damit aber nach Maßgabe durch die zeitliche Ansteuerung eines oder mehrerer D/A-Wandler auch umgekehrt eine Verschiebung eines oder beider einspeisender dominanter Quellenpegel/s von einem bzw. zwei höheren Werten beginnend gegenläufig zur Verschiebungsrichtung bzw. Ablage des Empfangspegelfensters eines entsprechend fehlerhaften Busteilnehmers möglich. Diese Fähigkeit des Schaltkreises 200 erschließt spezifische Testmöglichkeiten sowohl vor als auch nach dem Eintritt eines Potentialfehlerfalles in einem Busnetz.

Solche über ein ganzes Busnetz mit vielen Teilnehmern sich erstreckende Tests werden vereinfacht und beschleunigt bei Fortbildung des Schaltkreises beispielsweise gemäß der **Fig. 32.**

Das bezüglich **Figur 33** bereits ausgeführte gilt uneingeschränkt auch für diese Fortbildung. Es ist hier zum einen ein D/A-Wandler 199.2 vorgesehen, der die Ausgabe von hier beispielsweise drei analogen Steuer- bzw. Sollwerten an entsprechende Offset-Quellen Q_{SL}, Q_{SH} und Q_{SHH} erlaubt. Ohne Beschränkung der Allgemeinheit können alle oder nur zwei dieser Werte simultan verfügbar sein. Der D/A-Wandler 199.2 ist auch hier über einen digitalen Pfad 166.5 beispielsweise vom SPI-Typ ansteuerbar. Ebenfalls durch den digitalen Pfad 166.5 ansteuerbar ist des weiteren eine Logik 199.7, die über eine bidirektionale Verbindung 199.8 mit dem D/A-Wandler 199.2 zusammenwirkt. Die Logik 199.7 kann vom SPI-Taktsignal angetrieben sein; gleichwohl kann auch die Zufuhr eines externen Zeitbasis-Signals vorgesehen sein.

Ohne Beschränkung der Allgemeinheit der Erfindung könnte ein entsprechendes Zeitbasis-Signal z.B. entweder vom Zeitgeber 165.1 des Weck-Expanders 165' abgeleitet sein oder - falls letzterer seinerseits über 164a (Fig. 28) von der Watchdog-Funktion 164 mit einem Zeit- oder Frequenzsignal versorgt wird - entweder mit einer Periodendauer eines internen Referenzsignales der Watchdog-Funktion 164 zeitlich verkettet bzw. aus einem Abzweig der Verbindung 164a in **Fig. 28** bezogen sein.

Der Logik 199.7 kann außerdem auch noch das Sendesignal TxD zuführbar sein. Die Endstufen 133L und 133H werden hier beispielhaft über jeweils individuelle logische Pfade mit Stromeinprägung von der Logik 199.7 angesteuert. Des weiteren ist noch ein Meßverstärker 199.8 angedeutet, der zur Generation einer Größe entsprechend der Differenz zwischen dem Chip- oder geräteinternen Massepotential und einer externen Bezugsmasse REM GND beschaltet ist. Diese Größe wird hier beispielhaft dem D/A-Wandler 199.2 zugeführt.

Die Beschaffenheit und Funktion der Logik 199.7 in Verbindung mit dem D/A-Wandler 199.2 ist folgende.

Angetrieben durch eine Taktsignal, das entweder das Taktsignal des Pfades 166.5 oder aber ein gemäß obiger Beschreibung bezogenes sein kann, erzeugt die Logik 199.7 nach Maßgabe durch über den Pfad 166.5 empfangene Daten u.a. Steuersignale für den D/A-Wandler 199.2. Diese Signale befähigen den D/A-Wandler zur Erzeugung und Bereitstellung rampenförmig definiert sich verändernder Sollwertvogaben des A/D-Wandlers, und/oder für ein freizügiges, definiertes Verändern der dominanten Fensterweite (sog. Squeezing der Busbit-Augenweite), sowie für die Auswahl bzw. Umschaltung (ENAbling) der entsprechenden Ziel-Offset-Quelle(n) Q_{SL}, Q_{SH} und/oder Q_{SHH}.

Ohne Beschränkung der Allgemeinheit der Erfindung kann dabei die erste Funktion (sog. "Ramping") sowohl für einals auch zeidrähtige Tests und die zweite Funktion ("sog. Squeezing") bevorzugt für zweidrähtige Tests vorgesehen sein, je nach Ausgestaltung einer die obengenannten Eigenschaften nutzenden Diagnose-Software. Dabei kann die Bereitstellung von analogen Spannungstufen, welche eine Spannungsrampe annähern bzw. ein Squeeze-In- oder Dekrement repräsentieren, erforderlichenfalls optional zeitschlitzverkettet mit dem nicht notwendigerweise synchronen Datensignal TxD vorgesehen sein.

Beispielsweise kann so nach Maßgabe durch eine über den Pfad 166.5 vom Microcontroller 21 ladbare Zahl M ein Rampenin- oder -dekrement frühestens oder genau nach einer durch diese Zahl bestimmten Anzahl von Sendebitzeiten erfolgen. Wenn diese Zahl M von allen empfangsfähigen Busteilnehmern empfangbar ist, kann eine entsprechend ausgebildete Test-Software mit dieser vorgebbaren Zahl M quasi ein elementares Verifikations-Vorwissen zu einem bevorstehenden Testzyklus busweit vermitteln.

In Verbindung mit weiter unten beschriebenen Empfängermerkmalen werden Plausibilitätsprüfungen innerhalb der Busteilnehmer so unter geringer Belastung des Busnetzes möglich. Dies ist der Schlüssel für eine hohe Beschleunigung entsprechender Tests. In diesem Zusammenhang wird ausdrücklich darauf hingewiesen, daß der Schaltkreis 200 auch noch figürlich nicht dargestellte Mittel umfassen kann, welche eine Strombezugsumschaltung der Endstufe 133H zwischen den Offset-Quellen Q_{SH} und Q_{SHH} innerhalb eines Zeitraumes zu leisten vermögen, der kürzer als die Bus-Bitzeit ist.

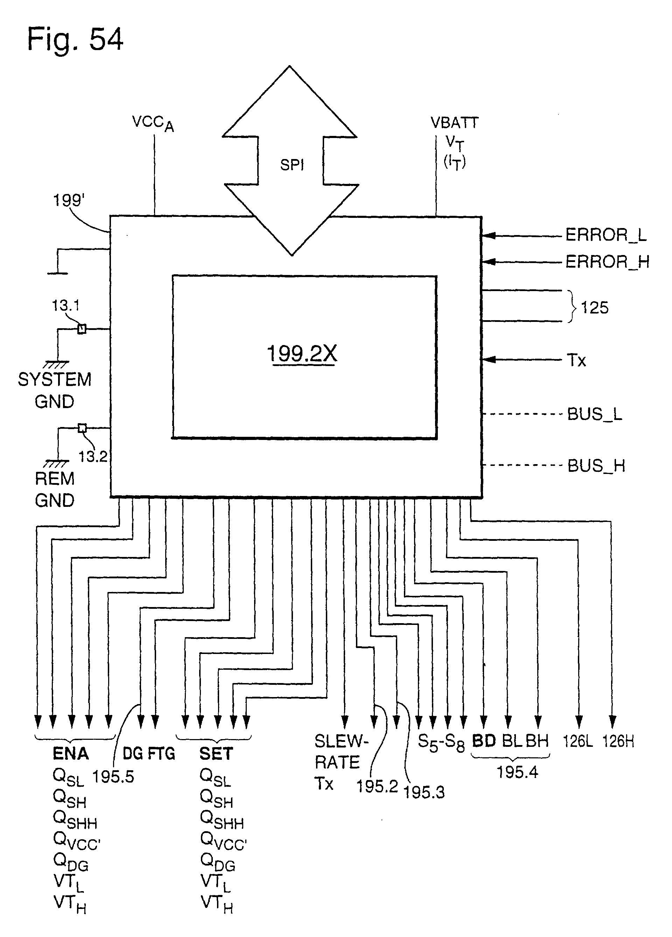

Einige der oben erläuterten Elemente sind in der **Fig. 32** gestrichelt eingerahmt und mit 199.2X bezeichnet, da der in diesem gestrichelten Rahmen gefaßte Funktionalitätsumfang wie oben erläutert im Rahmen der Erfindung auch durch eine einzige integrale Funktionalität 199.2X innerhalb des Blockes 199 realisiert sein kann. Hierauf wird i.V. mit **Fig. 54** noch Bezug genommen.

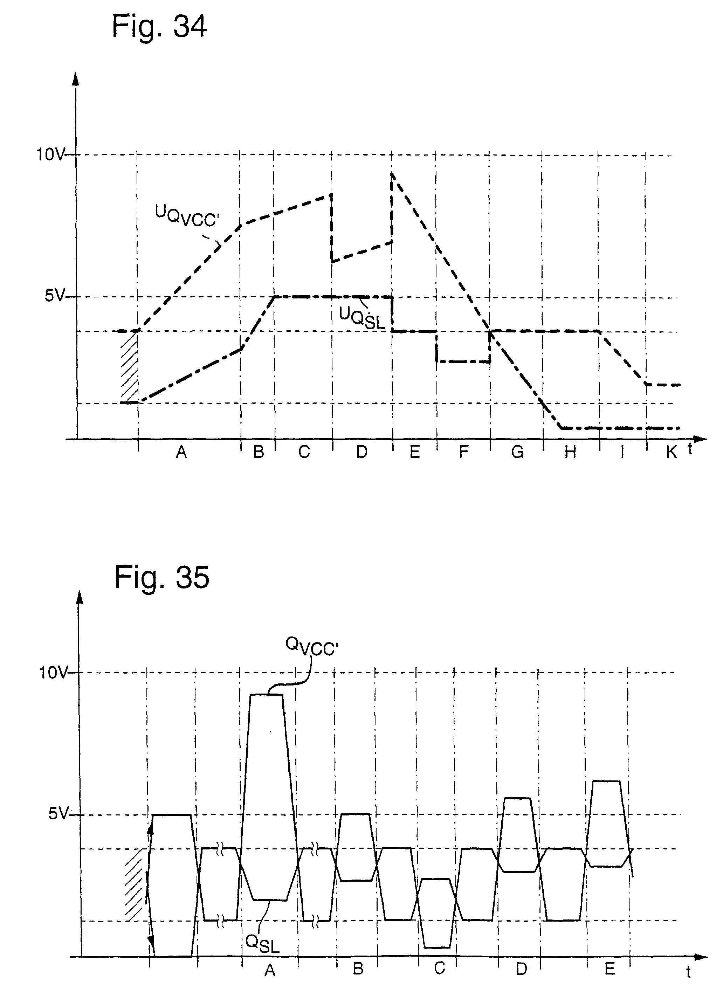

In **Fig. 34** ist vereinfacht in Form eines Hüllschemas beispielhaft aufgetragen, wie mit dem Ausführungsbeispiel der **Fig. 32** die auf den Bus einspeisenden dominanten Quellenpegel beispielhaft veränderbar sind. **Fig. 35** veranschaulicht eine Vergrößerung auf Bitebene, wenn das vorgenannte Merkmal einer Umschaltbarkeit des Strombezugs der Endstufe 133H zwischen den Offset-Quellen Q_{SH} und Q_{SHH} binnen einer Zeit kürzer als die Bus-Bitzeit möglich ist. Daraus ist ersichtlich, daß unter bestimmten Voraussetzungen eine Stromeinspeisung in eine Busader nicht möglich ist, was zu Diskriminationszwecken genutzt werden kann.

Je nach Anwendungsspektrum des Schaltkreises 200 kann der Grad der Ausbildung der oben genannten Merkmale sehr unterschiedlich sein. In jedem Falle können Merkmale eines Beispieles ohne jede Beschränkung mit Merkmalen eines anderen Beispiels kombiniert werden, ohne daß dadurch der Rahmen der Erfindung verlassen wird. Die **Figen. 36 - 38** vermitteln in diesem Sinne anhand vereinfachter Wirkschemata einige wenige praktische Beispiele, um die verschiedenen Funktionalitäten plausibel zu machen; sie stellen insoweit keinerlei Beschränkung der Erfindung dar. Vielmehr können- je nach Realisierungstechnologie - auch weit davon abweichende Wirkschemata realisiert werden, um die verdeutlichte Funktionalität in der Praxis zu erreichen.

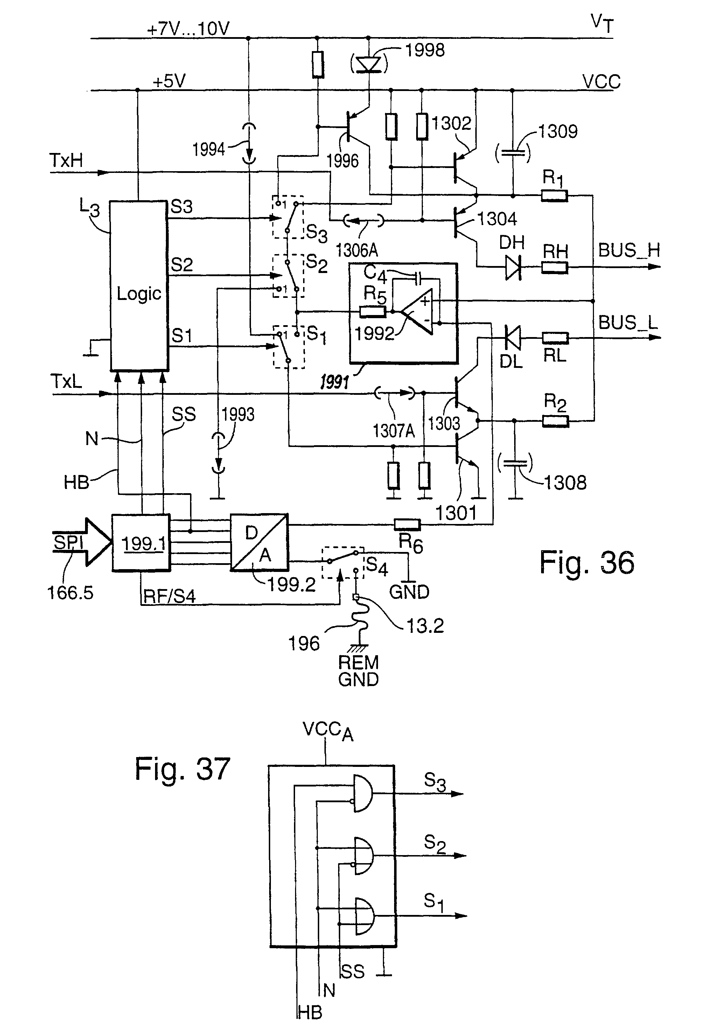

**Fig. 36** zeigt in diesem Sinne ein exemplarisches Wirkschema, in welchem sowohl dem Block 199 zuordnungsfähige als auch dem Bus-Transceiver 100, 100' - insbesondere dessen Endstufe 133 - zuordnungsfähige Elemente versammelt sind. Mit Ausnahme der optional vorgesehenen Verkettung der Offsetquellen-Beeinflussung mit dem Datensignal TxD vermittelt dieses Ausführungsbeispiel in etwa die Funktionalität des in **Fig 31** blockschematisch Dargestellten.

1303 ist der (normalerweise) gegen GND schaltende L-Schalter der L-Endstufe 133L und 1304 der (normalerweise) gegen VCC_{A} schaltende H-Schalter der H-Endstufe 133H. Die hier beispielhaft als bipolare, komplementäre Transistoren werden basisseitig durch eingeprägte Strompfade 1307A bzw. 1306A mit dem jeweiligen Datensignal Tx_L bzw. Tx_H beaufschlagt. Die Kollektoren der Transistoren 1303 und 1304 speisen in an sich bekannter Weise über Schutzdioden DL bzw. DH und ggfs. kleine Schutzwiderstände RL bzw. RH die Busadern BUS_L bzw. BUS_H.

Die Transistoren 1301 und 1302 erfüllen in Abwechslung miteinander eine insgesamt dreifache Funktion, wozu sie eingangsseitig über durch Digitalsignale S1 und S2 steuerbare Analog-UM-Schalter S₁ und S₂ ansteuerbar sind.

In der beispielhaften Schalterstellung 1 des Analog-UM-Schalters S₁ wird der Transistor 1301 **erstens** durch die vom Potential V_{T} speisende Stromquelle 1994 in Sättigung gehalten, wodurch der Emitter des Transistors 1303 nahe bei Massepotential GND liegt. Der Transistor 1301 "deaktiviert" quasi die entsprechende Offset-Quelle Q_{SL}.

Durch diese Maßnahme wird **zweitens** der Widerstand R₂ des Spannungsteilers aus R₁ und R₂ auch mit GND verbunden, so daß dieser das Teilverhältnis R₂/(R₁+R₂) hat.

Über den Analog-UM-Schalter S₂ in Stellung 2 liegt **drittens** die Basis des Transistors 1302 am Ausgang des Reglers 1991. Damit fungiert der Transistor 1302 in Verbindung mit dem Regler 1991 als Ausgangsstufe einer Offset-Quelle Q_{SH}.

Der Regler 1991 kann in bekannter Weise aufgebaut sein. Unter bestimmten Bedingungen kann er auch auf einem Komparator 1992 basieren, wie im Beispiel angenommen. Die beispielhaft angedeutete Kapazität C₄ i.V. mit R₅ und R₆ sind dann regelungstechnischen Anforderungen gemäß an ein nicht ideales Phasendrehverhalten der Transistoren 1301 und 1302 ggfs. anzupassen. Je nach den Eigenschaften des Komparators können auch andere Kompensationsmittel zweckmäßig sein. Die für EMV-Schutzzwecke nützlichen Kapazitäten 1308 und 1309 können bei einem anders konfigurierten Regler wiederum vorteilhaft sein.

Dem Regler 1991 wird eine analoge Sollwertvorgabe des D/A-Wandlers 199.2 zugeführt. Da sich über den Transistor 1302 und den o.g. Spannungsteiler aus R₁ und R₂ der Regelkreis schließt, kann die am Emitter des Transistors 1304 anstehende Gleichspannung als das Potential VCC_{A} absenkende Offset-Spannung geregelt werden (Quelle Q_{SH}).

Ersichtlich liegen bei umgekehrter Ansteuerung der beiden Analog-UM-Schalter S₁ und S₂ umgekehrte Verhältnisse vor: Es wird dann der Transistor 1302 durch die Stromquelle 1993 in Sättigung gehalten, währen der Transistor 1301 als Regelendstufe fungierend den Regelkreis schließt. Der vorgenannte Spannungsteiler aus R₁ und R₂ liegt dann quasi an VCC_{A} und hat dann das Übersetzungsverhältnis R₁/(R₁+R₂). Bei R₁ = R₂ wirkt der Spannungsteiler sowohl bei L-Shift als auch bei H-Shift identisch und bewirkt eine gekrümmte Regelkennlinie, die unter bestimmten Voraussetzungen im Hinblick auf die Umladung des D/A-Wandlers 199.2 zwecks eindrähtig abwechselnder Tests vorteilhaft sein kann.

Die Auswahllogik L₃ steuern mit einem Signal S3 einen weiteren Analog-UM-Schalter S₃ an. Über diesen besteht die Möglichkeit, den Ausgang des Reglers 1991 bei Wahrheit des High Bits HB vom Transistor 1302 auf den von der positiveren Versorgungsschinene V_{T} gespeisten Transistor 1996 umzuschalten; dabei ist dann der Transistor 1302 wirkungslos. Die Diode 1998 ist technologieabhängig zweckmäßig. Ein Zenerdurchbruch des Transistors 1302 bei sättigungsnahem Transistor 1996 ist im Falle der Realisierung in einer Hochvolttechnologie bei relevanten Differenzen zwischen V_{T} und VCC_{A} auszuschließen.

Der D/A-Wandler 199.2 wird seinerseits von einer Logik 199.1 angesteuert, die ihrerseits über den digitalen Pfad 166.5 angesteuert wird. Die Logik 199.1 hat dabei die Funktion eines Interface zum Digitalpfad 166.5 und kann insoweit wenigstens ein Register umfassen, in dem wenigstens ein Teil eines seriell empfangenen Datentelegramms vorübergehend haltbar ist. Das in **Fig. 31** dargestellte Flipflop ist als Speicherzelle darin enthalten. Z.B. eine zum D/A-Wandler führende Bit-Leitung HB (für High Bit) sowie zwei weitere Bit-Leitungen N (für Normal oder Override) und SS (für Shift Select) sind an die Auswahllogik L₃ geführt. Eine beispielhafte Realisierung derselben ist in **Fig. 37** wiedergegeben; sie ist abhängig von der Wahrheitsbewertung ihrer Eingangssignale gestaltet.

Bei Wahrheit des Signals N wird der Betriebszustand der Endstufe für normale Buskommunikation eingesteuert, unabhängig davon, ob gleichzeitig eine HB-Ansteuerung erfolgt oder welches der beiden dominanten Quellpotentiale GND und VCC_{A} zur "Manipulation" durch Offset-Shift nach Maßgabe durch den D/A-Wandler angewählt ist (Override-Funktion).

Von der Logik 199.1 führt noch ein Ansteuerpfad zu einem weiteren Analog-UM-Schalter S₄, über den der Masseanschluß des D/A-Wandlers 199.2 und des Reglers 1991 in Abhängigkeit von einem Steuersignal S₄ (ReFerence) aus der Logik 199.1 wahlweise an z.B. das Potential Chip GND oder den Anschluß 13.2 für das externe Bezugspotential REM GND schaltbar ist.

Ohne Beschränkung der Erfindung deckt eine Funktionalität gemäß diesem Ausführungsbeispiel schon viele eindrähtig ausführbare Potentialtests ab, die in einem Zeitpunkt jeweils eine Offset-Beeinflussung nur eines speisenden dominanten Quellenpegels erfordern.

Das Ausführungsbeispiel gemäß **Fig. 38** stellt eine Erweiterung für Anwendungen dar, in denen eine simultane Offset-Beeinflussung beider speisender dominanter Quellenpegel erforderlich ist. Auch dieses Beispiel stellt keinerlei Beschränkung der Erfindung dar und dient nur zur Funktionalitätsveranschaulichung. Es sind hier beispielhaft zwei separate Regler 1991H und 1991L vorgesehen und eine durch Hilfsstromquellen 1312 und 1313 ermöglichte ungeteilte Erfassung der Ist-Offsets an den Kollektoren der Transistoren 1301 und 1302. Die entsprechende Logik 199.1 verfügt über einen zusätzlichen Ausgang WM (Wire Mode).

Die entsprechende Logik L4 kann ähnlich wie die Logik L3 ausgeführt sein. Dem D/A-Wandler 199.2 ist hier beispielsweise eine zweikanalige Hold-Einrichtung 2001 mit Signalstützen 2002 und 2003 nachgeschaltet, welche von der Interface-Logik 199.1 über zwei zusätzliche Verbindungen (Channel und Strobe) angesteuert und mit ihren zwei Ausgängen 2004 und 2005 die Sollwerteingänge der Regler 199L und 1991H speist. Als Besonderheit sind ein separates Emitterpitch 2000L des Transistors 1301 und eine Abtastleitung 2000H an der Diode 1998 vorgesehen. Als zusätzliche Schutzmaßnahme für den Schaltkreis 200 unter Testbedingungen bei Bus-Fehlern können daran abgreifbare Größen in die in Verbindung mit den **Figen. 14 & 15** bereits beschriebene thermische Überlastabschaltung der Spannungsregler 20U und 20A einbezogen sein.

Eine eindeutige Zuordnungsfähigkeit einzelner Elemente zum Transceiver 100, 100' bzw. zum Funktionsblock 199 wird in der Praxis nur bei relativ geringem Grad der Merkmalsausbildung "Offsetbeeinflussung" gegeben sein. Zudem kann es sinnvoll sein, gewisse, dem Funktionsblock 199 eigentlich zuzurechnende Elemente in der Transceiver-Funktion eingebettet zu integrieren, wie z.B. in dem in **Fig. 39** (nur für Sendebelange) illustrierten Fall.

Dieses Beispiel veranschaulicht in schematischer Vereinfachung die Verteilung beispielhafter Elemente einer Lösung gemäß **Fig. 30** für den Fall zweier ungleichzeitig nutzbarer Offset-Quellen Q_{SL} und Q_{SH} und für den Sonderfall, daß das einspeisende dominante H-Potential nicht größer als VCC_{A} zu sein braucht.

Es ist erkennbar, daß bei einer solchen Lösung die die Potentialverschiebung bewirkenden Elemente - nämlich die Transistoren 1301 und 1302 - zweckmäßig als Bestandteile einer thermisch ausbalancierten Sendeendstufe unschwer integrierbar sind. Kennzeichenmäßig sind sie deshalb auch der Sendeendstufe zugeordnet. Auch dieses Ausführungsbeispiel dient ausschließlich der Veranschaulichung, in welcher Auflösung bzw. Verteilung Elemente ausgebildet sein können und stellt keinerlei Einschränkung der Erfindung dar. Demnach können entsprechende Lösungen unter Verwendung von Feldeffektstrukturen denselben Zweck erfüllen.

Die vorgenannten Ausführungsbeispiele weisen die gemeinsame Eigenschaft auf, daß sie die in den **Figen. 29 bis 33** symbolisierten Offset-Quellen tatsächlich realisieren.

Dies bedeutet, daß das auf der Busader BUS_L bzw. BUS_H tatsächlich bewirkte Potential aufgrund des unvermeidbaren Strömungsspannungsabfalles an der Schutzdiode DL bzw. DH und dem Schutzwiderstand RL bzw. RH von der geregelten Klemmenspannung der Offsetquelle Q_{SL} bzw. Q_{SH} oder Q_{SHH} stets um einen gewissen Betrag abweicht.

Dies kann von einem geeigneten Test-Programm ausgeglichen werden, indem zum einen im Microcontroller 21 durch Abzug bzw. Aufaddition eines entsprechenden festen, korrigierenden Digitalwertes diesem Versatz Rechnung getragen werden kann, oder indem eine generell um einen mittleren Fehlspannungsabfall bereits verschobene Werteliste für die D/A-Wandlervorgaben zur Sollwertbildung für Offset-Quellen im Microcontroller abgelegt bzw. benutzt wird.

Zum anderen kann - je nach Test-Software - für Praktikabilität die Auflösungshöhe eingesetzter D/A-Wandler und die Absolutgenauigkeit der Aderspannungen mit zunehmender Zahl der Teilnehmer im Netz an Bedeutung verlieren, wenn zwecks Testschnelligkeit die onchip des Schaltkreises 200 installierten Funktionalitäten eine hohe Ausnutzung des Schaltkreises zugunsten eines möglichst geringen Signaldurchsatzes über das Busnetz und zugunsten geringsmöglicher Verlustzeiten in SPI-Pfaden zwischen Microcontrollern 21 und Schaltkreisen 200 in Busteilnehmern erlauben.

Die nachfolgenden Ausführungsbeispiele zielen auf Anwendungsfälle ab, in denen demgegenüber eine möglichst direkte, und insoweit genauere Festlegung einer Aderspannung - d.h. eine Spannungseinprägung - testhalber wünschenswert ist.

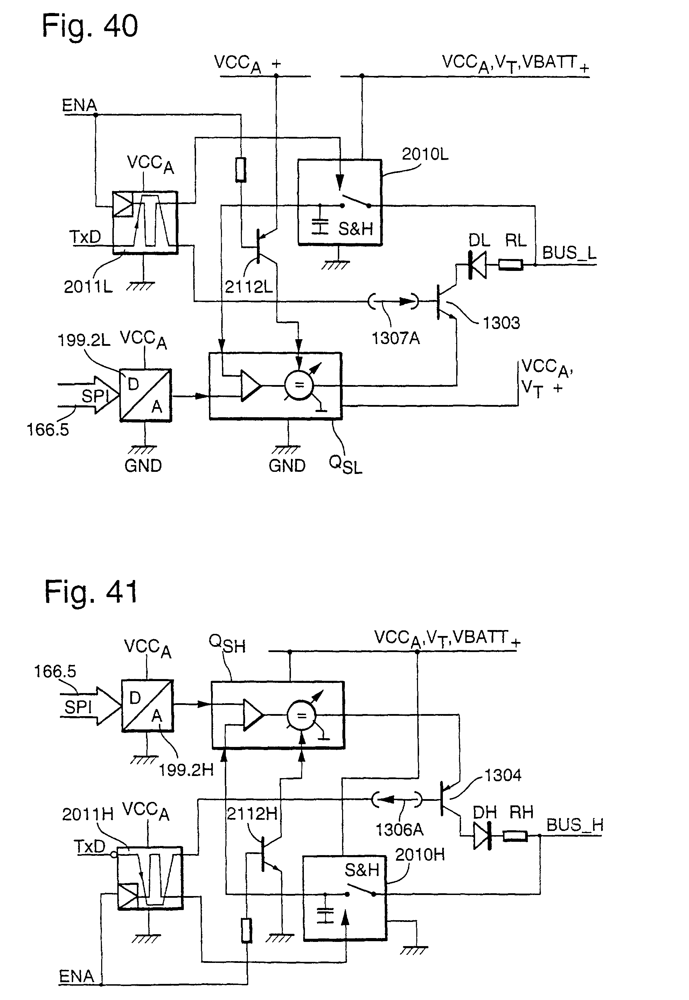

Dabei betrifft das Beispiel gemäß **Fig. 40** eine entsprechende Potentialvorgabe auf die Ader BUS_L, das Beispiel gemäß **Fig. 41** eine solche auf die Ader BUS_H, wobei jeweils nur wesentliche Elemente in beispielhaft möglicher Ausführung dargestellt sind. Insbesondere sind Elemente weggelassen, die eine Regelung unterbinden, wenn z.B. Potentialverhältnisse vorliegen, welche eine Bestromung einer Busader unter Offset nicht erlauben. Soweit einander entsprechende Teile der Funktionalität des Blockes 199 zuzurechnen wären, sind sie auch hier durch die Buchstaben L oder H aderspezifisch voneinander unterschieden.

Beiden Beispielen gemeinsam ist als wesentliches Element eine zwischen Versorgungsklemmen GND und z.B. V_{T} oder VBATT liegende Sample & Hold-Schaltung 2010L bzw. 2010H.

Sie weist einen mit der Busader BUS_L bzw. BUS_H beispielsweise unmittelbar verbundenen Eingang auf. Des weiteren ist eine vorzugsweise vom Datensignal TxD flankengetriggerte Impulsauslöseschaltung 2011L bzw. 2011H vorgesehen, die einen sehr kurzen, innerhalb der Datenbitzeit auf die gepfeilten Taktflanke folgenden Abtast-Impuls SP erzeugt, der hier beispielhaft im ersten Falle nach GND und im zweiten Falle nach V_{T} bzw. VBATT gerichtet ist; die zweckmäßige Polarität richtet sich nach der Technologie des verwendeten Samplers.

Die Sample & Hold-Schaltung 2010L bzw. 2010H umfaßt neben dem eingangsseitigen Sampler noch ein Haltglied und, erforderlichenfalls, auch ausgangsseitige Impedanzkonversionsmittel nach dem Stande der Technik.

Der Transistor 1303 bzw. 1304 ist durch die jeweils wirksame aktive Flanke des Datensignals TxD bereits leitend gesteuert, wenn der Abtastimpuls ausgelöst wird (Positiv-Maskierung). Durch diese Maßnahme ist kurze Zeit später im Augenblick des Abtastens über den leitenden Transistor 1303 bzw. 1304 der Regelkreis vom Ausgang der steuerbaren Offset-Quelle QSL bzw. QSH über den Endstufentransistor 1301 bzw. 1302 sowie die Diode DL bzw. DH und den Schutzwiderstand DL bzw. DH bis zum Eingang der Sample & Hold-Schaltung geschlossen.

Die von der Sample & Hold-Schaltung 2010L bzw. 2010H ausgegebene Abtastgröße und die Sollwertvorgabe vom D/A-Wandler 199.2L bzw. 199.2H werden über Verbindungen der Offset-Quelle Q_{SL} bzw. Q_{SH} zwecks deren Einstellung zugeführt. Durch ein ENA- bzw. NENA-Signal am Aktivierungseingang der Impulsauslöseschaltung 2011L bzw. 2011H und einem Deaktivierungseingang der Offset-Quelle Q_{SL} bzw. Q_{SH} kann letztere zwecks Kurzschluß gegen Masse GND bzw. gegen die Schiene V_{T} oder angesteuert und die Abtastimpulserzeugung in 2011L bzw. 2011H gesperrt werden. In diesem Zustand ist die betroffene Offset-Quelle Q_{SL} bzw. Q_{SH} dann unwirksam.

Selbstverständlich kann im Rahmen der Erfindung das Beispiel gemäß **Fig. 41** wie oben schon gezeigt auch auf zwei entsprechende Quellen Q_{SH} und Q_{SHH} erweitert werden oder eine diese substituierende Ersatz-Versorgungsquelle Q_{VCC'} vorgesehen werden. Auch können beide Beispiele wahlweise für abwechselnde oder gleichzeitige Betreibbarkeit ausgebildet werden.

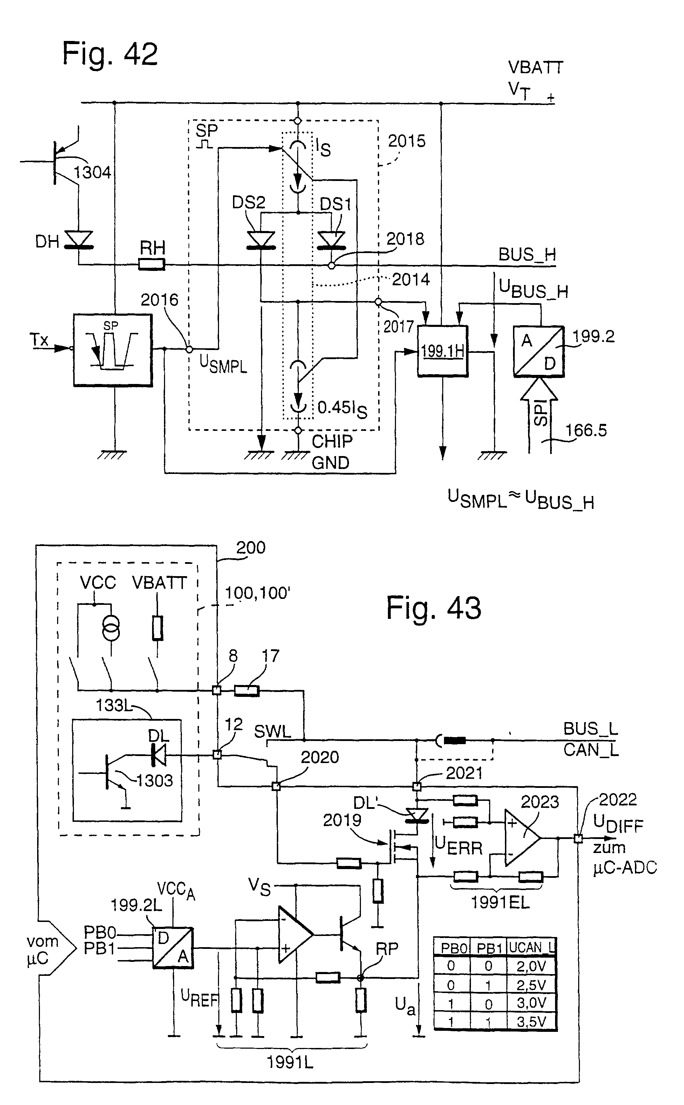

**Fig. 42** veranschaulicht einen für diese Zwecke geeigneten Sampler 2015 - hier beispielsweise beschaltet für die Busader BUS_H -, der monolithisch einfach und genau realisierbar ist. Er verwendet vorzugsweise eine komplementär-balancierte, am Eingang 2016 samplegepulste Stromquellenstruktur 2014 im 20/9-Pitch-Design, sowie eine mit der Bus-ader BUS_H verbundene 2018 Abtastdiode DS1 und eine mit dem Eingang eines Halte-Reglers 199H verbundene Kompensationsdiode DS2 mit einem eingeprägten, zwangsläufigen Flußstromverhältnis von 0.55 zu 0.45. Da der erforderliche Strom Iₛ sehr gering ist, nur im Testbetrieb überhaupt gesampelt wird und entsprechende gesteuerte Stromquellenstrukturen 2015 monolithisch mit geringem Eigenstromverbrauch auslegbar sind, sind besondere Ansteuerungen bzw. Stromfreigabemittel zur Stromersparnis überflüssig.

Die Abtastdiode DS1 erfüllt eine wichtige Schutzfunktion für den nachgeschalteten Regler im Falle eines Kurzschlusses gegen das Potential UBATT bzw. noch höherer Störspannungsbeaufschlagung der Busader BUS_H. Bei geeigneter monolithischer Realisierung der Dioden DS1 und DS2 entsprechend der Busader-Schutzdiode DH liegt, wenn der Endstufentransistor 1304 leitet, die Abtastspannung am Ausgang 2017 nahe bei der tatsächlichen Aderspannung U_{BUS_H}, so daß der residuelle Fehler kleiner als die praktische Auflösungsabstufung von hier relevanten D/A-Wandlern 199.2 ausfällt.

Die Stromquellenstruktur 2014 kann einschließlich der beiden Diodenstrecken DS1 und DS2 klein, kapazitätsarm und -balanciert zu einem Abtastkern 2015 integriert werden, der außer Anschlüssen VBATT bzw. V_{T} und GND für seine Stromversorgung und den Busaderknoten 2018 nur noch zwei weitere Anschlüsse 2016 und 2017 aufweist. Bei nur kleinen Abtastströmen wie vorliegend von Interesse und entsprechender Berücksichtigung im monolithischen Design kann eine gegenseitige Kompensation von Richtspannungen in der Zelle 2015 realisiert und somit - trotz schneller Reaktion dieses Samplers (und damit auch einer möglichen Regelung) auf Gleichspannungsänderungen am Buskoppelknoten 2018 - ein relativ hoher Störabstand gegenüber hochfrequenten Störungen auf der Busader erreicht werden (EMV).

Diese Lösung ist also vorteilhaft insoweit, als eine unvermeidbare Fehlerspannung zwar auch hier entsteht, aber noch am selben Ort und bei derselben monolithischen Struktur, in der sie zwangsläufig verursacht wird, unter Nutzung genau desselben physikalischen Wirkprinzips, das ihrer Entstehung zugrundeliegt, kompensiert wird.

Daraus folgt auch eine innerhalb weiter Grenzen realisierbare thermische Invarianz der Fehlerkompensation.

Aus diesen Gründen kann auf sonstige Kompensationsunterstützung seitens des Schaltkreises 200 oder gar eine Beanspruchung des Microcontrollers 21 zum Zwecke einer rechnerischen Kompensation verzichtet werden.

Die in Verbindung mit **Fig. 7** und **Fig. 23** erläuterte Isolationsfunktion des Schaltkreises 200 für den empfindlichen Microcontroller 21 bleibt auf diese Weise unangetastet. Der beschriebene Sampler stellt selbstverständlich keinerlei Einschränkung der Erfindung dar; vielmehr fallen in deren Rahmen auch andere Lösungen zur Verwirklichung sowohl einer Rückwärtsisolation gegen Überspannungen auf einer Busader und einer entsprechenden Fehlspannungskompensation.

Das Ausführungsbeispiel gemäß der **Fig. 43** wird einem anders gelagerten Anwendungsfall gerecht, daß ein leistungsfähiger Microcontroller mit dem Schaltkreis zusammenarbeitet, die Inanspruchnahme seiner Rechenleistung und eine entsprechende Inanspruchnahme des digitalen Pfades 166.5 nicht stört oder aber eine Integration eines in obigem Sinne schützenden und physikalisch fehlerspannungskompensierten Samplers gemäß **Fig. 42** o.ä. im Schaltkreis 200 nicht möglich ist.

In diesem Ausführungsbeispiel für die Busader BUS_L wird die eigentliche Ader-Endstufe 133L nicht zwecks Einspeisung des erstrebten Aderpotentials, sondern nur als Treiberstufe zur Ansteuerung eines eine Ersatzeinspeisung leistenden Ersatzschalters 2019 benutzt, der seinerseits durch eine separate Schutzdiode DL' mit der Busader BUS_L in Verbindung steht. Der vom dominanten Einspeispotential in den Bus abfließende Strom nimmt hier also einen ganz anderen Weg, nämlich vom Regelpunt RP am Ausgang des Aderpotentialreglers 1991L über die Schaltstrecke des Transistors 2019 und die Schutzdiode DL'. Um dies zu ermöglichen, ist ein niederohmiger Umschalter SWL vorgesehen, der für die Dauer entsprechender Potentialtests in den gezeigten Schaltzustand zu aktivieren ist.

Der Regler 1991L wird von einem D/A-Wandler 199.2L mit einem Sollwert für die am am Regelpunkt RP einzustellende Spannung versorgt. Die Fehlerspannung U_{ERR}, die längs den Elementen 2019 und DL' stromflußbedingt abfällt, wird mit einem weiteren, zu einem Meßverstärker 1991EL beschalteten Verstärker 2023 erfaßt und die entsprechende analoge Ausgangsspannung U_{Diff} einem A/D-Eingang des Microcontrollers 21 in **Fig. 7 bzw. 23** zugeführt.

Der Microcontroller 21 kann so aus der digital gewandelten Fehlerspannung U_{Diff} und der aktuellen digitalen Sollwertvorgabe für den D/A-Wandler 199.2 den Wert der Busaderspannung berechnen, bei durch die Stufigkeit des D/A-Wandlers 199.2L vorgegebener Auflösung. Vorzugsweise realisiert der Regler 1991L in Verbindung mit der Kompensation der Fehlerspannung U_{ERR} in Bezug auf die Busader BUS_L eine strombegrenzte Spannungsquelle mit einem Maximalstrom von 200 mA, bei dessen Erreichung die einspeisende Quellenspannung zusammenbricht.

Abgesehen vom Anschluß 2022 für den Analogausgang des Verstärkers 2023 sind bei Realisierung des Umschalters SWL außerhalb des Schaltkreises 200 weitere Anschlüsse 2020 und 2021 am Schaltkreis 200 notwendig. Die Mittel für die entsprechende Beaufschlagung der Busader BUS_H entsprechen den vorbeschriebenen.

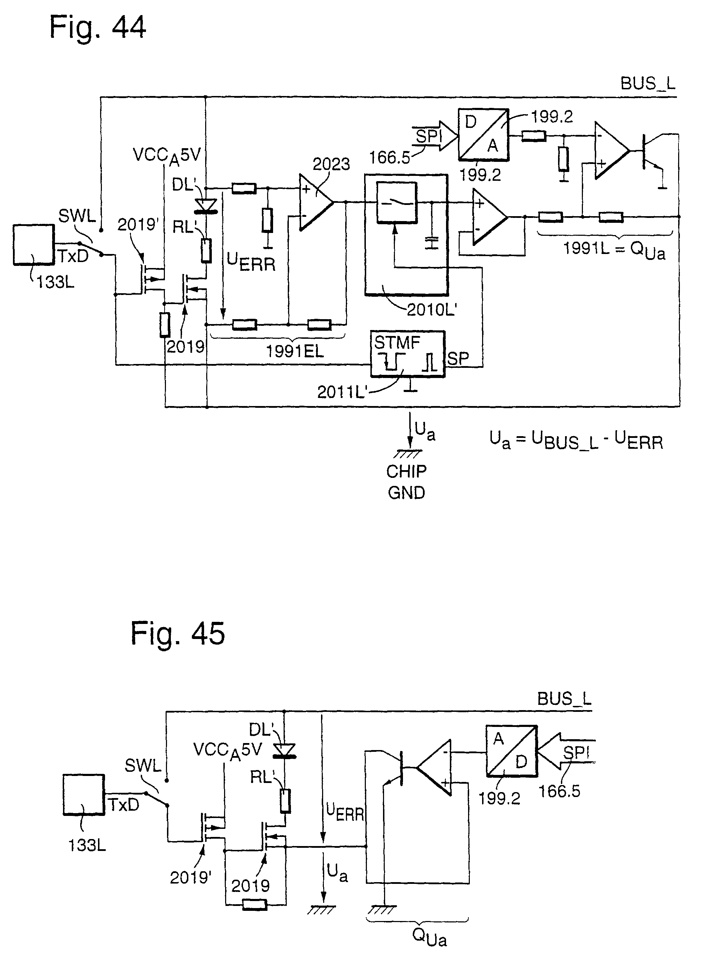

Das Ausführungsbeispiel gemäß **Fig. 44** vermeidet den erstgenannten Anschluß und den Kompensationspfad über den Microcontroller, indem es nicht die Aderspannung U_{BUS_L}, sondern die vorgenannte Ausgangsspannung des Meßverstärkers 1991EL mittels einer Sample & Hold-Schaltung 2010L' abtastet und festhält. Diese wird von einer Impulsauslöseschaltung 2011L' mit einem Abtastimpuls SP beaufschlagt, der - verkettet mit dem Datensignal TxD - nach dessen aktiver Flanke erzeugt wird. Ohne Beschränkung der Allgemeinheit der Erfindung kann dies ein flankengesteuerter monostabiler Multivibrator STMF z.B. leisten.

Die der Fehlerspannung U_{ERR} entsprechende, durch 2010L' gehaltene Fehlergröße wird dem Aderpotentialregler 1991L als Störgröße aufgeschaltet und analog verrechnet, um so im Rahmen der Auflösung des D/A-Wandlers 1992L eine der auf dem digitalen Pfad 166.5 vorgegebenen Größe entsprechende Aderspannung U_{BUS_L} als Summe der Reglerausgangsspannung Uₐ und der jeweiligen Fehlerspannung U_{ERR} zu erhalten.

Entsprechendes gilt auch für das Ausführungsbeispiel gemäß **Fig. 45**, welches auf eine Erfassung der FehlerSpannung U_{ERR} gänzlich verzichtet und dieser durch Berücksichtigung eines festen Zusatz-Offsetwertes in der Sollwertvorgabe über den digitalen Pfad 166.5 vom Microcontroller 21 Rechnung trägt. Insoweit liegt diesem Ausführungsbeispiel das bereits aus den Beispielen gemäß den **Figen. 29 - 33** und **36 - 39** bekannte Prinzip zugrunde.

**Fig. 46** veranschaulicht beispielhaft einen Empfangsblock 120' als Bestandteil des Transceivers 100/100' nicht nur für Empfangszwecke, sondern auch zur Verifikation von Kommunikationsfehlern, beispielsweise auch als Folge von Bezugspotentialfehlern des elektronischen Gerätes das diesen Empfangsblock enthält, in Verbindung mit vorbeschriebenen Funktionalitäten des Blockes 199 und kooperativen Pegelshift-Merkmalen der Endstufe 133 im Transceiver 100/100'.

Der Empfangsblock 120' umfaßt ein analog wirkendes Frontend 121, eine digitale Auswertungslogik 128 und eine Auslese- und Kontrolllogik 129.

Das Frontend (LEVEL DISCRIMINATING SECTION) umfaßt drei analog wirkende Pegeldiskriminatoren 121.1 bis 121.3. Diese sind vorzugsweise als Komparatoren ausgeführt und generieren durch analogen Vergleich der Busleitungspegel in Bezug aufeinander sowie auf ein Referenzpotential VREF digital weiterverarbeitbare Signalpegel und Flanken.

Die Auswertungslogik (PROCESSING & ANALYZING SECTION) enthält eine Schaltkreisfunktion 122', welche zum einen aus den definierten Signalpegeln und -flanken die serielle Businformation RxD als digital normierten Bitstrom wiedergewinnt, und zum anderen Busfehler leitungsaderabhängig zu erkennen vermag. Zu diesem Zweck ist die Schaltkreisfunktion 122' auch für eindrähtigen Empfang (über GND) ausgebildet.

In diesem Zusammenhang kann die Auswertungslogik 128 digitale Schaltkreisfunktionen 123H und 123L umfassen, welche es erlauben, ein jeweils für die zugeordnete Bus-ader BUS_H/CAN_H bzw. BUS_L/CAN_L indikatives Fehlersignal bei Erreichen oder Überschreiten einer voreinstellbaren Zahl von unmittelbar oder überhaupt aufeinanderfolgenden Bitfehlern abzugeben (Bitfehlertiefendiskriminator bzw. Bitfehlerakkumulationsdiskriminator). Zu diesem Zweck sind die Schaltkreisfunktionen 123H und 123L mit der Schaltkreisfunktion 122' multipel verbunden.

Die Auslese- und Kontrolllogik (READOUT & ONCHIP CONTROL) umfaßt eine zu einem Steuerungsinterface 124 zusammengefaßte Funktionalität, welche wenigstens teilweise auch Bestandteil des digitalen SPI-Interfaces 166 gemäß **Figen. 6, 16 & 26** bzw. mit diesem zusammengefaßt sein kann, sowie vorzugsweise wenigstens zwei Speicherzellen 127H und 127L mit Setzeingängen 127H1 bzw. 127L1, Rücksetzeingängen 127H2 bzw. 127L2 und Zustandsausgängen 127H3 bzw. 127L3. Diese können innerhalb des Gesamtschaltkreises schaltungstopologisch auch Teil eines größeren Fehlerspeichers etwa in Verbindung mit einem EEPROM 35 in **Figen. 5, 7, 9, 10 & 23** sein.

Beispielhaft sind die Rücksetzeingänge 127H2 und 127L2 sowie die Zustandsausgänge 127H3 und 127L3 der diskreten Speicherzellen 127H und 127L mit dem Steuerungsinterface 124/166 verbunden. Der Setzeingang 127H1 ist vonseiten der Schaltkreisfunktion 123H mit einem Fehlersignal beaufschlagbar. Der Setzeingang 127L1 ist vonseiten der Schaltkreisfunktion 123L mit einem Fehlersignal beaufschlagbar. Verbindungen 126H und 126L ermöglichen die Übertragung von Einstellinformation bezüglich der zu diskriminierenden Bitfehlertiefe bzw. zu akkumulierenden Bitfehlerzahl sowie der Selektion dieser beiden Diskriminationsweisen vom Steuerungsinterface 124/166 an die Schaltkreisfunktionen 123H bzw. 123L. Verbindungen 125 ermöglichen die Übertragung von Einstellinformation vom Steuerungsinterface 124/166 an die Schaltkreisfunktion 122', welche u.a. auch wenigstens ein Speicheroder Schiebe- und/oder Zählregister enthalten kann.

Optional kann das Steuerungsinterface ferner mit Mitteln 170.2 zur Slew-Rate-Beeinflussung im Frontend 121 und in der Auswertungslogik 128 in Wirkverbindung stehen und ist dann vorzugsweise auch über den SPI-Bus 166.5 mit der Umgebung des Empfangsblockes 120' kommunikationsfähig.

Die Slew-Rate-Beeinflussung kann Analysen von aderspezifischen Bitfehlern sowohl in Zusammenwirken mit den vorbeschriebenen Funktionalitäten des Offset- und Bus-Test-Managers 199 und den kooperativen Pegelshift-Merkmalen der Endstufe 133 im Transceiver 100/100' als auch bei kapazitven Störungen im Busnetz sowie bei Kommunikationsstörungen infolge elektromagnetischer Störeinwirkungen auf das Busnetz oder einen Busteilnehmer unterstützen.

Ein solcher Empfangsblock 120' eines Transceivers 100' kann neben seiner normalen Bus-Empfangsfunktion unter einer geeigneten Bus-Management-Software busleitungsbezogen Fehleranalysen unter SPI-Kontrolle unterstützen. Dieser Empfangsblock 120' kann in Verbindung mit vorbeschriebenen Funktionalitäten des Offset- und Bus-Test Managers 199 und kooperativer Pegelshift-Merkmale der Endstufe 133 die Gesamtfunktionalität des Halbleiterschaltkreises 200 erweitern, nämlich auch hinsichtlich Überwachungs- und Diagnosefunktionen bezüglich der Bestimmung von Busteilnehmern mit bezugspotentialfehlerbasierten Kommunikationsstörungen. In diesem Zusammenhang kann er als Bestandteil eines busweit aufgelösten Testsystems verstanden und betrieben werden, letztwelches sich hardwaremäßig wenigstens auf eine Mehrzahl entsprechend ausgestatteter Transceiver im Busnetz stützt.

Keinesfalls ist dieses Ausführungsbeispiel als Einschränkung der Erfindung zu verstehen. Vielmehr kann der Empfangsblock 120' insbesondere bezüglich seiner Abschnitte 128 und 129 auch anders strukturiert sein bzw. dort vom vorliegenden Ausführungsbeispiel abweichende Funktionsblöcke umfassen, um insgesamt die beschriebenen Diskriminationsmerkmale zu realisieren.

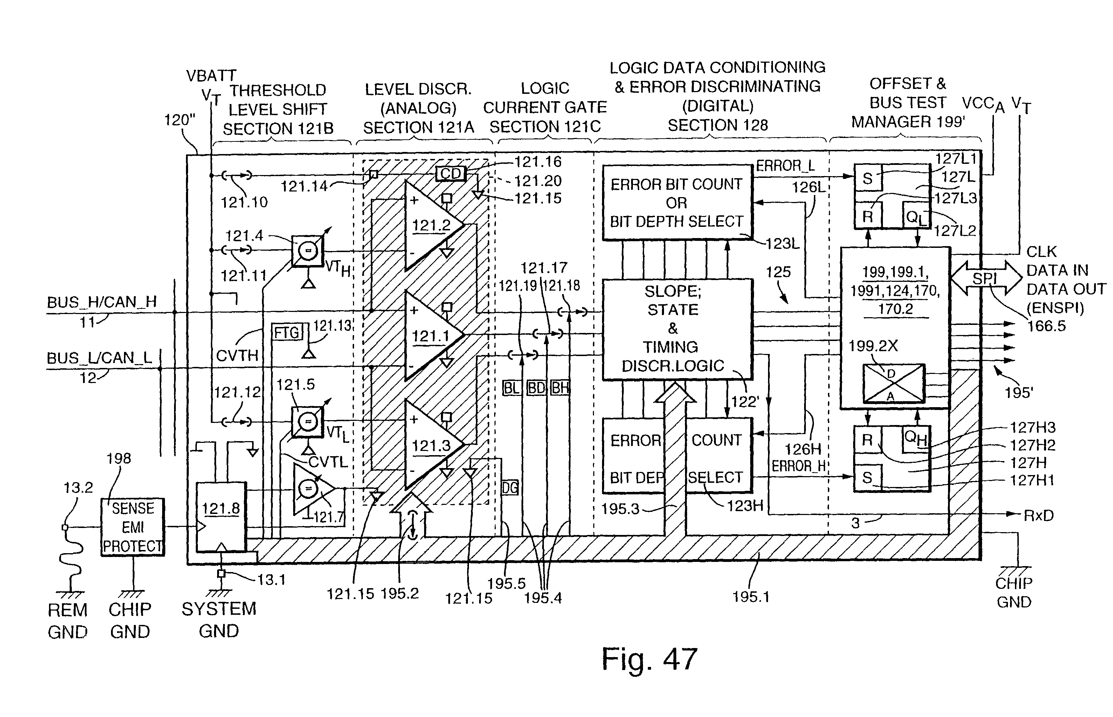

Eine noch weiterreichende Unterstützung von Fehleranalysen bei Vorliegen unexakter Buspegel ist mit einem weiter fortgebildeten Empfangsblock 120" gemäß **Fig. 47** möglich. Er leistet zunächst wie der zuvor beschriebene eine normale zwei- und eindrähtige Empfangsfunktion. Unter Kontrolle durch eine geeignete Diagnose-Software stützt er in Verbindung mit Funktionalitäten eines hier beispielhaft dem Block 120" zugeordneten Offset- und Bus-Test-Managers 199' und den oben beschriebenen Pegelshift-Merkmalen der Endstufe 133 Bezugspotentialfehler-, Buspegel- und Busfensteranalysen auf aktive Weise.

Dabei umfaßt der Empfangsblock 120'' ebenfalls einen analog wirkenden Pegeldetektionsabschnitt 121A, einen Schwellwertvorgabe- bzw. -shiftabschnitt 121B, einen logischen Stromkopplungsabschnitt 121C, eine digitale Auswertungslogik 128A und besagten Offset- und Bus-Test-Manager 199', der hier eine weiter gespannte Funktionalität aufweist als im Falle einer Offsetbeeinflussung nur auf der Sendeseite.

Der Pegeldetektionsabschnitt (LEVEL DISCRIMINATING SECTION) umfaßt drei analog wirkende Pegeldiskriminatoren 121.1 bis 121.3. Diese sind vorzugsweise als Komparatoren ausgeführt.

Der Komparator 121.1 generiert durch Vergleich der zwei Busleitungspegel in Bezug aufeinander ein erstes digitales Ausgangssignal. Der Komparator 121.2 generiert durch Vergleich des Pegels der Busader BUS_H/CAN_H mit einer ersten Schwellwertspannung VT_{H} einer ersten Schwellwertquelle 121.4 ein zweites digitales Ausgangssignal. Der Komparator 121.3 generiert durch Vergleich des Pegels der Busader BUS_L/CAN_L mit einer zweiten Schwellwertspannung VT_{L} einer zweiten Schwellwertquelle 121.5 ein drittes digitales Ausgangssignal. Alle drei Komparatoren erzeugen digital weiterverarbeitbare Signalpegel und -flanken.

Im Gegensatz zur **Fig. 46** sind die Diskriminatoren 121.1 bis 121.3 so angelegt, daß sie zusammen mit ihren jeweiligen Versorgungsanschlüssen niedrigeren und höheren Potentials gegenüber dem Chip-Substrat elektrisch "angehoben" werden, d.h. "floaten" können. Dies ist durch eine besondere monolithische Konstruktion und Isolation im Aufbau des Halbleiterchips sowie dadurch gewährleistet, daß ihre jeweiligen Versorgungsanschlüssen niedrigeren Potentials - in der Figur gekennzeichnet durch Dreiecke mit Spitze nach unten - und höheren Potentials - in der Figur gekennzeichnet durch Quadrate - galvanisch untereinander verbunden sind. Diese Einheit ist in der Figur schraffiert unterlegt und mit 121.20 gekennzeichnet. Die durch Quadrate markierten Anschlüsse stehen so mit einem (hier positiver angenommenen Versorgungsanschluß 121.14 und die mit Dreieck mit Spitze nach unten markierten Anschlüsse mit beispielhaft drei (hier negativer angenommenen und untereinander verbundenen) Versorgungsanschlüssen 121.15 in Verbindung. Um eine konstante Versorgungsspannung der Komparatoren sicherzustellen, umfaßt die Struktur 121.20 hier beispielhaft noch eine Spannungsklammer oder einen Regler 121.16, der zwischen die Versorgungsanschlüsse 121.14 und 121.15 geschaltet ist und beispielhaft über eine Stromquelle 121.10 von einem der Potentiale VBATT oder V_{T} aus versorgt sein kann.

Der Schwellwertvorgabe- bzw. -shiftabschnitt (THRESHOLD LEVEL SHIFT SECTION) umfaßt beispielhaft eine erste einstellbare Schwellspannungsquelle 121.4 für ein Schwellpotential VT_{H} und eine zweite einstellbare Schwellspannungsquelle 121.5 für ein Schwellpotential VT_{L}, die über entsprechende Steuerpfade CVTH und CVTL einstellbar sind und die im allgemeinsten Falle ähnlich wie die vorgenannten Komparatoren auf eine eigene negative Bezugspotentialschiene 121.13 - symbolisiert durch Dreiecke mit Spitze nach oben - bezogen sein können, die erforderlichenfalls auch anhebbar ist. Beispielhaft werden die Schwellspannungsquellen 121.4 und 121.5 aus Stromquellen 121.11 und 121.12 versorgt. Zu deren Speisung kann eine Speisung des Abschnittes 121B aus einem der Potentiale VBATT oder V_{T} vorgesehen sein.

Des weiteren ist diesem Abschnitt eine durch Ansteuerung entsprechend einstellbare Offset-Quelle 121.7 zugeordnet, die mit ihrem Ausgang vorzugsweise den negativen Versorgungsanschluß 121.15 im Abschnitt 121A speist und damit - bei durch das Element 121.16 konstant gehaltener Versorgungsspannung der Komparatoren 121.1 bis 121.3 - deren negatives Versorgungspotential um einen definierten Offset anzuheben erlaubt. Zu diesem Zweck kann diese Quelle als Regelverstärker ausgeführt sein, dessen Eingang von einem besonderen Block 121.8 angesteuert wird, an den auch der Ausgang des Regelverstärkers zurückgeführt ist. Dem Funktionsblock 121.8 kann vom Schaltkreisanschluß 13.1 und/oder 13.2 Massepotential aus dem Gerät, in welchem der Schaltkreis eingesetzt ist und/oder von einem Bezugspotential im Applikationsumfeld zuführbar sein.

Der Funktionsblock 121.8 steht über den Steuerpfad 195.1 mit dem Offset- und Bus-Test-Manager 199' in Verbindung. Vom Block 121.8 aus ist die Offset-Quelle 121.7 ein- und ausschaltbar, bei Bedarf über den Pfad 195.5 auch kurzschließbar und mit einer über den Steuerpfad 195.1 vom Funktionsblock 199' bezogenen Sollwertvorgabe ansteuerbar.

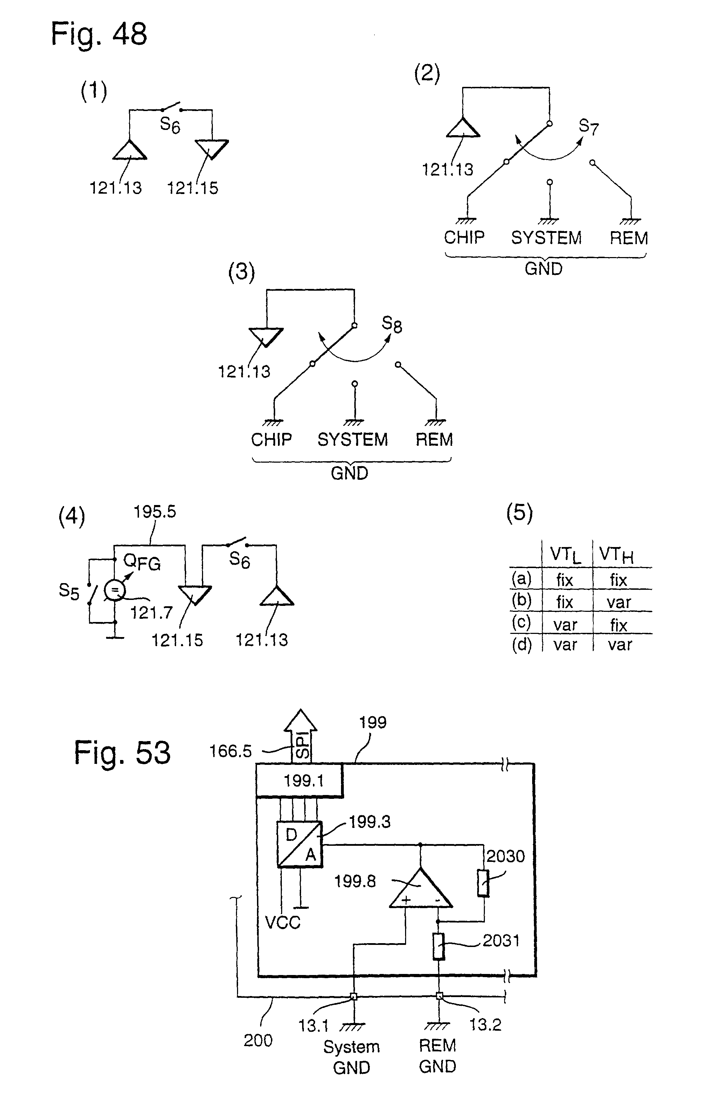

Eine weitere Funktion des Blockes 121.8 besteht in der Selektion von Masse- bzw. Bezugspotentialen. Ohne Beschränkung der Allgemeinheit der Erfindung ist eine beispielhafte Funktionalität des Blocks in **Fig. 48** veranschaulicht; je nach dem Grad der Merkmalsausbildung in einem praktischen Schaltkreis brauchen nicht alle Selektionsmöglichkeiten zugleich ausgebildet sein. Es können auch nur einige davon durch Einmalprogrammierung ausgewählt verfügbar sein, worauf weiter unten noch eingegangen wird. Insoweit umfaßt der Block 121.8 also Mittel, welche entsprechend ihrer Ansteuerung über den Pfad 195.1 im Effekt die in der Figur dargestellten Potentialbezugnahmen für den Empfangsblock 120" erlauben können. In diesem Zusammenhang kann der Block 121.8 steuerbare Analogschalt- bzw. Selektorstrecken S₅ bis S₈ umfassen. Des weiteren können Mittel vorhanden sein, die es erlauben, daß diese Strecken bei Bedarf vom Block 199' aus per Software vom Microcontroller für Kalibrierzwecke aus- und ein- bzw. umschaltbar sind.

Die Ausgänge der Komparatoren 121.1 bis 121.3 sind vorzugsweise über logische Strompfade 121.17, 121.18 und 121.19 mit einer Auswertungslogik 128 verbunden. Dabei können die Strompfade über Statusleitungen 121.17 (BD), 121.18 (BH) und 121.19 (BL) im Sinne einer Signalunterbrechung schaltbar sein, um selektive Signalunterbrechungen zu ermöglichen.

Die Auswertungslogik (LOGIC DATA CONDITIONING & ERROR DISCRIMINATING SECTION) enthält eine Schaltkreisfunktion 122', welche im wesentlichen der Schaltkreisfunktion 122 in **Fig. 46** entsprechen und die dort schon beschriebenen Funktionen erfüllen kann und für zweidrähtigen und eindrähtigen Empfang (über GND) ausgebildet ist. Dabei können auch hier die Elemente 123L und 123H insbesondere für Fehleranalysen im Zweidrahtmodus besonders ausgebildet sein.

In dem beispielhaft daran angeschlossenen Offset- und Bus-Test-Manager 199' sind schon beschriebene Funktionen des entsprechenden Blocks 199 gemäß **Fig. 28** beispielhaft zusammen mit Schaltkreisfunktionen 124, 170 und 170.2 aus **Figen. 4 und 46** integriert. Die Speicherzellen 127H und 127L können hier als Bestandteil eines größeren Registers angelegt sein, welches der Block 199' zur Zwischenspeicherung von SPI-Daten enthält. Gleichwohl können sie auch Bestandteil wenigstens eines Teils eines Fehlerspeichers in Verbindung mit einem EEPROM 35 gemäß **Figen. 5, 7, 9, 10 & 23** sein, der dem Block 199' zugeordnet sein kann.

Der Steuerpfad 195.1 ist ein multipler und kann als solcher in einem praktischen Schaltkreis auch analoge und digitale Funktionselemente mehr oder weniger verteilt umfassen, die den Block 199' an unterschiedliche Ansteuererfordernisse anpassen. Beispielhaft kann die aus dem Potential VCC_{A} versorgte Festspannungslogik des Abschnitts 128 über den Steuerpfad 195.3 anders anzusteuern sein als die logischen Strompfade 121.17 bis 121.19 über Steuerpfade 195.4, die Schwellwert-Offset-Quellen 121.4 und 121.5 oder - zwecks Slewrate-Beeinflussung über den Pfad 195.2 - der "schwimmende" Pegeldiskriminationsabschnitt 121.20.

Vom Block 199' führen des weiteren zur Sendeendstufe 133 bzw. zu im Sendefalle wirksamen Offset-Quellen Q_{SL}, Q_{SH} und/oder Q_{SHH} bzw. Schalt- und Steuerpfade 195'. Als zentrales Element umfaßt der über den Digitalpfad 166.5 kommunikationsfähige Block 199' Konversionsmittel 199.2X zur Wandelung digitaler Signale in analoge. Die Erfindung umfaßt dort aber auch die umgekehrte Konversionsrichtung. In letzterem Falle können je nach Ausbildung des Steuerpfades 195.1 Teile eines solchen Wandlungspfades auch in den Block 121.8 vorverlagert sein, vgl. **Fig. 53**.

Ohne Beschränkung der Erfindung kann der Block 199' also Funktionalitäten in sich vereinigen, welche sowohl mit der Erfassung von Fehlersignalen (als Ergebnis von Fehlerprüfungen unter fehlerbedingten bzw. testhalber erzeugten Offsetbedingungen) als auch mit der Beeinflussung der Empfangs- und/oder Sendemittel zu tun haben, um dadurch entweder in einem Beobachtungsteilnehmer - in welchem ein so beschaffener Halbleiterschaltkreis 200 sich befindet - zwecks Wiederherstellung einer potentialfehlerbedingt zuvor verloren gegangenen Kommunikationsfähigkeit mit einem anderen Busteilnehmer entsprechend "abnormale" Sende- und Empfangsbedingungen zu suchen und zu finden und einzustellen, oder die Empfangsund/oder Sendemittel unter einer Diagnose-Software in der Art eines "Testempfängers" bzw. "Testsenders" zu betreiben.

Ein solcher Empfangsblock 120" als Bestandteil des Transceivers 100' kann in Verbindung mit vorbeschriebenen Funktionalitäten eines Offset- und Bus-Test Managers 199' und kooperativer Pegelshift-Merkmale der Endstufe 133 weitreichende Fehleranalysen unter SPI-Kontrolle durch einen Microcontroller unterstützen. Dabei kann es je nach Testaufgabe ausreichen, nur ganz spezifische Merkmale auszubilden oder - soweit ausgebildet - wirksam schalten zu können. Beispielhaft sind einige Möglichkeiten in **Figen. 49 - 52** ausgeführt.

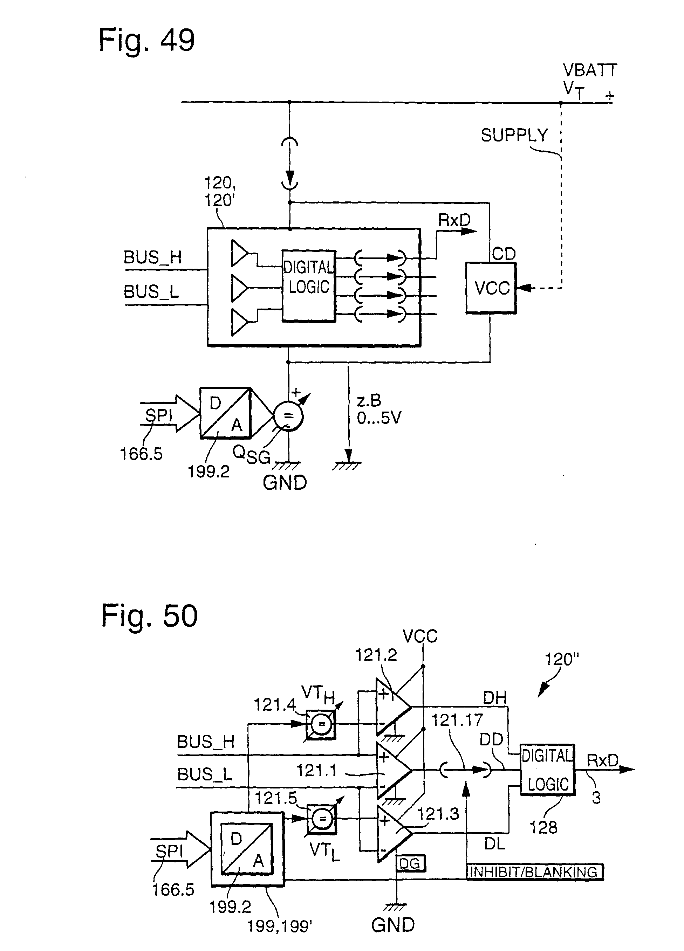

Gemäß **Fig. 49** ist der gesamte, vermöge einer Spannungsklammer oder eines Reglers CD mit einer Spannung VCC konstant versorgte Empfangsblock 120', 120" nach Maßgabe durch eine Offset-Quelle Q_{SG} um beispielhaft 0...5 Volt anhebbar. Dabei können die Schwellenspannungen VT_{H} und VT_{L} innerhalb des Empfangsblockes fest, auf netzspezifisch festgelegte feste "Abweichungswerte" umschaltbar oder variabel sein, was z.B. dem Fall (4) in **Fig. 48** bei geschlossenem Schalter S₆ entspricht; die entsprechenden Einstellsignale CVTH und CVTL können dann z.B. auch durch Stromsignale realisiert werden. Dieses Beispiel stellt insoweit eine Abwandlung des Beispiels gemäß **Fig. 47** dar, als hier von einer zusammen mit den Eingangskomparatoren mitschwimmenden digitalen Auswertung ausgegangen wird, die dann ihrerseits ausgangsseitig über logische Strompfade an die Schaltkreisumgebung signalflußmäßig angeschlossen ist.

Gemäß **Fig. 50** ist der negative Versorgungsanschluß DG mit Masse GND verbunden, hat also z.B. das Potential des Chip GND. Testerfordernissen gemäß eingestellt bzw. mit einem Offset unterlagert werden nur die Schwellenspannungsquellen für die Komparatoren 121.2 und 121.3. Dazu kann der Digitalpfad 121.17 zwischen dem Komparator 121.1 und der Auswertungslogik 128 bedarfsweise unterbrochen werden, entsprechend 121.17 und BD 195.4 in **Fig. 47**.

Das Beispiel gemäß **Fig. 51** entspricht dem Beispiel gemäß **Fig. 47** für den Spezialfall gemäß **Fig. 48 (1) & (5)(a),** wobei die Schwellenspannungen VT_{H} und VT_{L} unveränderlich vorgegebene Größen sind und durch Gesamtanhebung des analoc wirkenden Diskriminationsteils 121.20 mittels einer Fußpunkt-Offest-Quelle Q_{SG} somit gemeinsam gegenüber Massepotential verschiebbar sind.

In **Fig. 52** ist eine z.B. für Massepotentialfehleranalysen ausreichende Konfiguration ersichtlich, bei der die Versorgungsanschlüsse sowohl des analog wirkenden Diskriminationsteils 121.20 als auch der Sendeendstufe 133 aus ein- und der/demselben Spannungsklammer bzw. Spannungsregler versorgt werden und insoweit zusammen mittels einer Fußpunkt-Offset-Quelle Q_{SG} über ein Potential GND anhebbar sind. Sowohl sende- als auch empfangsseitig eine entsprechend flexible Potentialanbindung der Digitalsignale TxD und DH, DD und DL leistende Strompfade sind ebenfalls angedeutet, ebenso der oben erwähnte Speicher 142' zur Ermöglichung der Sperrung der Endstufe 133 (kein Buszugriff).

Das Ausführungsbeispiel gemäß **Fig. 53** veranschaulicht das Wirkschaltbild einer optinalen Ausstattung des Funktionsblockes 199' wie schon in Verbindung mit **Figen. 32 & 47** erwähnt. Es handelt sich dabei um einen für eine definierte Verstärkung mit Widerständen 2030 und 2031 beschalteten Meßverstärker 199.8, dessen Ausgang zusätzlich vorgesehene Mittel 199.3 zur Analog/Digital-Wandlung speist. Diese Mittel stehen mit der als Interface zum SPI-Pfad 166.5 wirkenden Logik 199.1 in Verbindung und erlauben so, daß die analog erfaßte Differenz beispielsweise zwischen System GND und REM GND an den Microcontroller digital übermittelbar ist. Wie schon erwähnt können diese Elemente gleichwohl dem Block 121.8 in **Fig. 47** zugeordnet sein.

Alle bis hierher erläuterten Ausführungsbeispiele stützten sich auf wenigstens einen D/A-Wandler, der nach Maßgabe durch über den digitalen Pfad 166.5 empfangene Daten einen analogen Sollwert bereitstellt.

Gemäß **Fig. 54** umspannt der Rahmen der Erfindung weiter, daß alle Sollwertvorgaben und Aktivierungsbefehle für Offset-Quellen, wie sie für praktische Bus-Test-Routinen benötigt werden, im Halbleiterschaltkreis 200 selbst von einer zentralen Schaltkreisfunktion 199.2X generiert werden, welche wesentlicher Bestandteil einer entsprechend erweiterten Funktionalität 199', wie in **Fig. 47** bereits angedeutet, ist. Im Rahmen dieser Funktionalität kann optional auch die Berücksichtigung einer Spannungsdifferenz zwischen den Anschlüssen Chip- oder System GND 13 oder 13.1 und REM GND 13.2 erfolgen. Des weiteren kann diese Funktionalität die Fähigkeit zur Messung der Busaderspannungen immanent sein. Im Rahmen der vorliegenden Erfindung ist also vorgesehen, daß ein entsprechender (mehr oder weniger in einem praktischen Schaltkreis aufgelöster) Funktionsblock 199.2X insbesondere alle D/A-Wandler in den bis hierher beschriebenen Ausführungsbeispielen substituiert, um unter einer spezifischen Software zur Auto-Diagnose eines vielteilnehmrigen Busnetzwerkes alle Anforderungen des Ramping und Squeezing von Kommunikations-Pegelfenstern sende- und empfangsmäßig zu erfüllen.

Dieser Funktionsblock kann also so beschaffen sein, daß er u.a.
(1) wenigstens eines der ENAable-Signale zur Aktivierung und Sperrung sende- und empfangsmäßig wirksamer Offset-Quellen Q_{SG} gemäß Fig. 29; Q_{SL}, Q_{SH}, Q_{SHH}, Q_{VVC}, gemäß Figen. 30 & 31 & 32 & 33; 121.7/Q_{DG}, 121.4/VT_{H} und 121.5/VT_{L} gemäß Fig. 47,
(2) wenigstens einen der von busspezifischen Standardwerten abweichenden Sollwertvorgaben bzw. Einstellwerte für QSG gemäß Fig. 29; Q_{SL}, Q_{SH}, Q_{SHH}, Q_{VVC} gemäß Figen. 30 & 31 & 32 & 33; 121.7/Q_{DG}, 121.4/VT_{H} und 121.5/VT_{L} gemäß Fig. 47,
(3) wenigstens ein Einstell- oder Schaltsignal zur Beeinflussung der sendeseitigen Slewrate (170.3 gemäß **Fig. 4**) und/oder zur Beeinflussung der empfängerseitigen Auswertung von busaderbezogenen Referenzsignalen für steuerbare logische Pfade (121.17 [Blanking Differential BD], 121.18 [Blanking High BH], 121.19 [Blanking Low BL] gemäß **Fig. 47**) und/oder der Empfangsfehlerdiskrimination (126L [L_Error Detection Format], 126H [H_Error Detection Format]) und/ oder Slewrate-Anpassung (195.2 i.V. mit 170.2 [Set Slewrate], 195.3 [Slope and/or Timing to Slewrate Match] gemäß **Figen. 4 & 47**),
(4) wenigstens ein Einstell- oder Schaltsignal zur Verwirklichung der Schalt- und/oder Selektorfunktionen S₅ bis S₈ gemäß **Fig. 48**
bereitstellen kann, wie in **Fig. 54** illustriert.

Eine solche Fortbildung der Erfindung erlaubt eine unbeschränkte Beeinflussungsmöglichkeit der vom Bus-Empfänger diskriminierbaren Buspegel, und zwar entweder einen von beiden alternativ oder aber beide zugleich. Des weiteren deckt diese Funktionalität alle sendeseitigen, empfangsseitigen oder kombiniert sende- und empfangsseitigen Beeinflussungen wie beschrieben ab.

In jedem Falle kann eine praktisch realisierte Funktionalität des Blocks 199, 199' sowohl lineare Verstärkermittel als auch digital/analog wirkende oder analog/digital wirkende Konversionsmittel sowie eine eigene Referenzspannungsquelle umfassen, die entweder vom Ausgang 20.2.2 oder aus dem Potential V_{T} oder dem Potential VBATT versorgbar sein kann (197 oder 194). Dabei können die digital/analog und/oder analog/digital wirkenden Konversionsmittel über die Schnittstellenlogik 199.1 - mit der Funktion eines Interface - mehr oder weniger eng mit dem Interface 166 verbunden realisiert sein.

Eine Netzmanagement- oder Diagnose-Software kann diese Hardware-Details nutzen, um einerseits eine gezielte Fehlkommunikation (d.h. innerhalb eines eigentlich fehlerhaften Pegelfensters) eines mit dem Chip 200 ausgestatteten Steuergerätes mit einem einzelnen Busteilnehmer - nämlich einem wie oben beschrieben massefehlerhaften - herbeizuführen und ihn auf diese Weise zu identifizieren, und um andererseits zwecks Verifikation nicht massefehlerbehaftete Busteilnehmer von einer Normalkommunikation sukzessive auszuschließen. In diesem Zusammenhang kann die oben in Verbindung mit **Figen. 25 & 26 & 52** beschriebene Unterbrechbarkeit des Sendezugriffes im RECEIVE ONLY-Mode in allen nicht fehlerbehafteten Busteilnehmern vorteilhaft genutzt werden, um Buspegelbeeinflussungen durch Potentialeinströmungen auf den
Bus von anderen Busteilnehmern (im Falle eines CANs z.B. durch das Aussenden von Acknowledge-Bits oder Error-Frames) auszublenden.

Die in Verbindung mit **Fig. 3** oben erwähnte und in #) näher beschriebenen Spannungsüberwachungsfunktion des Blockes 110 des Transceivers 100/100' wird auch hier beispielhaft vollumfänglich von der Reset/Watchdog-Funktion 164 realisiert. Auch hier können - je nach Auflösungsgrad der einzelnen Funktionen in einem Chip-Design - die Ausgangsspannungen VCC_{U} und VCC_{A} gleichwohl von einem entsprechend erweiterten Block 110, der auch noch andere Funktionen für den Transceiver 100/100' erfüllen und diesem zugeordent sein kann, überwacht werden, d.h. je nach Erfordernis auch zusätzlich.

An dieser Stelle wird zu zu **Figen. 16 & 23 & 28** noch angemerkt, daß der optionale nichtflüchtige Speicherbereich 35' in jedem Falle wie schon in Verbindung mit **Fig. 7** detailliert genutzt werden kann. Darüber hinaus kann dieser optionale Speicherbereich aber auch allfällige Programmierungsdaten zur Gesamtkonfigurationseinstellung des Schaltkreises 200 aufnehmen, die dann in ihrer Gesamtheit z.B. Funktion und Wirkung der Blöcke 110, 170.1, 120, 120', 123H, 123L, 170.2, 130, 170.3, 140, 170; 164, 165, 165', 199 und/ oder die Charakteristika und Wirkung der Signale ENA/NINH, PWROR; EN, STB, SR, TEST/SRC/SWM, RESET, RESET1, RESET2, INIF, INIF1, INIF2, BUSY, INT an 24.1, INT an 24.2, WUPPH, WUPPL, t_{w}, tₛ, N wie im Rahmen der Beschreibung erläutert im Detail festlegt und/oder/bzw. deren Grenzwert/e und/oder/bzw. deren Zeitverhalten und/oder/bzw. deren Wahrheitsbedingung/en definieren.

Darüber hinaus können in diesem Speicherbereich auch Konfigurationen des Empfangsblockes 120" etwa gemäß **Fig. 48** oder ganz spezifische Selektionen wirksamer Schaltkreisfunktionen bzw- elemente etwa gemäß **Figen. 29 - 33 und Figen. 49 - 52** in Form entsprechender Daten abgelegt sein.

Entsprechende Daten können auch als geschlossener Datensatz in einem solchen Speicher abgelegt sein.
In diesem Zusammenhang kann der Schaltkreis des weiteren besondere Mittel zur Speicherbedienung umfassen, die es erlauben, daß der vorgenannte Datensatz in den Halbleiterschaltkreis 200 - nach dessen Einbau in ein Steuergerät - aus einem anderen Steuergerät mit bereits programmiertem Halbleiterschaltkreis 200 einlesbar und die charakteristische Funktion des Schaltkreises auf diesem Wege **clonbar** ist. Zu diesem Zweck kann der nichtflüchtige Speicherbereich 35' von dem mit dem Schaltkreis kooperierenden Microcontroller 21 über das Interface 166 auslesbar und/oder überschreibbar sein.

Für die Programmierung der Ausgangsspannungen VCC_{U}, VCC_{A} und ggfs. optinal auch V_{T} oder zur Konfiguration des Empfangsblockes 120" gemäß einer der in **Fig. 48** dargestellten Möglichkeiten oder zur Festlegung für den Betrieb einer ganz spezifischen Selektion von betreibbaren Schaltkreisteile etwa gemäß **Figen. 29 - 33 und Figen. 49 - 52** kann der Halbleiterschaltkreis gleichwohl Mittel umfassen, welche eine solche Programmierung nur einmal zulassen.

Eine solche einmalige Programmierung kann für nur einen/s oder mehrere der vorgenannten Blöcke, Funktionen und Signale vorgesehen sein, abhängig von der spezifischen Verwendung eines entsprechenden elektronischen Gerätes als Schaltkreisträger. Wenn z.B. das Bus-System, für welches ein solcher Halbleiterschaltkreis eingesetzt werden soll, applikationsbezogen festliegt oder Wecksensoren vorbekannter Beschaffenheit Verwendung finden sollen, können im Bereich des erweiterten Transceivers 100.11 (100' & 165') einmal mögliche Programmierungen sehr sinnvoll sein. Optional kann eine solche Programmierung auch als über den Bus 201 und das Interface 166 initiierbar vorgesehen sein.

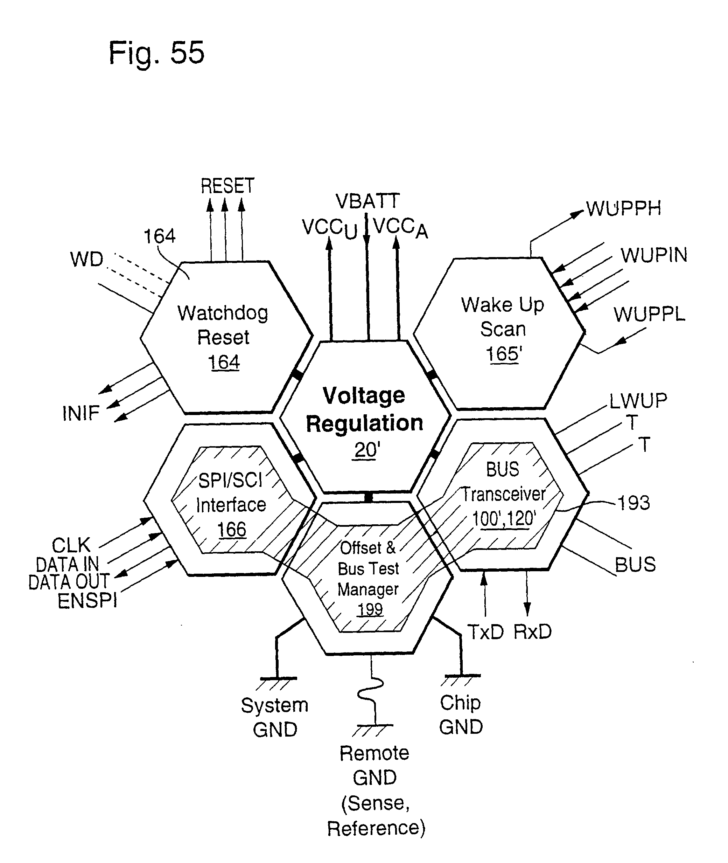

Die Funktionsbelegung des Halbleitersubstrats eines Halbleiterschaltkreises 200, welcher alle Fortbildungen gemäß **Figen. 28 - 54** integriert, ist in **Fig. 55** dargestellt. Darin ist auch eine direkte Wirkverbindung zwischen Bus-Transceiver 100/100' und Offset- und Bus-Test Manager 199 angedeutet. Die schraffierte Fläche 193 symbolisiert die Allokation von Funktionen, die unter Bus-Diagnoseaspekten im Zuge der beschriebenen Testmöglichkeiten miteinander zusammenwirken.

In diesem Zusammenhang wird hier noch angemerkt, daß die Funktionsblockstruktur wie hier beschrieben die Erfindung keineswegs beschränken kann und soll. Vielmehr ist der Rahmen der Erfindung zum einen durch die offenbarten Funktionalitäten einzeln für sich als auch durch alle Funktionalitäten in ihrer offenbarten Gesamtheit abgesteckt. Verschiedentlich wurde oben bereits verdeutlicht, daß in einer praktischen Realisierung des Schaltkreises Funktionen sich teilweise mehr oder weniger überschneiden oder verlagern können, wie z.B. die Spannungsüberwachungsfunktion im Block 110 in eine solche im Watchdog-Funktion 164 u.ä..

Angesichts der (bewußten) Doppelpfeilung von 164a ist beispielsweise entnehmbar, daß ein zentrales, zeitbestimmendes Mittel, etwa ein Pilotoszillator oder ein Takterzeuger sowohl für den WeckExpander 165 bzw. 165' als auch für die Watchdog-Funktion 164 (der 169.1 und/ oder 169.2 benötig) genau so gut im Schaltkreis-Layout eines Weck-Expanders 165' anlegbar ist, wenn Realisierungstechnologie und Chipdesign dies vorteilhaft zulassen.

Dies gilt insbesondere auch für transceivernahe Interface-Subfunktionen zwischen dem Interface 166 und beispielsweise den Sende- und Empfangsmitteln im Transceiver 100' und dem Offset- und Bus Test Manager 199.

So kann z.B. das Steuerungsinterface 124 für den Empfangsblock 120' und dessen Selektionsmittel 123H und 123L onchip nicht nur den Steuerungsblock 170 für die Beeinflussung der Slew-Rate nebst den hierfür vorgesehenen Einstellmitteln 170.2 sowohl für das Empfänger-Frontend 121 als auch die digitale Auswertungslogik 128 sowie Speichermittel 127H und 127L des Empfangsblockes 120' umfassen. Es kann darüber hinaus beispielsweise auch noch die entsprechenden Einstellfunktionen 170.1 und 170.3 für die Sendemittel umfassen.

Wie schon erwähnt kann die Funktionalität des Offsetund Bus Test-Managers 199, 199' gleichwohl sowohl mit einem solchen dem Transceiver zuzuordnenden Steuerungsinterface 124 mehr oder weniger verbunden oder in diesem gänzlich aufgelöst sein und vice versa. Andererseits kann die Funktionalität 199, 199' aufgrund der analog/ digitalen und/oder digital/analogen Konversionsmittel in 199, 199' auch mehr oder weniger Teil oder sogar identisch mit dem eigentlichen seriellen Steuerungsinterface 166 sein. Dies kann z.B. davon abhängen, ob und inwieweit ein Schaltkreis-Design auf Bibliotheksfunktionen zurückgreift oder ob entsprechende Konversionsmittel auch für andere Einstellungen, etwa im Zusammenhang mit der Slew-Rate-Einstellung oder der Grenzwertüberwachung von Spannungen, genutzt werden.

Der schraffierte Bereich 193 in **Fig. 28** soll in diesem Zusammenhang auch verdeutlichen, daß praktische Realisierungsdetails der Transceiver-Funktion (100, 100') sehr eng mit Realisierungsdetails des Offset- und Bus-Test-Managers 199, 199' und des Funktionsblockes 198 zum Schutze der beiden vorgenannten zusammenwirken und verwoben sein können. Des weiteren bedeuten die Figurenzeichnungen keinerlei Beschränkung der Erfindung. Alle bezüglich eines Ausführungsbeispiels offenbarten Einzelmerkmale sind selbstverständlich auf alle übrigen Ausführungsbeispiele übertragbar, insbesondere mit deren Einzelmerkmalen kombinierbar, ohne daß dadurch der Rahmen der Erfindung verlassen wird.

In der vorangegangenen Figurenbeschreibung von Ausführungsbeispielen wurde/n als eine Möglichkeit eine Implementierung der Erfindung für einen CAN-Bus beschrieben und deshalb auch auf diesem Gebiet eingeführte Bezeichnungen verwendet. Gleichwohl überspannt die Erfindung auch anders standardisierte zweidrähtige Busse. Sie ist deshalb in entsprechend ausgestatteten Steuergeräten - beispielsweise nach J1850- oder ähnlichen Standards - genau so vorteilhaft einsetzbar.

Dieser Allgemeingültigkeit ist in der Zeichnung dadurch Rechnung getragen, daß für die Busleitungen sowohl eine neutrale Bezeichnung der Busleitungen mit BUS_H und BUS_L als auch eine für die gewählten Ausführungsbeispiele nach CAN zutreffende mit CAN_H und CAN_L getroffen ist. Auch in den Ansprüchen ist dem Rechnung getragen durch durchgängige Verwendung der allgemeineren Bezeichnungen BUS_H und BUS_L und BUS_H/BUS_L, je nachdem, ob eine einzelne Busader, oder der Bus als System, oder beide Adern im Sinne des Busleitungsnetzes gemeint sind.

Abschließend wird noch darauf hingewiesen, daß im Hinblick auf die Ergänzung von Sendemitteln und Empfangsmitteln eines Zweidraht-Bus-Transceivers durch die Funktionalität des Blockes 199 bzw. 199' wie oben ausführlich beschrieben eine derartige Ergänzung in weitestem Sinne nicht an eine Integration zusammen mit einem Spannungsregler gebunden ist, sondern auch für sich genommen sehr vorteilhaft und nützlich ist.

## Patentansprüche

1. Halbleiterschaltkreis für ein elektronisches Steuergerät mit wenigstens einem Microcontroller (21, 21'), umfassend Mittel (20; 20A, 20U) zur Bereitstellung - aus einer ersten Versorgungsspannung (VBATT) - wenigstens einer zweiten, festen Versorgungsspannung (VCC; VCC_{U}, VCC_{A}) für den wenigstens einen Microcontroller (21, 21') und für mit diesem/diesen kooperative Schaltkreise (163; 1631, 1632, 1633) des Steuergerätes,
**dadurch gekennzeichnet,** daß er neben den Mitteln (20; 20A, 20U) zur Bereitstellung der wenigstens einen, zweiten, festen Versorgungsspannung (VCC; VCC_{U}, VCC_{A}) als Monolith ferner umfaßt:
- Eine Transceiver-Funktion (100, 100') mit Sendeund Empfangsmitteln (130, 133; 120; 120', 120'') zur Kopplung eines mit dem Schaltkreis kooperativen Microcontrollers (21) des Steuergerätes an einen Zweidraht-bus (BUS_H/BUS_L).

2. Halbleiterschaltkreis nach Anspruch 1,
**dadurch gekennzeichnet,**
- daß er programmierbar ist.

3. Halbleiterschaltkreis nach Anspruch 2,
**dadurch gekennzeichnet,**
- daß er Programmiermittel enthält, welche eine Programmierung wenigstens einer Funktion des Schaltkreises (200) einmalig zulassen bzw. zuließen.

4. Halbleiterschaltkreis nach Anspruch 1,
**dadurch gekennzeichnet,**
- daß er einen nichtflüchtigen Speicherbereich (35'), z.B. als EEPROM-Struktur ausgeführt, umfaßt.

5. Halbleiterschaltkreis nach Anspruch 1,
**dadurch gekennzeichnet,**
- daß er einen nichtflüchtigen Speicherbereich (35') umfaßt und daß er programmierbar ist indem Daten, die wenigstens eine (charakteristische) Funktion des Schaltkreises (200) bestimmen, in diesem Speicherbereich ablegbar sind.

6. Halbleiterschaltkreis nach Anspruch 1,
**dadurch gekennzeichnet,**
daß er als Monolith ferner umfaßt:
- Ein Interface (166; SPI, SCI, RS 232, UART, etc.) zum seriellen Austausch (201, 201.1) von Daten und/oder Steuersignalen zwischen dem Halbleiterschaltkreis (200) und wenigstens dem mit dessen Transceiver-Funktion (100, 100') kooperierenden Microcontroller (21; 21').

7. Halbleiterschaltkreis nach Anspruch 6,
**dadurch gekennzeichnet,**
- daß über dieses Interface (166; SPI, SCI, RS 232, UART, etc.) die Ansteuerung und/oder Programmierung wenigstens einer (charakteristischen) Schaltkreisfunktion möglich ist.

8. Halbleiterschaltkreis nach Anspruch 1,
**dadurch gekennzeichnet,**
- daß die Mittel zur Bereitstellung wenigstens einer zweiten Versorgungsspannung (VCC; VCC_{U}, VCC_{A}) einen linear arbeitenden Spannungsregler (20; 20'; 20U, 20A) bilden.

9. Halbleiterschaltkreis nach Anspruch 1,
**dadurch gekennzeichnet,**
- daß die Mittel zur Bereitstellung wenigstens einer zweiten Versorgungsspannung (VCC; VCC_{U}, VCC_{A}) einen schaltenden Spannungsregler (20; 20'; 20U, 20A) bilden.

10. Halbleiterschaltkreis nach Anspruch 1,
**dadurch gekennzeichnet,**
- daß die Mittel zur Bereitstellung wenigstens einer zweiten Versorgungsspannung (VCC; VCC_{U}, VCC_{A}) einen mehrerer Betriebsarten (MODEA, MODEB) fähigen Spannungsregler (20; 20', 20U, 20A) bilden.

11. Halbleiterschaltkreis nach Anspruch 10,
**dadurch gekennzeichnet,**
- daß der mehrerer Betriebsarten (MODEA, MODEB) fähige Spannungsregler sowohl als Linearregler als auch als Schaltregler betreibbar ist.

12. Halbleiterschaltkreis nach Anspruch 10,
**dadurch gekennzeichnet,**
- daß der Halbleiterschaltkreis (200) Mittel umfaßt, welche es erlauben, in Abhängigkeit von einer entsprechenden Ansteuerung des Spannungsreglers dessen Betriebsart zu wählen bzw. zu wechseln.

13. Halbleiterschaltkreis nach Anspruch 9 oder 11,
**dadurch gekennzeichnet,**
- daß es sich bei dem als Schaltregler betreibbaren Spannungsregler um einen solchen mit induktivem Energiespeicher (20A3) handelt, mit wenigstens letztwelchem und einer Speicherkapazität (161.2) der Halbleiterschaltkreis (200) kooperationsfähig ist.

14. Halbleiterschaltkreis nach Anspruch 13,
**dadurch gekennzeichnet,**
- daß es sich bei dem schaltenden Spannungsregler um einen Tiefsetzsteller des Buck-Typs handelt.

15. Halbleiterschaltkreis nach Anspruch 14,
**dadurch gekennzeichnet,**
- daß der Spannungsregler ein Freilauf-Ventil (20A2') umfaßt, welches während der Abschaltphasen des Stromflußes zur Magnetisierung/Aufladung des induktiven Energiespeichers (20A3) zwischen einem der beiden Anschlüsse desselben und dem Bezugspotential der Spannungsregelung - insbesondere Massepotential (System GND) - stromleitfähig ist.

16. Halbleiterschaltkreis nach Anspruch 15,
**dadurch gekennzeichnet,**
- daß das Freilauf-Ventil eine Diodenstrecke ist.

17. Halbleiterschaltkreis nach Anspruch 15,
**dadurch gekennzeichnet,**
- daß das Freilauf-Ventil (20A2') ein gesteuerter elektronischer Schalter, insbesondere MOSFET-Transistor, ist.

18. Halbleiterschaltkreis nach Anspruch 15,
**dadurch gekennzeichnet,**
- daß wenigstens eine der Elektroden des Freilauf-Ventils (20A2') an wenigstens einen besonderen Anschluß (20A12, 20A13) des Halbleiterschaltkreises (200) geführt ist und besagte Stromleitfähigkeit durch externe Beschaltung dieses wenigstens einen besonderen Anschlusses verwirklichbar ist.

19. Halbleiterschaltkreis nach Anspruch 18,
**dadurch gekennzeichnet,**
- daß die erste Strompfadelektrode des Freilauf-Ventils (20A2') an einen Anschluß (20A12) des Halbleiterschaltkreises (200) unmittelbar benachbart zum Reglerausgang (20.2.2) des Halbleiterschaltkreises (200) und/oder die zweite Strompfadelektrode des Freilauf-Ventils (20A2') an einen Anschluß (20A13) unmittelbar benachbart zu wenigstens einem Masseanschluß (System GND; 13.1) des Halbleiterschaltkreises (200) geführt ist.

20. Halbleiterschaltkreis nach Anspruch 1,
**dadurch gekennzeichnet,**
- daß die Mittel zur Bereitstellung wenigstens einer zweiten Versorgungsspannung (VCC; VCC_{U}, VCC_{A}) im Sinne einer Einschaltung bzw. Abschaltung dieser Versorgungsspannung durch ein Steuersignal (ENA/NINH) aktivierbar bzw. deaktivierbar sind.

21. Halbleiterschaltkreis nach Anspruch 1,
**dadurch gekennzeichnet,**
- daß besagte Mittel einen ersten Spannungsregler (20U) zur Bereitstellung einer zweiten Versorgungsspannung (VCC_{U}) für den wenigstens einen Microcontroller (21. 21') und einen zweiten Spannungsregler (20A) zur Bereitstellung einer dritten Versorgungsspannung (VCC_{A}) für die mit diesem/diesen kooperativen Schaltkreise des Steuergerätes konfigurieren und diese Spannungsregler so beschaffen sind, daß sie vermittels eines Steuersignals (ENA/NINH) aktivierbar bzw. deaktivierbar sind.

22. Halbleiterschaltkreis nach Anspruch 21,
**dadurch gekennzeichnet,**
- daß besagte Mittel ferner Steuermittel (20C) umfassen, welche in Abhängigkeit von einem Steuersignal (ENA/NINH) einen definiert ungleichzeitigen Aufbau und/ oder Abbau der zweiten und dritten Versorgungsspannung (VCC_{U}, VCC_{A}) bewirken.

23. Halbleiterschaltkreis nach Anspruch 22,
**dadurch gekennzeichnet,**
- daß besagte Steuermittel (20C) so beschaffen sind bzw. bewirken, daß im Falle der Aktivierung die zweite Versorgungsspannung (VCC_{U}) für den wenigstens einen Microcontroller (21, 21') vor der dritten Versorgungsspannung (VCC_{A}) für die mit diesem/diesen kooperativen Schaltkreise aufbaubar ist.

24. Halbleiterschaltkreis nach Anspruch 22,
**dadurch gekennzeichnet,**
- daß besagte Steuermittel (20C) so beschaffen sind bzw. bewirken, daß im Falle der Deaktivierung die zweite Versorgungsspannung (VCC_{U}) für den wenigstens einen Microcontroller (21, 21') nach der dritten Versorgungsspannung (VCC_{A}) für die mit diesem/diesen kooperativen Schaltkreise abbaubar ist.

25. Halbleiterschaltkreis nach Anspruch 21,
**dadurch gekennzeichnet,**
- daß die beiden Spannungsregler voneinander unabhängig und insoweit nur thermisch miteinander verkoppelt sind, und daß der Halbleiterschaltkreis (200) Mittel umfaßt welche bewirken, daß bei einer überlastungsbedingten Erhitzung des Halbleitersubstrates bis zu einer kritischen Temperatur (T_{LIM}) der zweite Spannungsregler (20A) jedenfalls vor dem Erreichen der kritischen Temperatur und der erste Spannungsregler (20U) erst nach dem Erreichen der kritischen Temperatur (T_{LIM}) deaktiviert wird.

26. Halbleiterschaltkreis nach wenigstens einem der Ansprüche 3, 5, 7, 8, 9 und 10,
**dadurch gekennzeichnet,**
- daß der Spannungsregler (20U, 20A) zur Einstellung auf eine bestimmte Ausgangsspannung (VCC; VCCU; VCC_{A}) aus einer Mehrzahl von wählbaren Ausgangsspannungen ansteuerbar und/oder programmierbar ist.

27. Halbleiterschaltkreis nach wenigstens einem der Ansprüche 3, 5, 7 und 10,
**dadurch gekennzeichnet,**
- daß die Betriebsart des mehrerer Betriebsarten fähigen Spannungsreglers (20U, 20A) durch Ansteuerung und/oder Programmierung wähl- bzw. einstellbar ist.

28. Halbleiterschaltkreis nach Anspruch 1,
**dadurch gekennzeichnet,**
- daß die Mittel zur Bereitstellung wenigstens einer zweiten, festen Versorgungsspannung (VCC; VCC_{U}, VCC_{A}) sowohl mit einem von ihnen mitumfaßten, d.h. schaltkreisinternen, Regeltransistor (T₂) als auch in Verbindung mit einem schaltkreisexternen Regeltransistor (T₂') betreibbar sind und
- daß der Halbleiterschaltkreis zu diesem Zweck einen Anschluß zur Ansteuerung der Steuerelektrode eines externen, mit dem Halbleiterschaltkreis (200) kooperativen Regeltransistors (T2') aufweist.

29. Halbleiterschaltkreis nach wenigstens einem der Ansprüche 3, 5, 7 und 28,
**dadurch gekennzeichnet,**
- daß die Betreibbarkeit der Mittel zur Bereitstellung wenigstens einer zweiten, festen Versorgungsspannung (VCC; VCC_{U}, VCC_{A}) mit einem schaltkreisinternen Regeltransistor (T₂) oder mit einem schaltkreisexternen Regeltransistor (T₂') durch Ansteuerung und/oder Programmierung wähl- bzw. einstellbar ist.

30. Halbleiterschaltkreis nach einem der Ansprüche 26, 27 oder 29,
**dadurch gekennzeichnet,**
- daß er für besagte Ansteuerung oder Programmierung wenigstens einen äußeren Anschluß (20A10, 20U2, 20U4; 20A8; 20A6) aufweist.

31. Halbleiterschaltkreis nach Anspruch 30,
**dadurch gekennzeichnet,**
- daß die Programmierung durch Beschalten des wenigstens einen äußeren Anschlusses (20A10, 20U2, 20U4; 20A8; 20A6) mit einem Bezugspotential des Halbleiterschaltkreises (200), insbesondere mit Masse- oder einem massenahen Potential (GND bzw. System GND) bzw. einem vom Bezugspotential jedenfalls signifikant sich unterscheidenden Potential oder einem Versorgungspotential (VBATT) möglich ist.

32. Halbleiterschaltkreis nach-Anspruch 6 und einem der Ansprüche 12, 26 und 27 und 29,
**dadurch gekennzeichnet,**
- daß besagte Ansteuerung über dieses Interface (166; SPI, SCI, RS 232, UART, etc.) möglich ist.

33. Halbleiterschaltkreis nach Anspruch 1,
**dadurch gekennzeichnet,**
- daß die Transceiver-Funktion (100, 100') sowohl bezüglich ihrer Sende- und Empfangsmittel (130, 133; 120, 120') als auch bezüglich von ihr umfaßter Steuermittel (142; 157; 172/SWM) so beschaffen ist, daß sie wahlweise zweidrähtig differentiell oder eindrähtig auf wenigstens einer Busader (BUS_H, BUS_L) gegen ein festes Bezugspotential (GND), senden und empfangen kann.

34. Halbleiterschaltkreis nach Anspruch 1
**dadurch gekennzeichnet,**
- daß die Transceiver-Funktion (100, 100') bezüglich ihrer Sende- und Empfangsmittel (130, 133; 120, 120') so beschaffen ist, daß deren Slewrate beeinflußbar (170.3, 81, 180; 170.2, 82; 170, 171), insbesondere an die Bus-Bitzeit bzw. Baudrate der Kommunikation anpaßbar ist.

35. Halbleiterschaltkreis nach Anspruch 34,
**dadurch gekennzeichnet,**
- daß er einen Steuerpfad (171, 172, 158; 166.5; 201, 201.1) aufweist, über welchen die Beeinflussung der Slew-Rate durch den mit der Transceiver-Funktion (100, 100') kooperativen Microcontroller (21) möglich ist.

36. Halbleiterschaltkreis nach Anspruch 35,
**dadurch gekennzeichnet,**
- daß die Empfangsmittel (120') ferner ein Steuerungsinterface (124; 170.2 in Verbindung mit 170) umfassen, durch welches der Steuerpfad (171; 172, 158; 166.5; 201, 201.1) zur Beeinflussung der Slew-Rate verläuft.

37. Halbleiterschaltkreis nach Anspruch 1
**dadurch gekennzeichnet,**
- daß die Empfangsmittel (120; 120') Mittel (122') zur Erkennung von Fehlern der Signalübertragung im Busnetz und zur Erzeugung eines indikativen Fehlersignales umfassen.

38. Halbleiterschaltkreis nach Anspruch 1,
**dadurch gekennzeichnet,**
- daß die Empfangsmittel (120; 120') Mittel (122' 123H, 123L) zur Erkennung von Fehlern im Busnetz umfassen und diese so beschaffen sind, daß sie busaderspezifisch (BUS_H bzw. BUS_L) Fehler zu erkennen und im Fehlerfalle ein Fehlersignal abzugeben vermögen.

39. Halbleiterschaltkreis nach Anspruch 38,
**dadurch gekennzeichnet,**
- daß die Mittel zur Erkennung von Fehlern im Busnetz einstellbare Selektionsmittel (123H, 123L) umfassen, welche wenigstens ein indikatives Fehlersignal abzugeben vermögen, und
- daß die Mittel zur Erkennung von Fehlern im Busnetz auf eine frei vorwählbare Zahl von aufeinanderfolgenden Bitsignalfehlern als Kriterium für die Abgabe eines Fehlersignals einstellbar sind.

40. Halbleiterschaltkreis nach Anspruch 38,
**dadurch gekennzeichnet,**
- daß die Empfangsmittel (120') für an der ersten Busader (BUS_H) erkennbare Fehler erste Selektionsmittel (123H) und für an der zweiten Busader erkennbare Fehler zweite Selektionsmittel (123L) umfassen und die ersten und zweiten Selektionsmittel (123H und 123L) unabhängig voneinander auf erste und zweite Zahlen von aufeinanderfolgenden Bitsignalfehlern als Kriterien zur Erzeugung von der ersten bzw. zweiten Bus-ader (BUS_H bzw. BUS_L) jeweils zugeordneten Fehlersignalen (ERROR_H bzw, ERROR_L) einstellbar sind.

41. Halbleiterschaltkreis nach Anspruch 39 oder 40,
**dadurch gekennzeichnet,**
- daß er einen Steuerpfad (166.5; 202, 201.1) aufweist, über welchen die Einstellung der Selektionsmittel (123H, 123L) durch den mit der Transceiver-Funktion (100, 100') kooperativen Microcontroller (21) möglich ist.

42. Halbleiterschaltkreis nach Anspruch 41,
**dadurch gekennzeichnet,**
- daß die Empfangsmittel (120') ferner ein Steuerungsinterface (124) umfassen, durch welches der Steuerpfad (126H, 126L; 166.5) zur Einstellung der Selektionsmittel (123H, 123L) verläuft.

43. Halbleiterschaltkreis nach Anspruch 36 und Anspruch 42,
**dadurch gekennzeichnet,**
- daß das für die Beeinflussung der Slew-Rate vorgesehene Steuerungsinterface (170, 170.1, 170.2, 170.3; 124) und das für die Einstellung der Selektionsmittel (123H, 123L) vorgesehene Steuerungsinterface (124) in einer Schaltkreisstruktur zusammengefaßt.

44. Halbleiterschaltkreis nach einem der Ansprüche 37 bis 40,
**dadurch gekennzeichnet,**
- daß die Empfangsmittel (120') wenigstens einen Fehlerspeicher (127H, 127L) umfassen, welcher durch besagtes Fehlersignal setzbar (S) ist.

45. Halbleiterschaltkreis nach Anspruch 4 und Anspruch 44,
**dadurch gekennzeichnet,**
- daß der wenigstens eine Fehlerpeicher (127H, 127L) Bestandteil des nichtflüchtigen Speicherbereichs (35') ist.

46. Halbleiterschaltkreis nach Anspruch 1,
**dadurch gekennzeichnet,**
- daß er mit der Transceiver-Funktion (100, 100') in Verbindung stehende (195, 195') Potentialbeeinflussungsmittel (199, 199') umfaßt, welche wenigstens einen im Sendefall dominanten Quellenpegel und/oder wenigstens einen im Empfangsfall diskriminanten Signalpegel zu beeinflussen erlauben.

47. Halbleiterschaltkreis nach Anspruch 46,
**dadurch gekennzeichnet,**
- daß er Mittel (20C) zur Bereitstellung einer weiteren, schaltkreisinternen Versorgungsspannung (V_{T}) oder eines schaltkreisinternen Versorgungsstromes (I_{T}) zur Versorgung (197) der Potentialbeeinflussungsmittel (199, 199') umfaßt.

48. Halbleiterschaltkreis nach Anspruch 47,
**dadurch gekennzeichnet,**
- daß er einen Anschluß (20.2.3.) zur externen Überwachung und/oder kapazitven Siebung der schaltkreisinternen Versorgungsspannung (V_{T}) bzw. des schaltkreisinternen Versorgungsstromes (I_{T}) aufweist.

49. Halbleiterschaltkreis nach Anspruch 46,
**dadurch gekennzeichnet,**
- daß er einen Steuerpfad (166.5; 201, 201.1) aufweist, über welchen der wenigstens eine Microcontroller (21) mit der Transceiver-Funktion (100, 100') kommunikationsfähig ist und über welchen die Potentialbeeinflussungsmittel (199, 199') ansteuerbar sind.

50. Halbleiterschaltkreis nach Anspruch 49,
**dadurch gekennzeichnet,**
- daß er ein Steuerungsinterface (199.1) umfaßt, durch welches der Steuerpfad (166.5, 201, 201.1) zu den Potentialbeeinflussungsmitteln (199, 199') verläuft.

51. Halbleiterschaltkreis nach Anspruch 6 und einem der Ansprüche 36 und 42 und 50,
**dadurch gekennzeichnet,**
- daß das Steuerungsinterface (170.2 & 170, 124, 199.1) Teil von oder identisch mit dem Interface (166) für die serielle Kommunikation (SPI-, SCI-, UART-, RS232-Standard etc.) mit besagtem Microcontroller (21) ist.

52. Halbleiterschaltkreis nach Anspruch 46,
**dadurch gekennzeichnet,**
- daß die Potentialbeeinflussungsmittel (199, 199') so beschaffen sind, daß beim Senden wenigstens ein Quellenpegel, der den dominanten Zustand auf der betreffenden Busader (BUS_H, BUS L) bestimmt, monoton wenigstens in- und/oder dekrementell verschoben werden kann.

53. Halbleiterschaltkreis nach Anspruch 46,
**dadurch gekennzeichnet,**
- daß bei Beeinflußbarkeit beider im Sendefalle dominanter Quellenpegel beide voneinander unabhängig einstellbar bzw. veränderbar sind.

54. Halbleiterschaltkreis nach Anspruch 46,
**dadurch gekennzeichnet,**
- daß beide im Sendefalle dominanten Quellenpegel so einstellbar bzw. verschiebbar sind, daß dabei der potentialmäßige Abstand beider Pegel im wesentlichen erhalten bleibt.

55. Halbleiterschaltkreis nach Anspruch 1,
**dadurch gekennzeichnet,**
- daß er einen signaldedizierten Anschluß (13; GND) als Bezugspotentialschiene wenigstens der Empfangsmittel (120, 120', 120'') der Transceiver-Funktion (100, 100') aufweist.

56. Halbleiterschaltkreis nach Anspruch 1,
**dadurch gekennzeichnet**,
- daß er einen stromdedizierten Anschluß (13.1, System GND) als Bezugspotentialschiene wenigstens der Mittel zur Bereitstellung wenigstens einer zweiten, festen Versorgungsspannung (VCC; VCC_{U}, VCC_{A}) aufweist.

57. Halbleiterschaltkreis nach Anspruch 46,
**dadurch gekennzeichnet,**
- daß er einen besonderen Anschluß (13.1, System GND) als Bezugspotentialschiene wenigstens der Mittel (199) zur Einstellung bzw. Veränderung beim Senden wenigstens einer der beiden dominanten Quellenpegel umfaßt.

58. Halbleiterschaltkreis nach Anspruch 46,
**dadurch gekennzeichnet,**
- daß er einen besonderen Anschluß (13.2, Remote GND/Sense) aufweist, über welchen die Potentialbeeinflussungsmittel (199, 199') mit einem Bezugspotential (Remote GND, Sense, Reference) im Umfeld des den Schaltkreis tragenden Gerätes wirkverbindbar (196) sind.

59. Halbleiterschaltkreis nach Anspruch 58,
**dadurch gekennzeichnet,**
- daß er in dem Pfad besagter Wirkverbindung Schutzmittel (198) gegen Überspannung und/oder Falschpolung und/oder hochfrequente Signaleinspeisung aufweist.

60. Halbleiterschaltkreis nach Anspruch 1,
**dadurch gekennzeichnet,**
- daß er über einen Betriebszustand (RECEIVE ONLY) verfügt, in welchem die Mittel zur Bereitstellung der wenigstens zweiten Versorgungsspannung (VCC; VCC_{U}, VCC_{A}) eingeschaltet, die Empfangsmittel (120, 120') aktiviert und die Sendemittel deaktiviert (140', 142', 6) und insoweit ohne Einfluß auf den Bus (BUS_H/BUS_L) sind.

61. Halbleiterschaltkreis nach Anspruch 1,
**dadurch gekennzeichnet,**
- daß er über wenigstens einen Betriebszustand (SLEEP) verfügt, in welchem die Sendemittel (133) der Transceiver-Funktion (100, 100') ohne Einfluß auf den Bus (BUS_H/BUS_L) sind und in welchem die Mitteln zur Bereitstellung der wenigstens zweiten Versorgungsspannung (VCC; VCC_{U}, VCC_{A}) deaktiviert bzw. abgeschaltet sind (VCC, VCC_{U}, VCC_{A} = Null).

62. Halbleiterschaltkreis nach Anspruch 61,
**dadurch gekennzeichnet,**
- daß er mit dem Bus (BUS_H, BUS_L) in Verbindung stehende Weck-Erkennungsmittel (111) und Steuermittel (140, 141) umfaßt, mittels derer er zwecks Verlassen dieses wenigstens einen Betriebszustandes (**SLEEP**) die Mittel (20; 20U, 20A) zur Bereitstellung der wenigstens zweiten Versorgungsspannung (VCC; VCC_{U}, VCC_{A}) aktivieren (ENA/NINH) kann.

63. Halbleiterschaltkreis nach Anspruch 61,
**dadurch gekennzeichnet,**
- daß er Steuermittel (142, 142'; 166, 166.5) umfaßt, durch welche der mit der Transceiver-Funktion (100, 100') kooperierende Microcontroller (21) den Schaltkreis (200) in den **SLEEP**-Zustand (zurück-)versetzen (STB, EN; 201, 201.1) kann.

64. Halbleiterschaltkreis nach Anspruch 1
**dadurch gekennzeichnet,**
- daß die Transceiver-Funktion (100, 100') bezüglich ihrer Sende- und Empfangsmittel (130, 133; 120; 120') so beschaffen ist, daß letztere tolerant gegenüber allen möglichen Fehlerzuständen im und am Busleitungsnetz sind, sofern alle Busteilnehmer sich bezüglich des Busleitungsnetzes (BUS_H/BUS_L) kompatibel verhalten.

65. Halbleiterschaltkreis nach Anspruch 1,
**dadurch gekennzeichnet,**
daß er als Monolith ferner umfaßt:
- Mittel (164) zur Realisierung einer Watchdog-Funktion wenigstens zur
- Rücksetzung (164.1) des mit der Transceiver-Funktion (100, 100') des Schaltkreises kooperierenden Microcontrollers (21);
- Überwachung der ordnungsgemäßen Funktion des vorgenannten Microcontrollers (21) zur Überwachung einer für dessen ordnungsgemäßer Funktion bzw. Programmabwicklung signifikanten Größe (164.4).

66. Halbleiterschaltkreis nach Anspruch 65,
**dadurch gekennzeichnet,**
- daß die Mittel zur Realisierung einer Watchdog-Funktion (164) wenigstens einen Zeitgeber umfassen und der Halbleiterschaltkreis (200) wenigstens einen Anschluß (164.9) zur Beschaltung der Watchdog-Funktion (164) mit wenigstens einem zeitbestimmenden Element (169.1, 169.2) aufweist.

67. Halbleiterschaltkreis nach Anspruch 65,
**dadurch gekennzeichnet,**
- daß die Mittel zur Realisierung einer Watchdog-Funktion (164) mit den Mitteln zur Bereitstellung wenigstens einer zweiten, festen Versorgungsspannung (VCC; VCC_{U}, VCC_{A}) direkt in Verbindung stehen.

68. Halbleiterschaltkreis nach Anspruch 6 und Anspruch 65,
**dadurch gekennzeichnet,**
- daß die Mittel zur Realisierung einer Watchdog-Funktion (164) mit den Mitteln zur Bereitstellung wenigstens einer zweiten, festen Versorgungsspannung (VCC; VCC_{U}, VCC_{A}) über einen vom Interface (166) ausgehenden Steuerpfad (166.5) miteinander in Verbindung stehen.

69. Halbleiterschaltkreis nach Anspruch 65,
**dadurch gekennzeichnet,**
- daß die Mittel (164) zur Realisierung einer Watchdog-Funktion ferner so beschaffen (164.7, 164.8) sind, daß sie noch wenigstens einen weiteren Microcontroller (21') des Gerätes hinsichtlich seiner ordnungsgemäßen Funktion und Programmabwicklung überwachen und diesen zurücksetzen können.

70. Halbleiterschaltkreis nach Anspruch 1,
**dadurch gekennzeichnet,**
daß er als Monolith ferner umfaßt:
- Mittel (20, 20.4; 164; 164.6) zur Erzeugung und Übermittlung (29.1; 29.4) - nachdem wenigstens die den wenigstens einen Microcontroller (21, 21') speisende Versorgungsspannung (VCC; VCC_{U}) aufgebaut ist - eines Rücksetzsignales (PWROR) an den wenigstens einen Microcontroller (28, 21; 21').

71. Halbleiterschaltkreis nach Anspruch 65 oder 70,
**dadurch gekennzeichnet,**
daß er als Monolith ferner umfaßt:
- Mittel (164) zur Abgabe (164.5; 164.7, 164,8) wenigstens eines Sperrsignals (INIF; INIF1, INIF2) in Zusammenhang mit der Erzeugung (164) und Übertragung (29.1, 29.2, 29.4; 164.7) wenigstens eines Rücksetzsignals (RESET, RESET1, RESET2) an den wenigstens einen Microcontroller (21, 28; 21').

72. Halbleiterschaltkreis nach Anspruch 1,
**dadurch gekennzeichnet,**
daß er als Monolith ferner umfaßt:
- Mittel (110; 164) zur Überwachung wenigstens einer Spannung aus der ersten Versorgungsspannung (VBATT) und der wenigstens einen zweiten Versorgungsspannung (VCC; VCC_{U}, VCC_{A}) bezüglich wenigstens eines Grenzwertes sowie
- Mittel zur Abgabe eines INTERRUPT-Signals (143, 145) oder RESET-Signals (164, 164.1) an wenigstens den mit der Transceiver-Funktion (100, 100') kooperierenden Microcontroller (21, 21'), wenn dieser Grenzwert unter- oder überschritten wird.

73. Halbleiterschaltkreis nach Anspruch 62,
**dadurch gekennzeichnet,**
- daß er wenigstens einen besonderen Eingang (7) aufweist, über den die mit dem Bus (BUS_H/BUS_L) in Verbindung stehenden Weck-Erkennungsmittel (111) in der Betriebsart SLEEP mit einem Wecksignal beaufschlagbar sind, und
- daß der Halbleiterschaltkreis (200) ferner so beschaffen ist, daß sein Verhalten auf ein Wecksignal an diesem wenigstens einen besonderen Eingang (7) identisch mit seinem Verhalten bei Empfang eines Wecksignales über den Bus (BUS_H, BUS_L) ist.

74. Halbleiterschaltkreis nach Anspruch 1,
**dadurch gekennzeichnet,**
daß er als Monolith ferner umfaßt:
- Von der Transceiver-Funktion (100, 100') unabhängige, autonome Mittel (165, 165') zur Erfassung wenigstens eines Wecksignales in Zeiträumen wenigstens reduzierter oder aber aufgehobener Aktivität des wenigstens einen Microcontrollers (21, 21').

75. Halbleiterschaltkreis nach Anspruch 74,
**dadurch gekennzeichnet,**
- daß die autonomen Mittel (165, 165') mehrere Eingänge (7.1) zum Empfang von Wecksignalen (WUPIN) aufweisen.

76. Halbleiterschaltkreis nach Anspruch 74,
**dadurch gekennzeichnet,**
- daß die autonomen Mittel (165, 165') aus der ersten Versorgungsspannung (VBATT) speisbar sind und unabhängig von den Mitteln (20, 20'; 20U, 20A) zur Bereitstellung wenigstens einer zweiten, festen Versorgungsspannung (VCC; VCC_{U}, VCC_{A}) betriebsfähig sind.

77. Halbleiterschaltkreis nach Anspruch 74,
**dadurch gekennzeichnet,**
- daß die autonomen Mittel (165, 165') wenigstens einen Zeitgeber (165.1) zur Zeitsteuerung ihrer Funktion umfassen.

78. Halbleiterschaltkreis nach Anspruch 66 und Anspruch 74,
- daß die autonomen Mittel (165, 165') zwecks zeitlicher Steuerung ihrer Funktion von dem wenigstens einen Zeitgeber der Watchdog-Funktion (164) aus ansteuerbar (164a, 166.5) sind.

79. Halbleiterschaltkreis nach Anspruch 74,
**dadurch gekennzeichnet,**
- daß die autonomen Mittel (165, 165') wenigstens eine Speicherzelle (165.2) zur Speicherung eines erfaßten Weckereignisses umfassen.

80. Halbleiterschaltkreis nach Anspruch 74,
**dadurch gekennzeichnet,**
- daß die autonomen Mittel (165, 165') mit wenigstens einem Microcontroller (21, 21') kommunikationsfähig und mit einem solchen unmittelbar verbindbar (32) ausgebildet sind.

81. Halbleiterschaltkreis nach Anspruch 6 und Anspruch 74,
**dadurch gekennzeichnet,**
- daß die autonomen Mittel (165, 165') über das Interface (166) mit dem wenigstens einen Microcontroller (21, 21') kommunikationsfähig sind.

82. Halbleiterschaltkreis nach Anspruch 74,
**dadurch gekennzeichnet,**
- daß die autonomen Mittel (165, 165') wenigstens einen Highside (VBATT) - und/oder Lowside(GND)-Schalter (165.3, 165.4) zur wenigstens zeitabschnittsweisen Spannungsversorgung (WUPPH, WUPPL) wenigstens eines Weck-Sensors aufweisen.

83. Halbleiterschaltkreis nach Anspruch 74,
**dadurch gekennzeichnet,**
- daß die autonomen Mittel (165, 165') wenigstens eine Highside(VBATT)- und/oder Lowside(GND)-Stromquelle (165.3, 165.4) zur wenigstens zeitabschnittsweisen Stromversorgung (WUPPH, WUPPL; WUPIN_1, 7.8; WUPIN_4, 7.9) wenigstens eines Weck-Sensors aufweist.

84. Halbleiterschaltkreis nach Anspruch 77 **oder** 78 **und** nach Anspruch 82 **oder** 83,
**dadurch gekennzeichnet,**
- daß der bzw. die wenigstens eine Highside(VBATT)-und/oder Lowside(GND)-Schalter bzw. -Stromquelle (165.3, 165.4) von dem wenigstens einen Zeitgeber (165.1; 164, 164a) wenigstens mittelbar so steuerbar ist, daß seine bzw. ihre Einschaltdauer (t_{w}) kürzer als die Wiederholzeit (tₛ) seines bzw. ihres Einschaltens ist.

85. Halbleiterschaltkreis nach Anspruch 78 **und** einem der Ansprüche 82 **und** 83,
**dadurch gekennzeichnet**,
- daß die Watchdog-Funktion (164) und die autonomen Mittel (165, 165') in Bezug aufeinander (164a; 166.5) so beschaffen sind, daß der bzw. die wenigstens eine Highside(VBATT)- und/oder Lowside(GND)-Schalter bzw. -Stromquelle (165.3, 165.4) während einer vorbestimmten Einschaltdauer (t_{w}) mit einer Wiederholfrequenz (1/tₛ) einschaltbar sind, die mit der Folgefrequenz eines von der Watchdog-Funktion (164; 164.1, 164.2 an den wenigstens einen Microcontroller (21, 21') abgebbaren Steuersignals (RESET, RESET1, RESET2, INT) zeitlich verkettet ist.

86. Halbleiterschaltkreis nach wenigstens einem der Ansprüche 3, 5, 7, 84 und 85,
**dadurch gekennzeichnet,**
- daß die Einschaltdauer (t_{w}) und/oder die Wiederholzeit bzw.- Wiederholfrequenz (tₛ bzw. fₛ = 1/Tₛ) und/oder ein Verkettungsfaktor programmierbar ist.

87. Halbleiterschaltkreis nach Anspruch 79 und einem der Ansprüche 84 und 85,
**dadurch gekennzeichnet,**
- daß er Diskriminationsmittel umfaßt, welche die Speicherung eines Weckereignisses dann auslösen, wenn das Weckereignis zum N-ten Male erfaßt worden ist, mit N = INTEGER {(t_{d}/tₛ)+1}.

88. Halbleiterschaltkreis nach wenigstens einem der Ansprüche 3, 5, 7 und 87,
**dadurch gekennzeichnet,**
- daß die Zahl N programmierbar und/oder aus einer Menge vordefinierter Werte auswählbar ist.

89. Halbleiterschaltkreis nach wenigstens einem der Ansprüche 3, 5, 7 und 75,
**dadurch gekennzeichnet,**
- daß die autonomen Mittel (165, 165') bezüglich der Wahrheitsbedingung wenigstens eines der mehreren Weck-Eingänge (7.1) aus einer festen Menge möglicher Wahrheitsbedingungen programmierbar und insoweit bezüglich ihrer Schaltkreisfunktion flexibel sind.

90. Halbleiterschaltkreis nach einem der Ansprüche 26 und 27 und 29 und 86 und 88 und 89 sowie nach den beiden Ansprüchen 3 und 6,
**dadurch gekennzeichnet,**
- daß diese einmalige Programmierung über das Interface (166; SPI, SCI, UART, RS 232, etc.) initiierbar war oder ist.

91. Halbleiterschaltkreis nach einem der vorherigen Ansprüche,
**dadurch gekennzeichnet,**
- daß er bezüglich wenigstens einer der außer den Mitteln (20, 20'; 20U, 20A, 20T) zur Bereitstellung der wenigstens zweiten Versorgungsspannung (VCC; VCC_{U}, VCC_{A}, V_{T}) mitumfaßten Funktionen (110, 170.1, 120, 120', 123H, 123L, 170.2, 130, 170.3, 140, 170; 164, 165, 165', 199; ENA/NINH, PWROR; EN, STB, SR, TEST/SRC/SWM, RESET, RESET1, RESET2, INIF, INIF1, INIF2, BUSY, INT an 24.1, INT an 24.2, WUPPH, WUPPL, t_{W}, t_{S}, N) und/oder/bzw. deren Grenzwert/e und/oder/bzw. deren Zeitverhalten und/oder/bzw. deren Wahrheitsbedingung/en programmierbar (Konfigurationsprogrammierung) oder diesbezüglich auf vordefinierte Werte einstellbar ist.

92. Halbleiterschaltkreis nach Anspruch 5 und Anspruch 91,
**dadurch gekennzeichnet,**
- daß in dem nichtflüchtigen Speicherbereich (35') die Programmierung der Konfiguration des Schaltkreises als geschlossener Datensatz ablegbar ist.

93. . Halbleiterschaltkreis nach-Anspruch 92,
**dadurch gekennzeichnet,**
- daß er Mittel umfaßt, die es erlauben, daß der Datensatz in den Halbleiterschaltkreis (200) - nach dessen Einbau in das Steuergerät - aus einem anderen Steuergerät mit bereits programmiertem Schaltkreis (200) einlesbar und die charakteristische Funktion des Schaltkreises (200) insoweit clonbar ist.

94. Halbleiterschaltkreis nach den Ansprüchen 5 und 6,
**dadurch gekennzeichnet,**
- daß der nichtflüchtige Speicherbereich (35') des Schaltkreises (200) von dem mit dem Schaltkreis kooperierenden Microcontroller (21) über das Interface (166, SPI, SCI, UART, RS 232, etc) auslesbar und/oder überschreibbar, ist.

95. Halbleiterschaltkreis nach Anspruch 1,
**dadurch gekennzeichnet**,
- daß er zwei Anschlüsse (T; 8, 9) zum Anschluß zweier externer Abschlußelemente (16, 17) für die beiden Busadern (BUS_H, BUS_L) sowie interne Busfehler-Erkennungsmittel (132) und interne Ersatzabschlußund Umschaltmitteln (131) aufweist, um im Fehlerfalle den Busabschluß zu verändern.

96. Halbleiterschaltkreis nach Anspruch 1
**dadurch gekennzeichnet,**
- daß die Transceiver-Funktion (100, 100') einstellbare Bitzeit-Filter (81, 82) zur Optimierung der Störungsunterdrückung auf die Kommunikations-Baudrate umfaßt.

97. Halbleiterschaltkreis nach Anspruch 96,
**dadurch gekennzeichnet,**
- daß die Bitzeit-Filter (81, 82) digital einstellbar sind.

98. Halbleiterschaltkreis gemäß Anspruch 46,
**dadurch gekennzeichnet,**
- daß die Potentialbeeinflussungsmittel eine in den bezugspotentialnahen Versorgungsanschluß der Sendemittel (133; 133L, 133H) eingeschleifte, einstellbare Offset-Spannungsquelle (Q_{SG}) realisieren und die Sendemittel (133; 133L, 133H) konstantspannungsversorgt (CD) sind.

99. Halbleiterschaltkreis gemäß Anspruch 98,
**dadurch gekennzeichnet,**
- daß den konstantspannungsversorgten Sendemitteln (133; 133L, 133H) wenigstens analog wirkende Teile der Empfangsmittel (120', 120''; 121.20) stromversorgungsmäßig parallel geschaltet sind und besagte Offset-Spannungsquelle (Q_{SG}) somit auch empfangsseitig wirksam ist.

100. Halbleiterschaltkreis gemäß Anspruch 46,
**dadurch gekennzeichnet,**
- daß die Potentialbeeinflussungsmittel (199, 199') eine in den bezugspotentialnahen Versorgungsanschluß der die Busader BUS_L ansteuernden Schaltendstufe (133L) der Sendemittel (133) eingeschleifte erste einstellbare Offset-Spannungsquelle (Q_{SL}) und eine in einen potentialmäßig entgegengesetzten Versorgungsanschluß der die Busader BUS_H ansteuernden Schaltendstufe (133H) der Sendemittel (133) eingeschleifte zweite einstellbare Offset-Spannungsquelle (Q_{SH}) realisieren.

101. Halbleiterschaltkreis gemäß Anspruch 46,
**dadurch gekennzeichnet,**
- daß die Potentialbeeinflussungsmittel (199, 199') eine in den bezugspotentialnahen Versorgungsanschluß der die Busader BUS_L ansteuernden Schaltendstufe (133L) der Sendemittel (133) eingeschleifte erste einstellbare Offset-Spannungsquelle (Q_{SL}) und eine in einen potentialmäßig entgegengesetzten Versorgungsanschluß der die Busader BUS_H ansteuernden Schaltendstufe (133H) der Sendemittel (133) eingeschleifte zweite und dritte einstellbare Offset-Spannungsquelle (Q_{SH}, Q_{SHH}) realisieren, wobei letztere auf/an unterschiedlich hohe Versorgungspotentiale bezogen bzw. angeschlossen sind (auf/an VCCA und V_{T} oder VBATT, auf/an V_{T} und VBATT).

102. Halbleiterschaltkreis gemäß Anspruch 101,
**dadurch gekennzeichnet,**
- daß die zweite und dritte Offset-Spannungsquelle (Q_{SH}, Q_{SHH}) alternativ aktivierbar sind.

103. Halbleiterschaltkreis gemäß Anspruch 100 oder 102,
**dadurch gekennzeichnet,**
- daß die bezugspotentialbezogene Offset-Spannungsquelle (Q_{SL}) und die wirksame, bezugspotentialferne Offset-Spannungsquelle (Q_{SH}, Q_{SHH}) nur in zeitlicher Aufeinanderfolge abwechselnd aktivierbar sind.

104. Halbleiterschaltkreis gemäß Anspruch 101,
**dadurch gekennzeichnet**,
- daß er Mittel (199.5, 199.7, 199.8, 199.2X) umfaßt, welche eine Wirksamschaltung der zweiten und dritten Offset-Spannungsquelle (Q_{SH} und Q_{SHH}) in Abhängigkeit vom Sendesignal (TxD) erlauben.

105. . Halbleiterschaltkreis gemäß einem der Ansprüche 98 bis 104,
**dadurch gekennzeichnet,**
- daß die Potentialbeeinflussungsmittel (199, 199') Mittel (199.7 i.V. mit 199.2; 199.2X) zur autonomen Veränderung der Einstellung wenigstens einer Offset-Spannungsquelle (Q_{SG}, Q_{SL}, Q_{SH}, Q_{SHH}) über der Zeit umfassen.

106. Halbleiterschaltkreis gemäß Anspruch 105,
**dadurch gekennzeichnet**,
- daß diese Veränderung in Abhängigkeit vom sendeseitigen Datensignal (TxD) möglich ist.

107. Halbleiterschaltkreis gemäß Anspruch 105,
**dadurch gekennzeichnet,**
- daß den Mitteln zur autonomen Veränderung der Einstellung wenigstens einer Offset-Spannungsquelle (Q_{SG}, Q_{SL}, Q_{SH}, Q_{SHH}) ein von dem wenigstens einen Microcontroller (21) beziehbares (201.1; 166, 166.5, 199.1) Taktsignal (SPI CLOCK) zuführbar ist.

108. Halbleiterschaltkreis gemäß Anspruch 46 oder 52,
**dadurch gekennzeichnet,**
- daß die Potentialbeeinflussungsmittel (199, 199') Regelungsmittel umfassen, welche es erlauben, die Beeinflussung nach Maßgabe durch eine von dem wenigstens einen Microcontroller empfangbare Wertvorgabe in Abhängigkeit von einem an einer Busader (BUS_H, BUS_L) abnehmbaren Potential (U_{BUS_H}, U_{BUS_L}) vorzunehmen.

109. Halbleiterschaltkreis gemäß Anspruch 46 oder 52,
**dadurch gekennzeichnet,**
- daß die Potentialbeeinflussungsmittel (199, 199')
- unabhängig von den Sendemitteln (133; 133H, 133L) - mit wenigstens einer Busader (BUS_H, BUS_L) verbundene bzw. verbindbare Ersatzmittel (2019, RL', DL') umfassen, welche eine durch das Sendesignal (TxD) getastete Aufschaltung auf die Busader (BUS_H, BUS_L) eines geregelten Potentials (Ua) erlauben.

110. Halbleiterschaltkreis gemäß Anspruch 109,
**dadurch gekennzeichnet,**
- daß die Potentialbeeinflussungsmittel (199, 199') des weiteren Meßmittel (1991EL) umfassen, welche die Erfassung einer durch die Ersatzmittel (2019, RL', DL') verursachten Fehlergröße (U_{ERR}) zum Zwecke ihrer Kompensation durch Regelaufschaltung (2010L') oder rechnerische Berücksichtigung (2022; 21) bei der Sollwertvorgabe (166.5, 199.2L) für die Regelung (Ua) durch den wenigstens einen Microcontroller (21) leisten.

111. Halbleiterschaltkreis gemäß Anspruch 46 oder 52,
**dadurch gekennzeichnet,**
- daß die Potentialbeeinflussungsmittel (199, 199')
- unabhängig von den Sendemitteln (133; 133H, 133L) - mit wenigstens einer Busader (BUS_L) verbundene bzw. verbindbare Ersatzmittel (2019, RL', DL') umfassen, über welche eine durch das Sendesignal (TxD) getastete Aufschaltung auf die Busader (BUS_L) eines nicht geregelten Potentials (Ua) nach Maßgabe durch einen von dem wenigstens einen Microcontroller (21) vorgebbaren (201.1, 166, 166.5, 199.2) Digitalwert möglich ist.

112. Halbleiterschaltkreis nach einem der Ansprüche 109 bis 111,
**dadurch gekennzeichnet,**
- daß zwecks Leitendsteuerung eines der Ersatzmittel (2019) diesem das Sendesignal (TxD) von der betreffenden Aderendstufe (133L) über einen Umschalter (SWL) zuführbar ist, der ggfs. die Aderendstufe (133L) von der Busader (BUS_L) trennt.

113. Halbleiterschaltkreis gemäß Anspruch 108,
**dadurch gekennzeichnet,**
- daß die Regelungsmittel einen mit einer Busader (BUS_H, BUS_L) wirkverbundenen (2018) Sampler (2015) und ein Halteglied bzw. einen haltenden Regler (1991H) umfassen.

114. Halbleiterschaltkreis gemäß Anspruch 113,
**dadurch gekennzeichnet,**
- daß es sich bei dem Sampler (2015) um einen solchen mit zwei Diodenstrecken (DS1, DS2) handelt, wobei die zweite Diodenstrecke (DS2) zur Kompensation von Temperatureinflüssen und/oder einer abtaststromflußbedingten Fehlerspannung längs der ersten Diodenstrecke (DS1) vorgesehen ist.

115. Halbleiterschaltkreis gemäß Anspruch 46,
**dadurch gekennzeichnet,**
- daß die Potentialbeeinflussungsmittel (199, 199') so beschaffen sind, daß sie die Beeinflussung wenig- _ stens eines rezessiv diskriminanten Signalpegels durch Beeinflussung (121.4, 121.5; CVTH, CVTL) wenigstens einer Schwellenspannung (VT_{H}, VT_{L}) im Empfänger (120'') erlauben.

116. Halbleiterschaltkreis gemäß Anspruch 1,
**dadurch gekennzeichnet,**
- daß die Empfangsmittel (120'') auf eine Bezugspotentialschiene (FTG; 121.13) bezogene Mittel (121.4, 121.5) zur Vorgabe zweier Schwellwerte (VT_{H}, VT_{L}) aufweisen, und daß diese Bezugspotentialschiene wirkverbunden ist mit einem Bezugspotentialanschluß oder wahlweise wirkverbindbar (S₇) ist mit wenigstens zwei alternativen Bezugspotentialanschlüssen (13, 13.1, 13.2) des Schaltkreises.

117. Halbleiterschaltkreis gemäß Anspruch 46,
**dadurch gekennzeichnet,**
- daß die Beeinflussung durch eine in dem bezugspotentialnahen (GND) Versorgungsstrompfad (DG; Fußpunkt 121.15 --> 195.5) wenigstens analog wirkender Teile der Empfangsmittel (120"; 121.1, 121.2, 121.3; 121.20) liegende einstellbare Offset-Spannungsquelle (Q_{SG}; 121.7) möglich ist.

118. Halbleiterschaltkreis gemäß den Ansprüchen 116 und 117,
**dadurch gekennzeichnet,**
- daß die Bezugspotentialschiene (FTG; 121.13) der Schwellwertvorgabemittel (121.4, 121.5 mit dem bezugspotentialnahen (GND) Versorgungsfußpunkt (121.15) wenigstens der analog wirkenden Teile (121.10) der Empfangsmittel (120'') verbindbar (S₆) ist.

119. Halbleiterschaltkreis gemäß Anspruch 1,
**dadurch gekennzeichnet,**
- daß die Empfangsmittel (120'') auf einen Versorgungsfußpunkt (121.15) bezogene Pegeldiskriminationsmittel (121.1, 121.2, 121.3) aufweisen, und daß dieser Versorgungsfußpunkt wirkverbunden ist mit einem Bezugspotentialanschluß oder wahlweise wirkverbindbar (S₈) ist mit wenigstens zwei alternativen Bezugspotentialanschlüssen (13, 13.1, 13.2) des Schaltkreises.

120. Halbleiterschaltkreis gemäß Anspruch 46,
**dadurch gekennzeichnet,**
- daß die Potentialbeeinflussungsmittel Digital/ Analog-Wandlungsmittel (199.2, 199.2X) und/oder Analog/Digital-Wandlungsmittel (199.3) umfassen.

121. Halbleiterschaltkreis gemäß Anspruch 46,
**dadurch gekennzeichnet,**
- daß die Potentialbeeinflussungsmittel (199') Digital/Analog-Wandlungsmittel (199.2X) umfassen, die wenigstens sämtliche Bezugswerte, Steuer- und Schaltsignale für allfällig im Sende- und/oder Empfangsbetrieb der Transceiver-Funktion (100') vorzunehmenden Potentialbeeinflussungen zu erzeugen vermögen.

122. Halbleiterschaltkreis gemäß einem der Ansprüche 100 bis 105 oder gemäß Anspruch 107,
**dadurch gekennzeichnet,**
- daß eine auf das/ein höhere/s Versorgungspotential (VCC_{A}, V_{T}, VBATT) bezogene Offset-Spannungsquelle (Q_{SH} oder Q_{SHH}) durch eine auf ein niedrigeres Versorgungspotential (GND) bezogene, entsprechend offsetfähig variable Versorgungsspannungsquelle (Q_{VCC'}) ersetzt ist.

123. Halbleiterschaltkreis gemäß Anspruch 33,
**dadurch gekennzeichnet,**
- daß er Bestandteil eines elektronischen Steuergerätes ist, in welchem er für nur eindrähtigen Empfang und nur eindrähtige Sendeweise (mit nur einem Leitungstreiber in 133) beschaltet oder ansteuerbar (142, 157, 172/SWM) ist.

124. Verwendung des Halbleiterschaltkreises gemäß Anspruch 1 in einem elektronischen Steuergerät eines Verkehrsmittels.

125. Verwendung des Halbleiterschaltkreises gemäß Anspruch 1 in einem elektronischen Steuergerät einer Schwermaschine oder Baumaschine oder eines Hebezeugs.

126. Verwendung des Halbleiterschaltkreises gemäß Anspruch 1 in einem elektronischen Steuergerät der Automatisierungstechnik.

127. Verwendung des Halbleiterschaltkreises gemäß Anspruch 1 in einem elektronischen Steuergerät der Elektroinstallations- oder Gebäudetechnik

128. Verwendung des Halbleiterschaltkreises gemäß Anspruch 1 in einem elektronischen Steuergerät der Heizungs- oder Klimatechnik.

129. Verwendung des Halbleiterschaltkreises gemäß Anspruch 1 in einem elektronischen Steuergerät der Alarm-, Sicherheits- oder Zugangskontrolltechnik.

130. Halbleiterschaltkreis nach Anspruch 1,
**dadurch gekennzeichnet,**
- daß die Transceiver-Funktion (100, 100') für eine Kommunikation nach CAN-Standard und zum Anschluß an ein CAN-Busleitungsnetz (CAN_H/CAN_L) ausgelegt ist.

131. Halbleiterschaltkreis nach einem der vorherigen Ansprüche,
**dadurch gekennzeichnet,**
- daß er in einer homogenen Hochvolt-Technologie hergestellt ist.

## Claims

1. Semiconductor circuit for an electronic control unit having at least one microcontroller (21, 21'), comprising means (20; 20A, 20U) for providing - from a first supply voltage (VBATT) - at least one second, fixed supply voltage (VCC; VCC_{U}, VCC_{A}) for the at least one microcontroller (21, 21') and for circuits (163; 1631, 1632, 1633) of the control unit which cooperate with the said microcontroller/microcontrollers,
characterized in that it furthermore comprises, in addition to the means (20; 20A, 20U) for providing the at least one second, fixed supply voltage (VCC; VCC_{U}, VCC_{A}), in monolithic form:
- a transceiver function (100, 100') having transmitting and receiving means (130, 133; 120; 120', 120'') for coupling a microcontroller (21) of the control unit, which microcontroller cooperates with the circuit, to a two-wire bus (BUS_H/BUS_L).

2. Semiconductor circuit according to Claim 1,
characterized
- in that it is programmable.

3. Semiconductor circuit according to Claim 2,
characterized
- in that it contains programming means which permit or permitted one-time programming of at least one function of the circuit (200).

4. Semiconductor circuit according to Claim 1,
characterized
- in that it comprises a non-volatile memory area (35'), designed as an EEPROM structure, for example.

5. Semiconductor circuit according to Claim 1,
characterized
- in that it comprises a non-volatile memory area (35'), and in that it is programmable by data which determine at least one (characteristic) function of the circuit (200) being able to be stored in the said memory area.

6. Semiconductor circuit according to Claim 1,
characterized in that it furthermore comprises, in monolithic form:
- an interface (166; SPI, SCI, RS 232, UART, etc.) for the serial exchange (201, 201.1) of data and/or control signals between the semiconductor circuit (200) and at least the microcontroller (21; 21') which cooperates with the transceiver function (100, 100') thereof.

7. Semiconductor circuit according to Claim 6,
characterized
- in that the driving and/or programming of at least one (characteristic) circuit function is possible via this interface (166; SPI, SCI, RS 232, UART, etc.).

8. Semiconductor circuit according to Claim 1,
characterized
- in that the means for providing at least one second supply voltage (VCC; VCC_{U}, VCC_{A}) form a linearly operating voltage regulator (20; 20'; 20U, 20A).

9. Semiconductor circuit according to Claim 1,
characterized
- in that the means for providing at least one second supply voltage (VCC; VCC_{U}, VCC_{A}) form a switched-mode voltage regulator (20; 20'; 20U, 20A).

10. Semiconductor circuit according to Claim 1,
characterized
- in that the means for providing at least one second supply voltage (VCC; VCC_{U}, VCC_{A}) form a voltage regulator (20; 20', 20U, 20A) which is capable of a plurality of operating modes (MODEA, MODEB).

11. Semiconductor circuit according to Claim 10,
characterized
- in that the voltage regulator which is capable of a plurality of operating modes (MODEA, MODEB) can be operated both as a linear regulator and as a switched-mode regulator.

12. Semiconductor circuit according to Claim 20,
characterized
- in that the semiconductor circuit (200) comprises means which allow the operating mode of the voltage regulator to be selected and/or changed in dependence on corresponding driving of the said voltage regulator.

13. Semiconductor circuit according to Claim 9 or 11,
characterized
- in that the voltage regulator which can be operated as a switched-mode regulator is one which has an inductive energy store (20A3), the semiconductor circuit (200) being able to cooperate with at least the said energy store and a storage capacitor (161.2).

14. Semiconductor circuit according to Claim 13,
characterized
- in that the switched-mode voltage regulator is a Bucktype step-down controller.

15. Semiconductor circuit according to Claim 14,
characterized
- in that the voltage regulator comprises a freewheeling valve (20A2'), which is current-conductive during the switch-off phases of the current flow for the purpose of magnetizing/charging the inductive energy store (20A3) between one of the two terminals of the same and the reference-earth potential of the voltage regulation - in particular earth potential (System GND).

16. Semiconductor circuit according to Claim 15,
characterized
- in that the freewheeling valve is a diode path.

17. Semiconductor circuit according to Claim 15,
characterized
- in that the freewheeling valve (20A2') is a controlled electronic switch, in particular MOSFET transistor.

18. Semiconductor circuit according to Claim 15,
characterized
- in that at least one of the electrodes of the freewheeling valve (20A2') is routed to at least one particular terminal (20A12, 20A13) of the semiconductor circuit (200) and the said current conductivity can be realized by external circuitry of this at least one particular terminal.

19. Semiconductor circuit according to Claim 18,
characterized
- in that the first current path electrode of the freewheeling valve (20A2') is routed to a terminal (20A12) of the semiconductor circuit (200) directly adjacent to the regulator output (20.2.2) of the semiconductor circuit (200) and/or the second current path electrode of the freewheeling valve (20A2') is routed to a terminal (20A13) directly adjacent to at least one earth terminal (System GND; 13.1) of the semiconductor circuit (200).

20. Semiconductor circuit according to Claim 1,
characterized
- in that the means for providing at least one second supply voltage (VCC; VCC_{U}, VCC_{A}) can be activated and deactivated by a control signal (ENA/NINH) with the aim of switching on and switching off, respectively, this supply voltage.

21. Semiconductor circuit according to Claim 1,
characterized
- in that the said means configure a first voltage regulator (20U) for the purpose of providing a second supply voltage (VCC_{U}) for the at least one microcontroller (21, 21') and a second voltage regulator (20A) for the purpose of providing a third supply voltage (VCC_{A}) for the circuits of the control unit which cooperate with the said microcontroller/microcontrollers, and these voltage regulators are configured in such a way that they can be activated and deactivated by means of a control signal (ENA/NINH).

22. Semiconductor circuit according to Claim 21,
characterized
- in that the said means furthermore comprise control means (20C), which cause the second and third supply voltages (VCC_{U}, VCC_{A}) to be built up and/or reduced non-simultaneously in a defined manner, in dependence on a control signal (ENA/NINH).

23. Semiconductor circuit according to Claim 22,
characterized
- in that the said control means (20C) are configured, or have an effect, such that in the case of activation, the second supply voltage (VCC_{U}) for the at least one microcontroller (21, 21') can be built up before the third supply voltage (VCC_{A}) for the circuits which cooperate with the said microcontroller/microcontrollers.

24. Semiconductor circuit according to Claim 22,
characterized
- in that the said control means (20C) are configured, or have an effect, such that in the case of deactivation, the second supply voltage (VCC_{U}) for the at least one microcontroller (21, 21') can be reduced after the third supply voltage (VCC_{A}) for the circuits which cooperate with the said microcontroller/microcontrollers.

25. Semiconductor circuit according to Claim 21,
characterized
- in that the two voltage regulators are independent of one another and, in this respect, only thermally coupled to one another, and in that the semiconductor circuit (200) comprises means which have the effect that in the event of the semiconductor substrate being heated, due to overloading, up to a critical temperature (T_{LIM}), the second voltage regulator (20A) is always deactivated before the critical temperature is reached and the first voltage regulator (20U) is deactivated only after the critical temperature (2_{LIM}) is reached.

26. Semiconductor circuit according to at least one of Claims 3, 5, 7, 8, 9 and 10,
characterized
- in that the voltage regulator (20U, 20A) can be driven and/or programmed in order to be set to a specific output voltage (VCC; VCCU, VCC_{A}) from a plurality of selectable output voltages.

27. Semiconductor circuit according to at least one of Claims 3, 5, 7 and 10,
characterized
- in that the operating mode of the voltage regulator (20U, 20A) which is capable of a plurality of operating modes can be selected and/or set by driving and/or programming.

28. Semiconductor circuit according to Claim 1,
characterized
- in that the means for providing at least one second, fixed supply voltage (VCC; VCC_{U}, VCC_{A}) can be operated both by a regulating transistor (T₂), which is included in the said means, that is to say is circuit-internal, and in connection with a regulating transistor (T₂'), which is external to the circuit, and
- in that for this purpose, the semiconductor circuit has a terminal for driving the control electrode of an external regulating transistor (T2') which cooperates with the semiconductor circuit (200).

29. Semiconductor circuit according to at least one of Claims 3, 5, 7 and 28,
characterized
- in that the operability of the means for providing at least one second, fixed supply voltage (VCC; VCC_{U}, VCC_{A}) by a circuit-internal regulating transistor (T₂) or by a circuit-external regulating transistor (T₂') can be selected and/or set by driving and/or programming.

30. Semiconductor circuit according to either of Claims 26, 27 and 29,
characterized
- in that it has at least one external terminal (20A10, 20U2, 20U4; 20A8; 20A6) for the said driving or programming.

31. Semiconductor circuit according to Claim 30,
characterized
- in that the programming is possible by connecting up the at least one external terminal (20A10, 20U2, 20U4; 20A8; 20A6) to a reference-earth potential of the semiconductor circuit (200), in particular to earth potential or a potential near to earth (GND or System GND), or a potential that always differs significantly from the reference-earth potential, or a supply potential (VBATT).

32. Semiconductor circuit according to Claim 6 and one of Claims 12, 26 and 27 and 29,
characterized
- in that the driving is possible by means of this interface (166; SPI, SCI, RS 232, VART, etc).

33. Semiconductor circuit according to Claim 1,
characterized
- in that the transceiver function (100, 100') is configured, both with regard to its transmitting and receiving means (130, 133; 120, 120') and with regard to a control means (142; 157; 172/SWM) that it comprises, in such a way that it can optionally transmit and receive differentially in a two-wire manner or in a single-wire manner on at least one bus core (BUS_H, BUS_L) with respect to a fixed reference-earth potential (GND).

34. Semiconductor circuit according to Claim 1,
characterized
- in that the transceiver function (100, 100') is configured, with regard to its transmitting and receiving means (130, 133; 120, 120'), in such a way that the slew rate thereof can be influenced (170.3, 81, 180; 170.2, 82; 170, 171), in particular can be adapted to the bus bit period and/or baud rate of the communication.

35. Semiconductor circuit according to Claim 34,
characterized
- in that it has a control path (171, 172, 158; 166.5; 201, 201.1), via which the influencing of the slew rate by the microcontroller (21) which cooperates with the transceiver function (100, 100') is possible.

36. Semiconductor circuit according Claim 35,
characterized
- in that the receiving means (120') furthermore comprise a control interface (124; 170.2 in conjunction with 170), through which runs the control path (171; 172, 158; 166.5; 201, 201.1) for the influencing of the slew rate.

37. Semiconductor circuit according to Claim 1,
characterized
- in that the receiving means (120; 120') comprise means (122') for detecting errors in the signal transmission in the bus network and for generating an indicative error signal.

38. Semiconductor circuit according to Claim 1,
characterized
- in that the receiving means (120; 120') comprise means (122', 123H, 123L) for detecting errors in the bus network, and these are configured in such a way that they enable errors to be detected, and an error signal to be output in the event of an error, in a bus core-specific manner (BUS_H or BUS_L).

39. Semiconductor circuit according to Claim 38,
characterized
- in that the means for detecting errors in the bus network comprise adjustable selection means (123H, 123L) which enable at least one indicative error signal to be output, and
- in that the means for detecting errors in the bus network can be set to a freely preselectable number of successive bit signal errors as criterion for the outputting of an error signal.

40. Semiconductor circuit according to Claim 38,
characterized
- in that the receiving means (120') comprise first selection means (123H) for errors which can be detected on the first bus core (BUS_H) and second selection means (123L) for errors which can be detected on the second bus core, and the first and second selection means (123H and 123L) can be set independently of one another to first and second numbers of successive bit signal errors as criteria for generating error signals (ERROR_H and ERROR_L) respectively assigned to the first and second bus cores (BUS_H and BUS_L).

41. Semiconductor circuit according to Claim 39 or 40,
characterized
- in that it has a control path (166.5; 202, 201.1), via which the setting of the selection means (123H, 123L) by the microcontroller (21) which cooperates with the transceiver function (100, 100') is possible.

42. Semiconductor circuit according to Claim 41,
characterized
- in that the receiving means (120') furthermore comprise a control interface (124), through which runs the control path (126H, 126L; 166.5) for setting up the selection means (123H, 123L).

43. Semiconductor circuit according to Claim 36 and Claim 42,
characterized
- in that the control interface (170, 170.1, 170.2, 170.3; 124) provided for influencing the slew rate and the control interface (124) provided for setting the selection means (123H, 123L) are combined in one circuit structure.

44. Semiconductor circuit according to one of Claims 37 to 40,
characterized
- in that the receiving means (120') comprise at least one error store (127H, 127L), which can be set (S) by the said error signal.

45. Semiconductor circuit according to Claim 4 and Claim 44,
characterized
- in that the at least one error store (127H, 127L) is part of the non-volatile memory area (35').

46. Semiconductor circuit according to Claim 1,
characterized
- in that it comprises potential influencing means (199, 199'), which are connected (195, 195') to the transceiver function (100, 100') and allow the influencing of at least one source level which is dominant in the case of transmission and/or of at least one signal level which is discriminant in the case of reception.

47. Semiconductor circuit according to Claim 46,
characterized
- in that it comprises means (20C) for providing a further, circuit-internal supply voltage (V_{T}) or a circuit-internal supply current (I_{T}) for supplying (197) the potential influencing means (199, 199').

48. Semiconductor circuit according to Claim 47,
characterized
- in that it has a terminal (20.2.3.) for external monitoring and/or capacitive filtering of the circuit-internal supply voltage (V_{T}) or of the circuit-internal supply current (I_{T}).

49. Semiconductor circuit according to Claim 46,
characterized
- in that it has a control path (166.5; 201, 201.1), via which the at least one microcontroller (21) is capable of communication with the transceiver function (100, 100') and via which the potential influencing means (199, 199') can be driven.

50. Semiconductor circuit according to Claim 49,
characterized
- in that it comprises a control interface (199.1), through which runs the control path (166.5, 201, 201.1) to the potential influencing means (199, 199').

51. Semiconductor circuit according to Claim 6 and one of Claims 36 and 42 and 50,
characterized
- in that the control interface (170.2 & 170, 124, 199.1) is part of, or is identical to, the interface (166) for serial communication (SPI, SCI, UART, RS232 Standard, etc.) with the said microcontroller (21).

52. Semiconductor circuit according to Claim 46,
characterized
- in that the potential influencing means (199, 199') are configured in such a way that in the event of transmission, at least one source level which determines the dominant state on the relevant bus core (BUS_H, BUS_L) can be shifted monotonically at least incrementally and/or decrementally.

53. Semiconductor circuit according to Claim 46,
characterized
- in that in the context of the capability of influencing the two source levels which are dominant in the case of transmission, both can be set or altered independently of one another.

54. Semiconductor circuit according to Claim 46,
characterized
- in that the two source levels which are dominant in the case of transmission can be set or shifted in such a way that the potential interval separating both levels is essentially maintained in the process.

55. Semiconductor circuit according to Claim 1,
characterized
- in that it has a signal-dedicated terminal (13; GND) as reference-earth potential busbar at least of the receiving means (120, 120', 120") of the transceiver function (100, 100').

56. Semiconductor circuit according to Claim 1,
characterized
- in that it has a current-dedicated terminal (13.1, System GND) as reference-earth potential busbar at least of the means for providing at least one second, fixed supply voltage (VCC; VCC_{U}, UCC_{A}).

57. Semiconductor circuit according to Claim 46,
characterized
- in that it comprises a particular terminal (13.1, System GND) as reference-earth potential busbar at least of the means (199) for setting or alteration in the event of transmission of at least one of the two dominant source levels.

58. Semiconductor circuit according to Claim 46,
characterized
- in that it has a particular terminal (13.2, Remote GND/Sense), via which the potential influencing means (199, 199') can be operatively connected (196) to a reference-earth potential (Remote GND, Sense, Reference) in the environment of the unit carrying the circuit.

59. Semiconductor circuit according to Claim 58,
characterized
- in that it has, in the path of the said operative connection, means (198) for protection against overvoltage and/or incorrect polarity and/or radio-frequency signal inputting.

60. Semiconductor circuit according to Claim 1,
characterized
- in that it is provided with an operating state (RECEIVE ONLY), in which the means for providing the at least second supply voltage (VCC; VCC_{U}, VCC_{A}) are switched on, the receiving means (120, 120') are activated and the transmitting means are deactivated (140', 142', 6) and, in this respect, have no influence on the bus (BUS_H/BUS_L).

61. Semiconductor circuit according to Claim 1,
characterized
- in that it is provided with at least one operating state (SLEEP), in which the transmitting means (133) of the transceiver function (100, 100') have no influence on the bus (BUS_H/BUS_L) and in which the means for providing the at least second supply voltage (VCC; VCC_{U}, VCC_{A}) are deactivated or switched off (VCC; VCC_{U}, VCC_{A} = zero).

62. Semiconductor circuit according to Claim 61,
characterized
- in that it comprises, connected to the bus (BUS_H, BUS_L), wake-up identification means (111) and control means (140, 141), by means of which it can activate (ENA/NINH) the means (20; 20U, 20A) for providing the at least second supply voltage (VCC; VCC_{U}, VCC_{A}) for the purpose of leaving this at least one operating state (SLEEP).

63. Semiconductor circuit according to Claim 61,
characterized
- in that it comprises control means (142, 142'; 166, 166.5) which enable the microcontroller (21), which cooperates with the transceiver function (100, 100'), to put (STB, EN; 201, 201.1) the circuit (200) back into the SLEEP state.

64. Semiconductor circuit according to Claim 1,
characterized
- in that the transceiver function (100, 100') is configured, with regard to its transmitting and receiving means (130, 133; 120; 120'), in such a way that the latter are tolerant to all possible error states in and on the bus line network, provided that all the bus subscribers behave compatibly with regard to the bus line network (BUS_H/BUS_L).

65. Semiconductor circuit according to Claim 1,
characterized
- in that it furthermore comprises, in monolithic form:
- means (164) for realizing a watchdog function at least for
- resetting (164.1) the microcontroller (21) which cooperates with the transceiver function (100, 100') of the circuit;
- monitoring the proper functioning of the above-mentioned microcontroller (21) for the purpose of monitoring a variable (164.4) which is significant for the proper functioning or program execution of the said microcontroller.

66. Semiconductor circuit according to Claim 65,
characterized
- in that the means for realizing a watchdog function (164) comprise at least one timer and the semiconductor circuit (200) has at least one terminal (164.9) for connecting up the watchdog function (164) to at least one time-determining element (169.1, 169.2).

67. Semiconductor circuit according to Claim 65,
characierized
- in that the means for realizing a watchdog function (164) are directly connected to the means for providing at least one second, fixed supply voltage (VCC; VCC_{U}, VCC_{A}).

68. Semiconductor circuit according to Claim 6 and Claim 65,
characterized
- in that the means for realizing a watchdog function (164) and the means for providing at least one second, fixed supply voltage (VCC; VCC_{U}, VCC_{A}) are connected to one another via a control path (166.5) which proceeds from the interface (166).

69. Semiconductor circuit according to Claim 65,
characterized
- in that the means (164) for realizing a watchdog function are furthermore configured (164.7, 164.8) in such a way that they can additionally monitor, and reset, at least one further microcontroller (21') of the unit in respect of its proper functioning and program execution.

70. Semiconductor circuit according to Claim 1,
characterized in that it furthermore comprises, in monolithic form:
- means (20, 20.4; 164; 164.6) for generating and communicating (29.1; 29.4) - after at least the supply voltage (VCC; VCC_{U}) which feeds the at least one microcontroller (21, 21') is built up - a reset signal (PWROR) to the at least one microcontroller (28, 21; 21').

71. Semiconductor circuit according to Claim 65 or 70,
characterized in that it furthermore comprises, in monolithic form:
- means (164) for outputting (164.5; 164.7, 164.8) at least one inhibit signal (INIF; INIF1, INIF2) in connection with the generation (164) and transmission (29.1, 29.2, 29.4; 164.7) of at least one reset signal (RESET, RESET1, RESET2) to the at least one microcontroller (21, 28; 21').

72. Semiconductor circuit according to Claim 1,
characterized in that it furthermore comprises, in monolithic form:
- means (110; 164) for monitoring at least one voltage from the first supply voltage (VBATT) and the at least one second supply voltage (VCC; VCC_{U}, VCC_{A}) with regard to at least one limit value, and also
- means for outputting an INTERRUPT signal (143, 145) or RESET signal (164, 164.1) to at least the microcontroller (21, 21'), which cooperates with the transceiver function (100, 100'), when this limit value is undershot or exceeded.

73. Semiconductor circuit according to Claim 62,
characterized
- in that it has at least one particular input (7), via which a wake-up signal can be applied to the wake-up identification means (111), which are connected to the bus (BUS_H/BUS_L), in the operating mode SLEEP, and
- in that the semiconductor circuit (200) is furthermore configured in such a way that its behaviour in response to a wake-up signal at this at least one particular input (7) is identical to its behaviour when a wake-up signal is received via the bus (BUS_H, BUS_L).

74. Semiconductor circuit according to Claim 1,
characterized in that it furthermore comprises, in monolithic form:
- autonomous means (165, 165') which are independent of the transceiver function (100, 100'), for detecting at least one wake-up signal in time periods at least of reduced or else increased activity of the at least one microcontroller (21, 21').

75. Semiconductor circuit according to Claim 74,
characterized
- in that the autonomous means (165, 165') have a plurality of inputs (7.1) for receiving wake-up signals (WUPIN).

76. Semiconductor circuit according to Claim 74,
characterized
- in that the autonomous means (165, 165') can be fed from the first supply voltage (VBATT) and can be operated independently of the means (20, 20'; 20U, 20A) for providing at least one second, fixed supply voltage (VCC; VCC_{U}, VCC_{A}).

77. Semiconductor circuit according to Claim 74,
characterized
- in that the autonomous means (165, 165') comprise at least one timer (165.1) for the timing control of their function.

78. Semiconductor circuit according to Claim 66 and Claim 74,
characterized
- in that the autonomous means (165, 165') can be driven (164a, 166.5) from the at least one timer of the watchdog function (164) for the purpose of timing control of their function.

79. Semiconductor circuit according to Claim 74,
characterized
- in that the autonomous means (165, 165') comprise at least one storage cell (165.2) for storage of a detected wake-up event.

80. Semiconductor circuit according to Claim 74,
characterized
- in that the autonomous means (165, 165') are capable of communicating with at least one microcontroller (21, 21') and are constructed such that they can be directly connected (32) to such a microcontroller.

81. Semiconductor circuit according to Claim 6 and Claim 74,
characterized
- in that the autonomous means (165, 165') are capable of communicating via the interface (166) with the at least one microcontroller (21, 21').

82. Semiconductor circuit according to Claim 74,
characterized
- in that the autonomous means (165, 165') have at least one high-side (VBATT) and/or low-side (GND) switch (165.3, 165.4) for the at least periodic voltage supply (WUPPH, WUPPL) of at least one wake-up sensor.

83. Semiconductor circuit according to Claim 74,
characterized
- in that the autonomous means (165, 165') have at least one high-side (VBATT) and/or low-side (GND) current source (165.3, 165.4) for the at least periodic current supply (WUPPH, WUPPL; WUPIN_1, 7.8; WUPIN_4, 7.9) of at least one wake-up sensor.

84. Semiconductor circuit according to Claim 77 or 78 and according to Claim 82 or 83,
characterized
- in that the at least one high-side (VBATT) and/or low-side (GND) switch or current source (165.3, 165.4) can be controlled by the at least one timer (165.1; 164, 164a) at least indirectly in such a way that its or their switched-on duration (t_{w}) is shorter than the repetition time (tₛ) of its or their switching on.

85. Semiconductor circuit according to Claim 78 and one of Claims 82 and 83,
characterized
- in that the watchdog function (164) and the autonomous means (165, 165') are configured with regard to one another (164a; 166.5) in such a way that the at least one high-side (VBATT) and/or low-side (GND) switch or current source (165.3, 165.4) can be switched on for a predetermined switched-on duration (t_{w}) at a repetition rate (1/tₛ) which is temporally interlinked with the repetition rate of a control signal (RESET, RESET1, RESET2, INT) which can be output by the watchdog function (164; 164.1, 164.2) to the at least one microcontroller (21, 21').

86. Semiconductor circuit according to at least one of Claims 3, 5, 7, 84 and 85,
characterized
- in that the switched-on duration (t_{w}) and/or the repetition time or repetition rate (tₛ or fₛ = 1/tₛ) and/or an interlinking factor are/is programmable.

87. Semiconductor circuit according to Claim 79 and one of Claims 84 and 85,
characterized
- in that it comprises discrimination means which initiate the storage of a wake-up event when the wake-up event has been detected for the N-th time, where N = INTEGER ((t_{d}/tₛ)+1).

88. Semiconductor circuit according to at least one of Claims 3, 5, 7 and 87,
characterized
- in that the number N is programmable and/or selectable from a set of predefined values.

89. Semiconductor circuit according to at least one of Claims 3, 5, 7 and 75,
characterized
- in that the autonomous means (165, 165') are programmable, with regard to the truth condition of at least one of the plurality of wake-up inputs (7.1), from a fixed set of possible truth conditions and, in this respect, are flexible with regard to their circuit function.

90. Semiconductor circuit according to one of Claims 26 and 27 and 29 and 86 and 88 and 89 and also according to the two Claims 3 and 6,
characterized
- in that this one-time programming was or is able to be initiated via the interface (166; SPI, SCI, UART, RS 232, etc.).

91. Semiconductor circuit according to one of the preceding claims,
characterized
- in that it is programmable (configuration programming) with regard to at least one of the functions (110, 170.1, 120, 120', 123H, 123L, 170.2, 130, 170.3, 140, 170; 164, 165, 165', 199; ENA/NINH, PWROR; EN, STB, SR, TEST/SRC/SWM, RESET, RESET1, RESET2, INIF, INIF1, INIF2, BUSY, INT at 24.1, INT at 24.2, WUPPH, WUPPL, t_{w}, tₛ, N) which are included in addition to the means (20, 20'; 20U, 20A, 20T) for providing the at least second supply voltage (VCC; VCC_{U}, UCC_{A}, V_{T}), and/or the limit value/s of the said function/s and/or the time response/s of the said function/s and/or the truth condition/s of the said function/s, or can be set to predefined values in this regard.

92. Semiconductor circuit according to Claim 5 and Claim 91,
characterized
- in that the programming of the configuration of the circuit can be stored as a closed data record in the non-volatile memory area (35').

93. Semiconductor circuit according to Claim 92,
characterized
- in that it comprises means which allow the data record to be able to be read into the semiconductor circuit (200) - after the installation of the latter into the control unit - from another control unit having an already programmed circuit (200) and the characteristic function of the circuit (200) to be able to be cloned in this respect.

94. Semiconductor circuit according to Claims 5 and 6,
characterized
- in that the non-volatile memory area (35') of the circuit (200) can be read out and/or overwritten by the microcontroller (21), which cooperates with the circuit, via the interface (166, SPI, SCI, UART, RS 232, etc.).

95. Semiconductor circuit according to Claim 1,
characterized
- in that it has two terminals (T; 8, 9) for the connection of two external terminating elements (16, 17) for the two bus cores (BUS_H, BUS_L) and also internal bus error detection means (132) and internal backup terminating and changeover means (131), in order to alter the bus termination in the event of an error.

96. Semiconductor circuit according to Claim 1,
characterized
- in that the transceiver function (100, 100') comprises adjustable bit period filters (81, 82) for optimizing the interference suppression to the communications baud rate.

97. Semiconductor circuit according to Claim 96,
characterized
- in that the bit period filters (81, 82) are digitally adjustable.

98. Semiconductor circuit according to Claim 46,
characterized
- in that the potential influencing means realize an adjustable offset voltage source (Q_{SG}), which is looped into that supply terminal of the transmitting means (133; 133L, 133H) which is near to the reference-earth potential, and the transmitting means (133; 133L, 133H) are supplied with constant voltage (CD).

99. Semiconductor circuit according to Claim 98,
characterized
- in that at least parts of analog action of the receiving means (120', 120''; 121.20) are connected in parallel with the constant-voltage-supplied transmitting means (133; 133L, 133H) in terms of power supplying, and the said offset voltage source (Q_{SG}) is thus effective at the receiving end as well.

100. Semiconductor circuit according to Claim 46,
characterized
- in that the potential influencing means (199, 199') realize a first adjustable offset voltage source (Q_{SL}), which is looped into the supply terminal, near to the reference-earth potential, of that switching output stage (133L) of the transmitting means (133) which drives the bus core BUS_L, and a second adjustable offset voltage source (Q_{SH}), which is looped into a supply terminal, which is opposite in terms of potential, of that switching output stage (133H) of the transmitting means (133) which drives the bus core BUS_H.

101. Semiconductor circuit according to Claim 46,
characterized
- in that the potential influencing means (199, 199') realize a first adjustable offset voltage source (Q_{SL}), which is looped into the supply terminal, near to the reference-earth potential, of that switching output stage (133L) of the transmitting means (133) which drives the bus core BUS_L, and a second and third adjustable offset voltage source (Q_{SH}, Q_{SHH}), which is looped into a supply terminal, which is opposite in terms of potential, of that switching output stage (133H) of the transmitting means (133) which drives the bus core BUS_H, the latter voltage sources being referred or connected to supply potentials of different magnitudes (referred to/connected to VCCA and V_{T} or VBATT, referred to/connected to V_{T} and VBATT).

102. Semiconductor circuit according to Claim 101,
characterized
- in that the second and third offset voltage sources (Q_{SH}, Q_{SHH}) can be activated alternatively.

103. Semiconductor circuit according to Claim 100 or 102,
characterized
- in that the offset voltage source (Q_{SL}) refers to the reference-earth potential and the effective offset voltage source (Q_{SH}, Q_{SHH}) remote from the reference-earth potential can be activated alternately only in chronological succession.

104. Semiconductor circuit according to Claim 101,
characterized
- in that it comprises means (199.5, 199.7, 199.8, 199.2X) which allow activation of the second and third offset voltage sources (Q_{SH} and Q_{SHH}) in dependence on the transmission signal (TxD).

105. Semiconductor circuit according to one of Claims 98 to 104,
characterized
- in that the potential influencing means (199, 199') comprise means (199.7 in conjunction with 199.2; 199.2X) for autonomous alteration of the setting of at least one offset voltage source (Q_{SG}, Q_{SL}, Q_{SH}, Q_{SHH}) over time.

106. Semiconductor circuit according to Claim 105,
characterized
- in that this alteration is possible in dependence on the data signal (TxD) at the transmitting end.

107. Semiconductor circuit according to Claim 105,
characterized
- in that a clock signal (SPI CLOCK), which can be drawn (201.1; 166, 166.5, 199.1) from the at least one microcontroller (21) can be fed to the means for autonomous alteration of the setting of at least one offset voltage source (Q_{SG}, Q_{SL}, Q_{SH}, Q_{SHH}).

108. Semiconductor circuit according to Claim 46 or 52,
characterized
- in that the potential influencing means (199, 199') comprise regulating means which allow the influencing to be performed in accordance with a value specification, which can be received from the at least one microcontroller, in dependence on a potential (U_{BUS_H}, U_{BUS_L}) which can be tapped on a bus core ((BUS_H, BUS_L).

109. Semiconductor circuit according to Claim 46 or 52,
characterized
- in that the potential influencing means (199, 199') comprise - independently of the transmitting means (133; 133H, 133L) - backup means (2019, RL', DL') which are connected or can be connected to at least one bus core (BUS_H, BUS_L) and allow connection, keyed by the transmission signal (TxD), to the bus core (BUS_H, BUS_L) of a regulated potential (Ua).

110. Semiconductor circuit according to Claim 109,
characterized
- in that the potential influencing means (199, 199') furthermore comprise measuring means (1991EL), which afford the acquisition of an error quantity (U_{ERR}), caused by the backup means (2019, RL', DL'), for the purpose of its compensation by regulating connection (2010L') or computational allowance (2022; 21) in the desired value specification (166.5, 199.2L) for the regulation (Ua) by the at least one microcontroller (21).

111. Semiconductor circuit according to Claim 46 or 52,
characterized
- in that the potential influencing means (199, 199') comprise - independently of the transmitting means (133; 133H, 133L) - backup means (2019, RL', DL') which are connected or can be connected to at least one bus core (BUS_L) and via which a connection which is keyed by the transmission signal (TxD) is possible to the bus core (BUS_L) of an unregulated potential (Ua) in accordance with a digital value which can be predetermined (201.1, 166, 166.5, 199.2) by the at least one microcontroller (21).

112. Semiconductor circuit according to one of Claims 109 to 111,
characterized
- in that for the purpose of activating one of the backup means (2019), the latter can be fed the transmission signal (TxD) from the relevant core output stage (133L) via a changeover switch (SWL), which, if appropriate, disconnects the core output stage (133L) from the bus core (BUS_L).

113. Semiconductor circuit according to Claim 108,
characterized
- in that the regulating means comprise a sampler (2015), which is operatively connected (2018) to a bus core (BUS_H, BUS_L), and a holding element or a holding regulator (1991H).

114. Semiconductor circuit according to Claim 113,
characterized
- in that the sampler (2015) is one which has two diode paths (DS1, DS2), the second diode path (DS2) being provided for the compensation of temperature influences and/or of an error voltage, caused by the sampling current flow, along the first diode path (DS1).

115. Semiconductor circuit according to Claim 46,
characterized
- in that the potential influencing means (199, 199') are configured in such a way that they allow the influencing of at least one recessively discriminant signal level by the influencing (121.4, 121.5; CVTH, CVTL) of at least one threshold voltage (VT_{H}, VT_{L}) in the receiver (120" ) .

116. Semiconductor circuit according to Claim 1,
characterized
- in that the receiving means (120'') have means (121.4, 121.5) for specifying two threshold values (VT_{H}, VT_{L}), which means are referred to a reference-earth potential busbar (FTG; 121.13), and in that this reference-earth potential busbar is operatively connected to a reference-earth potential terminal or can optionally be operatively connected (S₇) to at least two alternative reference-earth potential terminals (13, 13.1, 13.2) of the circuit.

117. Semiconductor circuit according to Claim 46,
characterized
- in that the influencing is possible by means of an adjustable offset voltage source (Q_{SG}; 121.7) which lies in the supply current path (DG; reference point 121.15 → 195.5), near to the reference-earth potential (GND), of at least parts of analog action of the receiving means (120"; 121.1, 121.2, 121.3; 121.20).

118. Semiconductor circuit according to Claims 116 and 117,
characterized
- in that the reference-earth potential busbar (FTG; 121.13) of the threshold value specification means (121.4, 121.5) can be connected (S₆) to the supply reference point (121.15), near to the reference-earth potential (GND), at least of the parts (121.10) of analog action of the receiving means (120").

119. Semiconductor circuit according to Claim 1,
characterized
- in that the receiving means (120'') have level discrimination means (121.1, 121.2, 121.3) referred to a supply reference point (121.15), and in that this supply reference point is operatively connected to a reference-earth potential terminal or can optionally be operatively connected (S₈) to at least two alternative reference-earth potential terminals (13, 13.1, 13.2) of the circuit.

120. Semiconductor circuit according to Claim 46,
characterized
- in that the potential influencing means comprise digital/analog conversion means (199.2, 199.2X) and/or analog/digital conversion means (199.3).

121. Semiconductor circuit according to Claim 46,
characterized
- in that the potential influencing means (199') comprise digital/analog conversion means (199.2X) which can generate at least all the reference values, control and switching signals for potential influencing that is to be performed, where applicable, during transmitting and/or receiving operation of the transceiver function (100').

122. Semiconductor circuit according to one of Claims 100 to 105 or according to Claim 107,
characterized
- in that an offset voltage source (Q_{SH}, Q_{SHH}) referred to the/a higher supply potential (UCC_{A}, V_{T}, VBATT) is replaced by a supply voltage source (Q_{VCC'}) which is referred to a lower supply potential (GND) and can correspondingly be varied with offset capability.

123. Semiconductor circuit according to Claim 33,
characterized
- in that it is part of an electronic control unit in which it is wired up or can be driven (142, 157, 172/SWM) for only single-wire reception and only single-wire transmission (with only one line driver in 133).

124. Use of the semiconductor circuit according to Claim 1, in an electronic control unit of a means of transport.

125. Use of the semiconductor circuit according to Claim 1, in an electronic control unit of heavy machinery or construction machines or hoists.

126. Use of the semiconductor circuit according to Claim 1, in an electronic control unit of automation technology.

127. Use of the semiconductor circuit according to Claim 1, in an electronic control unit of electrical installation technology or buildings technology.

128. Use of the semiconductor circuit according to Claim 1, in an electronic control unit of heating technology or air-conditioning technology.

129. Use of the semiconductor circuit according to Claim 1, in an electronic control unit of alarm technology, safety technology or access control technology.

130. Semiconductor circuit according to Claim 1,
characterized
- in that the transceiver function (100, 100') is designed for communication according to the CAN standard and for connection to a CAN bus line network (CAN_H/CAN_L).

131. Semiconductor circuit according to one of the preceding claims,
characterized
- in that it is fabricated using homogeneous high-voltage technology.

## Revendications

1. Circuit de commutation à semi-conducteur pour un appareil de commande électronique comportant au moins un microcontrôleur (21, 21') comprenant des moyens (20; 20A; 20U) pour fournir - à partir d'une première tension d'alimentation (VBATT) - au moins une deuxième tension d'alimentation (VCC; VCC_{U}, VCC_{A}) fixe pour le au moins un microcontrôleur (21, 21') et pour des circuits de commutation (163; 1631, 1632, 1633), coopérant avec celui-ci/ceux-ci, de l'appareil de commande,
caractérisé en ce qu' il comprend en outre, outre les moyens (20; 20A, 20U) pour fournir là au moins une deuxième tension d'alimentation fixe (VCC; VCC_{U}, VCC_{A}) sous forme monolithe :
- une fonction d'émetteur-récepteur (100, 100') avec des moyens d'émission et de réception (130, 133; 120, 120', 120") pour le couplage d'un microcontrôleur (21), coopérant avec le circuit de commutation, appartenant à l'appareil de commande, sur un bus bifilaire (BUS_H/BUS_L).

2. Circuit de commutation à semi-conducteur selon la revendication 1,
caractérisé en ce que
- il est programmable.

3. Circuit de commutation à semi-conducteur selon la revendication 2,
caractérisé en ce que
- il contient des moyens de programmation, permettant ou ayant permis, la première fois, une programmation d'au moins une fonction du circuit de commutation (200).

4. Circuit de commutation à semi-conducteur selon la revendication 1,
caractérisé en ce que
- il comprend une zone mémoire non volatile (35'), par exemple sous la forme d'une structure EEPROM.

5. Circuit de commutation à semi-conducteur selon la revendication 1,
caractérisé en ce que
- il comprend une zone mémoire non volatile (35') et en ce qu'il est programmable, par le fait que des données, qui déterminent au moins une fonction (caractéristique) du circuit de commutation (200), sont susceptibles d'être placées dans cette zone mémoire.

6. Circuit de commutation à semi-conducteur selon la revendication 1,
caractérisé en ce que, à titre de monolithe, il comprend en outre :
- une interface (166, SPI, SCI, RS 232, UART, etc.) pour l'échange série (201, 201.1) de données et/ou de signes de commande entre le circuit de commutation à semi-conducteur (200) et au moins le microcontrôleur (21; 21') coopérant avec sa fonction d'émetteur-récepteur (100, 100').

7. Circuit de commutation à semi-conducteur selon la revendication 6,
caractérisé en ce que
- la commande et/ou la programmation d'au moins une fonction (caractéristique) du circuit de commande est possible par l'intermédiaire de cette interface (166; SPI, SCI, RS 232, UART, etc.).

8. Circuit de commutation à semi-conducteur selon la revendication 1,
caractérisé en ce que
- les moyens de fourniture d'au moins une deuxième tension d'alimentation (VCC; VCC_{U}, VCC_{A}) constituent un régulateur de tension (20; 20'; 20U, 20A) travaillant de façon linéaire.

9. Circuit de commutation à semi-conducteur selon la revendication 1,
caractérisé en ce que
- les moyens de fourniture d'au moins une deuxième tension d'alimentation (VCC; VCC_{U}, VCC_{A}) constituent un régulateur de tension (20; 20', 20U, 20A) travaillant par commutation.

10. Circuit de commutation à semi-conducteur selon la revendication 1,
caractérisé en ce que
- les moyens de fourniture d'au moins une deuxième tension d'alimentation (VCC; VCC_{U}, VCC_{A}) constituent un régulateur de tension (20; 20', 20U, 20A) capable de plusieurs types de fonctionnement (MODEA, MODEB).

11. Circuit de commutation à semi-conducteur selon la revendication 10,
caractérisé en ce que
- le régulateur de tension capable de plusieurs types de fonctionnement (MODEA, MODEB) peut fonctionner tant en régulateur linéaire, qu'également en régulateur à commutation.

12. Circuit de commutation à semi-conducteur selon la revendication 10,
caractérisé en ce que
- le circuit de commutation à semi-conducteur (200) comprend des moyens permettant de choisir et/ou de changer le type de fonctionnement du régulateur -de tension, en fonction d'une commande correspondante de celui-ci.

13. Circuit de commutation à semi-conducteur selon la revendication 9 ou 11,
caractérisé en ce que
- il s'agit, concernant le régulateur de tension pouvant fonctionner en régulateur à commutation, d'un régulateur de tension muni d'un accumulateur d'énergie (20A3) de nature inductive, le circuit de commutation à semi-conducteur (200) étant susceptible de coopérer avec au moins ce dernier et une capacité mémoire (161.2).

14. Circuit de commutation à semi-conducteur selon la revendication 13,
caractérisé en ce que
- il s'agit concernant le régulateur de tension à commutation d'un régulateur à compensation.

15. Circuit de commutation à semi-conducteur selon la revendication 14, caractérisé par en ce que
- le régulateur de tension comprend une valve de roue libre (20A2') qui, pendant les phases de mise hors service du flux électrique, est électriquement passante, pour assurer la magnétisation/le chargement de l'accumulateur d'énergie inductif (20A3) entre l'un des deux raccordement de celui-ci et le potentiel de référence de la régulation de tension - en particulier le potentiel de masse (GND du système).

16. Circuit de commutation à semi-conducteur selon la revendication 15,
caractérisé en ce que
- la valve de roue libre est un composant à diode.

17. Circuit de commutation à semi-conducteur selon la revendication 15,
caractérisé en ce que
- la valve de roue libre (20A2') est un interrupteur électronique commandé, en particulier un transistor MOSFET.

18. Circuit de commutation à semi-conducteur selon la revendication 15,
caractérisé en ce que,
- au moins l'une des électrodes de la valve à roue libre (20A2') est guidée en au moins un raccordement (20A12, 20A13) particulier du circuit de commutation à semi-conducteur (200), et ladite conductivité électrique est réalisable par branchement externe de ce au moins un raccordement particulier.

19. Circuit de commutation à semi-conducteur selon la revendication 18,
caractérisé en ce que
- la première électrode de chemin de courant de la valve à roue libre (20A2') est guidée à un raccordement (20A12) du circuit de commutation à semi-conducteur (200), directement voisin de la sortie de régulateur (20.2.2) du circuit de commutation à semi-conducteur (200) et/ou la deuxième électrode de chemin de courant de la valve à roue libre (20A2') est guidée à un raccordement (20A13) directement voisin d'au moins un raccordement de masse (GND du système, 13.1) du circuit de commutation à semi-conducteur (200).

20. Circuit de commutation à semi-conducteur selon la revendication 1,
caractérisé en ce que
- les moyens de fourniture d'au moins une deuxième tension d'alimentation (VCC; VCC_{U}, VCC_{A}) sont activables et/ou désactivables, par un signal de commande (ENA/NINH), au sens d'une mise en service et/ou d'une mise hors service de cette tension d'alimentation.

21. Circuit de commutation à semi-conducteur selon la revendication 1,
caractérisé en ce que
- lesdits moyens configurent un premier régulateur de tension (20U) pour fournir une deuxième tension d'alimentation (VCC_{U}), pour le moins au moins un microcontrôleur (21. 21'), et un deuxième régulateur de tension (20A) pour fournir une troisième tension d'alimentation (VCC_{A}) pour les circuits de commutation, coopérant avec celui-ci/ceux-ci, de l'appareil de commande, et ces régulateurs de tension sont tels qu'ils sont activables et/ou désactivables au moyen d'un signal de commande (ENA/NINH).

22. Circuit de commutation à semi-conducteur selon la revendication 21,
caractérisé en ce que
- lesdits moyens comprennent en outre des moyens de commande (20C), qui en fonction d'un signal de commande (ENA/NINH), provoquent un établissement et/ou une annulation définie, non simultanée, de la deuxième et de la troisième tensions d'alimentation (VCCU, VCCA).

23. Circuit de commutation à semi-conducteur selon la revendication 22,
caractérisé en ce que
- lesdits moyens de commande (20C) sont tels ou font que, en cas d'activation, la deuxième tension d'alimentation (VCC_{U}) pour le au moins un microcontrôleur (21, 21') est susceptible d'être établie avant la troisième tension d'alimentation (VCC_{A}) prévue pour les circuits de commutation coopérant avec celui-ci/ceux-ci.

24. Circuit de commutation à semi-conducteur selon la revendication 22,
caractérisé en ce que
- lesdits moyens de commande (20C) sont tels ou font que, en cas de désactivation, la deuxième tension d'alimentation (VCC_{U}) pour le au moins un microcontrôleur (21, 21') est annulable après la troisième tension d'alimentation (VCC_{A}) prévue pour les circuits de commutation coopérant avec celui-ci/ceux-ci.

25. Circuit de commutation à semi-conducteur selon la revendication 21,
caractérisé en ce que
- les deux régulateurs de tension sont indépendants l'un de l'autre et, de cette manière, couplés ensemble uniquement thermiquement, et en ce que le circuit de commutation à semi-conducteur(200) comprend des moyens qui font que, en cas de chauffage, imputable à une surcharge, du substrat à semi-conducteur jusqu'à une température critique (T_{LIM}), le deuxième régulateur de tension (20A) désactive, en tout cas avant atteinte de la température critique, et le premier régulateur de tension (20U) désactive ensuite, après atteinte de la température critique (T_{LIM}).

26. Circuit de commutation à semi-conducteur selon au moins l'une des revendications 3, 5, 7, 8, 9 et 10,
caractérisé en ce que
- le régulateur de tension (20U, 20A) est susceptible d'être commandé et/ou programmé pour réglage à une tension de sortie (VCC; VCC_{U}; VCC_{A}) déterminée, parmi une pluralité de tensions de sortie sélectionnable.

27. Circuit de commutation à semi-conducteur selon l'une des revendications 3, 5, 7 et 10,
caractérisé en ce que
- le type de fonctionnement du régulateur de tension (20U, 20A) apte à plusieurs types de fonctionnement et sélectionnable et/ou réglable par commande et/ou programmation.

28. Circuit de commutation à semi-conducteur selon la revendication 1,
caractérisé en ce que
- les moyens de fourniture d'au moins une deuxième tension d'alimentation fixe (VCC; VCC_{U}, VCC_{A}) sont susceptibles de fonctionner tant avec un transistor de' régulation 31 (T₂) englobé par ceux-ci, c'est à dire interne au circuit de commutation, qu'également en liaison avec un transistor de régulation (T₂') externe au circuit de commutation, et
- en ce que le circuit de commutation à semi-conducteur présente à cette fin un raccordement pour la commande de l'électrode de commande d'un transistor de régulation (T₂') externe, coopérant avec le circuit de commutation à semi-conducteur (200).

29. Circuit de commutation à semi-conducteur selon au moins l'une des revendications 3, 5, 7 et 28,
caractérisé en ce que
- la possibilité de fonctionnement des moyens pour fournir au moins une deuxième tension d'alimentation fixe (VCC; VCC_{U}, VCC_{A}) avec un transistor de régulation (T₂) interne au circuit de commutation, ou bien avec un transistor de régulation (T₂') externe au régulateur de circuit de commutation, est sectionnable et/ou réglable par commande et/ou programmation.

30. Circuit de commutation à semi-conducteur selon l'une des revendications 26, 27 ou 29,
caractérisé en ce que
- il présente au moins un raccordement extérieur (20A10, 20U2, 20U4; 20A8; 20A6), pour ladite commande ou programmation.

31. Circuit de commutation à semi-conducteur selon la revendication 30,
caractérisé en ce que
- la programmation est possible par branchement du au moins un raccordement extérieur (20A10, 20U2, 20U4; 20A8; 20A6) à un potentiel de référence du circuit de commutation à semi-conducteur (200), en particulier à un potentiel de masse ou proche de la masse (GND ou GND du système), ou à potentiel qui diffère en tout cas, de façon significative, du potentiel de référence, ou à un potentiel d'alimentation (VBATT).

32. Circuit de commutation à semi-conducteur selon la revendication 6 et l'une des revendications 12, 26 et 27 et 29,
caractérisé en ce que
- ladite commande peut être effectuée par l'intermédiaire de cette interface (166; SPI, SCI, RS 232, UART, etc.).

33. Circuit de commutation à semi-conducteur selon la revendication 1,
caractérisé en ce que
- la fonction d'émetteur-récepteur (100, 100') est réalisée, tant quant à ses moyens d'émission et/ou de réception (130, 133; 120, 120'), qu'également concernant les moyens de commande (142; 157; 172/SWM) englobés par elle, qu'elle peut émettre et recevoir au choix, en mode bifilaire de façon différentielle ou en mode monofilaire, sur au moins un conducteur de bus (BUS_H, BUS_L), par rapport à un potentiel de référence fixe (GND).

34. Circuit de commutation à semi-conducteur selon la revendication 1,
caractérisé en ce que
- la fonction d'émetteur-récepteur (100, 100') est réalisée, concernant ses moyens d'émission et de réception (130, 133; 120, 120'), que sa cadence de fonctionnement (Slew-Rate) est susceptible d'être influencée (170.3, 81, 180; 170.2, 82; 170, 171), en particulier est adaptable au temps de bit de bus ou à la cadence de modulation de la communication.

35. Circuit de commutation à semi-conducteur selon la revendication 34,
caractérisé en ce que
- il présente un chemin de commande (171, 172, 158 ; 166.5, 201, 201.1), par lequel il est possible d'influer sur la cadence de fonctionnement (Slew-Rate), au moyen du microcontrôleur (21) coopérant avec la fonction d'émetteur-récepteur (100, 100').

36. Circuit de commutation à semi-conducteur selon la revendication 35,
caractérisé en ce que
- les moyens de réception (120') comprennent, en outre, une interface de commande (124; 170.2 en liaison avec 170) à travers laquelle s'étend le chemin de commande (171; 172, 158; 166.5; 201, 201.1) pour influer sur la cadence de fonctionnement (Slew-Rate).

37. Circuit de commutation à semi-conducteur selon la revendication 1,
caractérisé en ce que
- les moyens de réception (120; 120') comprennent des moyens (122') pour identifier des erreurs de transmission des signaux dans le réseau à bus et pour générer un signal de défaut indicatif.

38. Circuit de commutation à semi-conducteur selon la revendication 1,
caractérisé en ce que
- les moyens de réception (120; 120') comprennent des moyens (122'; 123H, 132L), pour identifier des erreurs dans le réseau à bus, qui permettent d'identifier des défauts de façon spécifique au conducteur de bus (BUS_H ou BUS_L) et, en cas de défaut, de fournir un signal de défaut.

39. Circuit de commutation à semi-conducteur selon la revendication 38,
caractérisé en ce que
- les moyens d'identification de défauts dans le réseau de bus comprennent des moyens de sélection (123H, 123L) réglables, qui permettent de fournir au moins un signal de défaut indicatif, et
- en que les moyens d'identification de défauts dans le réseau à bus sont réglables à un nombre, pré-sélectionnable librement, de défauts de signal de bit successifs, en tant de critère pour l'envoi d'un signal de défaut.

40. Circuit de commutation à semi-conducteur selon la revendication 38, caractérisée en ce que
- les moyens de réception (120') comprennent des premiers moyens de sélection (123H), pour des défauts identifiables sur le premier conducteur de bus (BUS H), et des deuxième moyens de sélection (123L), pour des défauts identifiables sur le deuxième conducteur de bus, et les premier et deuxième moyens de sélection (123H et 123L) sont réglables, indépendamment l'un de l'autre, à des premier et deuxième nombres de défauts de signaux de bit successifs, en tant que critères pour générer des signaux de défaut (ERROR_H ou ERROR_L) chaque fois associés au premier et/ou au deuxième conducteur de bus (BUS_H et/ou BUS_L).

41. Circuit de commutation à semi-conducteur selon la revendication 39 ou 40, caractérisé
- en ce qu'il présente un chemin de commande (166.5; 202, 201.1), par lequel le réglage des moyens de sélection (123H, 123L) est possible au moyen du microcontrôleur 21 coopérant avec la fonction d'émetteur-récepteur (100, 100').

42. Circuit de commutation à semi-conducteur selon la revendication 41,
caractérisé en ce que
- les moyens de réception (120') comprennent, en outre, une interface de commande (124), à travers laquelle s'étend le chemin de commande (126H, 126L; 166.5) pour régler les moyens de sélection (123H, 123L).

43. Circuit de commutation à semi-conducteur selon la revendication 36 et la revendication 42,
caractérisé en ce que
- l'interface de commande (170, 170.1, 170.2, 170.3; 124), prévue pour influer sur la cadence de fonctionnement (Slew-Rate), et l'interface de commande (124), prévue pour le réglage des moyens de sélection (123H, 123L), sont regroupées dans une structure de circuit de commutation.

44. Circuit de commutation à semi-conducteur selon les revendications 37 à 40,
caractérisé en ce que
- les moyens de réception (120') comprennent au moins une mémoire de défaut (127H, 127L), susceptible d'être occupée par ledit signal de défaut (S).

45. Circuit de commutation à semi-conducteur selon la revendication 4 et la revendication 44,
caractérisé en ce que
- la au moins une mémoire de défaut (127H, 127L) fait partie de la zone mémoire non volatile (35').

46. Circuit de commutation à semi-conducteur selon la revendication 1,
caractérisé en ce que
- il comprend des moyens pour influer sur le potentiel (199, 199'), reliés (195, 195') à la fonction d'émetteur-récepteur (100, 100'); moyens permettant d'influer sur au moins un niveau source, dominant en cas d'émission, et/ou sur au moins un niveau de signal, discriminant en cas de réception.

47. Circuit de commutation à semi-conducteur selon la revendication 46,
caractérisé en ce que
- il comprend des moyens (20C) pour fournir une autre tension d'alimentation (V_{T}) interne au circuit de commutation, ou une intensité d'alimentation (I_{T}) interne au circuit de commutation, pour alimenter (197) les moyens pour influer sur le potentiel (199, 199').

48. Circuit de commutation à semi-conducteur selon la revendication 47,
caractérisé en ce que
- il présente un raccordement (20.2.3) pour la surveillance externe et/ou le filtrage capacitif de la tension d'alimentation (V_{T}) interne au circuit et/ou de l'intensité d'alimentation (I_{T}) interne au circuit.

49. Circuit de commutation à semi-conducteur selon la revendication 4, caractérisé
- en ce qu'il présente un chemin de commande (166; 5; 201, 201.1), par lequel le au moins microcontrôleur (21) est susceptible de communiquer avec la fonction d'émetteur-récepteur (100, 100') et par lequel les moyens pour influer sur le potentiel (199, 199') sont susceptibles d'être commandés.

50. Circuit de commutation à semi-conducteur selon la revendication 49,
caractérisé en ce que
- il comprend une interface de commande (199.1) à travers laquelle le chemin de commande (166.5, 201, 201.1) s'étend vers les moyens pour influer sur le potentiel (199, 199').

51. Circuit de commutation à semi-conducteur selon la revendication 6 et l'une des revendications 36 et 42 et 50,
caractérisé en ce que
- l'interface de commande (170.2 et 170, 124, 199.1) fait partie de ou est identique à l'interface (166) pour la communication série (standard SPI-, SCI-, UART-, RS232-standard etc.) avec ledit microcontrôl-eur (21).

52. Circuit de commutation à semi-conducteur selon la revendication 46,
caractérisé en ce que
- les moyens pour influer sur le potentiel (199, 199') sont tels que, en cas d'émission, au moins un niveau source, qui détermine l'état dominant sur le conducteur de bus(BUS_H, BUS_L) concerné, peut être décalé de façon monotone, au moins de manière incrémentielle et/ou décrémentielle.

53. Circuit de commutation à semi-conducteur selon la revendication 46,
caractérisé en ce que
- dans le cas de possibilité d'influer sur les niveaux sources dominants en cas d'émission, les deux sont réglables et/ou modifiables indépendamment l'un de l'autre.

54. Circuit de commutation à semi-conducteur selon la revendication 46,
caractérisé en ce que
- les deux niveaux source dominants en cas d'émission sont réglables et/ou décalables, de manière que l'espacement en potentiel des deux niveaux reste alors pratiquement inchangé.

55. Circuit de commutation à semi-conducteur selon la revendication 1,
caractérisé en ce que
- il présente un raccordement (13; GND) dédié au signal, sous forme de barre de potentiel de référence, d'au moins les moyens de réception (120, 120', 120") de la fonction d'émetteur-récepteur (100, 100').

56. Circuit de commutation à semi-conducteur selon la revendication 1,
caractérisé en ce que
- il présente un raccordement (13.1, GND du système) dédié au courant, sous forme de barre de potentiel de référence, d'au moins les moyens pour fournir au moins une deuxième tension d'alimentation fixe (VCC; VCC_{U}, VCC_{A}).

57. Circuit de commutation à semi-conducteur selon la revendication 46,
caractérisé en ce que
- il comprend un raccordement particulier (13.1, GND du système), sous forme de barre de potentiel de référence, d'au moins les moyens (199) pour régler et/ou modifier, lors de l'émission d'au moins l'un des deux niveaux sources dominants.

58. Circuit de commutation à semi-conducteur selon la revendication 46, caractérisé
- en ce qu'il présente un raccordement particulier (13.2, Remote GND/Sense), par lequel les moyens pour influer sur le potentiel (199, 199') sont susceptibles d'être reliés fonctionnellement (196) dans l'environnement de l'appareil portant le circuit de commutation.

59. Circuit de commutation à semi-conducteur selon la revendication 58, caractérisé
- en ce qu'il présente des moyens de protection (198), sur le chemin de ladite liaison fonctionnelle, contre les surtensions et/ou les fausses polarités et/ou l'injection d'un signal à haute fréquence.

60. Circuit de commutation à semi-conducteur selon la revendication 1,
caractérisé en ce que
- il dispose d'un état de fonctionnement (RECEIVE ONLY), dans lequel les moyens pour fournir la au moins une deuxième tension d'alimentation (VCC; VCC_{U}, VCC_{A}) sont mis en service, les moyens de réception (120, 120') sont activés et les moyens d'émission (140', 142', 6) sont désactivés et, dans cette mesure, n'ont aucune influence sur le bus (BUS_H/BUS_L).

61. Circuit de commutation à semi-conducteur selon revendication 1,
caractérisé en ce que
- il dispose d'au moins un état de fonctionnement (SLEEP), dans lequel les moyens d'émission (133) de la fonction d'émission-réception (100, 100') sont sans influence sur le bus (BUS_H/BUS_L), et dans lequel les moyens de fourniture de la au moins une deuxième tension d'alimentation (VCC; VCC_{U}, VCC_{A}) sont désactivés et/ou mis hors service (VCC, VCC_{U}, VCC_{A} = zéro).

62. Circuit de commutation à semi-conducteur selon la revendication 61,
caractérisé en ce que
- il comprend des moyens d'identification de réveil (111), en liaison avec le bus (BUS_H, BUS_L), et des moyens de commande (140, 141), au moyen desquels il peut activer (ENA/NINH) les moyens de fourniture (20; 20U, 20A) pour fournir là au moins une deuxième tension d'alimentation (VCC; VCC_{U}, VCC_{A}), dans le but de quitter ce au moins un état de fonctionnement (SLEEP).

63. Circuit de commutation à semi-conducteur selon la revendication 61,
caractérisé en ce que
- il comprend des moyens de commande (142, 142'; 166, 166.5), au moyen desquels le microcontrôleur (21) coopérant avec la fonction d'émetteur-récepteur (100, 100') peut faire passer (ramener) (STB, EN; 201, 201.1) le circuit de commutation (200) à l'état SLEEP.

64. Circuit de commutation à semi-conducteur selon la revendication 1,
caractérisé en ce que
- la fonction d'émetteur-récepteur (100, 100') est réalisée, quant au moyen d'émission et de réception (130, 133; 120; 120'), de manière que ces derniers soient tolérants par rapport à tous les états de défaut possibles, dans et sur le réseau de lignes de bus, dans la mesure où tous les abonnés au bus se comportent de façon compatible quant au réseau de lignes de bus (BUS_H/BUS_L).

65. Circuit de commutation à semi-conducteur selon la revendication 1, caractérisé en ce qu'il comprend en outre, à titre de monolithe :
- des moyens (164) pour réaliser une fonction de contrôleur de séquence (Watchdog), au moins pour
- ramener à l'état initial (164.1) le microcontrôleur (21) coopérant avec la fonction d'émetteur-récepteur (100, 100') du circuit de commutation ;
- surveiller le fonctionnement conforme du microcontrôleur (21) précité, afin de surveiller une grandeur (164.4) significative pour son fonctionnement conforme et/ou le déroulement conforme des programmes.

66. Circuit de commutation à semi-conducteur selon la revendication 65,
caractérisé en ce que
- les moyens pour réaliser une fonction de contrôleur de séquence (Watchdog) (164) comprennent au moins une horloge et le circuit de commutation à semi-conducteur (200) présente au moins un raccordement (164.9) pour le branchement de la fonction de contrôleur de séquence (Watchdog) (164) à au moins un élément (169.1, 169.2) déterminant le temps.

67. Circuit de commutation à semi-conducteur selon la revendication 65,
caractérisé en ce que
- les moyens pour réaliser une fonction de contrôleur de séquence (Watchdog) (164) sont reliés directement au moyens pour fournir au moins une deuxième tension d'alimentation fixe (VCC; VCC_{U}, VCC_{A}).

68. Circuit de commutation à semi-conducteur selon la revendication 6 et la revendication 65,
caractérisé en ce que
- les moyens pour réaliser une fonction de contrôleur de séquence (Watchdog) (164) sont reliés aux moyens pour fournir au moins une deuxième tension d'alimentation fixe (VCC; VCC_{U}, VCC_{A}), par l'intermédiaire d'un chemin de commandes (166.5) partant de l'interface (166).

69. Circuit de commutation à semi-conducteur selon la revendication 65,
caractérisé en ce que
- les moyens (164) pour réaliser une fonction de contrôleur de séquence (Watchdog) font réaliser en outre (164.7, 164.8) de manière à pouvoir surveiller encore au moins un autre microcontrôleur (21') de l'appareil, du point de vue de son fonctionnement conforme et du déroulement conforme des programmes et pouvoir le remettre à l'état initial.

70. Circuit de commutation à semi-conducteur selon la revendication 1, caractérisé en ce qu'il comprend en tant que monolithe en outre :
- des moyens (20, 20.4; 164; 164; 6) pour générer et transmettre (29.1; 29.4) - après qu'au moins la tension d'alimentation (VCC; VCC_{U}) alimentant le au moins un contrôleur (21, 21') ait été établie - un signal de remise à l'état initial (PWROR) au au moins un microcontrôleur (28, 21 ; 21').

71. Circuit de commutation à semi-conducteur selon la revendication 65 ou 70, caractérisé en ce qu'il comprend en outre, à titre de monolithe, :
- des moyens (164) pour fournir (164.5; 164; 7, 164, 8) au moins un signal de blocage (INIF; INIF1, INIF2), en liaison avec la génération (164) et la transmission (29.1, 29.2, 29.4; 164.7) d'au moins un signal de remise à l'état initial (RESET, RESET1, RESET2) au au moins un contrôleur (21, 28; 21').

72. Circuit de commutation à semi-conducteur selon la revendication 1, caractérisé en ce qu'il comprend en outre, à titre de monolithe :
- des moyens (110; 164) pour surveiller au moins une tension parmi la première tension d'alimentation (VBATT) et la au moins une deuxième tension d'alimentation(VCC; VCC_{U}, VCC_{A}) quant à au moins une valeur limite, ainsi que
- des moyens pour un signal INTERRUPT (143, 145) ou des signaux RESET (164, 164.1) à au moins le microcontrôleur (21, 21') coopérant avec la fonction d'émetteur-récepteur (100, 100'), lorsque cette valeur limite est franchie, en descente ou en dépassement.

73. Circuit de commutation à semi-conducteur selon la revendication 62,
caractérisé en ce que
- il présente au moins une entrée (7) particulière, par laquelle les moyens d'identification de réveil (111), reliés au bus (BUS_H/BUS_1), sont susceptible d'être sollicités par un signal de réveil dans le type de fonctionnement SLEEP, et
- en ce que le circuit de commutation à semi-conducteur (200) est en outre réalisé de manière que son comportement a un signal de réveil, arrivant sur cette au moins une entrée (7) particulière, est identique à son comportement en cas de réception d'un signal de réveil par le bus (BUS_H, BUS_L).

74. Circuit de commutation à semi-conducteur selon la revendication 1, caractérisé en ce qu'il comprend en outre, à titre de monolithe :
- des moyens autonomes (165, 165') indépendants de la fonction d'émetteur-récepteur (100, 100'), pour appréhender au moins un signal de réveil dans des intervalles de temps d'au moins une activité réduite ou annulée du au moins un microcontrôleur (21, 21').

75. Circuit de commutation à semi-conducteur selon la revendication 74,
caractérisé en ce que
- les moyens autonomes (165, 165') présentent plusieurs entrées (7.1) pour la réception des signaux de réveil (WUPIN).

76. Circuit de commutation à semi-conducteur selon la revendication 74,
caractérisé en ce que
- les moyens autonomes (165, 165') sont susceptibles d'être alimentés à partir de la première tension d'alimentation (VBATT) et sont susceptibles de fonctionner indépendamment des moyens (20, 20'; 20U, 20A) pour fournir au moins une deuxième tension d'alimentation fixe (VCC, VCC_{U}, VCC_{A}).

77. Circuit de commutation à semi-conducteur selon la revendication 74,
caractérisé en ce que
- les moyens autonomes (165, 165') comprennent au moins une horloge (165.1) pour la commande temporelle de son fonctionnement.

78. Circuit de commutation à semi-conducteur selon la revendication 66 et la revendication 74,
caractérisé en ce que
- les moyens autonomes (165, 165') sont susceptibles d'être commandés (164a, 166.5) dans le but d'une commande temporelle de leur fonctionnement, par la moins au moins une horloge de la fonction de contrôleur de séquence (Watchdog) (164).

79. Circuit de commutation à semi-conducteur selon la revendication 74,
caractérisé en ce que
- les moyens autonomes (165, 165') comprennent au moins une cellule mémoire (165.2) pour mémoriser un événement réveil ayant été détecté.

80. Circuit de commutation à semi-conducteur selon la revendication 74,
caractérisé en ce que
- les moyens autonomes (165, 165') sont susceptibles de communiquer avec au moins un microcontrôleur (21, 21') et sont réalisés de façon à pouvoir être reliés directement (32) à un tel microcontrôleur.

81. Circuit de commutation à semi-conducteur selon la revendication 6 et la revendication 74,
caractérisé en ce que
- les moyens autonomes (165, 165') sont susceptibles de communiquer avec le au moins microcontrôleur (21, 21'), par l'intermédiaire de l'interface (166).

82. Circuit de commutation à semi-conducteur selon la revendication 74,
caractérisé en ce que
- les moyens autonomes (165, 165') présentent au moins un interrupteur Highside (VBATT) et/ou Lowside (GND) (165.3, 165.4) pour l'alimentation en tension (WUPPH, WUPPL), au moins par intervalles de temps, d'au moins un capteur de réveil.

83. Circuit de commutation à semi-conducteur selon la revendication 74,
caractérisé en ce que
- les moyens autonomes (165, 165') présentent au moins une source de courant Higdside (VBATT) et/ou Lowside (GND) (165.3, 165.4) pour assurer l'alimentation, au moins par intervalles de temps (WUPPH, WUPPL; WUPIN-1, 7.8; WUPIN_4, 7.9), d'au moins un capteur de réveil.

84. Circuit de commutation à semi-conducteur selon la revendication 77 ou 78 et selon la revendication 82 ou 83,
caractérisé en ce que
- le ou les au moins un interrupteur et/ou source de courant Highside (VBATT) et/ou Lowside (GND) (165.3, 165.4) sont susceptibles d'être commandés, au moins indirectement, par la au moins une horloge (165.1; 164, 164a), de manière que sa, ou leur, durée de mise en service (tw) soit plus courte que le temps de répétition (ts) de sa, ou de leur, mise en service.

85. Circuit de commutation à semi-conducteur selon la revendication 78 et l'une des revendications 82 et 83,
caractérisé en ce que
- la fonction de contrôleur de séquence (Watchdog) (164) et les moyens autonomes (165, 165') sont en rapport mutuel (164a; 165.5), de manière que le ou la au moins un interrupteur et/ou source de courant Highside (VBATT) et/ou Lowside GND) (165.3, 165.4) soient susceptibles d'être mis en service pendant une durée de mise en service (tw) prédéterminée, à une fréquence de répétition (1/tₛ) qui est concaténée temporellement avec la fréquence de répétition (1/tₛ), d'un signal de commande (RESET, RESET1, RESET2, INT) susceptible d'être fourni, par la fonction de contrôleur de séquence (Watchdog) (164; 164.1, 164.2), au au moins un microcontrôleur (21, 21').

86. Circuit de commutation à semi-conducteur selon au moins l'une des revendications 3, 5, 7, 84 et 85,
caractérisé en ce que
- la durée de mise en service (t_{w}) et/ou le temps de répétition et/ou la fréquence de répétition (tₛ et/ou fₛ = 1/Ts) et/ou un facteur de concaténation sont programmables.

87. Circuit de commutation à semi-conducteur selon la revendication 79 et l'un des revendications 84 et 85,
caractérisé en ce que
- il comprend des moyens de discrimination, qui déclenchent la mise en mémoire d'événement réveil, lorsque l'événement réveil a été appréhendé pour la Nième fois, avec N = entier {(t_{d}/tₛ)+1}.

88. Circuit de commutation à semi-conducteur selon au moins l'une des revendications 3, 5, 7 et 87,
caractérisé en ce que
- le nombre N est programmable et/ou sélectionnable à partir d'une certaine quantité de valeurs prédéfinies.

89. Circuit de commutation à semi-conducteur selon au moins l'une des revendications 3, 5, 7 et 75,
caractérisé en ce que
- les moyens autonomes (165, 165') sont programmables quant à la condition de vérité d'au moins l'une des plusieurs entrées de réveil (7.1) à partir d'une quantité fixe de conditions de vérités possibles et, dans cette mesure, flexibles quant à leur fonction de circuit de commutation.

90. Circuit de commutation à semi-conducteur selon au moins une des revendications 26, et 27 et 29 et 86 et 88 et 89, ainsi que les deux revendications 3 et 6,
caractérisé en ce que
- cette programmation faite une première fois était ou est initialisable par l'intermédiaire de l'interface (166; SPI, SCI, UART, RS 232, etc.).

91. Circuit de commutation à semi-conducteur selon l'une des revendications précédentes,
caractérisé en ce que
- il est programmable (programmation de configuration) ou réglable à des valeurs prédéfinies à ce sujet, quant à au moins l'une des fonctions (110, 170.1, 120', 123H, 123L, 170.2, 130, 170.3, 140, 170; 164, 165, 165', 199; ENA/NINH, PWOR; EN, STB, SR, TEST/SRC/SWM, REST, REST1, REST2, INIF, INIF1, INIF2, BUSY, INT an 24.1, INT en 24.2, WUPPH, WUPPl, t_{w}, tₛ, N) englobées, outre les moyens (20, 20', 20U, 20A, 20T) pour fournir la au moins une deuxième tension d'alimentation (VCC; VCC_{U}, VCC_{A}, Vt), et/ou/respectivement quant à leur ou leurs valeur(s) limite(s) et/ou/respectivement quant à leur/leurs comportement(s) dans le temps et/ou/respectivement quant à leur/leurs conditions de vérité.

92. Circuit de commutation à semi-conducteur selon les revendications 5 et 91,
caractérisé en ce que
- dans la zone mémoire non-volatile (35'), la programmation de la configuration du circuit de commutation est susceptible d'être placée sous forme de jeu de données fermé.

93. Circuit de commutation à semi-conducteur selon la revendication 92,
caractérisé en ce que
- il comprend des moyens permettant que le jeu de données puisse être lu dans le circuit de commutation à semi-conducteur (200) - après son insertion dans l'appareil de commande - à partir d'un autre appareil de commande ayant un circuit de commutation (200) déjà programmé, et la fonction caractéristique du circuit de commande (200) étant dans cette mesure susceptible d'être clônée.

94. Circuit de commutation à semi-conducteur selon les revendications 5 et 6,
caractérisé en ce que
- la zone mémoire non volatile (35') du circuit de commutation (200) est lisible et/ou surinscriptible par le microcontrôleur (21) coopérant avec le circuit de commutation, par l'intermédiaire de l'interface (166, SPI, SCI, UART, RS 232, etc.).

95. Circuit de commutation à semi-conducteur selon la revendication 1,
caractérisé en ce que
- il présente deux raccordements (T; 8, 9), pour le raccordement de deux éléments de terminaison (16, 17) externes pour les deux conducteurs de bus (BUS_H, BUS_L), ainsi que des moyens d'identification de défaut de bus (132) internes et des moyens de terminaison de remplacement et de commutation (131) internes, afin de modifier la terminaison de bus en cas de défaut.

96. Circuit de commutation à semi-conducteur selon la revendication 1,
caractérisé en ce que
- la fonction d'émetteur-récepteur (100, 100') comprend des filtres de temps de bit (81, 82), pour optimiser la suppression des parasites, à la cadence de modulation de communication.

97. Circuit de commutation à semi-conducteur selon la revendication 96,
caractérisé en ce que
- les filtres de temps de bit (81, 82) sont réglables de façon numérique.

98. Circuit de commutation à semi-conducteur selon la revendication 46,
caractérisé en ce que
- les moyens pour influer sur le potentiel constituent une source de tension offset (Q_{SG}) réglable, mise en boucle dans le raccordement d'alimentation, proche du potentiel de référence, des moyens d'émission (133; 133L; 133H), et les moyens d'émission (133; 133L; 133H) sont alimentés en tension constante (CD).

99. Circuit de commutation à semi-conducteur selon la revendication 98,
caractérisé en ce que
- aux moyens d'émission (133; 133L; 133H) alimentés par une tension constante sont branchés en parallèle, quant à l'alimentation électrique, d'au moins des parties, à effet analogique, des moyens de réception (120', 120"; 1121.20), et ladite source de tension offset (QSG) est ainsi activée côté réception.

100. Circuit de commutation à semi-conducteur selon la revendications 46,
caractérisé en ce que
- les moyens pour influer sur le potentiel (199, 19') constituent une première source de tension offset (Q_{SL}) réglable, mise en boucle dans le raccordement d'alimentation, proche du potentiel de référence, de l'étage de commutation final (133L), commandant le conducteur de bus BUS_L, des moyens d'émission (133), et une deuxième source de tension offset (Q_{SH}) réglable, mise en boucle en un raccordement d'alimentation, opposé quant au potentiel, de l'étage de commutation final (133H), commandant le conducteur de bus BUS_H, des moyens d'émission (133).

101. Circuit de commutation à semi-conducteur selon la revendication 46,
caractérisé en ce que
- les moyens pour influer sur le potentiel (199, 199') réalisent une première source de tension offset (Q_{SL}) réglable, mise en boucle dans le raccordement d'alimentation, proche du potentiel de référence, de l'étage final de commutation (133L), commandant le conducteur BUS_L des moyens d'émission (133), et une deuxième et une troisième sources de tension offset (Q_{SH}, Q_{SHH}) réglables, mises en boucle dans un raccordement d'alimentation, opposé quant au potentiel, de l'étage final de commutation (133H), commandant le conducteur de bus BUS-H, des moyens d'émission (133), ces dernières sources se référant ou étant ou raccordées à des potentiels d'alimentation de valeur différente (à VCC et V_{T} ou VBATT, à V_{T} et VBATT).

102. Circuit de commutation à semi-conducteur selon la revendication 101,
caractérisé en ce que
- la deuxième et troisième sources de tension offset offset (Q_{SH} ou Q_{SHH}) sont activables alternativement.

103. Circuit de commutation à semi-conducteur selon la revendication 100 ou 102,
caractérisé en ce que la source de tension offset (Q_{SL}) se référant au potentiel de référence et la source de tension offset (Q_{SH}, Q_{SHH}) efficaces, distante du potentiel de référence, ne sont activables de façon alternée que selon une succession temporelle

104. Circuit de commutation selon la revendication 101, caractérisé en ce qu'il comprend des moyens (199.5, 199.7, 199.8, 199.2X), qui permettent un branchement efficace des deuxième et troisième sources de tension offset (Q_{SH} et Q_{SHH}), en fonction du signal d'émission (TxD).

105. Circuit de commutation à semi-conducteur selon l'une des revendications 98 à 104,
caractérisé en ce que
- les moyens pour influer sur le potentiel (199, 199') comprennent des moyens (199, 7, en relation avec 199.2; 199.2X) pour assurer la modification autonome du réglage d'au moins une source de tension offset (Q_{SG}, Q_{SL}, Q_{SH}, Q_{SHH}) en fonction du temps.

106. Circuit de commutation à semi-conducteur selon la revendication 105,
caractérisé en ce que
- cette modification est possible en fonction du signal de données (TxD) côté émission.

107. Circuit de commutation à semi-conducteur selon la revendication 105,
caractérisé en ce que
- un signal de cadencement (SPI CLOCK), auquel au moins un microcontrôleur (21) est susceptible de se référer, est susceptible d'être d'être amené aux moyens de modification autonome du réglage d'au moins une source de tension offset (Q_{SG}, Q_{SL}, Q_{SH}, Q_{SHH}).

108. Circuit de commutation à semi-conducteur selon la revendication 46 ou 52,
caractérisé en ce que
- les moyens pour influer sur le potentiel (199, 199') comprennent des moyens de régulation qui permettent d'effectuer le processus d'influence, selon les indications d'une attribution de valeurs pouvant être reçues par le au moins un microcontrôleur, en fonction d'un potentiel (U_{BUS_H'} U_{BUS_L}) pouvant être prélevé sur un conducteur de bus (BUS_H, BUS_L).

109. Circuit de commutation à semi-conducteur selon la revendication 46 ou 52,
caractérisé en ce que
- les moyens pour influer sur le potentiel (199, 199')
- indépendamment des moyens d'émission (133; 133H, 133L)
- comprennent des moyens de remplacement (2019, RL', DL'), reliés ou susceptibles d'être reliés à au moins un conducteur de bus (BUS_H, BUS_L), qui permettent de procéder à un branchement, cadencé par le signal d'émission (TxD), sur le conducteur de bus (BUS H, BUS_L), d'un potentiel (Ua) régulé.

110. Circuit de commutation à semi-conducteur selon la revendication 109,
caractérisé en ce que
- les moyens pour influer sur le potentiel (199, 199') comprennent, en outre, des moyens de mesure (1991EL), qui assurent la détection d'une grandeur d'erreur (U_{ERR}) provoquée par les moyens de remplacement (2019, RL', DL'), dans le but de sa compensation par branchement de régulation (2010L'), ou pour prendre en considération par calcul (2022; 21) lors de l'attribution de. la valeur de consigne (166.5, 199.2L), pour la régulation (Ua) par le au moins un microcontrôleur (21).

111. Circuit de commutation à semi-conducteur selon la revendication 46 ou 52,
caractérisé en ce que
- les moyens pour influer sur le potentiel (199, 199')
- indépendamment des moyens d'émission (133; 133H, 133L)
- comprennent des moyens de remplacement (2019; RL', DL'), reliés ou susceptibles d'être reliés à au moins un conducteur de bus (BUS_L), moyens de remplacement par l'intermédiaire desquels un branchement, cadencé par le signal d'émission (TxD), sur le conducteur de bus (BUS_L) d'un potentiel (Ua) non régulé est possible d'après les indications données par une valeur numérique, susceptible d'être prédéterminée (201.1, 166, 166.5, 199.2) par le au moins un contrôleur (21).

112. Circuit de commutation à semi-conducteur selon les revendications 109 à 111,
caractérisé en ce que
- dans le but d'une commande de terminaison de conduction d'un des moyens de remplacement (2019), à celui-ci peut être amené le signal d'émission (TxD) venant de l'étage final de conducteur (133L) concerné, par l'intermédiaire d'un commutateur (SWL) qui, le cas échéant, assure la séparation entre l'étage final de conducteur (133L) et le conducteur de bus (BUS_L).

113. Circuit de commutation à semi-conducteur selon la revendication 108,
caractérisé en ce que
- les moyens de régulation comprennent un échantillonneur (2015), relié fonctionnellement (2018) à un conducteur de bus (BUS_H, BUS_L), et un organe de maintien ou un régulateur à fonction de maintien (1991H).

114. Circuit de commutation à semi-conducteur selon la revendication 113,
caractérisé en ce que
- il s'agit, concernant l'échantillonneur (2015), d'un échantillonneur muni de deux segments à diode (DS1, DS2), le deuxième segment à diode (DS2) étant prévu pour la compensation des influences dues à la température et/ou d'une tension d'erreur venant du flux du courant de balayage, le long du premier segment à diode (DS1).

115. Circuit de commutation à semi-conducteur selon la revendication 46,
caractérisé en ce que
- les moyens pour influer sur le potentiel (199, 199') sont tels qu'ils permettent d'influer sur au moins un niveau de signal discriminant par voie récessive, en influant ((121.4, 121.5; CVTH, CVTL) sur au moins une tension de seuil (VT_{H}, VT_{L}) dans le récepteur (120").

116. Circuit de commutation à semi-conducteur selon la revendication 1,
caractérisé en ce que
- les moyens de réception (120") présentent des moyens (121.4, 121.5), se référant à une barre de potentiel de référence (FTG; 121.13), pour attribuer deux valeurs de seuil (VT_{H}, VT_{L}), et en ce que cette barre de potentiel de référence est reliée fonctionnellement à un raccordement de potentiel de référence ou, au choix, est susceptible d'être reliée (S₇) à au moins deux raccordements de potentiel de référence (13, 13.1; 13.2), alternatifs, du circuit de commutation.

117. Circuit de commutation à semi-conducteur selon la revendication 46,
caractérisé en ce que
- la fonction d'influence peut être exercée au moyen d'une source de tension offset (Q_{SG}; 121.7) réglable, située dans le chemin de courant d'alimentation (DG; point de pied 121.15 --> 195.5), proche du potentiel de référence (GND), d'au moins des parties, à effet analogique, des moyens de réception (120"; 121.1, 121.2, 121.3; 121.20).

118. Circuit de commutation à semi-conducteur selon les revendications 116 et 117,
caractérisé en ce que
- la barre de potentiel de référence (FTG; 121.13) des moyens d'attribution des valeurs de seuil (121.4, 121.5) est susceptible d'être reliée (S₆) au point de pied (121.15), proche du potentiel de référence (GND), d'au moins les parties à effet analogique (121.10) des moyens de réception (120").

119. Circuit de commutation à semi-conducteur selon la revendication 1,
caractérisé en ce que
- les moyens de réception (120") présentent des moyens de discrimination de niveaux (121.1, 121.2, 121.3) se référant à un point de pied d'alimentation (121.15), et en ce que ce point de pied d'alimentation est relié fonctionnellement à un raccordement de potentiel de référence ou bien, au choix, est susceptible d'être relié fonctionnellement (S₈) à au moins deux raccordements de potentiel de référence (13, 13.1, 13.2) alternatifs du circuit de commutation.

120. Circuit de commutation à semi-conducteur selon la revendication 46,
caractérisé en ce que
- les moyens pour influer sur le potentiel comprennent des moyens de conversion numérique/analogique (199.2, 199.2X) et/ou des moyens de conversion analogique/numérique (199.3)

121. Circuit de commutation à semi-conducteur selon la revendication 46,
caractérisé en ce que
- les moyens pour influer sur le potentiel (199') comprennent des moyens de conversion numérique/analogique (199.2X) qui permettent de générer au moins l'ensemble des valeurs de référence, des signaux de commande et de commutation pour d'éventuelles influences sur le potentiel, à opérer en fonctionnement, en émission et/ou en réception de la fonction d'émetteur-récepteur (100').

122. Circuit de commutation à semi-conducteur selon l'une des revendications 100 à 105 ou selon la revendication 107,
caractérisé en ce que
- une source de tension offset (QSH ou Q_{SHH}), se référant au/à un potentiel d'alimentation (VCC_{A}, V_{T}, VBATT) plus élevé, est remplacée par une source de tension d'alimentation (Q_{VCC'}) variable, pouvant être de type offset, correspondante, se référant à un potentiel d'alimentation (GND) plus faible.

123. Circuit de commutation à semi-conducteur selon la revendication 33,
caractérisé en ce que
- il fait partie d'un appareil de commande électronique, dans lequel il est branché ou susceptible d'être commandé (142, 157, 172/SWM) uniquement pour une réception monofilaire et uniquement pour un mode d'émission monofilaire (n'utilisant qu'un pilote de ligne en 133).

124. Utilisation du circuit de commutation à semi-conducteur selon la revendication 1, dans un appareil de commande électronique d'un moyen de transport.

125. Utilisation du circuit de commutation à semi-conducteur selon la revendication 1, dans un appareil de commande électronique d'un matériel lourd, ou d'un matériel de construction, ou d'un engin de levage.

126. Utilisation du circuit de commutation à semi-conducteur selon la revendication 1, dans un appareil de commande électronique, appartenant à la technique d'automatisation.

127. Utilisation du circuit de commutation à semi-conducteur selon la revendication 1 dans un appareil de commande électronique, appartenant à la technique d'installation électrique ou du bâtiment.

128. Utilisation du circuit de commutation à semi-conducteur selon la revendication 1, dans un appareil de commande électronique, appartenant à la technique du chauffage ou de la climatisation.

129. Utilisation du circuit de commutation à semi-conducteur selon la revendication 1, dans un appareil de commande électronique, appartenant à la technique d'alarme, de sécurité ou de contrôle d'accès.

130. Utilisation du circuit de commutation à semi-conducteur selon la revendication 1,
caractérisée en ce que
- la fonction d'émetteur-récepteur (100, 100') est conçue pour une communication selon le standard CAN et pour opérer le raccordement à un réseau à lignes de bus CAN (CAN_H/CAN_L).

131. Utilisation du circuit de commutation à semi-conducteur selon l'une des revendications précédentes,
caractérisée en ce qu'il est fabriqué selon une technologie haute tension homogène.
